# EUROPEAN PATENT APPLICATION

(11) **EP 4 703 611 A1**
(43) Date of publication of application: **04.03.2026**
(21) Application number: 23936246.0
(22) Date of filing: 20.06.2023
(51) Int. Cl.: F16K 11/074, B01D 29/56

(54) **WATER TREATMENT MACHINE AND CONTROL VALVE FOR WATER TREATMENT MACHINE**

(30) Priority: 11.05.2023 CN 202310543120; 11.05.2023 CN 202321161174 U; 04.06.2023 CN 202310654509; 04.06.2023 CN 202321402011 U
(71) Applicant: Yuyao Yadong Plastic Co., Ltd., Yuyao, Zhejiang 315456 (CN)
(72) Inventor: HU, Xiaozong, Ningbo, Zhejiang 315456 (CN); HU, Jizong, Ningbo, Zhejiang 315456 (CN); CHU, Zhenlin, Ningbo, Zhejiang 315456 (CN)
(74) Representative: Tahtadjiev, Konstantin
(86) International application number: PCT/CN2023/101447
(87) International publication number: WO 2024/229937

(57) **Abstract**

Provided in the present invention are a water treatment machine and a control valve for the water treatment machine. The control valve for the water treatment machine of the present invention comprises a valve body and a valve core, wherein the valve body is provided with a valve cavity, a first opening, a second opening, a third opening, a fourth opening, a fifth opening, a first fluid opening, a second fluid opening, and a blow down opening, the valve core being disposed in the valve cavity, and the second fluid opening of the valve body being adapted to be communicated with a raw water source, when the control valve is at a water treatment working position, the valve core of the control valve for a first water treatment flow channel, a second water treatment flow channel and a third water treatment flow channel, the first water treatment flow channel being separately communicated with the second fluid opening and the first opening, the second water treatment flow channel being separately communicated with the third opening and the fourth opening, and the third water treatment flow channel being separately communicated with the fifth opening and the first fluid opening.

## Description

### FIELD OF INVENTION

The present invention relates to a water treatment device, and particularly to a water treatment device capable of performing multi-stage treatment on raw water (e.g., tap water) to obtain treated water with expected water quality. The present invention further relates to a control valve for a water treatment device.

### DESCRIPTION OF RELATED ARTS

In modern industrial production, many industries require water with high cleanliness or low hardness. However, water sources in many countries, especially developing countries, whether surface water or groundwater, often fail to meet industrial water standards in terms of cleanliness and hardness. To obtain water with the expected quality, water from the source (or raw water) needs to be treated. The treatment of raw water generally involves first coarse-filtering the raw water from the source to remove larger particulate pollutants, obtaining coarsely filtered water, and then, materials such as activated carbon are used to further filter the coarsely filtered water, obtaining cleaner purified water. Finally, the obtained purified water undergoes softening treatment (or ultrafiltration or RO membrane filtration) to produce softened water (or highly purified water). Ultimately, the raw water undergoes multi-stage treatment (three or more stages) to yield treated water with the desired quality. For example, water filtration equipment (using filter media such as quartz sand, activated carbon, or PP cotton) and water ultrafiltration equipment (using ultrafiltration membrane filaments as filter media) are used sequentially to filter and ultrafilter raw water; or water filtration equipment, water ultrafiltration equipment, and RO membrane water purification equipment are used sequentially to perform filtration, ultrafiltration, and RO membrane treatment on raw water; or a pre-filter, water filtration equipment, and a water softener are used sequentially to perform coarse filtration, filtration, and softening treatment on raw water. In addition, with the increasing improvement of people's living standards and increasing attention to health, people's requirements for the quality of domestic water are getting higher and higher. Water treatment plants handle water drawn from sources in a relatively extensive manner, which is insufficient to remove all impurities, such as particulate pollutants (flocculent gels, sediment, and even bacteria, etc.), and increasingly difficult to meet people's needs. Additionally, the aging of the tap water supply network can also bring new pollution to tap water. Therefore, to further purify tap water and improve its cleanliness, people also need various water treatment methods to treat tap water.

However, most existing water treatment systems or equipment capable of multi-stage treatment of raw water include multiple water treatment devices and multiple corresponding control valves respectively controlling water flow within the respective water treatment devices. And because each water treatment device has a corresponding control valve, and each control valve separately controls the water treatment function and rinsing function of its corresponding water treatment device, the multiple control valves are connected in series. The multiple control valves in the water treatment system lead to high manufacturing costs, large space occupation, and, since control valves are relatively complex devices, multiple control valves result in a higher failure rate for the entire water treatment system. The utility model patent with application number CN202022865712.3 discloses a water treatment system with three serially connected filter media tanks, controlled by a single control valve to direct water flow and perform three-stage treatment, addressing the issue of excessive number of control valves in water treatment systems. However, the structure of the water treatment system disclosed in this utility model patent is very rudimentary, although it can use three serially connected filter media tanks for multi-stage treatment of raw water, it cannot separately and individually perform backwashing or rinsing on the filter media tanks. The structure of the water treatment system disclosed in this utility model patent means that during rinsing of its three serially connected filter media tanks, wastewater generated from rinsing the first filter media tank will flow into the second filter media tank, and wastewater from rinsing the second filter media tank will flow into the third filter media tank, and during backwashing of the three serially connected filter media tanks, wastewater generated from backwashing the third filter media tank will flow into the second filter media tank, and wastewater from backwashing the second filter media tank will flow into the first filter media tank. In other words, during rinsing of the three serially connected filter media tanks, only the first filter media tank might be cleaned, while the second and third filter media tanks might not only remain uncleaned but could be further contaminated, and during backwashing of the three serially connected filter media tanks, only the third filter media tank might be cleaned, while the second and first filter media tanks might not only remain uncleaned but could be further contaminated. Particularly, considering the successive pressure reduction effect of the three serially connected filter media tanks on the raw water pressure, the cleaning effectiveness of rinsing and backwashing for the three serially connected filter media tanks might be even worse.

The lack of functionality in existing water treatment devices brings certain inconveniences to users.

### SUMMARY OF THE PRESENT INVENTION

A main advantage of the present invention is to provide a water treatment device, wherein the control valve of the water treatment device of the present invention has an innovative design, enabling it, when the water treatment device is in a water treating state, to control three water treatment devices of the water treatment device to be connected in series, to perform multi-stage treatment on raw water and obtain treated water with desired quality; and, when the water treatment device is in a washing state, to control the raw water to respectively and individually perform backwashing or rinsing on the filter media or softening resin of the corresponding water treatment device, and to control the wastewater generated from backwashing or rinsing to flow out separately, preventing the wastewater from contaminating other water treatment devices. Accordingly, both the water treatment device and the control valve for the water treatment device have a completely new and unique spatial structure, representing an innovative design unique in the world, thus creatively solving the difficult problem of using a single control valve to individually and separately perform backwashing or rinsing on three water treatment devices used in series.

Another advantage of the present invention is to provide a control valve for a water treatment device, wherein the control valve for the water treatment device of the present invention is configured to control three water treatment devices of the water treatment device to be connected in series, so that raw water sequentially flows through the three water treatment devices of the water treatment device for multi-stage treatment; and to control the raw water to respectively perform backwashing or rinsing on the filter media or softening resin of the corresponding water treatment device, and to control the wastewater generated from backwashing or rinsing to flow out separately, preventing the wastewater from contaminating other water treatment devices.

Another advantage of the present invention is to provide a control valve for a water treatment device, wherein the control valve for the water treatment device of the present invention is configured to control a regenerant solution to perform regeneration treatment on the softening resin within a third water treatment device of the water treatment device (if the third water treatment device is a water softening device), and, when controlling the regenerant solution to perform regeneration treatment on the softening resin within the third water treatment device of the water treatment device, not to affect the other two water treatment devices of the water treatment device.

Other objectives and features of the present invention will become apparent from the following detailed description.

According to one aspect of the present invention, the foregoing and other objects and advantages are attained by a control valve for a water treatment device of the present invention, which comprising:
a valve body; and
a valve core, wherein the valve body forms a valve chamber, a first opening, a second opening, a third opening, a fourth opening, a fifth opening, a first fluid opening, a second fluid opening, and a drain opening, wherein the valve core is disposed in the valve chamber, wherein the second fluid opening of the valve body is adapted to be in communication with a raw water source, wherein when the control valve is in a water treatment working position, the valve core of the control valve forms a first water treatment flow passage, a second water treatment flow passage and a third water treatment flow passage, wherein the first water treatment flow passage is in communication with the second fluid opening and the first opening respectively, the second water treatment flow passage is in communication with the third opening and the fourth opening respectively and the third water treatment flow passage is in communication with the fifth opening and the first fluid opening respectively. Still further objects and advantages of the present invention will become apparent from a consideration of the ensuing description and drawings.

These and other objectives, features, and advantages of the present invention will become apparent from the following detailed description and the accompanying drawings.

### BRIEF DESCRIPTION OF THE DRAWINGS

FIG.1 is a perspective view of a water treatment device according to a first embodiment of the present invention.
FIG.2 is an exploded view of the water treatment device according to the first embodiment of the present invention.
FIG.3A is a cross-sectional view of the water treatment according to the first embodiment of the present invention.
FIG.3B is a cross-sectional view of the first water treatment device of the water treatment device according to the first embodiment of the present invention, showing a flow direction of water from a first water inlet to a first water outlet when the first water treatment device is used for water treatment or is rinsed.
FIG.3C is another cross-sectional view of the first water treatment device of the water treatment device according to the first embodiment of the present invention, showing a flow direction of water from the first water outlet to the first water inlet when the first water treatment device is backwashed.
FIG.3D is a cross-sectional view of the second water treatment device of the water treatment device according to the first embodiment of the present invention, showing a flow direction of water from a second water inlet to a second water outlet when the second water treatment device is used for water treatment or is rinsed.
FIG.3E is another cross-sectional view of the second water treatment device of the water treatment device according to the first embodiment of the present invention, showing a flow direction of water from the second water outlet to the second water inlet when the second water treatment device is backwashed.
FIG.3F is another cross-sectional view of the water treatment device according to the first embodiment of the present invention, showing a flow direction of water from a third water inlet to a third water outlet when the third water treatment device is used for water treatment, is rinsed, or is used as a softening filter for down-flow brine suction regeneration.
FIG.3G is another cross-sectional view of the water treatment device according to the first embodiment of the present invention, showing a flow direction of water from the third water outlet to the third water inlet when the third water treatment device is backwashed.
FIG.4 is a perspective view of a control valve of the water treatment device according to the first embodiment of the present invention.
FIG.5 is an exploded view of the control valve of the water treatment device according to the first embodiment of the present invention.
FIG.6A is a perspective view of a valve body of the control valve of the water treatment device according to the first embodiment of the present invention, showing a valve chamber, a third opening, a second fluid opening, a drain opening and a third fluid opening of the valve body.
FIG.6B is another perspective view of the valve body of the control valve of the water treatment device according to the first embodiment of the present invention, showing the valve chamber, a first opening, a second opening, a first fluid opening, a first injector opening and a second injector opening of the valve body.
FIG.6C is a top view of the valve body of the control valve of the water treatment device according to the first embodiment of the present invention, wherein the control valve is a planar valve.
FIG.6D is a bottom view of the valve body of the control valve of the water treatment device according to the first embodiment of the present invention, showing a fourth opening and a fifth opening of the valve body.

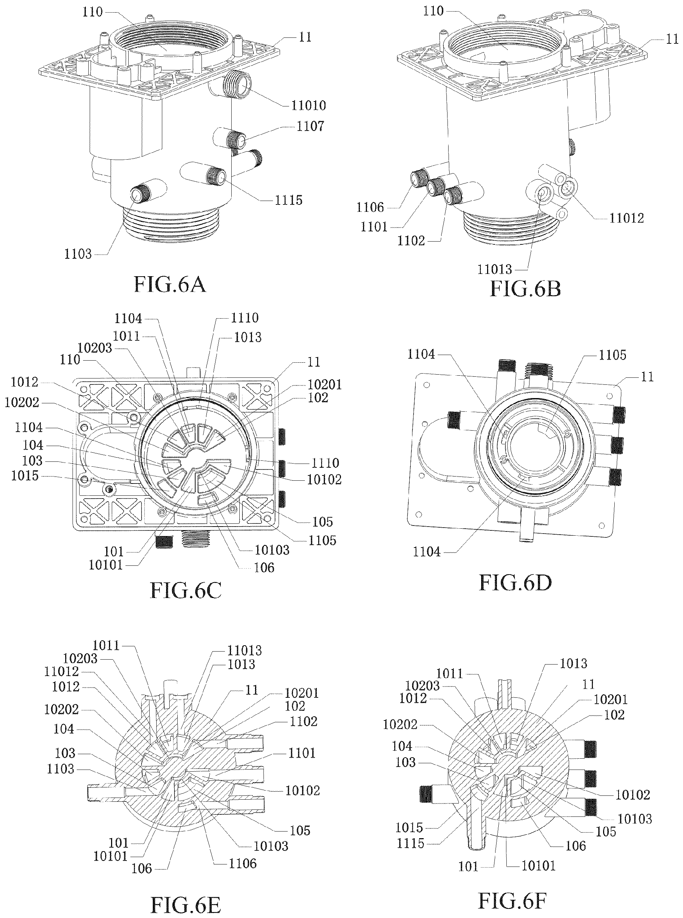

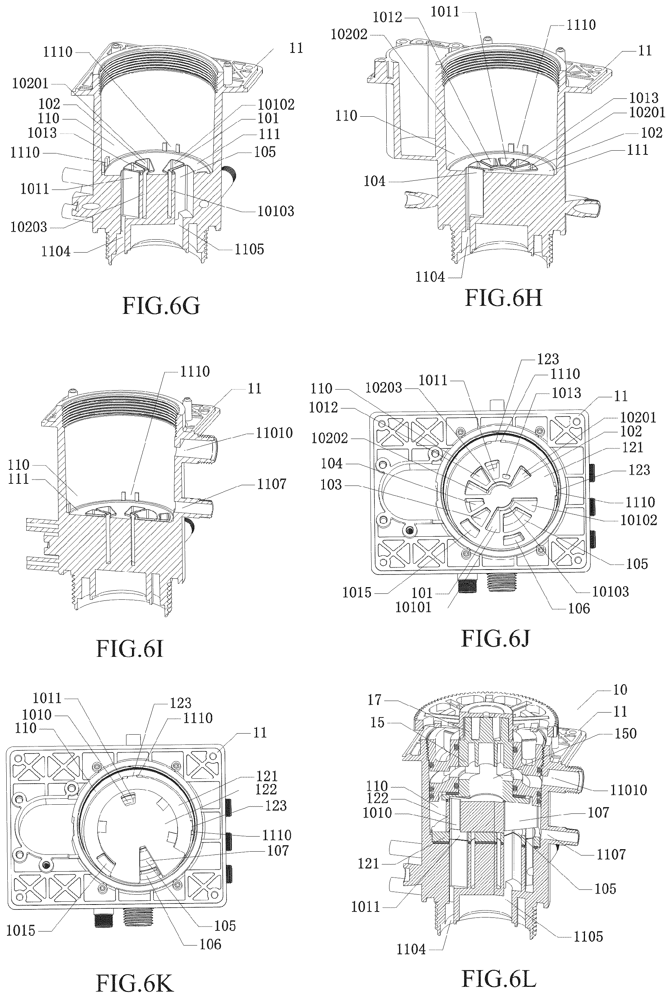

FIG.6E is a cross-sectional view of the valve body of the planar valve of the water treatment device according to the first embodiment of the present invention, showing that a first flow hole of the planar valve is in communication with the first opening, a second flow hole is in communication with the second opening, a third flow hole is in communication with the third opening, a sixth flow hole is in communication with the first fluid opening, a twelfth flow hole is in communication with the first injector opening, and a thirteenth flow hole is in communication with the second injector opening.
FIG.6F is another cross-sectional view of the valve body of the planar valve of the water treatment device according to the first embodiment of the present invention, showing that a water supply hole of the planar valve is in communication with the third fluid opening.
FIG.6G is another cross-sectional view of the valve body of the planar valve of the water treatment device according to the first embodiment of the present invention, showing that a eleventh flow hole of the planar valve is in communication with the fourth opening, and a fifth flow hole is in communication with the fifth opening.
FIG.6H is another cross-sectional view of the valve body of the planar valve of the water treatment device according to the first embodiment of the present invention, showing that a fourth flow hole of the planar valve is in communication with the fourth opening.
FIG.6I is another cross-sectional view of the valve body of the planar valve of the water treatment device according to the first embodiment of the present invention, showing that the valve chamber of the planar valve is in communication with the second fluid opening.
FIG.6J is a perspective view of the valve body and a fixed disk of the planar valve of the water treatment device according to the first embodiment of the present invention, wherein the fixed disk is disposed in the valve chamber of the planar valve.
FIG.6K is a perspective view of the valve body, the fixed disk, and a rotating disk of the planar valve of the water treatment device according to the first embodiment of the present invention, wherein the rotating disk is disposed on the fixed disk of the planar valve.
FIG.6L is a cross-sectional view of the planar valve of the water treatment device according to the first embodiment of the present invention, showing that a flow passage of a flow guiding element of the planar valve is in communication with a tenth flow hole of the planar valve and the drain opening, respectively.
FIG.7A is a perspective view of the fixed disk of the planar valve of the water treatment device according to the first embodiment of the present invention.
FIG.7B is a perspective view of the rotating disk of the planar valve of the water treatment device according to the first embodiment of the present invention.
FIG.7C is a top view of the fixed disk of the planar valve of the water treatment device according to the first embodiment of the present invention.
FIG.7D is a bottom view of the fixed disk of the planar valve of the water treatment device according to the first embodiment of the present invention.
FIG.7E is a top view of the rotating disk of the planar valve of the water treatment device according to the first embodiment of the present invention.
FIG.7F is a bottom view of the rotating disk of the planar valve of the water treatment device according to the first embodiment of the present invention.
FIG.8A is a structural schematic diagram of the fixed disk of the planar valve of the water treatment device according to the first embodiment of the present invention.
FIG.8B is a structural schematic diagram of the rotating disk of the planar valve of the water treatment device according to the first embodiment of the present invention, wherein the dotted line shown in Fig.8B shows communicating blind hole of the rotating disk.
FIG.9A is a schematic diagram of the equal division of the fixed disk of the planar valve of the water treatment device according to the first embodiment of the present invention, showing the flow holes are defined in the specific equal division positions of the fixed disk respectively.
FIG.9B is a schematic diagram of the equal division of the rotating disk of the planar valve of the water treatment device according to the first embodiment of the present invention, showing the flow holes are defined in the specific equal division positions of the rotating disk respectively.
FIG.10A is a schematic diagram of the communication between the flow holes of the rotating disk and the flow holes of the fixed disk of the planar valve when the planar valve of the water treatment device according to the first embodiment of the present invention is in its water treatment working position, wherein the shaded area shown in Fig.10A shows the passages defined by the communication between the flow holes of the rotating disk and the flow holes of the fixed disk of the planar valve.
FIG.10B is a schematic diagram of the communication between the flow holes of the rotating disk and the flow holes of the fixed disk of the planar valve when the planar valve of the water treatment device according to the first embodiment of the present invention is in its first backwash working position, wherein the shaded area shown in Fig.10B shows the passages defined by the communication between the flow holes of the rotating disk and the flow holes of the fixed disk of the planar valve.
FIG.10C is a schematic diagram of the communication between the flow holes of the rotating disk and the flow holes of the fixed disk of the planar valve when the planar valve of the water treatment device according to the first embodiment of the present invention is in its second backwash working position, wherein the shaded area shown in Fig.10C shows the passages defined by the communication between the flow holes of the rotating disk and the flow holes of the fixed disk of the planar valve.
FIG.10D is a schematic diagram of the communication between the flow holes of the rotating disk and the flow holes of the fixed disk of the planar valve when the planar valve of the water treatment device according to the first embodiment of the present invention is in its third backwash working position, wherein the shaded area shown in Fig.10D shows the passages defined by the communication between the flow holes of the rotating disk and the flow holes of the fixed disk of the planar valve.
FIG.10E is a schematic diagram of the communication between the flow holes of the rotating disk and the flow holes of the fixed disk of the planar valve when the planar valve of the water treatment device according to the first embodiment of the present invention is in its first rinse working position, wherein the shaded area shown in Fig.10E shows the passages defined by the communication between the flow holes of the rotating disk and the flow holes of the fixed disk of the planar valve.
FIG.10F is a schematic diagram of the communication between the flow holes of the rotating disk and the flow holes of the fixed disk of the planar valve when the planar valve of the water treatment device according to the first embodiment of the present invention is in the second rinse working position, wherein the shaded area shown in Fig.10F shows the passages defined by the communication between the flow holes of the rotating disk and the flow holes of the fixed disk of the planar valve.
FIG.10G is a schematic diagram of the communication between the flow holes of the rotating disk and the flow holes of the fixed disk of the planar valve when the planar valve of the water treatment device according to the first embodiment of the present invention is in the third rinse working position, wherein the shaded area shown in Fig.10G shows the passages defined by the communication between the flow holes of the rotating disk and the flow holes of the fixed disk of the planar valve.
FIG.10H is a schematic diagram of the communication between the flow holes of the rotating disk and the flow holes of the fixed disk of the planar valve when the planar valve of the water treatment device according to the first embodiment of the present invention is in its regeneration working position, wherein the shaded area shown in Fig.10H shows the passages defined by the communication between the flow holes of the rotating disk and the flow holes of the fixed disk of the planar valve.
FIG.10I is a schematic diagram of the communication between the flow holes of the rotating disk and the flow holes of the fixed disk of the planar valve when the planar valve of the water treatment device according to the first embodiment of the present invention is in its water refill working position, wherein the shaded area shown in Fig.10I shows the passages defined by the communication between the flow holes of the rotating disk and the flow holes of the fixed disk of the planar valve.
FIG.11A is a cross-sectional view of the planar valve of the water treatment device according to the first embodiment of the present invention, wherein the planar valve shown in FIG.11A is in its water treatment working position.
FIG.11B is another cross-sectional view of the planar valve of the water treatment device according to the first embodiment of the present invention, wherein the planar valve shown in FIG.11B is in its water treatment working position.
FIG.11C is another cross-sectional view of the planar valve of the water treatment device according to the first embodiment of the present invention, wherein the planar valve shown in FIG.11C is in its water treatment working position.
FIG.11D is another cross-sectional view of the planar valve of the water treatment device according to the first embodiment of the present invention, wherein the planar valve shown in FIG.11D is in its water treatment working position.
FIG.12 is another cross-sectional view of the planar valve of the water treatment device according to the first embodiment of the present invention, wherein the planar valve shown in FIG.12 is in its first backwash working position.
FIG.13 is another cross-sectional view of the planar valve of the water treatment device according to the first embodiment of the present invention, wherein the planar valve shown in FIG.13 is in its second backwash working position.
FIG.14 is another cross-sectional view of the planar valve of the water treatment device according to the first embodiment of the present invention, wherein the planar valve shown in FIG.14 is in its third backwash working position.
FIG.15 is another cross-sectional view of the planar valve of the water treatment device according to the first embodiment of the present invention, wherein the planar valve shown in FIG.15 is in its first rinse working position.
FIG.16 is another cross-sectional view of the planar valve of the water treatment device according to the first embodiment of the present invention, wherein the planar valve shown in FIG.16 is in its second rinse working position.
FIG.17 is another cross-sectional view of the planar valve of the water treatment device according to the first embodiment of the present invention, wherein the planar valve shown in FIG.17 is in its third rinse working position.
FIG.18A is another cross-sectional view of the planar valve of the water treatment device according to the first embodiment of the present invention, wherein the planar valve shown in FIG.18A is in its regeneration working position.
FIG.18B is another cross-sectional view of the planar valve of the water treatment device according to the first embodiment of the present invention, wherein the planar valve shown in FIG.18B is in its regeneration working position.
FIG.19 is another cross-sectional view of the planar valve of the water treatment device according to the first embodiment of the present invention, wherein the planar valve shown in FIG.19 is in its water refill working position.
FIG.20A is another cross-sectional view of the planar valve of the water treatment device according to the first embodiment of the present invention, showing a first raw water supply flow passage of the planar valve.
FIG.20B is another cross-sectional view of the planar valve of the water treatment device according to the first embodiment of the present invention, showing a second raw water supply flow passage of the planar valve.
FIG.21A is a structural schematic diagram of the water treatment device according to the first embodiment of the present invention, wherein the planar valve of the water treatment device shown in FIG.21A is in its water treatment working position, and the water treatment device is controlled to be in its water treatment working state, the arrows shown in FIG.21A indicate the directions of water flow.
FIG.21B is another structural schematic diagram of the water treatment device according to the first embodiment of the present invention, wherein the planar valve of the water treatment device shown in FIG.21B is in its first backwash working position, and the water treatment device is controlled to be in its first backwash working state, the arrows shown in FIG.21B indicate the directions of water flow.
FIG.21C is another structural schematic diagram of the water treatment device according to the first embodiment of the present invention, wherein the planar valve of the water treatment device shown in FIG.21C is in its second backwash working position, and the water treatment device is controlled to be in its second backwash working state, the arrows shown in FIG.21C indicate the directions of water flow.
FIG.21D is another structural schematic diagram of the water treatment device according to the first embodiment of the present invention, wherein the planar valve of the water treatment device shown in FIG.21D is in its third backwash working position, and the water treatment device is controlled to be in its third backwash working state, the arrows shown in FIG.21D indicate the directions of water flow.
FIG.21E is another structural schematic diagram of the water treatment device according to the first embodiment of the present invention, wherein the planar valve of the water treatment device shown in FIG.21E is in its first rinse working position, and the water treatment device is controlled to be in its first rinse working state, the arrows shown in FIG.21E indicate the directions of water flow.
FIG.21F is another structural schematic diagram of the water treatment device according to the first embodiment of the present invention, wherein the planar valve of the water treatment device shown in FIG.21F is in its second rinse working position, and the water treatment device is controlled to be in its second rinse working state, the arrows shown in FIG.21F indicate the directions of water flow.
FIG.21G is another structural schematic diagram of the water treatment device according to the first embodiment of the present invention, wherein the planar valve of the water treatment device shown in FIG.21G is in its third rinse working position, and the water treatment device is controlled to be in its third rinse working state, the arrows shown in FIG.21G indicate the directions of water flow.
FIG.21H is another structural schematic diagram of the water treatment device according to the first embodiment of the present invention, wherein the planar valve of the water treatment device shown in FIG.21H is in its regeneration working position, and the water treatment device is controlled to be in its regeneration working state, the arrows shown in FIG.21H indicate the directions of water flow.
FIG.21I is another structural schematic diagram of the water treatment device according to the first embodiment of the present invention, wherein the planar valve of the water treatment device shown in FIG.21I is in its water refill working position, and the water treatment device is controlled to be in its water refill working state, the arrows shown in FIG.21I indicate the directions of water flow.
FIG.22A is another perspective view of the water treatment device according to the first embodiment of the present invention.
FIG.22B is another cross-sectional view of the water treatment device according to the first embodiment of the present invention.
FIG.23A is a perspective view of an alternative of the planar valve of the water treatment device according to the first embodiment of the present invention.
FIG.23B is an exploded view of the alternative of the planar valve of the water treatment device according to the first embodiment of the present invention.
FIG.24A is a perspective view of a valve body of the alternative of the planar valve of the water treatment device according to the first embodiment of the present invention, showing a valve chamber, a third opening, a second fluid opening, a drain opening and a third fluid opening of the valve body.
FIG.24B is another perspective view of the valve body of the alternative of the planar valve of the water treatment device according to the first embodiment of the present invention, showing the valve chamber, a first opening, a second opening, a first fluid opening, a first injector opening and a second injector opening of the valve body.
FIG.24C is a top view of the valve body of the alternative of the planar valve of the water treatment device according to the first embodiment of the present invention.
FIG.24D is a bottom view of the valve body of the alternative of the planar valve of the water treatment device according to the first embodiment of the present invention, showing a fourth opening and a fifth opening of the valve body.

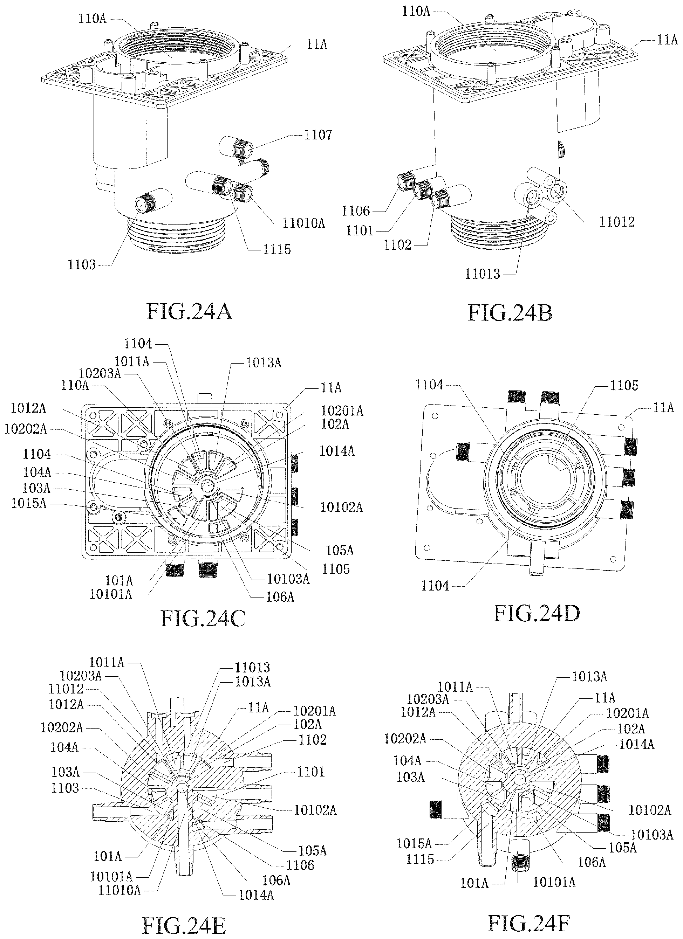

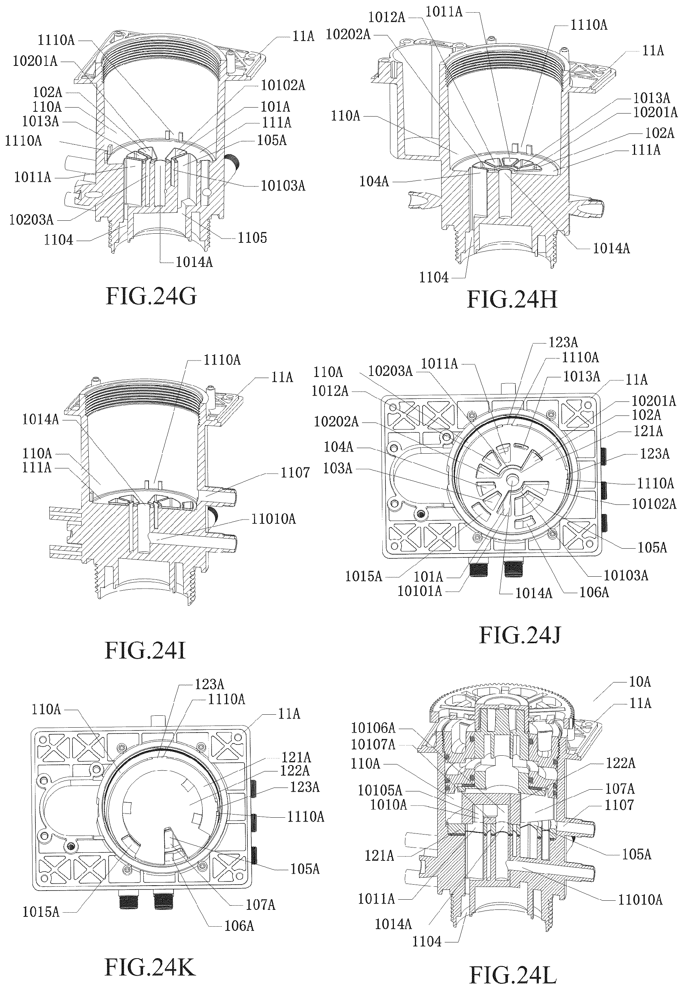

FIG.24E is a cross-sectional view of the valve body of the alternative of the planar valve of the water treatment device according to the first embodiment of the present invention, showing that a first flow hole of the alternative of the planar valve is in communication with the first opening, a second flow hole is in communication with the second opening, a third flow hole is in communication with the third opening, a sixth flow hole is in communication with the first fluid opening, a twelfth flow hole is in communication with the first injector opening, a thirteenth flow hole is in communication with the second injector opening, and a drain hole is in communication with the drain opening.
FIG.24F is another cross-sectional view of the valve body of the alternative of the planar valve of the water treatment device according to the first embodiment of the present invention, showing that a water supply hole of the alternative of the planar valve is in communication with the third fluid opening.
FIG.24G is another cross-sectional view of the valve body of the alternative of the planar valve of the water treatment device according to the first embodiment of the present invention, showing that a eleventh flow hole of the alternative of the planar valve is in communication with the fourth opening, and a fifth flow hole is in communication with the fifth opening.
FIG.24H is another cross-sectional view of the valve body of the alternative of the planar valve of the water treatment device according to the first embodiment of the present invention, showing that a fourth flow hole of the alternative of the planar valve is in communication with the fourth opening.
FIG.24I is another cross-sectional view of the valve body of the alternative of the planar valve of the water treatment device according to the first embodiment of the present invention, showing that the valve chamber of the alternative of the planar valve is in communication with the second fluid opening, and the drain hole is in communication with the drain opening.
FIG.24J is a perspective view of the valve body and a fixed disk of the alternative of the planar valve of the water treatment device according to the first embodiment of the present invention, wherein the fixed disk is disposed in the valve chamber of the alternative of the planar valve.
FIG.24K is a perspective view of the valve body, the fixed disk, and a rotating disk of the alternative of the planar valve of the water treatment device according to the first embodiment of the present invention, wherein the rotating disk is disposed on the fixed disk of the alternative of the planar valve.
FIG.24L is another cross-sectional view of the alternative of the planar valve of the water treatment device according to the first embodiment of the present invention, showing that the drain hole of the alternative of the planar valve is in communication with a tenth flow hole and the drain opening, respectively.
FIG.25A is a perspective view of the fixed disk of the alternative of the planar valve of the water treatment device according to the first embodiment of the present invention.
FIG.25B is a perspective view of the rotating disk of the alternative of the planar valve of the water treatment device according to the first embodiment of the present invention.
FIG.25C is a top view of the fixed disk of the alternative of the planar valve of the water treatment device according to the first embodiment of the present invention.
FIG.25D is a bottom view of the fixed disk of the alternative of the planar valve of the water treatment device according to the first embodiment of the present invention.
FIG.25E is a top view of the rotating disk of the alternative of the planar valve of the water treatment device according to the first embodiment of the present invention.
FIG.25F is a bottom view of the rotating disk of the alternative of the planar valve of the water treatment device according to the first embodiment of the present invention.
FIG.25G is a cross-sectional view of the rotating disk of the alternative of the planar valve of the water treatment device according to the first embodiment of the present invention.
FIG.26A is a structural schematic diagram of the fixed disk of the alternative of the planar valve of the water treatment device according to the first embodiment of the present invention, from a top view.
FIG.26B is a structural schematic diagram of the rotating disk of the alternative of the planar valve of the water treatment device according to the first embodiment of the present invention, from a top view, wherein the dotted line shown in Fig.26B shows communicating blind hole of the rotating disk.
FIG.26C is a structural schematic diagram of the rotating disk of the alternative of the planar valve of the water treatment device according to the first embodiment of the present invention, from a bottom view, wherein the dotted line shown in Fig.26C shows a communicating flow hole inside the rotating disk.
FIG.27A is a schematic diagram of the equal division of the fixed disk of the alternative of the planar valve of the water treatment device according to the first embodiment of the present invention, showing the flow holes are defined in the specific equal division positions of the fixed disk, respectively.
FIG.27B is a schematic diagram of the equal division of the rotating disk of the alternative of the planar valve of the water treatment device according to the first embodiment of the present invention, showing the flow holes are defined in the specific equal division positions of the rotating disk, respectively.
FIG.28A is a schematic diagram of the communication between the flow holes of the rotating disk and the flow holes of the fixed disk of the alternative of the planar valve when the alternative of the planar valve of the water treatment device according to the first embodiment of the present invention is in its water treatment working position, wherein the shaded area shown in Fig.28A shows the passages defined by the communication between the flow holes of the rotating disk and the flow holes of the fixed disk of the alternative of the planar valve.
FIG.28B is a schematic diagram of the communication between the flow holes of the rotating disk and the flow holes of the fixed disk of the alternative of the planar valve when the alternative of the planar valve of the water treatment device according to the first embodiment of the present invention is in its first backwash working position, wherein the shaded area shown in Fig.28B shows the passages defined by the communication between the flow holes of the rotating disk and the flow holes of the fixed disk of the alternative of the planar valve.
FIG.28C is a schematic diagram of the communication between the flow holes of the rotating disk and the flow holes of the fixed disk of the alternative of the planar valve when the alternative of the planar valve of the water treatment device according to the first embodiment of the present invention is in its second backwash working position, wherein the shaded area shown in Fig.28C shows the passages defined by the communication between the flow holes of the rotating disk and the flow holes of the fixed disk of the alternative of the planar valve.
FIG.28D is a schematic diagram of the communication between the flow holes of the rotating disk and the flow holes of the fixed disk of the alternative of the planar valve when the alternative of the planar valve of the water treatment device according to the first embodiment of the present invention is in its third backwash working position, wherein the shaded area shown in Fig.28D shows the passages defined by the communication between the flow holes of the rotating disk and the flow holes of the fixed disk of the alternative of the planar valve.
FIG.28E is a schematic diagram of the communication between the flow holes of the rotating disk and the flow holes of the fixed disk of the alternative of the planar valve when the alternative of the planar valve of the water treatment device according to the first embodiment of the present invention is in its first rinse working position, wherein the shaded area shown in Fig.28E shows the passages defined by the communication between the flow holes of the rotating disk and the flow holes of the fixed disk of the alternative of the planar valve.
FIG.28F is a schematic diagram of the communication between the flow holes of the rotating disk and the flow holes of the fixed disk of the alternative of the planar valve when the alternative of the planar valve of the water treatment device according to the first embodiment of the present invention is in its second rinse working position, wherein the shaded area shown in Fig.28F shows the passages defined by the communication between the flow holes of the rotating disk and the flow holes of the fixed disk of the alternative of the planar valve.
FIG.28G is a schematic diagram of the communication between the flow holes of the rotating disk and the flow holes of the fixed disk of the alternative of the planar valve when the alternative of the planar valve of the water treatment device according to the first embodiment of the present invention is in its third rinse working position, wherein the shaded area shown in Fig.28G shows the passages defined by the communication between the flow holes of the rotating disk and the flow holes of the fixed disk of the alternative of the planar valve.
FIG.28H is a schematic diagram of the communication between the flow holes of the rotating disk and the flow holes of the fixed disk of the alternative of the planar valve when the alternative of the planar valve of the water treatment device according to the first embodiment of the present invention is in its regeneration working position, wherein the shaded area shown in Fig.28H shows the passages defined by the communication between the flow holes of the rotating disk and the flow holes of the fixed disk of the alternative of the planar valve.
FIG.28I is a schematic diagram of the communication between the flow holes of the rotating disk and the flow holes of the fixed disk of the alternative of the planar valve when the alternative of the planar valve of the water treatment device according to the first embodiment of the present invention is in its water refill working position, wherein the shaded area shown in Fig.28I shows the passages defined by the communication between the flow holes of the rotating disk and the flow holes of the fixed disk of the alternative of the planar valve.
FIG.29A is a cross-sectional view of the alternative of the planar valve of the water treatment device according to the first embodiment of the present invention, wherein the alternative of the planar valve shown in FIG.29A is in its water treatment working position.
FIG.29B is another cross-sectional view of the alternative of the planar valve of the water treatment device according to the first embodiment of the present invention, wherein the alternative of the planar valve shown in FIG.29B is in its water treatment working position.
FIG.29C is another cross-sectional view of the alternative of the planar valve of the water treatment device according to the first embodiment of the present invention, wherein the alternative of the planar valve shown in FIG.29C is in its water treatment working position.
FIG.29D is another cross-sectional view of the alternative of the planar valve of the water treatment device according to the first embodiment of the present invention, wherein the alternative of the planar valve shown in FIG.29D is in its water treatment working position.
FIG.30 is another cross-sectional view of the alternative of the planar valve of the water treatment device according to the first embodiment of the present invention, wherein the alternative of the planar valve shown in FIG.30 is in its first backwash working position.
FIG.31 is another cross-sectional view of the alternative of the planar valve of the water treatment device according to the first embodiment of the present invention, wherein the alternative of the planar valve shown in FIG.31 is in its second backwash working position.
FIG.32 is another cross-sectional view of the alternative of the planar valve of the water treatment device according to the first embodiment of the present invention, wherein the alternative of the planar valve shown in FIG.32 is in its third backwash working position.
FIG.33 is another cross-sectional view of the alternative of the planar valve of the water treatment device according to the first embodiment of the present invention, wherein the alternative of the planar valve shown in FIG.33 is in its first rinse working position.
FIG.34 is another cross-sectional view of the alternative of the planar valve of the water treatment device according to the first embodiment of the present invention, wherein the alternative of the planar valve shown in FIG.34 is in its second rinse working position.
FIG.35 is another cross-sectional view of the alternative of the planar valve of the water treatment device according to the first embodiment of the present invention, wherein the alternative of the planar valve shown in FIG.35 is in its third rinse working position.
FIG.36A is another cross-sectional view of the alternative of the planar valve of the water treatment device according to the first embodiment of the present invention, wherein the alternative of the planar valve shown in FIG.36A is in its regeneration working position.
FIG.36B is another cross-sectional view of the alternative of the planar valve of the water treatment device according to the first embodiment of the present invention, wherein the alternative of the planar valve shown in FIG.36B is in its regeneration working position.
FIG.37 is another cross-sectional view of the alternative of the planar valve of the water treatment device according to the first embodiment of the present invention, wherein the alternative of the planar valve shown in FIG.37 is in its water refill working position.
FIG.38A is another cross-sectional view of the alternative of the planar valve of the water treatment device according to the first embodiment of the present invention, showing a first raw water supply flow passage of the alternative of the planar valve.
FIG.38B is another cross-sectional view of the alternative of the planar valve of the water treatment device according to the first embodiment of the present invention, showing a second raw water supply flow passage of the alternative of the planar valve.
FIG.39A is a structural schematic diagram of the water treatment device according to the first embodiment of the present invention, wherein the alternative of the planar valve of the water treatment device shown in FIG.39A is in its water treatment working position, and the water treatment device is controlled to be in its water treatment working state, the arrows shown in FIG.39A indicate the directions of water flow.
FIG.39B is another structural schematic diagram of the water treatment device according to the first embodiment of the present invention, wherein the alternative of the planar valve of the water treatment device shown in FIG.39B is in its first backwash working position, and the water treatment device is controlled to be in its first backwash working state, the arrows shown in FIG.39B indicate the directions of water flow.
FIG.39C is another structural schematic diagram of the water treatment device according to the first embodiment of the present invention, wherein the alternative of the planar valve of the water treatment device shown in FIG.39C is in its second backwash working position, and the water treatment device is controlled to be in its second backwash working state, the arrows shown in FIG.39C indicate the directions of water flow.
FIG.39D is another structural schematic diagram of the water treatment device according to the first embodiment of the present invention, wherein the alternative of the planar valve of the water treatment device shown in FIG.39D is in its third backwash working position, and the water treatment device is controlled to be in its third backwash working state, the arrows shown in FIG.39D indicate the directions of water flow.
FIG.39E is another structural schematic diagram of the water treatment device according to the first embodiment of the present invention, wherein the alternative of the planar valve of the water treatment device shown in FIG.39E is in its first rinse working position, and the water treatment device is controlled to be in its first rinse working state, the arrows shown in FIG.39E indicate the directions of water flow.
FIG.39F is another structural schematic diagram of the water treatment device according to the first embodiment of the present invention, wherein the alternative of the planar valve of the water treatment device shown in FIG.39F is in its second rinse working position, and the water treatment device is controlled to be in its second rinse working state, the arrows shown in FIG.39F indicate the directions of water flow.
FIG.39G is another structural schematic diagram of the water treatment device according to the first embodiment of the present invention, wherein the alternative of the planar valve of the water treatment device shown in FIG.39G is in its third rinse working position, and the water treatment device is controlled to be in its third rinse working state, the arrows shown in FIG.39G indicate the directions of water flow.
FIG.39H is another structural schematic diagram of the water treatment device according to the first embodiment of the present invention, wherein the alternative of the planar valve of the water treatment device shown in FIG.39H is in its regeneration working position, and the water treatment device is controlled to be in its regeneration working state, the arrows shown in FIG.39H indicate the directions of water flow.
FIG.39I is another structural schematic diagram of the water treatment device according to the first embodiment of the present invention, wherein the alternative of the planar valve of the water treatment device shown in FIG.39I is in its water refill working position, and the water treatment device is controlled to be in its water refill working state, the arrows shown in FIG.39I indicate the directions of water flow.
FIG.40 is a perspective view of a water treatment device according to a second embodiment of the present invention.
FIG.41 is an exploded view of the water treatment device according to the second embodiment of the present invention.
FIG.42A is a cross-sectional view of the water treatment according to the second embodiment of the present invention.
FIG.42B is a cross-sectional view of the first water treatment device of the water treatment device according to the second embodiment of the present invention, showing a flow direction of water from a first water inlet to a first water outlet when the first water treatment device is used for water treatment or is rinsed.
FIG.42C is another cross-sectional view of the first water treatment device of the water treatment device according to the second embodiment of the present invention, showing a flow direction of water from the first water outlet to the first water inlet when the first water treatment device is backwashed.
FIG.42D is a cross-sectional view of the second water treatment device of the water treatment device according to the second embodiment of the present invention, showing a flow direction of water from a second water inlet to a second water outlet when the second water treatment device is used for water treatment or is rinsed.
FIG.42E is another cross-sectional view of the second water treatment device of the water treatment device according to the second embodiment of the present invention, showing a flow direction of water from the second water outlet to the second water inlet when the second water treatment device is backwashed.
FIG.42F is another cross-sectional view of the water treatment device according to the second embodiment of the present invention, showing a flow direction of water from a third water inlet to a third water outlet when the third water treatment device is used for water treatment or is rinsed.
FIG.42G is another cross-sectional view of the water treatment device according to the second embodiment of the present invention, showing a flow direction of water from the third water outlet to the third water inlet when the third water treatment device is backwashed, or is used as a softening filter for back-flow brine suction regeneration.
FIG.43 is a perspective view of a control valve of the water treatment device according to the second embodiment of the present invention.
FIG.44 is an exploded view of the control valve of the water treatment device according to the second embodiment of the present invention.
FIG.45A is a perspective view of a valve body of the control valve of the water treatment device according to the second embodiment of the present invention, showing a valve chamber, a third opening, a second fluid opening, a drain opening, a third fluid opening, a first injector opening and a second injector opening of the valve body.
FIG.45B is another perspective view of the valve body of the control valve of the water treatment device according to the second embodiment of the present invention, showing the valve chamber, a first opening, a second opening and a first fluid opening of the valve body.
FIG.45C is a top view of the valve body of the control valve of the water treatment device according to the second embodiment of the present invention, wherein the control valve is a planar valve.
FIG.45D is a bottom view of the valve body of the control valve of the water treatment device according to the second embodiment of the present invention, showing a fourth opening and a fifth opening of the valve body.
FIG.45E is a cross-sectional view of the valve body of the planar valve of the water treatment device according to the second embodiment of the present invention, showing that a first flow hole of the planar valve is in communication with the first opening, a second flow hole is in communication with the second opening, a third flow hole is in communication with the third opening, a twelfth flow hole is in communication with the first injector opening, and a thirteenth flow hole is in communication with the second injector opening.
FIG.45F is another cross-sectional view of the valve body of the planar valve of the water treatment device according to the second embodiment of the present invention, showing that a sixth flow hole of the planar valve is in communication with the first fluid opening, and a water supply hole is in communication with the third fluid opening.
FIG.45G is another cross-sectional view of the valve body of the planar valve of the water treatment device according to the second embodiment of the present invention, showing that a fourth flow hole of the planar valve is in communication with the fourth opening, and a fifth flow hole is in communication with the fifth opening.
FIG.45H is another cross-sectional view of the valve body of the planar valve of the water treatment device according to the second embodiment of the present invention, showing that a eleventh flow hole of the planar valve is in communication with the fourth opening.
FIG.45I is another cross-sectional view of the valve body of the planar valve of the water treatment device according to the second embodiment of the present invention, showing that the valve chamber of the planar valve is in communication with the second fluid opening.
FIG.45J is a perspective view of the valve body and a fixed disk of the planar valve of the water treatment device according to the second embodiment of the present invention, wherein the fixed disk is disposed in the valve chamber of the planar valve.
FIG.45K is a perspective view of the valve body, the fixed disk, and a rotating disk of the planar valve of the water treatment device according to the second embodiment of the present invention, wherein the rotating disk is disposed on the fixed disk of the planar valve.
FIG.45L is a cross-sectional view of the planar valve of the water treatment device according to the second embodiment of the present invention, showing that a flow passage of a flow guiding element of the planar valve is in communication with a tenth flow hole of the planar valve and the drain opening, respectively.
FIG.46A is a perspective view of the fixed disk of the planar valve of the water treatment device according to the second embodiment of the present invention.
FIG.46B is a perspective view of the rotating disk of the planar valve of the water treatment device according to the second embodiment of the present invention.
FIG.46C is a top view of the fixed disk of the planar valve of the water treatment device according to the second embodiment of the present invention.
FIG.46D is a bottom view of the fixed disk of the planar valve of the water treatment device according to the second embodiment of the present invention.
FIG.46E is a top view of the rotating disk of the planar valve of the water treatment device according to the second embodiment of the present invention.
FIG.46F is a bottom view of the rotating disk of the planar valve of the water treatment device according to the second embodiment of the present invention.
FIG.47A is a structural schematic diagram of the fixed disk of the planar valve of the water treatment device according to the second embodiment of the present invention.
FIG.47B is a structural schematic diagram of the rotating disk of the planar valve of the water treatment device according to the second embodiment of the present invention, wherein the dotted line shown in Fig.47B shows blind flow holes of the rotating disk.
FIG.48A is a schematic diagram of the equal division of the fixed disk of the planar valve of the water treatment device according to the second embodiment of the present invention, showing the flow holes are defined in the specific equal division positions of the fixed disk, respectively.
FIG.48B is a schematic diagram of the equal division of the rotating disk of the planar valve of the water treatment device according to the second embodiment of the present invention, showing the flow holes are defined in the specific equal division positions of the rotating disk, respectively.
FIG.49A is a schematic diagram of the communication between the flow holes of the rotating disk and the flow holes of the fixed disk of the planar valve when the planar valve of the water treatment device according to the second embodiment of the present invention is in its water treatment working position, wherein the shaded area shown in Fig.49A shows the passages defined by the communication between the flow holes of the rotating disk and the flow holes of the fixed disk of the planar valve.
FIG.49B is a schematic diagram of the communication between the flow holes of the rotating disk and the flow holes of the fixed disk of the planar valve when the planar valve of the water treatment device according to the second embodiment of the present invention is in its first backwash working position, wherein the shaded area shown in Fig.49B shows the passages defined by the communication between the flow holes of the rotating disk and the flow holes of the fixed disk of the planar valve.
FIG.49C is a schematic diagram of the communication between the flow holes of the rotating disk and the flow holes of the fixed disk of the planar valve when the planar valve of the water treatment device according to the second embodiment of the present invention is in its second backwash working position, wherein the shaded area shown in Fig.49C shows the passages defined by the communication between the flow holes of the rotating disk and the flow holes of the fixed disk of the planar valve.
FIG.49D is a schematic diagram of the communication between the flow holes of the rotating disk and the flow holes of the fixed disk of the planar valve when the planar valve of the water treatment device according to the second embodiment of the present invention is in its third backwash working position, wherein the shaded area shown in Fig.49D shows the passages defined by the communication between the flow holes of the rotating disk and the flow holes of the fixed disk of the planar valve.
FIG.49E is a schematic diagram of the communication between the flow holes of the rotating disk and the flow holes of the fixed disk of the planar valve when the planar valve of the water treatment device according to the second embodiment of the present invention is in its first rinse working position, wherein the shaded area shown in Fig.49E shows the passages defined by the communication between the flow holes of the rotating disk and the flow holes of the fixed disk of the planar valve.
FIG.49F is a schematic diagram of the communication between the flow holes of the rotating disk and the flow holes of the fixed disk of the planar valve when the planar valve of the water treatment device according to the second embodiment of the present invention is in its second rinse working position, wherein the shaded area shown in Fig.49F shows the passages defined by the communication between the flow holes of the rotating disk and the flow holes of the fixed disk of the planar valve.
FIG.49G is a schematic diagram of the communication between the flow holes of the rotating disk and the flow holes of the fixed disk of the planar valve when the planar valve of the water treatment device according to the second embodiment of the present invention is in its third rinse working position, wherein the shaded area shown in Fig.49G shows the passages defined by the communication between the flow holes of the rotating disk and the flow holes of the fixed disk of the planar valve.
FIG.49H is a schematic diagram of the communication between the flow holes of the rotating disk and the flow holes of the fixed disk of the planar valve when the planar valve of the water treatment device according to the second embodiment of the present invention is in its regeneration working position, wherein the shaded area shown in Fig.49H shows the passages defined by the communication between the flow holes of the rotating disk and the flow holes of the fixed disk of the planar valve.
FIG.49I is a schematic diagram of the communication between the flow holes of the rotating disk and the flow holes of the fixed disk of the planar valve when the planar valve of the water treatment device according to the second embodiment of the present invention is in its water refill working position, wherein the shaded area shown in Fig.49I shows the passages defined by the communication between the flow holes of the rotating disk and the flow holes of the fixed disk of the planar valve.
FIG.50A is a cross-sectional view of the planar valve of the water treatment device according to the second embodiment of the present invention, wherein the planar valve shown in FIG.50A is in its water treatment working position.
FIG.50B is another cross-sectional view of the planar valve of the water treatment device according to the second embodiment of the present invention, wherein the planar valve shown in FIG.50B is in its water treatment working position.
FIG.50C is another cross-sectional view of the planar valve of the water treatment device according to the second embodiment of the present invention, wherein the planar valve shown in FIG.50C is in its water treatment working position.
FIG.50D is another cross-sectional view of the planar valve of the water treatment device according to the second embodiment of the present invention, wherein the planar valve shown in FIG.50D is in its water treatment working position.
FIG.51 is another cross-sectional view of the planar valve of the water treatment device according to the second embodiment of the present invention, wherein the planar valve shown in FIG.51 is in its first backwash working position.
FIG.52 is another cross-sectional view of the planar valve of the water treatment device according to the second embodiment of the present invention, wherein the planar valve shown in FIG.52 is in its second backwash working position.
FIG.53 is another cross-sectional view of the planar valve of the water treatment device according to the second embodiment of the present invention, wherein the planar valve shown in FIG.53 is in its third backwash working position.
FIG.54 is another cross-sectional view of the planar valve of the water treatment device according to the second embodiment of the present invention, wherein the planar valve shown in FIG.54 is in its first rinse working position.
FIG.55 is another cross-sectional view of the planar valve of the water treatment device according to the second embodiment of the present invention, wherein the planar valve shown in FIG.55 is in its second rinse working position.
FIG.56 is another cross-sectional view of the planar valve of the water treatment device according to the second embodiment of the present invention, wherein the planar valve shown in FIG.53 is in its third rinse working position.
FIG.57A is another cross-sectional view of the planar valve of the water treatment device according to the second embodiment of the present invention, wherein the planar valve shown in FIG.57A is in its regeneration working position.
FIG.57B is another cross-sectional view of the planar valve of the water treatment device according to the second embodiment of the present invention, wherein the planar valve shown in FIG.57B is in its regeneration working position.
FIG.58 is another cross-sectional view of the planar valve of the water treatment device according to the second embodiment of the present invention, wherein the planar valve shown in FIG.58 is in its water refill working position.
FIG.59A is another cross-sectional view of the planar valve of the water treatment device according to the second embodiment of the present invention, showing a first raw water supply flow passage of the planar valve.
FIG.59B is another cross-sectional view of the planar valve of the water treatment device according to the second embodiment of the present invention, showing a second raw water supply flow passage of the planar valve.
FIG.60A is a structural schematic diagram of the water treatment device according to the second embodiment of the present invention, wherein the planar valve of the water treatment device shown in FIG.60A is in its water treatment working position, and the water treatment device is controlled to be in its water treatment working state, the arrows shown in FIG.60A indicate the directions of water flow.
FIG.60B is another structural schematic diagram of the water treatment device according to the second embodiment of the present invention, wherein the planar valve of the water treatment device shown in FIG.60B is in its first backwash working position, and the water treatment device is controlled to be in its first backwash working state, the arrows shown in FIG.60B indicate the directions of water flow.
FIG.60C is another structural schematic diagram of the water treatment device according to the second embodiment of the present invention, wherein the planar valve of the water treatment device shown in FIG.60C is in its second backwash working position, and the water treatment device is controlled to be in its second backwash working state, the arrows shown in FIG.60C indicate the directions of water flow.
FIG.60D is another structural schematic diagram of the water treatment device according to the second embodiment of the present invention, wherein the planar valve of the water treatment device shown in FIG.60D is in its third backwash working position, and the water treatment device is controlled to be in its third backwash working state, the arrows shown in FIG.60D indicate the directions of water flow.
FIG.60E is another structural schematic diagram of the water treatment device according to the second embodiment of the present invention, wherein the planar valve of the water treatment device shown in FIG.60E is in its first rinse working position, and the water treatment device is controlled to be in its first rinse working state, the arrows shown in FIG.60E indicate the directions of water flow.
FIG.60F is another structural schematic diagram of the water treatment device according to the second embodiment of the present invention, wherein the planar valve of the water treatment device shown in FIG.60F is in its second rinse working position, and the water treatment device is controlled to be in its second rinse working state, the arrows shown in FIG.60F indicate the directions of water flow.
FIG.60G is another structural schematic diagram of the water treatment device according to the second embodiment of the present invention, wherein the planar valve of the water treatment device shown in FIG.60G is in its third rinse working position, and the water treatment device is controlled to be in its third rinse working state, the arrows shown in FIG.60G indicate the directions of water flow.
FIG.60H is another structural schematic diagram of the water treatment device according to the second embodiment of the present invention, wherein the planar valve of the water treatment device shown in FIG.60H is in its regeneration working position, and the water treatment device is controlled to be in its regeneration working state, the arrows shown in FIG.60H indicate the directions of water flow.
FIG.60I is another structural schematic diagram of the water treatment device according to the second embodiment of the present invention, wherein the planar valve of the water treatment device shown in FIG.60I is in its water refill working position, and the water treatment device is controlled to be in its water refill working state, the arrows shown in FIG.60I indicate the directions of water flow.
FIG.61A is another perspective view of the water treatment device according to the second embodiment of the present invention.
FIG.61B is another cross-sectional view of the water treatment device according to the second embodiment of the present invention.
FIG.62A is a perspective view of an alternative of the planar valve of the water treatment device according to the second embodiment of the present invention.
FIG.62B is an exploded view of the alternative of the planar valve of the water treatment device according to the second embodiment of the present invention.
FIG.63A is a perspective view of a valve body of the alternative of the planar valve of the water treatment device according to the second embodiment of the present invention, showing a valve chamber, a third opening, a second fluid opening, a drain opening, a third fluid opening, a first injector opening and a second injector opening of the valve body.
FIG.63B is another perspective view of the valve body of the alternative of the planar valve of the water treatment device according to the second embodiment of the present invention, showing the valve chamber, a first opening, a second opening and a first fluid opening of the valve body.
FIG.63C is a top view of the valve body of the alternative of the planar valve of the water treatment device according to the second embodiment of the present invention.
FIG.63D is a bottom view of the valve body of the alternative of the planar valve of the water treatment device according to the second embodiment of the present invention, showing a fourth opening and a fifth opening of the valve body.

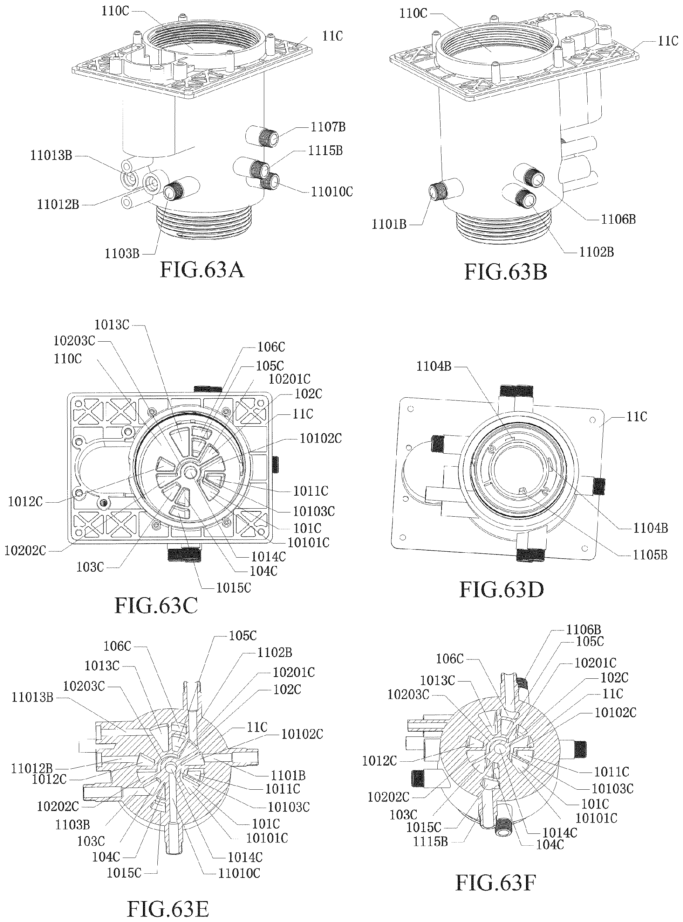

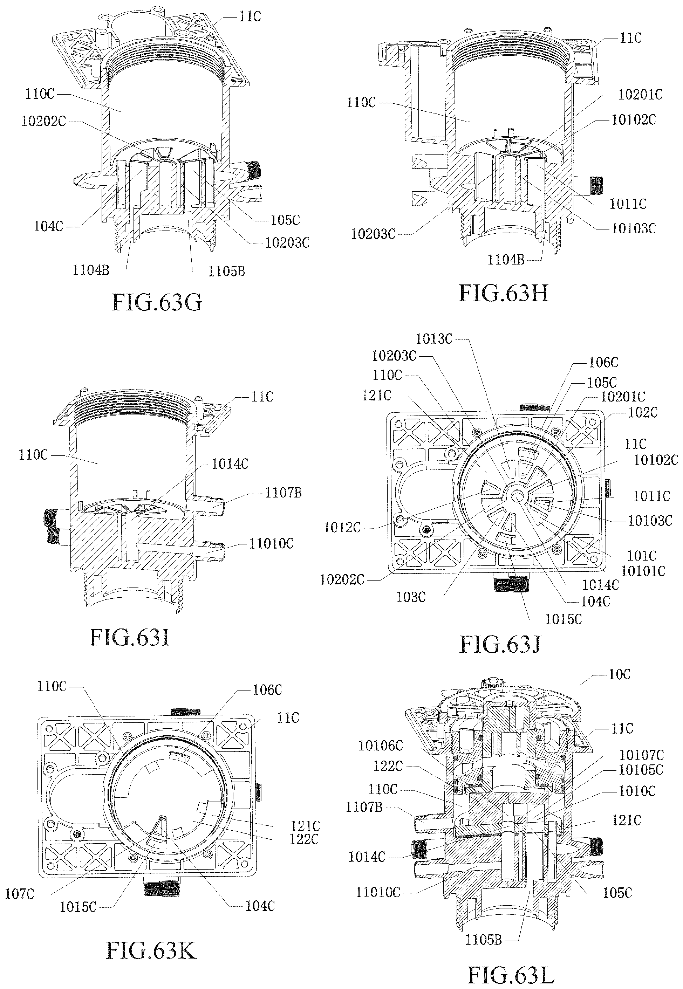

FIG.63E is a cross-sectional view of the valve body of the alternative of the planar valve of the water treatment device according to the second embodiment of the present invention, showing that a first flow hole of the alternative of the planar valve is in communication with the first opening, a second flow hole is in communication with the second opening, a third flow hole is in communication with the third opening, a twelfth flow hole is in communication with the first injector opening, a thirteenth flow hole is in communication with the second injector opening, and a drain hole is in communication with the drain opening.
FIG.63F is another cross-sectional view of the valve body of the alternative of the planar valve of the water treatment device according to the second embodiment of the present invention, showing that a the sixth flow hole of the alternative of the planar valve is in communication with the first fluid opening, and a water supply hole is in communication with the third fluid opening.
FIG.63G is another cross-sectional view of the valve body of the alternative of the planar valve of the water treatment device according to the second embodiment of the present invention, showing that a fourth flow hole of the alternative of the planar valve is in communication with the fourth opening, and a fifth flow hole is in communication with the fifth opening.
FIG.63H is another cross-sectional view of the valve body of the alternative of the planar valve of the water treatment device according to the second embodiment of the present invention, showing that a eleventh flow hole of the alternative of the planar valve is in communication with the fourth opening.
FIG.63I is another cross-sectional view of the valve body of the alternative of the planar valve of the water treatment device according to the second embodiment of the present invention, showing that the valve chamber of the alternative of the planar valve is in communication with the second fluid opening, and the drain hole is in communication with the drain opening.
FIG.63J is a perspective view of the valve body and a fixed disk of the alternative of the planar valve of the water treatment device according to the second embodiment of the present invention, wherein the fixed disk is disposed in the valve chamber of the alternative of the planar valve.
FIG.63K is a perspective view of the valve body, the fixed disk, and a rotating disk of the alternative of the planar valve of the water treatment device according to the second embodiment of the present invention, wherein the rotating disk is disposed on the fixed disk of the alternative of the planar valve.
FIG.63L is another cross-sectional view of the alternative of the planar valve of the water treatment device according to the second embodiment of the present invention, showing that the drain hole of the alternative of the planar valve is in communication with a tenth flow hole and the drain opening, respectively.
FIG.64A is a perspective view of the fixed disk of the alternative of the planar valve of the water treatment device according to the second embodiment of the present invention.
FIG.64B is a perspective view of the rotating disk of the alternative of the planar valve of the water treatment device according to the second embodiment of the present invention.
FIG.64C is a top view of the fixed disk of the alternative of the planar valve of the water treatment device according to the second embodiment of the present invention.
FIG.64D is a bottom view of the fixed disk of the alternative of the planar valve of the water treatment device according to the second embodiment of the present invention.
FIG.64E is a top view of the rotating disk of the alternative of the planar valve of the water treatment device according to the second embodiment of the present invention.
FIG.64F is a bottom view of the rotating disk of the alternative of the planar valve of the water treatment device according to the second embodiment of the present invention.
FIG.64G is a cross-sectional view of the rotating disk of the alternative of the planar valve of the water treatment device according to the second embodiment of the present invention.
FIG.65A is a structural schematic diagram of the fixed disk of the alternative of the planar valve of the water treatment device according to the second embodiment of the present invention, from a top view.
FIG.65B is a structural schematic diagram of the rotating disk of the alternative of the planar valve of the water treatment device according to the second embodiment of the present invention, from a top view, wherein the dotted line shown in Fig.65B shows blind flow holes of the rotating disk.
FIG.65C is a structural schematic diagram of the rotating disk of the alternative of the planar valve of the water treatment device according to the second embodiment of the present invention, from a bottom view, wherein the dotted line shown in Fig.65C shows a communicating flow hole inside the rotating disk.
FIG.66A is a schematic diagram of the equal division of the fixed disk of the alternative of the planar valve of the water treatment device according to the second embodiment of the present invention, showing the flow holes are defined in the specific equal division positions of the fixed disk, respectively.
FIG.66B is a schematic diagram of the equal division of the rotating disk of the alternative of the planar valve of the water treatment device according to the second embodiment of the present invention, showing the flow holes are defined in the specific equal division positions of the rotating disk, respectively.
FIG.67A is a schematic diagram of the communication between the flow holes of the rotating disk and the flow holes of the fixed disk of the alternative of the planar valve when the alternative of the planar valve of the water treatment device according to the second embodiment of the present invention is in its water treatment working position, wherein the shaded area shown in Fig.67A shows the passages defined by the communication between the flow holes of the rotating disk and the flow holes of the fixed disk of the alternative of the planar valve.
FIG.67B is a schematic diagram of the communication between the flow holes of the rotating disk and the flow holes of the fixed disk of the alternative of the planar valve when the alternative of the planar valve of the water treatment device according to the second embodiment of the present invention is in its first backwash working position, wherein the shaded area shown in Fig.67B shows the passages defined by the communication between the flow holes of the rotating disk and the flow holes of the fixed disk of the alternative of the planar valve.
FIG.67C is a schematic diagram of the communication between the flow holes of the rotating disk and the flow holes of the fixed disk of the alternative of the planar valve when the alternative of the planar valve of the water treatment device according to the second embodiment of the present invention is in its second backwash working position, wherein the shaded area shown in Fig.67C shows the passages defined by the communication between the flow holes of the rotating disk and the flow holes of the fixed disk of the alternative of the planar valve.
FIG.67D is a schematic diagram of the communication between the flow holes of the rotating disk and the flow holes of the fixed disk of the alternative of the planar valve when the alternative of the planar valve of the water treatment device according to the second embodiment of the present invention is in its third backwash working position, wherein the shaded area shown in Fig.67D shows the passages defined by the communication between the flow holes of the rotating disk and the flow holes of the fixed disk of the alternative of the planar valve.
FIG.67E is a schematic diagram of the communication between the flow holes of the rotating disk and the flow holes of the fixed disk of the alternative of the planar valve when the alternative of the planar valve of the water treatment device according to the second embodiment of the present invention is in its first rinse working position, wherein the shaded area shown in Fig.67E shows the passages defined by the communication between the flow holes of the rotating disk and the flow holes of the fixed disk of the alternative of the planar valve.
FIG.67F is a schematic diagram of the communication between the flow holes of the rotating disk and the flow holes of the fixed disk of the alternative of the planar valve when the alternative of the planar valve of the water treatment device according to the second embodiment of the present invention is in its second rinse working position, wherein the shaded area shown in Fig.67F shows the passages defined by the communication between the flow holes of the rotating disk and the flow holes of the fixed disk of the alternative of the planar valve.
FIG.67G is a schematic diagram of the communication between the flow holes of the rotating disk and the flow holes of the fixed disk of the alternative of the planar valve when the alternative of the planar valve of the water treatment device according to the second embodiment of the present invention is in its third rinse working position, wherein the shaded area shown in Fig.67G shows the passages defined by the communication between the flow holes of the rotating disk and the flow holes of the fixed disk of the alternative of the planar valve.
FIG.67H is a schematic diagram of the communication between the flow holes of the rotating disk and the flow holes of the fixed disk of the alternative of the planar valve when the alternative of the planar valve of the water treatment device according to the second embodiment of the present invention is in its regeneration working position, wherein the shaded area shown in Fig.67H shows the passages defined by the communication between the flow holes of the rotating disk and the flow holes of the fixed disk of the alternative of the planar valve.
FIG.67I is a schematic diagram of the communication between the flow holes of the rotating disk and the flow holes of the fixed disk of the alternative of the planar valve when the alternative of the planar valve of the water treatment device according to the second embodiment of the present invention is in its water refill working position, wherein the shaded area shown in Fig.67I shows the passages defined by the communication between the flow holes of the rotating disk and the flow holes of the fixed disk of the alternative of the planar valve.
FIG.68A is a cross-sectional view of the alternative of the planar valve of the water treatment device according to the second embodiment of the present invention, wherein the alternative of the planar valve shown in FIG.68A is in its water treatment working position.
FIG.68B is another cross-sectional view of the alternative of the planar valve of the water treatment device according to the second embodiment of the present invention, wherein the alternative of the planar valve shown in FIG.68B is in its water treatment working position.
FIG.68C is another cross-sectional view of the alternative of the planar valve of the water treatment device according to the second embodiment of the present invention, wherein the alternative of the planar valve shown in FIG.68C is in its water treatment working position.
FIG.68D is another cross-sectional view of the alternative of the planar valve of the water treatment device according to the second embodiment of the present invention, wherein the alternative of the planar valve shown in FIG.68D is in its water treatment working position.
FIG.69 is another cross-sectional view of the alternative of the planar valve of the water treatment device according to the second embodiment of the present invention, wherein the alternative of the planar valve shown in FIG.69 is in its first backwash working position.
FIG.70 is another cross-sectional view of the alternative of the planar valve of the water treatment device according to the second embodiment of the present invention, wherein the alternative of the planar valve shown in FIG.70 is in its second backwash working position.
FIG.71 is another cross-sectional view of the alternative of the planar valve of the water treatment device according to the second embodiment of the present invention, wherein the alternative of the planar valve shown in FIG.71 is in its third backwash working position.
FIG.72 is another cross-sectional view of the alternative of the planar valve of the water treatment device according to the second embodiment of the present invention, wherein the alternative of the planar valve shown in FIG.72 is in its first rinse working position.
FIG.73 is another cross-sectional view of the alternative of the planar valve of the water treatment device according to the second embodiment of the present invention, wherein the alternative of the planar valve shown in FIG.73 is in its second rinse working position.
FIG.74 is another cross-sectional view of the alternative of the planar valve of the water treatment device according to the second embodiment of the present invention, wherein the alternative of the planar valve shown in FIG.74 is in its third rinse working position.
FIG.75A is another cross-sectional view of the alternative of the planar valve of the water treatment device according to the second embodiment of the present invention, wherein the alternative of the planar valve shown in FIG.75A is in its regeneration working position.
FIG.75B is another cross-sectional view of the alternative of the planar valve of the water treatment device according to the second embodiment of the present invention, wherein the alternative of the planar valve shown in FIG.75B is in its regeneration working position.
FIG.76 is another cross-sectional view of the alternative of the planar valve of the water treatment device according to the second embodiment of the present invention, wherein the alternative of the planar valve shown in FIG.76 is in its water refill working position.
FIG.77A is another cross-sectional view of the alternative of the planar valve of the water treatment device according to the second embodiment of the present invention, showing a first raw water supply flow passage of the alternative of the planar valve.
FIG.77B is another cross-sectional view of the alternative of the planar valve of the water treatment device according to the second embodiment of the present invention, showing a second raw water supply flow passage of the alternative of the planar valve.
FIG.78A is a structural schematic diagram of the water treatment device according to the second embodiment of the present invention, wherein the alternative of the planar valve of the water treatment device shown in FIG.78A is in its water treatment working position, and the water treatment device is controlled to be in its water treatment working state, the arrows shown in FIG.78A indicate the directions of water flow.
FIG.78B is another structural schematic diagram of the water treatment device according to the second embodiment of the present invention, wherein the alternative of the planar valve of the water treatment device shown in FIG.78B is in its first backwash working position, and the water treatment device is controlled to be in its first backwash working state, the arrows shown in FIG.78B indicate the directions of water flow.
FIG.78C is another structural schematic diagram of the water treatment device according to the second embodiment of the present invention, wherein the alternative of the planar valve of the water treatment device shown in FIG.78C is in its second backwash working position, and the water treatment device is controlled to be in its second backwash working state, the arrows shown in FIG.78C indicate the directions of water flow.
FIG.78D is another structural schematic diagram of the water treatment device according to the second embodiment of the present invention, wherein the alternative of the planar valve of the water treatment device shown in FIG.78D is in its third backwash working position, and the water treatment device is controlled to be in its third backwash working state, the arrows shown in FIG.78D indicate the directions of water flow.
FIG.78E is another structural schematic diagram of the water treatment device according to the second embodiment of the present invention, wherein the alternative of the planar valve of the water treatment device shown in FIG.78E is in its first rinse working position, and the water treatment device is controlled to be in its first rinse working state, the arrows shown in FIG.78E indicate the directions of water flow.
FIG.78F is another structural schematic diagram of the water treatment device according to the second embodiment of the present invention, wherein the alternative of the planar valve of the water treatment device shown in FIG.78F is in its second rinse working position, and the water treatment device is controlled to be in its second rinse working state, the arrows shown in FIG.78F indicate the directions of water flow.
FIG.78G is another structural schematic diagram of the water treatment device according to the second embodiment of the present invention, wherein the alternative of the planar valve of the water treatment device shown in FIG.78G is in its third rinse working position, and the water treatment device is controlled to be in its third rinse working state, the arrows shown in FIG.78G indicate the directions of water flow.
FIG.78H is another structural schematic diagram of the water treatment device according to the second embodiment of the present invention, wherein the alternative of the planar valve of the water treatment device shown in FIG.78H is in its regeneration working position, and the water treatment device is controlled to be in its regeneration working state, the arrows shown in FIG.78H indicate the directions of water flow.
FIG.78I is another structural schematic diagram of the water treatment device according to the second embodiment of the present invention, wherein the alternative of the planar valve of the water treatment device shown in FIG.78I is in its water refill working position, and the water treatment device is controlled to be in its water refill working state, the arrows shown in FIG.78I indicate the directions of water flow.

### DETAILED DESCRIPTION OF THE EMBODIMENT

The following description is disclosed to enable any person skilled in the art to make and use the present invention. Preferred embodiments are provided in the following description only as examples and modifications will be apparent to those skilled in the art. The general principles defined in the following description would be applied to other embodiments, alternatives, modifications, equivalents, and applications without departing from the spirit and scope of the present invention.

Those skilled in the art should understand that, in the disclosure of the present invention, terminologies of "longitudinal", "lateral", "upper", "lower", "front", "back", "left", "right", "perpendicular", "horizontal", "top", "bottom", "inner", "outer" and etc. just indicate relations of direction or position are based on the relations of direction or position shown in the appended drawings, which is only to facilitate descriptions of the present invention and to simplify the descriptions, rather than to indicate or imply that the referred device or element must apply specific direction or to be operated or configured in specific direction. Therefore, the above-mentioned terminologies shall not be interpreted as confine to the present invention. It will be understood that the term "a" should be understood as "at least one" or "one or more", that is, in one embodiment, the number of an element may be one, and in other embodiments, the number of the element can be greater than one, and the term "a" cannot be construed as a limitation to the quantity.

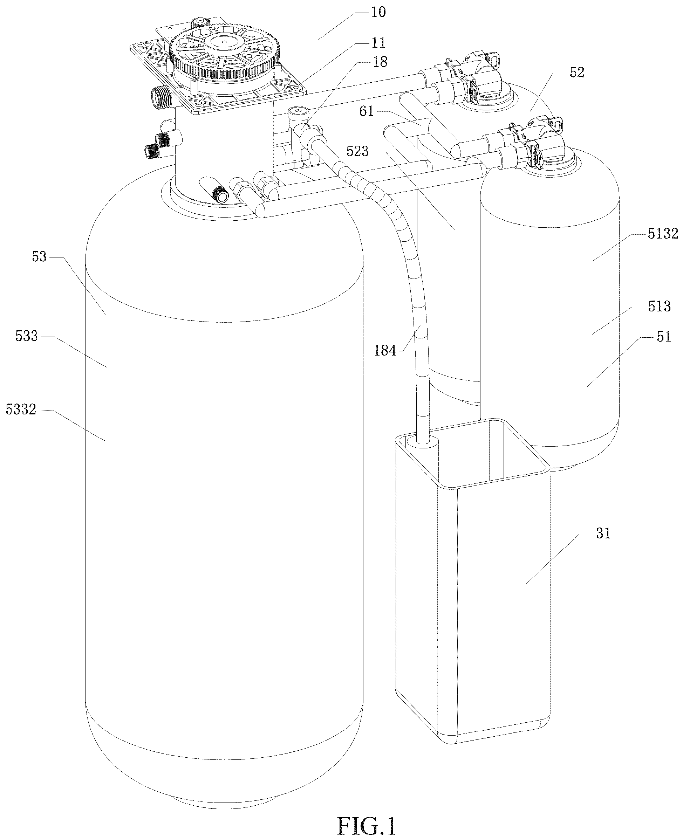

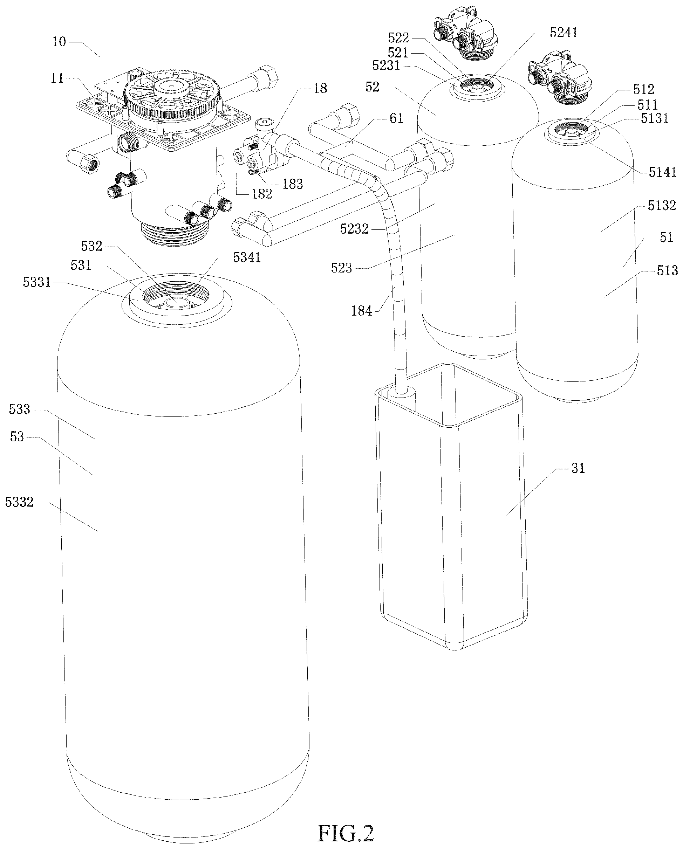

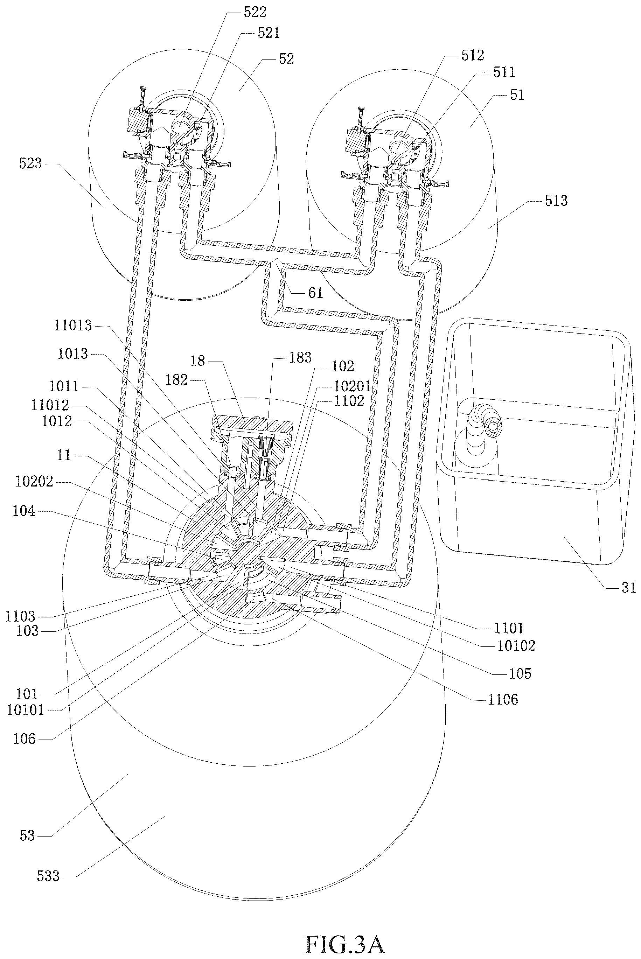

Referring to the accompanying drawings, FIGS.1 to 3G, a water treatment device according to a first embodiment of the present invention is illustrated, wherein the water treatment device of the present invention comprises a control valve 10, a first water treatment device 51, a second water treatment device 52 and a third water treatment device 53, wherein the first water treatment device 51 has a first water inlet 511 and a first water outlet 512, the second water treatment device 52 has a second water inlet 521 and a second water outlet 522 and the third water treatment device 53 has a third water inlet 531 and a third water outlet 532, which allows water flow to enter through the first water inlet 511 and exit through the first water outlet 512 or enter through the first water outlet 512 and exit through the first water inlet 511, allows water flow to enter through the second water inlet 521 and exit through the second water outlet 522 or enter through the second water outlet 522 and exit through the second water inlet 521, and allows water flow to enter through the third water inlet 531 and exit through the third water outlet 532 or enter through the third water outlet 532 and exit through the third water inlet 531, wherein the control valve 10 is configured to control the water flow to flow, such as controlling the supply of water flow to the first water treatment device 51, the second water treatment device 52, and/or the third water treatment device 53, controlling the water flow within the first water treatment device 51, the second water treatment device 52 and the third water treatment device 53 to flow, and controlling the supply of treated water.

It can be understood that the control valve 10 of the water treatment device of the present invention is in communication with a tap water source, such as a water pipe.

In other words, the control valve 10 controls the supply of raw water (e.g., the tap water) to the first water treatment device 51, the second water treatment device 52, and/or the third water treatment device 53.

As shown in FIGS. 3A to 3G, as an example, the first water treatment device 51 of the water treatment device according to the first embodiment of the present invention comprises a first housing 513, a first central tube 514, and a first water treatment material 515, wherein the first housing 513 has a first end 5131 and a first shell body 5132 extending from the first end 5131, the first central tube 514 has a first pipe upper end 5141 and a first pipe lower end 5142, wherein the first water inlet 511 is formed between the first end 5131 and the first pipe upper end 5141, and the first pipe upper end 5141 forms the first water outlet 512, wherein the first water treatment material 515 is disposed between the first housing 513 and the first central tube 514, wherein the first central tube 514 is configured such that a primary treated water produced by treating raw water through the first water treatment material 515 can be collected by the first central tube 514.

It can be understood that the first water treatment material 515 of the first water treatment device 51 of the water treatment device according to the first embodiment of the present invention can be filtration material, such as activated carbon, PP cotton, quartz sand, or other filtration material.

It can also be understood that the first water treatment material 515 of the first water treatment device 51 of the water treatment device according to the first embodiment of the present invention can be loosely distributed filter material or formed filter material obtained through various molding techniques.

The first water treatment material 515 of the first water treatment device 51 of the water treatment device according to the first embodiment of the present invention may also be softening material, such as softening resin.

Those skilled in the art will appreciate that the first water treatment device 51 of the water treatment device of the present invention can also be any other water treatment device having a water inlet and a water outlet.

As shown in FIGS. 3A to 3G, as an example, the second water treatment device 52 of the water treatment device according to the first embodiment of the present invention comprises a second housing 523, a second central tube 524, and a second water treatment material 525, wherein the second housing 523 has a second end 5231 and a second shell body 5232 extending from the second end 5231, the second central tube 524 has a second pipe upper end 5241 and a second pipe lower end 5242 extending downward from the second pipe upper end 5241, wherein the second water inlet 521 is formed between the second end 5231 of the second housing 523 and the second pipe upper end 5241, wherein the second pipe upper end 5241 forms the second water outlet 522, wherein the second water treatment material 525 is disposed between the second housing 523 and the second central tube 524, wherein the second central tube 524 is configured such that the primary treated water flowing in from the second water inlet 521, after being treated by the second water treatment material 525 to produce a secondary treated water, which can be collected by the second central tube 524.

It can be understood that the second water treatment material 525 of the second water treatment device 52 of the water treatment device according to the first embodiment of the present invention can be filtration material, such as activated carbon, PP cotton, quartz sand, or other filtration material.

It can also be understood that the second water treatment material 525 of the second water treatment device 52 of the water treatment device according to the first embodiment of the present invention can be loosely distributed filter material or formed filter material obtained through various molding techniques.

The second water treatment material 525 of the second water treatment device 52 of the water treatment device according to the first embodiment of the present invention may also be softening material, such as softening resin.

Those skilled in the art will appreciate that the second water treatment device 52 of the water treatment device of the present invention can also be any other water treatment device having a water inlet and a water outlet.

As shown in FIGS. 3A to 3G, as an example, the third water treatment device 53 of the water treatment device according to the first embodiment of the present invention comprises a third housing 533, a third central tube 534, and third water treatment material 535, wherein the third housing 533 has a third end 5331 and a third shell body 5332 extending from the third end 5331, the third central tube 534 has a third pipe upper end 5341 and a third pipe lower end 5342 extending downward from the third pipe upper end 5341, wherein the third water inlet 531 is formed between the third end 5331 and the third pipe upper end 5341, wherein the third pipe upper end 5341 forms the third water outlet 532, wherein the third water treatment material 535 is disposed between the third housing 533 and the third central tube 534, wherein the third central tube 534 is configured such that the secondary treated water flowing in from the third water inlet 531, after being treated by the third water treatment material 535 to produce a tertiary treated water, which can be collected by the third central tube 534.

It can be understood that the third water treatment material 535 of the third water treatment device 53 of the water treatment device according to the first embodiment of the present invention can be filtration material, such as activated carbon, PP cotton, quartz sand, or other filtration material.

It can also be understood that the third water treatment material 535 of the third water treatment device 53 of the water treatment device according to the first embodiment of the present invention can be loosely distributed filter material or formed filter material obtained through various molding techniques.

Preferably, the third water treatment material 535 of the third water treatment device 53 of the water treatment device according to the first embodiment of the present invention is softening material, such as softening resin.

Those skilled in the art will appreciate that the third water treatment device 53 of the water treatment device of the present invention can also be any other water treatment device having a water inlet and a water outlet.

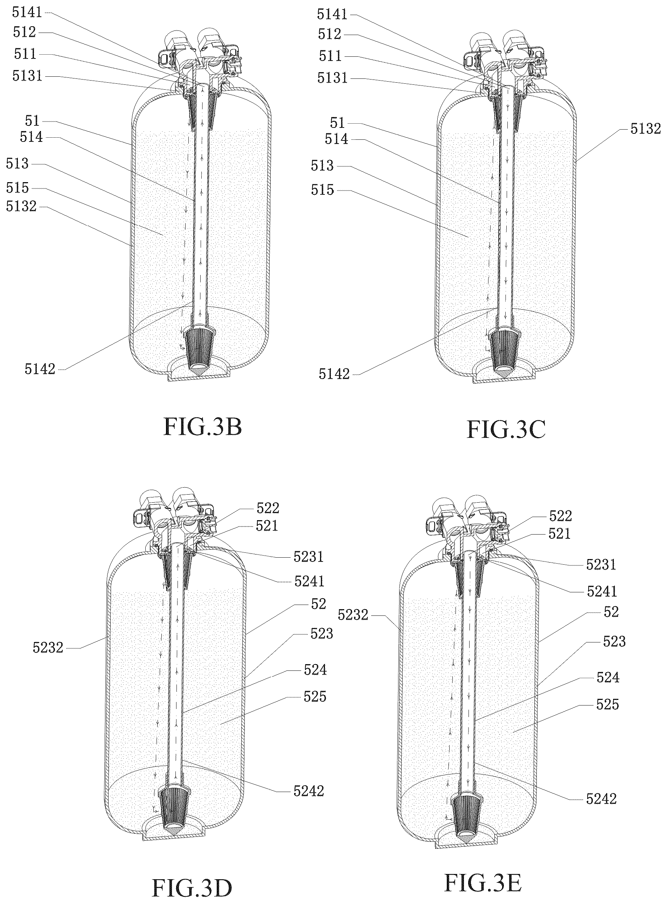

As shown in FIG.3B, when the first water treatment device 51 of the water treatment device according to the first embodiment of the present invention is used for water treatment (e.g., filtration) or when it is rinsed (forward rinse), a water flow flows into the first water treatment device 51 through the first water inlet 511, then sequentially passes through the first end 5131, the first water treatment material 515, the first pipe lower end 5142, the first central tube 514, and the first pipe upper end 5141, and exits through the first water outlet 512; as shown in FIG. 3C, when the first water treatment device 51 of the water treatment device according to the first embodiment of the present invention is backwashed, a water flow flows into the first water treatment device 51 through the first water outlet 512, then sequentially passes through the first pipe upper end 5141, the first central tube 514, the first pipe lower end 5142, the first water treatment material 515, and the first end 5131, and exits through the first water inlet 511.

As shown in FIG. 3D, when the second water treatment device 52 of the water treatment device according to the first embodiment of the present invention is used for water treatment or when it is rinsed (forward rinse), a water flow flows into the second water treatment device 52 through the second water inlet 521, then sequentially passes through the second end 5231, the second water treatment material 525, the second pipe lower end 5242, the second central tube 524, and the second pipe upper end 5241, and exits through the second water outlet 522; as shown in FIG. 3E, when the second water treatment device 52 of the water treatment device according to the first embodiment of the present invention is backwashed, a water flow flows into the second water treatment device 52 through the second water outlet 522, then sequentially passes through the second pipe upper end 5241, the second central tube 524, the second pipe lower end 5242, the second water treatment material 525, and the second end 5231, and exits through the second water inlet 521.

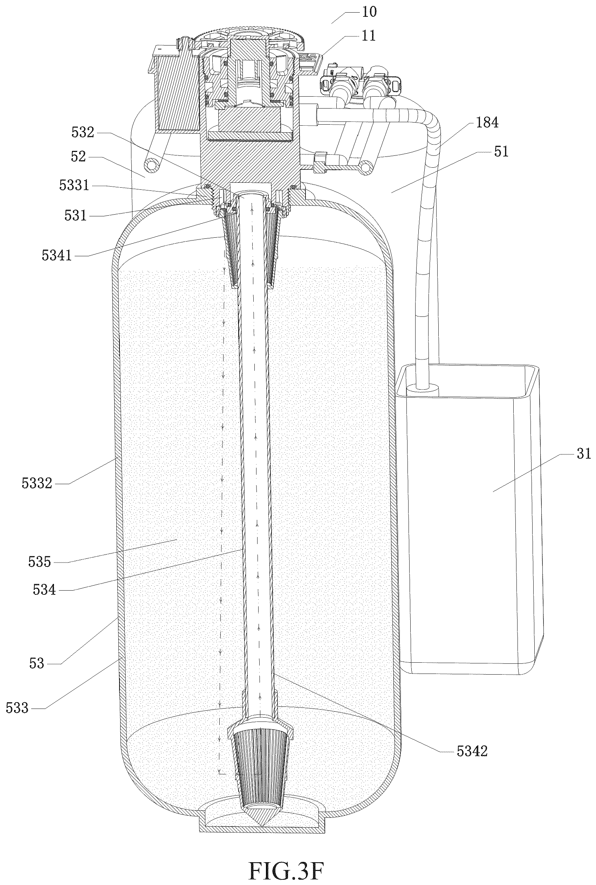

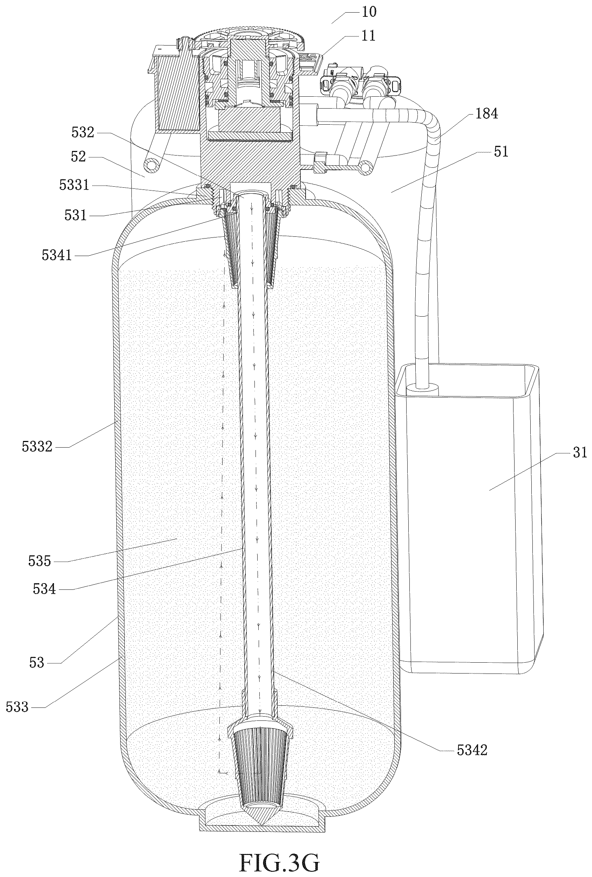

As shown in FIG. 3F, when the third water treatment device 53 of the water treatment device according to the first embodiment of the present invention is used as a purification filter for purifying water or when it is rinsed (forward rinse), a water flow flows into the third water treatment device 53 through the third water inlet 531, then sequentially passes through the third end 5331, the third water treatment material 535, the third pipe lower end 5342, the third central tube 534, and the third pipe upper end 5341, and exits through the third water outlet 532; as shown in FIG. 3G, when the third water treatment device 53 of the water treatment device according to the first embodiment of the present invention is used as a purification filter to be backwashed, a water flow flows into the third water treatment device 53 through the third water outlet 532, then sequentially passes through the third pipe upper end 5341, the third central tube 534, the third pipe lower end 5342, the third water treatment material 535, and the third end 5331, and exits through the third water inlet 531.

As shown in FIG. 3F, when the third water treatment device 53 of the water treatment device according to the first embodiment of the present invention is used as a softening filter for softening water, when it is rinsed (forward rinse), or when it is regenerated by up-flow brine suction, a water flow or a regenerant solution flows into the third water treatment device 53 through the third water inlet 531, then sequentially passes through the third end 5331, the third water treatment material 535, the third pipe lower end 5342, the third central tube 534, and the third pipe upper end 5341, and exits through the third water outlet 532.

As shown in FIGS. 3A to 6L, the control valve 10 of the water treatment device according to the first embodiment of the present invention comprises a valve body 11 and a valve core 12, wherein the valve body 11 forms a valve chamber 110, a first opening 1101, a second opening 1102, a third opening 1103, a fourth opening 1104, a fifth opening 1105, a first fluid opening 1106, a second fluid opening 1107, and a drain opening 11010, wherein the valve core 12 is disposed in the valve chamber 110, wherein the first opening 1101 of the valve body 11 is adapted to communicate with the first water inlet 511 of the first water treatment device 51, the second opening 1102 is adapted to communicate with the first water outlet 512 of the first water treatment device 51 and the second water inlet 521 of the second water treatment device 52 respectively, the third opening 1103 is adapted to communicate with the second water outlet 522 of the second water treatment device 52, the fourth opening 1104 is adapted to communicate with the third water inlet 531 of the third water treatment device 53, the fifth opening 1105 is adapted to communicate with the third water outlet 532 of the third water treatment device 53, the second fluid opening 1107 of the valve body 11 is adapted to communicate with a raw water source (e.g., tap water).

Preferably, the second opening 1102 of the valve body 11 of the control valve 10 of the water treatment device of the present invention, the first water outlet 512 of the first water treatment device 51 and the second water inlet 521 of the second water treatment device 52 form a three-way structure.

Alternatively, the second opening 1102 of the valve body 11 of the control valve 10 of the water treatment device of the present invention is connected to the first water outlet 512 of the first water treatment device 51 and the second water inlet 521 of the second water treatment device 52 respectively, via a three-way structure 61.

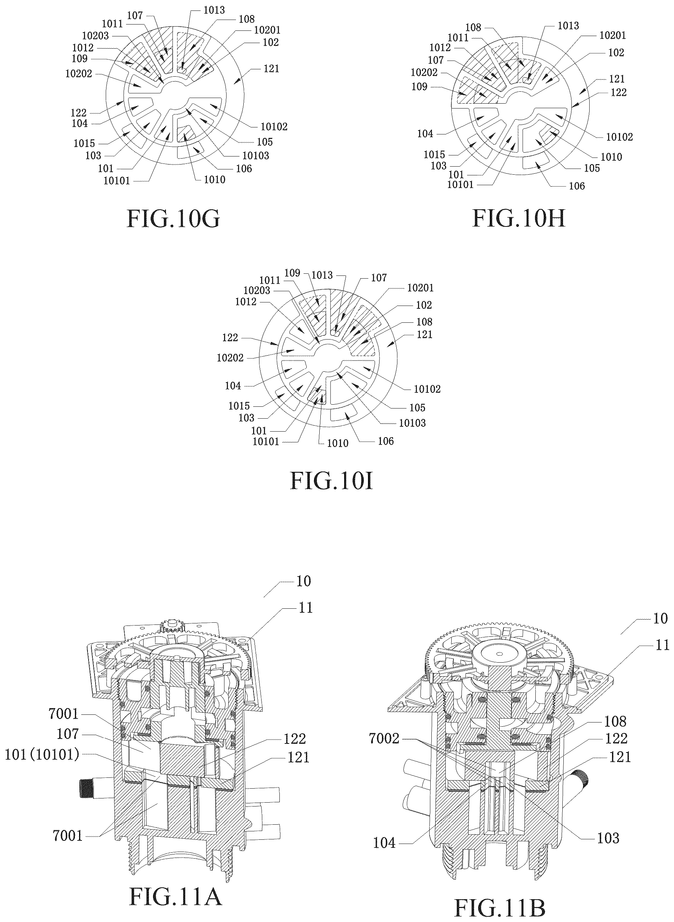

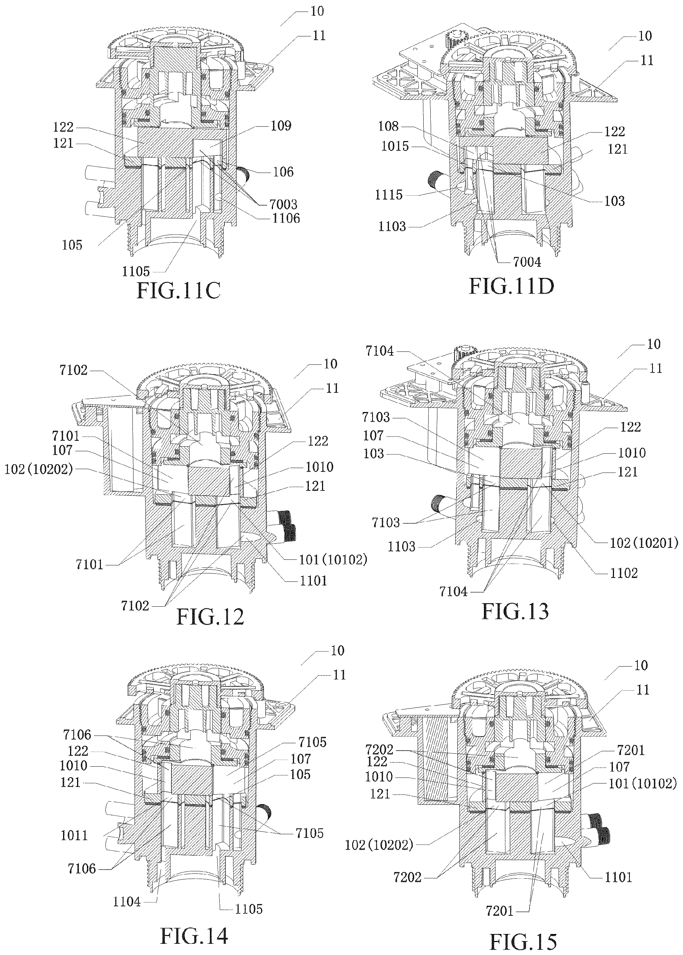

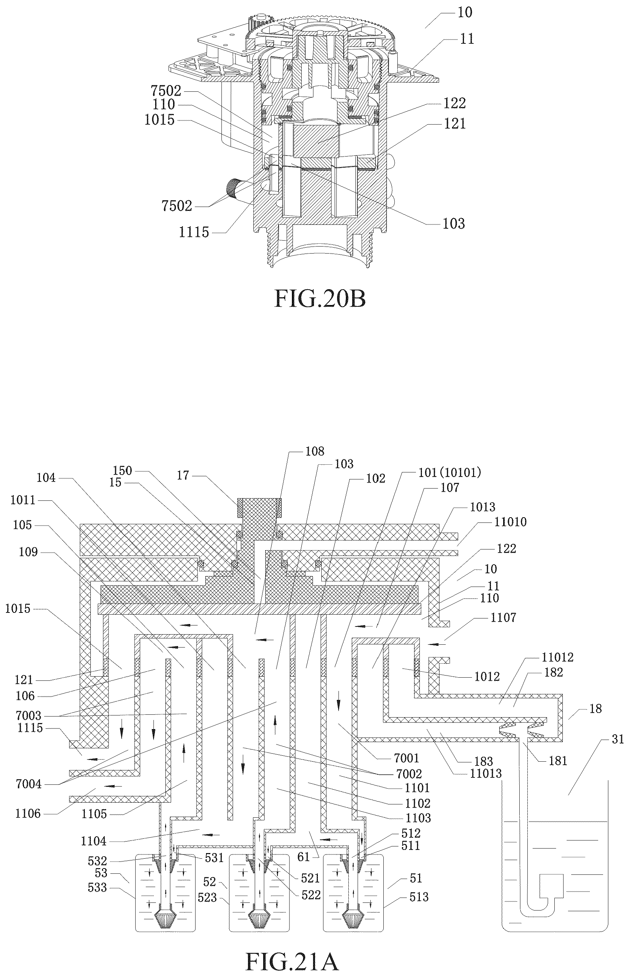

As shown in FIGS. 11A to 11C and 21A, the control valve 10 of the water treatment device according to the first embodiment of the present invention has a water treatment working position, when the control valve 10 is in the water treatment working position, the valve core 12 of the control valve 10 forms a first water treatment flow passage 7001, a second water treatment flow passage 7002 and a third water treatment flow passage 7003, wherein the first water treatment flow passage 7001 is in communication with the second fluid opening 1107 and the first opening 1101, respectively, wherein the second water treatment flow passage 7002 is in communication with the third opening 1103 and the fourth opening 1104, respectively, wherein the third water treatment flow passage 7003 is in communication with the fifth opening 1105 and the first fluid opening 1106, respectively.

Accordingly, when the control valve 10 of the water treatment device of the present invention is in the water treatment working position, raw water flows under water pressure from the second fluid opening 1107 of the valve body 11 of the control valve 10, through the first water treatment flow passage 7001 to the first opening 1101 of the valve body 11, and under water pressure, further into the first water treatment device 51 via the first water inlet 511, a primary treated water obtained after treatment by the first water treatment device 51 exits through the first water outlet 512 and further enters the second water treatment device 52 via the second water inlet 521, and a secondary treated water obtained after treatment by the second water treatment device 52 exits through the second water outlet 522, and under water pressure, further flows into the third opening 1103, then flows into the fourth opening 1104 through the second water treatment flow passage 7002, then into the third water treatment device 53 via the third water inlet 531, the water treated (purified or softened) by the third water treatment device 53 exits through the third water outlet 532 and flows into the fifth opening 1105, then through the third water treatment flow passage 7003 to the first fluid opening 1106 for provision.

Thus, when the control valve 10 of the water treatment device according to the first embodiment of the present invention is in the water treatment working position, water flows sequentially through the second fluid opening 1107 of the valve body 11, the first water treatment flow passage 7001, the first opening 1101 of the valve body 11, the first water inlet 511 of the first water treatment device 51, the first water outlet 512 of the first water treatment device 51, the second water inlet 521 of the second water treatment device 52, the second water outlet 522 of the second water treatment device 52, the third opening 1103 of the valve body 11, the second water treatment flow passage 7002, the fourth opening 1104 of the valve body 11, the third water inlet 531 of the third water treatment device 53, the third water outlet 532 of the third water treatment device 53, the fifth opening 1105 of the valve body 11, the third water treatment flow passage 7003, and the first fluid opening 1106, thereby enabling the control valve 10 of the water treatment device of the present invention to control the three water treatment devices in communication with each other in series.

Preferably, the control valve 10 of the water treatment device according to the first embodiment of the present invention is configured to, when controlled to be in the water treatment working position, block water flow in the second opening 1102.

Further, when the control valve 10 of the water treatment device according to the first embodiment of the present invention is in the water treatment working position, water cannot flow from the first water outlet 512 of the first water treatment device 51 to the second opening 1102, nor from the second water inlet 521 of the second water treatment device 52 to the second opening 1102, ensuring that raw water sequentially passes through and is treated by the first water treatment device 51, the second water treatment device 52, and the third water treatment device 53.

It can be understood that when the control valve 10 of the water treatment device according to the first embodiment of the present invention is in the water treatment working position, the water treatment device of the present invention is controlled to be in its water treatment working state.

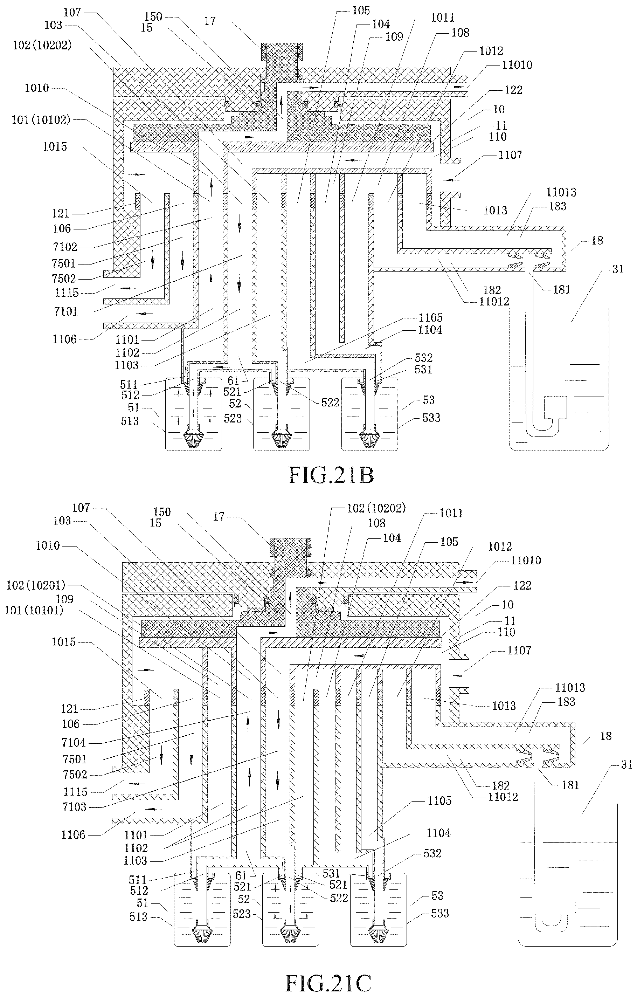

As shown in FIGS. 12 and 21B, the control valve 10 of the water treatment device according to the first embodiment of the present invention has a first backwash working position, wherein when the control valve 10 of the water treatment device of the present invention is in the first backwash working position, the valve core 12 of the control valve 10 forms a first backwash flow passage 7101 and a second backwash flow passage 7102, wherein the first backwash flow passage 7101 is in communication with the second fluid opening 1107 and the second opening 1102, respectively, the second backwash flow passage 7102 is in communication with the drain opening 11010 and the first opening 1101, respectively.

Accordingly, when the control valve 10 of the water treatment device of the present invention is in the first backwash working position, raw water flows under water pressure from the second fluid opening 1107 of the valve body 11 of the control valve 10, through the first backwash flow passage 7101 to the second opening 1102, then into the first water treatment device 51 via the first water outlet 512, backwashing the first water treatment device 51, the generated wastewater exits through the first water inlet 511, then passes through the first opening 1101, the second backwash flow passage 7102, and the drain opening 11010 for discharge.

Preferably, the control valve 10 of the water treatment device according to the first embodiment of the present invention is configured to block the flow of raw water from the second fluid opening 1107 of the valve body 11 of the control valve 10 to the third opening 1103, the fourth opening 1104 and the fifth opening 1105 upon being switched to the first backwash working position.

More preferably, when the control valve 10 of the water treatment device of the present invention is in the first backwash working position, flows of water through the third opening 1103, the fourth opening 1104 and the fifth opening 1105 are blocked, thus stopping water from flowing in the second water treatment device 52 and the third water treatment device 53.

More specifically, when the control valve 10 of the water treatment device according to the first embodiment of the present invention is in the first backwash working position, water cannot flow from the second opening 1102 or the third opening 1103 of the valve body 11 to the second water treatment device 52, nor from the fourth opening 1104 or the fifth opening 1105 of the valve body 11 to the third water treatment device 53, nor from the first water outlet 512 of the first water treatment device 51 to the second water inlet 521 of the second water treatment device 52, thereby ensuring that raw water can only backwash the first water treatment device 51.

It can be understood that when the control valve 10 of the water treatment device according to the first embodiment of the present invention is in the first backwash working position, the water treatment device of the present invention is controlled to be in its first backwash working state to backwash the first water treatment device 51 of the water treatment device of the present invention.

As shown in FIG. 13 and FIG.21C, the control valve 10 of the water treatment device according to the first embodiment of the present invention has a second backwash working position, wherein when the control valve 10 of the water treatment device of the present invention is in the second backwash working position, the valve core 12 of the control valve 10 forms a third backwash flow passage 7103 and a fourth backwash flow passage 7104, wherein the third backwash flow passage 7103 is in communication with the second fluid opening 1107 and the third opening 1103, respectively, the fourth backwash flow passage 7104 is in communication with the drain opening 11010 and the second opening 1102, respectively.

Accordingly, when the control valve 10 of the water treatment device of the present invention is in the second backwash working position, under water pressure, raw water flows from the second fluid opening 1107 of the valve body 11 of the control valve 10, through the third backwash flow passage 7103 to the third opening 1103, then into the second water treatment device 52 via the second water outlet 522, backwashing the second water treatment device 52, the generated wastewater exits through the second water inlet 521, then passes through the second opening 1102, the fourth backwash flow passage 7104, and the drain opening 11010 for discharge.

Preferably, the control valve 10 of the water treatment device according to the first embodiment of the present invention is configured to block the flow of raw water from the second fluid opening 1107 of the valve body 11 of the control valve 10 to the first opening 1101, the fourth opening 1104 and the fifth opening 1105 upon being switched to the second backwash working position.

More preferably, when the control valve 10 of the water treatment device of the present invention is in the second backwash working position, flows of water through the first opening 1101, the fourth opening 1104 and the fifth opening 1105 are blocked, thus stopping water from flowing in the first water treatment device 51 and the third water treatment device 53.

More specifically, when the control valve 10 of the water treatment device according to the first embodiment of the present invention is in the second backwash working position, water cannot flow from the first opening 1101 or the second opening 1102 of the valve body 11 to the first water treatment device 51, nor from the fourth opening 1104 or the fifth opening 1105 of the valve body 11 to the third water treatment device 53, nor from the second water inlet 521 of the second water treatment device 52 to the first water outlet 512 of the first water treatment device 51, thereby ensuring that raw water can only backwash the second water treatment device 52.

It can be understood that when the control valve 10 of the water treatment device according to the first embodiment of the present invention is in the second backwash working position, the water treatment device of the present invention is controlled to be in its second backwash working state to backwash the second treatment device 52 of the water treatment device of the present invention.

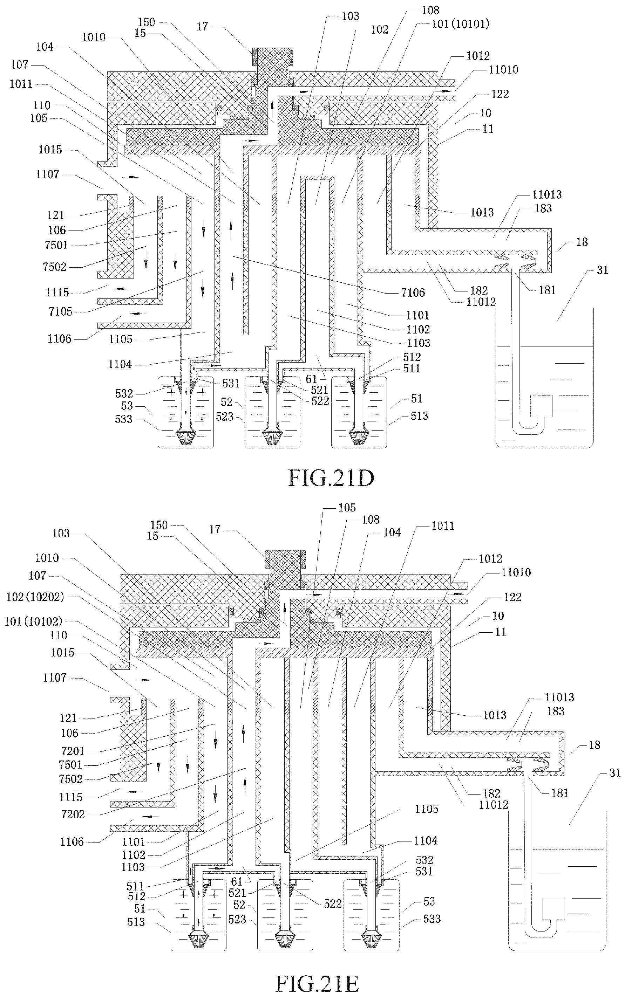

As shown in FIG. 14 and FIG.21D, the control valve 10 of the water treatment device according to the first embodiment of the present invention has a third backwash working position, wherein when the control valve 10 of the water treatment device of the present invention is in the third backwash working position, the valve core 12 of the control valve 10 forms a fifth backwash flow passage 7105 and a sixth backwash flow passage 7106, wherein the fifth backwash flow passage 7105 is in communication with the second fluid opening 1107 and the fifth opening 1105, respectively, the sixth backwash flow passage 7106 is in communication with the drain opening 11010 and the fourth opening 1104, respectively.

Accordingly, when the control valve 10 of the water treatment device of the present invention is in the third backwash working position, under water pressure, raw water flows from the second fluid opening 1107 of the valve body 11 of the control valve 10, through the fifth backwash flow passage 7105 to the fifth opening 1105, then into the third water treatment device 53 via the third water outlet 532, backwashing the third water treatment device 53, the generated wastewater exits through the third water inlet 531, then passes through the fourth opening 1104, the sixth backwash flow passage 7106, and the drain opening 11010 for discharge.

Preferably, when the control valve 10 of the water treatment device according to the first embodiment of the present invention is configured to block the flow of raw water from the second fluid opening 1107 of the valve body 11 of the control valve 10 to the first opening 1101, the second opening 1102 and the third opening 1103 upon being switched to the third backwash working position.

More preferably, when the control valve 10 of the water treatment device of the present invention is in the third backwash working position, flows of water through the first opening 1101, the second opening 1102, and the third opening 1103 are blocked, thus stopping water from flowing in the first water treatment device 51 and the second water treatment device 52.

More specifically, when the control valve 10 of the water treatment device according to the first embodiment of the present invention is in the third backwash working position, water cannot flow from the first opening 1101 or the second opening 1102 of the valve body 11 to the first water treatment device 51, nor from the second opening 1102 or the third opening 1103 of the valve body 11 to the second water treatment device 52, thereby ensuring that raw water can only backwash the third water treatment device 53.

It can be understood that when the control valve 10 of the water treatment device according to the first embodiment of the present invention is in the third backwash working position, the water treatment device of the present invention is controlled to be in its third backwash working state to backwash the third water treatment device 53 of the water treatment device of the present invention.

It is to be understood that "backwash" as used herein refers to the situation wherein water washes a water treatment device of the water treatment device of the present invention (the first water treatment device 51, the second water treatment device 52, or the third water treatment device 53) and the flow direction through the water treatment device is opposite to the direction wherein raw water passes through the same water treatment device when the water treatment device is performing normal water treatment.

As shown in FIG. 15 and FIG. 21E, the control valve 10 of the water treatment device according to the first embodiment of the present invention has a first rinse working position, wherein when the control valve 10 of the water treatment device of the present invention is in the first rinse working position, the valve core 12 of the control valve 10 forms a first rinse flow passage 7201 and a second rinse flow passage 7202, wherein the first rinse flow passage 7201 is in communication with the second fluid opening 1107 and the first opening 1101, respectively, the second rinse flow passage 7202 is in communication with the drain opening 11010 and the second opening 1102, respectively.

Accordingly, when the control valve 10 of the water treatment device of the present invention is in the first rinse working position, under water pressure, raw water flows from the second fluid opening 1107 of the valve body 11 of the control valve 10, through the first rinse flow passage 7201 to the first opening 1101, then into the first water treatment device 51 via the first water inlet 511, rinsing the first water treatment device 51, the generated wastewater exits through the first water outlet 512, then passes through the second opening 1102, the second rinse flow passage 7202, and the drain opening 11010 for discharge.

Preferably, when the control valve 10 of the water treatment device according to the first embodiment of the present invention is configured to block the flow of raw water from the second fluid opening 1107 of the valve body 11 of the control valve 10 to the third opening 1103, the fourth opening 1104 and the fifth opening 1105 upon being switched to the first rinse working position.

More preferably, when the control valve 10 of the water treatment device of the present invention is in the first rinse working position, flows of water through the third opening 1103, the fourth opening 1104 and the fifth opening 1105 are blocked, thus stopping water from flowing in the second water treatment device 52 and the third water treatment device 53.

More specifically, when the control valve 10 of the water treatment device according to the first embodiment of the present invention is in the first rinse working position, water cannot flow from the second opening 1102 or the third opening 1103 of the valve body 11 to the second water treatment device 52, nor from the fourth opening 1104 or the fifth opening 1105 of the valve body 11 to the third water treatment device 53, nor from the first water outlet 512 of the first water treatment device 51 to the second water inlet 521 of the second water treatment device 52, thereby ensuring that raw water can only rinse the first water treatment device 51.

It can be understood that when the control valve 10 of the water treatment device according to the first embodiment of the present invention is in the first rinse working position, the water treatment device of the present invention is controlled to be in its first rinse working state to rinse the first water treatment device 51 of the water treatment device of the present invention.

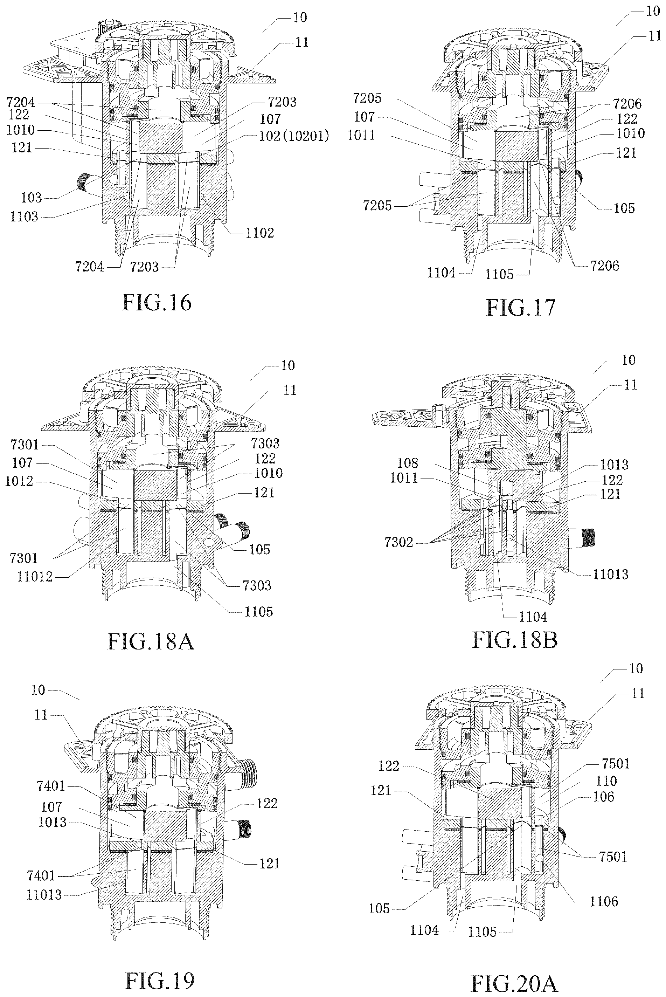

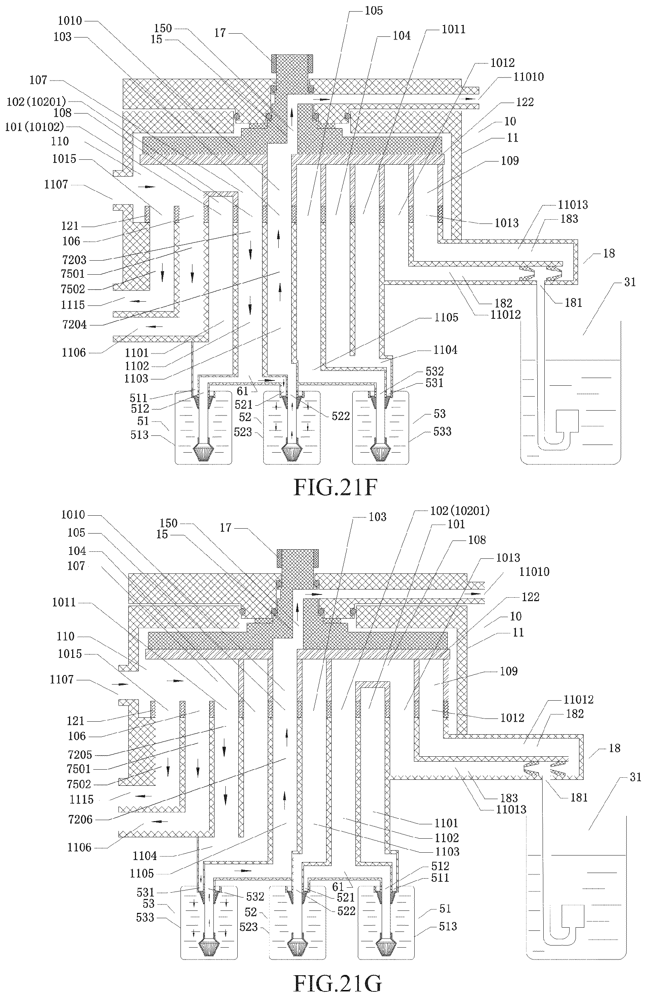

As shown in FIG. 16 and FIG. 21F, the control valve 10 of the water treatment device according to the first embodiment of the present invention has a second rinse working position, wherein when the control valve 10 of the water treatment device of the present invention is in the second rinse working position, the valve core 12 of the control valve 10 forms a third rinse flow passage 7203 and a fourth rinse flow passage 7204, wherein the third rinse flow passage 7203 is in communication with the second fluid opening 1107 and the second opening 1102, respectively, the fourth rinse flow passage 7204 is in communication with the drain opening 11010 and the third opening 1103, respectively.

Accordingly, when the control valve 10 of the water treatment device of the present invention is in the second rinse working position, under water pressure, raw water flows from the second fluid opening 1107 of the valve body 11 of the control valve 10, through the third rinse flow passage 7203 to the second opening 1102, then into the second water treatment device 52 via the second water inlet 521, rinsing the second water treatment device 52, the generated wastewater exits through the second water outlet 522, then passes through the third opening 1103, the fourth rinse flow passage 7204, and the drain opening 11010 for discharge.

Preferably, when the control valve 10 of the water treatment device according to the first embodiment of the present invention is configured to block the flow of raw water from the second fluid opening 1107 of the valve body 11 of the control valve 10 to the first opening 1101, the fourth opening 1104 and the fifth opening 1105 upon being switched to the second rinse working position.

More preferably, when the control valve 10 of the water treatment device of the present invention is in the second rinse working position, flows of water through the first opening 1101, the fourth opening 1104 and the fifth opening 1105 are blocked, thus stopping water from flowing in the first water treatment device 51 and the third water treatment device 53.

More specifically, when the control valve 10 of the water treatment device according to the first embodiment of the present invention is in the second rinse working position, water cannot flow from the first opening 1101 or the second opening 1102 of the valve body 11 to the first water treatment device 51, nor from the fourth opening 1104 or the fifth opening 1105 of the valve body 11 to the third water treatment device 53, nor from the second water inlet 521 of the second water treatment device 52 to the first water outlet 512 of the first water treatment device 51, thereby ensuring that raw water can only rinse the second water treatment device 52.

It can be understood that when the control valve 10 of the water treatment device according to the first embodiment of the present invention is in the second rinse working position, the water treatment device of the present invention is controlled to be in its second rinse working state to rinse the second treatment device 52 of the water treatment device of the present invention.

As shown in FIG. 17 and FIG. 21G, the control valve 10 of the water treatment device according to the first embodiment of the present invention has a third rinse working position, wherein when the control valve 10 of the water treatment device of the present invention is in the third rinse working position, the valve core 12 of the control valve 10 forms a fifth rinse flow passage 7205 and a sixth rinse flow passage 7206, wherein the fifth rinse flow passage 7205 is in communication with the second fluid opening 1107 and the fourth opening 1104, respectively, the sixth rinse flow passage 7206 is in communication with the drain opening 11010 and the fifth opening 1105, respectively.

Accordingly, when the control valve 10 of the water treatment device of the present invention is in the third rinse working position, under water pressure, raw water flows from the second fluid opening 1107 of the valve body 11 of the control valve 10, through the fifth rinse flow passage 7205 to the fourth opening 1104, then into the third water treatment device 53 via the third water inlet 531, rinsing the third water treatment device 53, the generated wastewater exits through the third water outlet 532, then passes through the fifth opening 1105, the sixth rinse flow passage 7206, and the drain opening 11010 for discharge.

Preferably, when the control valve 10 of the water treatment device according to the first embodiment of the present invention is configured to block the flow of raw water from the second fluid opening 1107 of the valve body 11 of the control valve 10 to the first opening 1101, the second opening 1102 and the third opening 1103 upon being switched to the third rinse working position.

More preferably, when the control valve 10 of the water treatment device of the present invention is in the third rinse working position, flows of water through the first opening 1101, the second opening 1102, and the third opening 1103 are blocked, thus stopping water from flowing in the first water treatment device 51 and the second water treatment device 52.

More specifically, when the control valve 10 of the water treatment device according to the first embodiment of the present invention is in the third rinse working position, water cannot flow from the first opening 1101 or the second opening 1102 of the valve body 11 to the first water treatment device 51, nor from the second opening 1102 or the third opening 1103 of the valve body 11 to the second water treatment device 52, thereby ensuring that raw water can only rinse the third water treatment device 53.

It can be understood that when the control valve 10 of the water treatment device according to the first embodiment of the present invention is in the third rinse working position, the water treatment device of the present invention is controlled to be in its third rinse working state to rinse the third water treatment device 53 of the water treatment device of the present invention.

It is to be understood that "rinse" as used herein refers to the situation wherein water washes a water treatment device of the water treatment device of the present invention (the first water treatment device 51, the second water treatment device 52, or the third water treatment device 53) and the flow direction through the water treatment device is same to the direction wherein raw water passes through the same water treatment device when the water treatment device is performing normal water treatment.

Generally, rinsing a water treatment device of the water treatment device of the present invention with water flow follows backwashing the water treatment device, in order to wash away the wastewater generated by the backwashing that remains in the water treatment device.

In addition, if the filter material (or softening material) of the water treatment device of the present invention is granular, rinsing can also serve to compact the filter material (or softening material), thereby enhancing its water treatment effectiveness.

As shown in FIGS. 11A to 21G, the control valve 10 of the water treatment device according to the first embodiment of the present invention, more specifically, the single control valve 10 of the water treatment device of the present invention, is configured to control the first water treatment device 51, the second water treatment device 52, and the third water treatment device 53 of the water treatment device of the present invention to be in communication with in series for achieving three-stage treatment of raw water, and control raw water to backwash and rinse of the first water treatment device 51, the second water treatment device 52, and the third water treatment device 53 of the water treatment device of the present invention, respectively and separately.

As shown in FIGS. 1 to 6E, the third water treatment device 53 of the water treatment device according to the first embodiment of the present invention is a water softening device, wherein the control valve 10 further comprises an injector 18, the valve body 11 of the control valve 10 further forms a first injector opening 11012 and a second injector opening 11013, wherein the injector 18 has a nozzle outlet 182 adapted to communicate with the first injector opening 11012 of the valve body 11, a discharge outlet 183 adapted to communicate with the second injector opening 11013 of the valve body 11, and a brine suction inlet 181 that is in communication with the nozzle outlet 182 and the discharge outlet 183, respectively, when water flow (e.g., raw water) flows from the nozzle outlet 182 of the injector 18 to the discharge outlet 183 of the injector 18, a negative pressure is created in the brine suction inlet 181 of the injector 18, to draw regenerant solution to flow from the brine suction inlet 181 of the injector 18 to the discharge outlet 183 of the injector 18.

Correspondingly, the brine suction inlet 181 of the injector 18 is in communication with the nozzle outlet 182 and the discharge outlet 183 of the injector 18, respectively.

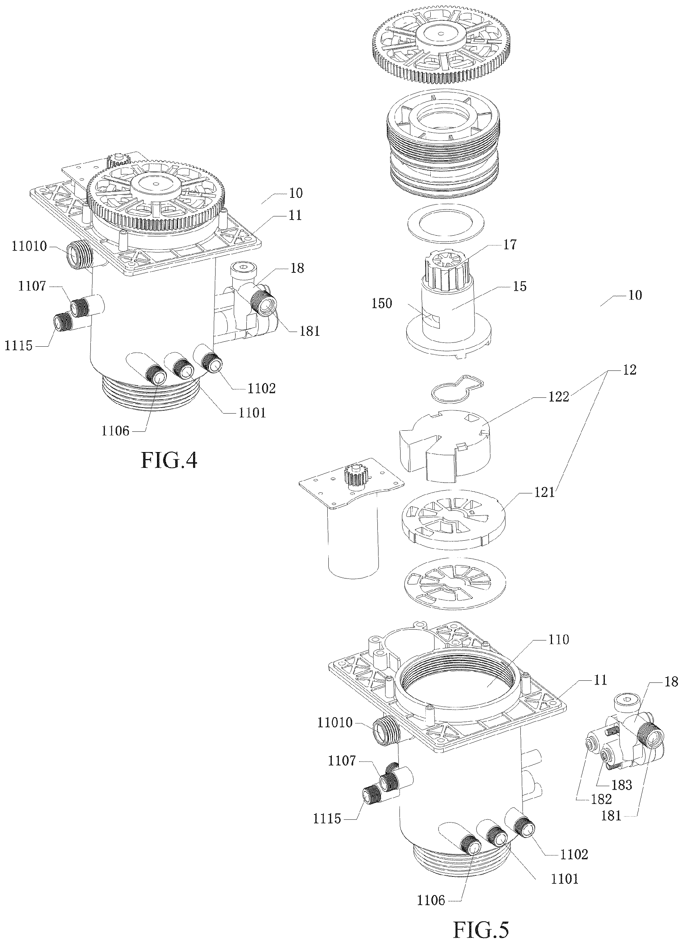

As shown in FIGS. 1 and 5, the water treatment device according to the first embodiment of the present invention further comprises a brine tube 184 and a regenerant solution tank 31, wherein one end of the brine tube 184 communicates with the brine suction inlet 181, and the other end of the brine tube 184 communicates with the regenerant solution tank 31, allowing brine to be supplied to the brine suction inlet 181 through the brine tube 184 or allowing water to flow from the brine suction inlet 181 through the brine tube 184 to the regenerant solution tank 31 for water refill.

It can be understood that the regenerant solution is typically brine.

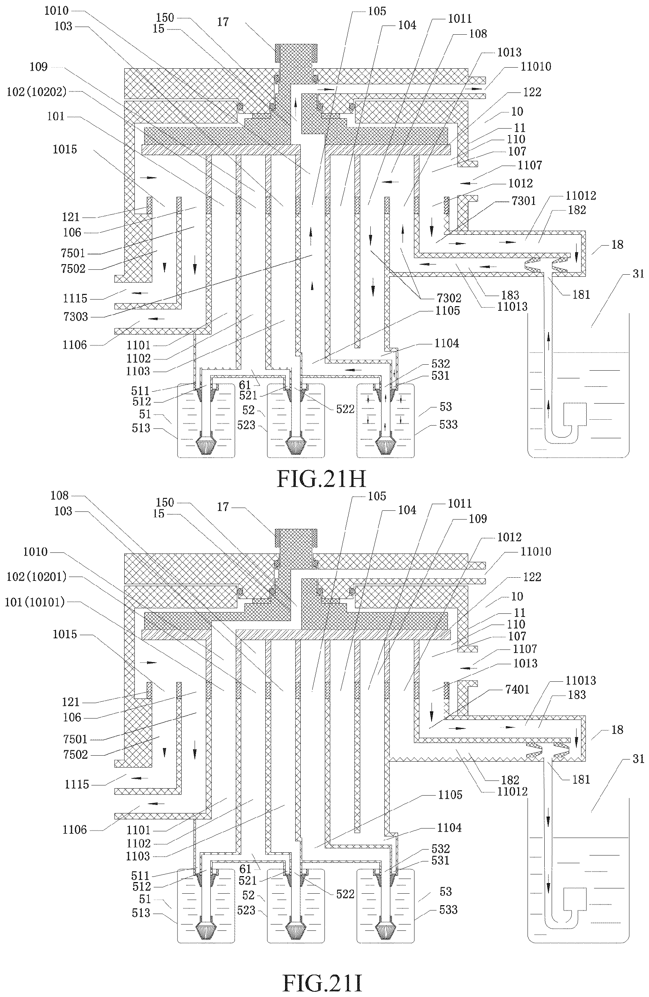

As shown in FIGS. 18A, 18B and 21H, the control valve 10 of the water treatment device according to the first embodiment of the present invention has a regeneration working position, when the control valve 10 is in the regeneration working position, the valve core 12 of the control valve 10 forms a first regeneration flow passage 7301, a second regeneration flow passage 7302 and a third regeneration flow passage 7303, wherein the first regeneration flow passage 7301 is in communication with the second fluid opening 1107 and the first injector opening 11012 respectively, wherein the second regeneration flow passage 7302 is in communication with the second injector opening 11013 and the fourth opening 1104 respectively, wherein the third regeneration flow passage 7303 is in communication with the fifth opening 1105 and the drain opening 11010 respectively.

Accordingly, when the control valve 10 of the water treatment device according of the present invention is in the regeneration working position, under water pressure, raw water flows from the second fluid opening 1107 of the valve body 11 of the control valve 10, through the first regeneration flow passage 7301 to the first injector opening 11012 of the valve body 11, then into the nozzle outlet 182 of the injector 18, and after jetting through the injector 18 and mixing with brine ( such as sodium chloride solution) from the brine suction inlet 181, a regenerant solution is generated and flows through the discharge outlet 183 of the injector 18 into the second injector opening 11013 of the valve body 11, then through the second regeneration flow passage 7302 into the fourth opening 1104 of the valve body 11, then into the third water treatment device 53 via the third water inlet 531 for down-flow regeneration of the third water treatment material 535 (e.g., softening resin), the wastewater exits through the third water outlet 532, then passes through the fifth opening 1105 of the valve body 11, the third regeneration flow passage 7303, and the drain opening 11010.

Preferably, when the control valve 10 of the water treatment device according to the first embodiment of the present invention is in the regeneration working position, the regenerant solution is prevented from flowing to the first opening 1101, the second opening 1102, and the third opening 1103, and raw water is prevented from flowing from the second fluid opening 1107 of the valve body 11 of the control valve 10 to the first opening 1101, the second opening 1102, and the third opening 1103.

More preferably, when the control valve 10 of the water treatment device of the present invention is in the regeneration working position, water flows through the first opening 1101, the second opening 1102, and the third opening 1103 are blocked, thus stopping water from flowing in the first water treatment device 51 and the second water treatment device 52.

More specifically, when the control valve 10 of the water treatment device according to the first embodiment of the present invention is controlled to be in the regeneration working position, water flow cannot pass from the first opening 1101 or the second opening 1102 of the valve body 11 to the first water treatment device 51; nor cannot flow from the second opening 1102 or the third opening 1103 of the valve body 11 to the second water treatment device 52, thereby ensuring that the regenerant solution can flow only to the third water treatment device 53.

The down-flow regeneration of the present invention refers to the fact that when in the regeneration working position, the flow direction of the regenerant solution in the third water treatment device 53 is the same as the flow direction of the water in the third water treatment device 53 when the control valve 10 is in the water treatment working position.

It can be understood that when the control valve 10 of the water treatment device according to the first embodiment of the present invention is in the regeneration working position, the water treatment device of the present invention is controlled to be in its regeneration working state.

As shown in FIGS. 19 and 21I, the control valve 10 of the water treatment device according to the first embodiment of the present invention further has a water refill working position, when the control valve 10 is in the water refill working position, the valve core 12 of the control valve 10 forms a water refill flow passage 7401, wherein the water refill flow passage 7401 is in communication with the second fluid opening 1107 and the second injector opening 11013 of the valve body 11 respectively.

Correspondingly, when the control valve 10 is in the water refill working position, raw water flows into the second fluid opening 1107 of the valve body 11 of the control valve 10 under water pressure, passes through the water refill flow passage 7401 to the second injector opening 11013 of the valve body 11, and then sequentially enters the discharge outlet 183, the brine suction inlet 181 of the injector 18, and the brine suction pipe 184 to the regenerant solution tank 31 for refilling the regenerant solution.

Preferably, when the control valve 10 of the water treatment device according to the first embodiment of the present invention is in the water refill working position, the control valve 10 can prevent raw water from flowing from the second fluid opening 1107 of the valve body 11 of the control valve 10 of the water treatment device of the present invention to the first opening 1101, the second opening 1102, the third opening 1103, the fourth opening 1104 and the fifth opening 1105.

More preferably, when the control valve 10 of the water treatment device of the present invention is controlled to be in the water refill working position, water flows through the first opening 1101, the second opening 1102, the third opening 1103, the fourth opening 1104 and the fifth opening 1105 are blocked, thus stopping water from flowing in the first water treatment device 51, the second water treatment device 52 and the third water treatment device 53.

More specifically, when the control valve 10 of the water treatment device according to the first embodiment of the present invention is controlled to be in the water refill working position, water flow cannot pass from the first opening 1101 or the second opening 1102 of the valve body 11 to the first water treatment device 51; nor cannot flow from the second opening 1102 or the third opening 1103 of the valve body 11 to the second water treatment device 52, nor cannot flow from the fourth opening 1104 or the fifth opening 1105 to the third water treatment device 53.

It can be understood that when the control valve 10 of the water treatment device according to the first embodiment of the present invention is controlled to be in the water refill working position, the water treatment device of the present invention is controlled to be in its water refill working state.

As shown in FIG.11D and FIG.21A, the valve body 11 of the control valve 10 of the water treatment device according to the first embodiment of the present invention further forms a third fluid opening 1115, when the control valve 10 of the water treatment device is in the water treatment working position, the valve core 12 of the control valve 10 forms a fourth water treatment flow passage 7004, wherein the fourth water treatment flow passage 7004 is in communication with both the third opening 1103 and the third fluid opening 1115 of the valve body 11 respectively.

Accordingly, when the control valve 10 of the water treatment device of the present invention is in the water treatment working position, under water pressure, raw water flows from the second fluid opening 1107 of the valve body 11 of the control valve 10, through the first water treatment flow passage 7001 to the first opening 1101 of the valve body 11, further into the first water treatment device 51 via the first water inlet 511, a primary treated water obtained after treatment by the first water treatment device 51 exits through the first water outlet 512 and further enters the second water treatment device 52 via the second water inlet 521, and a secondary treated water obtained after treatment by the second water treatment device 52 exits through the second water outlet 522, further flows into the third opening 1103, then through the fourth water treatment flow passage 7004 to the third fluid opening 1115 for provision.

It is understandable that when the control valve 10 is in the water treatment working position, the water treatment device of the present invention can provide the user not only with tertiary treated water (purified water or purified softened water) through the first fluid opening 1106, but also with secondary treated water (purified water) through the third fluid opening 1115.

For example, if the first water treatment device 51 and the second water treatment device 52 of the water treatment device according to the first embodiment of the present invention are water purification devices (e.g., a purification filter), and the third water treatment device 53 is a water softening device (e.g., a softening filter), then when the water treatment device of the present invention is in the water treatment working state, it can provide the user not only with purified softened water through the first fluid opening 1106, but also with secondary purified water through the third fluid opening 1115.

As shown in FIGS. 20A, 20B, and 21B to 21I, when the control valve 10 of the water treatment device according to the first embodiment of the present invention is in the first backwash working position, the second backwash working position, the third backwash working position, the first rinse working position, the second rinse working position, the third rinse working position, the regeneration working position, or water refill working position, the valve core 12 of the control valve 10 further forms a first raw water supply flow passage 7501 and a second raw water supply flow passage 7502, wherein the first raw water supply flow passage 7501 communicates with both the second fluid opening 1107 and the first fluid opening 1106 of the valve body 11 respectively, the second raw water supply flow passage 7502 communicates with both the second fluid opening 1107 and the third fluid opening 1115 of the valve body 11 respectively.

Accordingly, when the control valve 10 is in the first backwash working position, the second backwash working position, the third backwash working position, the first rinse working position, the second rinse working position, the third rinse working position, the regeneration working position, or the water refill working position, raw water, under water pressure, flows into the second fluid opening 1107 of the valve body 11 of the control valve 10, then passes through the first raw water supply flow passage 7501 to the first fluid opening 1106 to supply raw water, and simultaneously passes through the second raw water supply flow passage 7502 to the third fluid opening 1115 to supply raw water.

It is understandable that supplying raw water to the user through the first fluid opening 1106 and the third fluid opening 1115 not only addresses the user's water demand during the rinse working position, the regeneration working position, and the water refill working position of the water treatment device according to the first embodiment of the present invention but also can provide a water source during emergencies such as fire disaster.

As shown in FIGS.5 to 8B, the control valve 10 of the water treatment device according to the first embodiment of the present invention is a planar valve, wherein the valve core 12 of the planar valve 10 further comprises a fixed disk 121 and a rotating disk 122, wherein the fixed disk 121 has a first fluid control surface 1210, the rotating disk 122 has a second fluid control surface 1220, wherein the rotating disk 122 and the fixed disk 121 are both disposed inside the valve chamber 110, wherein the second fluid control surface 1220 of the rotating disk 122 is provided on the first fluid control surface 1210 of the fixed disk 121, and the rotating disk 122 is provided to be capable of rotating relative to the fixed disk 121.

Preferably, the second fluid opening 1107 communicates with the valve chamber 110 of the valve body 11.

As shown in FIGS. 5 to 8B, the planar valve 10 of the water treatment device according to the first embodiment of the present invention comprises a first flow hole 101, a second flow hole 102, a third flow hole 103, a fourth flow hole 104, a fifth flow hole 105, a sixth flow hole 106, a seventh flow hole 107, an eighth flow hole 108, a ninth flow hole 109 and a tenth flow hole 1010, wherein the first flow hole 101, the second flow hole 102, the third flow hole 103, the fourth flow hole 104, the fifth flow hole 105 and the sixth flow hole 106 are respectively provided in the fixed disk 121 and extend from the first fluid control surface 1210 of the fixed disk 121, the seventh flow hole 107, the eighth flow hole 108, the ninth flow hole 109 and the tenth flow hole 1010 are respectively provided in the rotating disk 122 and extend from the second fluid control surface 1220 of the rotating disk 122, wherein the first flow hole 101 is in communication with the first opening 1101, the second flow hole 102 is in communication with the second opening 1102, the third flow hole 103 is in communication with the third opening 1103, the fourth flow hole 104 is in communication with the fourth opening 1104, the fifth flow hole 105 is in communication with the fifth opening 1105, the sixth flow hole 106 is in communication with the first fluid opening 1106, the seventh flow hole 107 is in communication with the second fluid opening 1107, the tenth flow hole 1010 is in communication with the drain opening 11010.Preferably, the sixth flow hole 106 is arranged outward of the fifth flow hole 105.Preferably, both the eighth flow hole 108 and the ninth flow hole 109 are communicating blind holes. Preferably, the seventh flow hole 107 is in communication with the valve chamber 110 and is further in communication with the second fluid opening 1107 through the valve chamber 110.

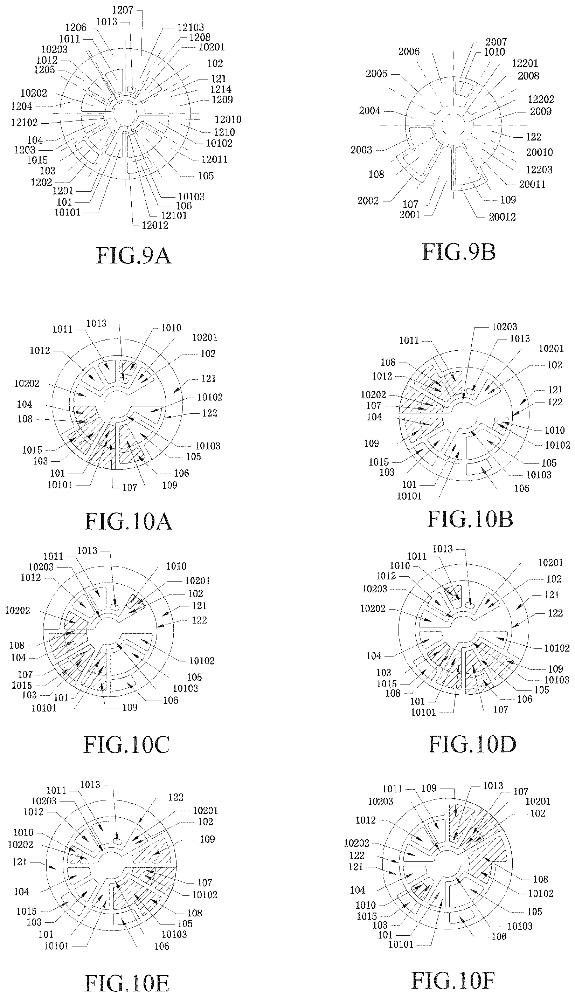

As shown in FIGS.10A, 11A to 11D, and 21A, the rotating disk 122 of the planar valve 10 in the water treatment device according to the first embodiment of the present invention is capable of rotating relative to the fixed disk 121, thereby enabling the planar valve 10 to assume a water treatment working position, wherein when the planar valve 10 of the water treatment device is in the water treatment working position, the seventh flow hole 107 of the planar valve 10 is in communication with the first flow hole 101, thereby forming the first water treatment flow passage 7001 communicating with the second fluid opening 1107 and the first opening 1101 respectively, the eighth flow hole 108 is in communication with the third flow hole 103 and the fourth flow hole 104 respectively, thereby forming the second water treatment flow passage 7002 communicating with the third opening 1103 and the fourth opening 1104 respectively, the ninth flow hole 109 is in communication with the fifth flow hole 105 and the sixth flow hole 106 respectively, thereby forming the third water treatment flow passage 7003 communicating with the fifth opening 1105 and the first fluid opening 1106 respectively.

In other words, when the planar valve 10 of the water treatment device of the present invention is in the water treatment working position, the water flow, under water pressure, sequentially passes through the second fluid opening 1107, the seventh flow hole 107, the first flow hole 101, the first opening 1101 of the planar valve 10, the first water inlet 511 of the first water treatment device 51, the first water outlet 512 of the first water treatment device 51, the second water inlet 521 of the second water treatment device 52, the second water outlet 522 of the second water treatment device 52, the third opening 1103 of the planar valve 10, the third flow hole 103, the eighth flow hole 108, the fourth flow hole 104, the fourth opening 1104, the third water inlet 531 of the third water treatment device 53, the third water outlet 532 of the third water treatment device 53, the fifth opening 1105, the fifth flow hole 105, the ninth flow hole 109, the sixth flow hole 106, and the first fluid opening 1106 of the planar valve 10.

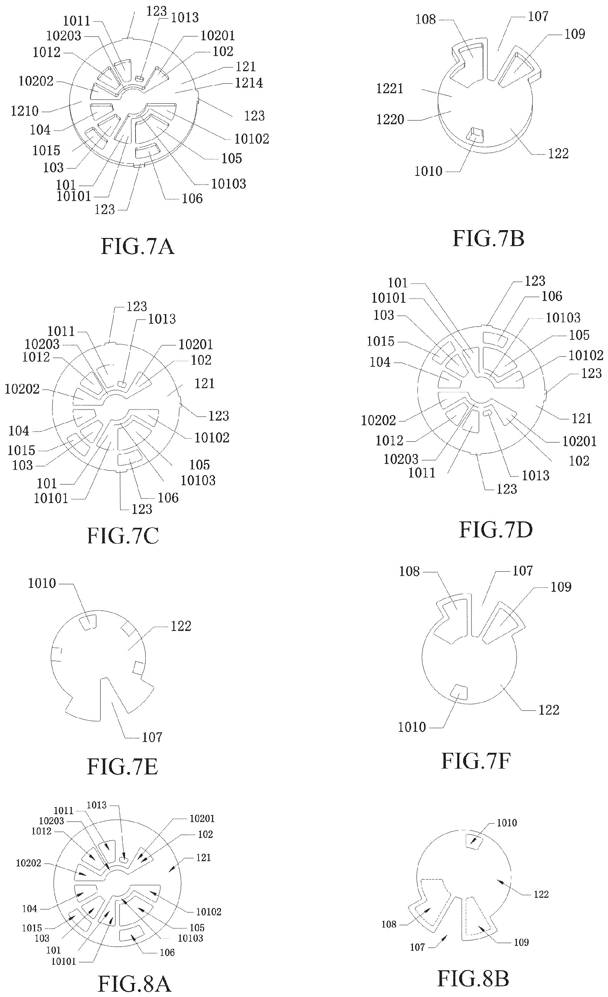

As shown in FIGS.7A to 7F, 10A, and 21A, illustratively, when the planar valve 10 of the water treatment device of the present invention is in the water treatment working position, the second flow hole 102 is blocked by the second fluid control surface 1220 of the rotating disk 122, the tenth flow hole 1010 is blocked by the first fluid control surface 1210 of the fixed disk 121.

It is worth mentioning that when the planar valve 10 of the water treatment device of the present invention is in the water treatment working position, the second opening 1102 is in communication with the first water outlet 512 of the first water treatment device 51 and the second water inlet 521 of the second water treatment device 52 respectively, the second flow hole 102 is blocked by the second fluid control surface 1220 of the rotating disk 122.

That is to say, when the planar valve 10 of the water treatment device of the present invention is in the water treatment working position, no water flows into or out of the second opening 1102, the first water outlet 512 of the first water treatment device 51 and the second water inlet 521 of the second water treatment device 52 form a series connection structure, the eighth flow hole 108 is in communication with the third flow hole 103 and the fourth flow hole 104 respectively, the third opening 1103 is in communication with the second water outlet 522 of the second water treatment device 52, the fourth opening 1104 is in communication with the third water inlet 531 of the third water treatment device 53, consequently, the second water outlet 522 of the second water treatment device 52 and the third water inlet 531 of the third water treatment device 53 also form a series connection structure, such that when the planar valve 10 is in the water treatment working position, the first water treatment device 51, the second water treatment device 52, and the third water treatment device 53 are configured in a three-stage series structure, the first water treatment material 515 of the first water treatment device 51, the second water treatment material 525 of the second water treatment device 52, and the third water treatment material 535 of the third water treatment device 53 will sequentially treat the raw water entering through the second fluid opening 1107 of the planar valve 10, the treated water then flows out and is supplied via the first fluid opening 1106.

It is understood that the three-stage series structure enables more thorough, in-depth treatment of the raw water.

In particular, the first water treatment material 515 of the first water treatment device 51, the second water treatment material 525 of the second water treatment device 52, and the third water treatment material 535 of the third water treatment device 53 can be configured as different materials. For example, the first water treatment material 515 can be quartz sand, serving as a coarse filtration material, the second water treatment material 525 can be granular activated carbon, functioning as an adsorption material, and the third water treatment material 535 can be softening resin, performing softening treatment.

As shown in FIGS. 7A to 7F, 10A, and 21A, as an example, when the planar valve 10 of the water treatment device according to the first embodiment of the present invention is controlled to be in the water treatment working position, raw water from the planar valve 10, under water pressure, enters the valve chamber 110 through the second fluid opening 1107 of the valve body 11, then flows through the seventh flow hole 107 and the first flow hole 101 into the first opening 1101, then enters the first water treatment device 51 via its first water inlet 511, and then is treated (e.g., purified or softened) by the first water treatment material 515 under water pressure, the generated primary treated water is collected by the first central tube 514 and exits the first water treatment device 51 through the first water outlet 512, flows towards and enters the second water treatment device 52 via its second water inlet 521, and then is treated (e.g., purified or softened) by the second water treatment material 525 under water pressure, the generated secondary treated water is collected by the second central tube 524 and exits the second water treatment device 52 through the second water outlet 522, then flows, under water pressure, through the third opening 1103 of the planar valve 10, then through the third flow hole 103, the eighth flow hole 108, the fourth flow hole 104, and the fourth opening 1104, enters the third water treatment device 53 via its third water inlet 531, is treated (e.g., purified or softened) by the third water treatment material 535 under water pressure, the generated tertiary treated water is collected by the third central tube 534 and exits the third water treatment device 53 through the third water outlet 532, and flows towards the fifth opening 1105 of the planar valve 10, passes through the fifth flow hole 105, the ninth flow hole 109, the sixth flow hole 106, and is finally supplied through the first fluid opening 1106.

As shown in FIGS.10B, 12, and 21B, the planar valve 10 of the water treatment device according to the first embodiment of the present invention further has a first backwash working position, when the planar valve 10 of the water treatment device of the present invention is in the first backwash working position, the seventh flow hole 107 of the planar valve 10 is in communication with the second flow hole 102, thereby forming the first backwash flow passage 7101 communicating with the second fluid opening 1107 and the second opening 1102 respectively, the tenth flow hole 1010 is in communication with the first flow hole 101, thereby forming the second backwash flow passage 7102 communicating the drain opening 11010 and the first opening 1101 respectively.

As shown in FIGS.7A to 7F, 10B, and 21B, when the planar valve 10 of the water treatment device of the present invention is in the first backwash working position, the ninth flow hole 109 is in communication with the fourth flow hole 104, the third flow hole 103 and the fifth flow hole 105 are blocked by the second fluid control surface 1220 of the rotating disk 122 respectively.

Therefore, when the planar valve 10 is in the first backwash working position, even though the ninth flow hole 109 of the planar valve 10 is in communication with the fourth flow hole 104, the ninth flow hole 109 is a communicating blind hole, and the third flow hole 103 and the fifth flow hole 105 are blocked by the second fluid control surface 1220 of the rotating disk 122 respectively, as a result, raw water can only enter the seventh flow hole 107 from the second fluid opening 1107 of the planar valve 10, and then flow further through the second flow hole 102, the second opening 1102, towards the first water outlet 512 of the first water treatment device 51, and into the first water treatment device 51, the wastewater generated from backwashing the first water treatment device 51 flows from the first water inlet 511 of the first water treatment device 51 towards the first opening 1101 of the planar valve 10, and is further discharged under water pressure through the first flow hole 101, the tenth flow hole 1010, and the drain opening 11010 of the planar valve 10.

In other words, although the ninth flow hole 109 is in communication with the fourth flow hole 104, water flow does not pass through the passage formed by them.

Correspondingly, when the planar valve 10 is in the first backwash working position, because the ninth flow hole 109 is a communicating blind hole, the flow passage formed by the communication between the fourth flow hole 104 and the ninth flow hole 109 is blocked by the rotating disk 122, and the third flow hole 103 and the fifth flow hole 105 are blocked by the second fluid control surface 1220 of the rotating disk 122 respectively, which prevents water flow through the third opening 1103, the fourth opening 1104, and the fifth opening 1105 of the planar valve 10, and also prevents water flow within the second water treatment device 52 and the third water treatment device 53.

More specifically, when the planar valve 10 is in the first backwash working position, it prevents water flow from the second opening 1102 towards the second water inlet 521 of the second water treatment device 52.

In other words, although the ninth flow hole 109 is in communication with the fourth flow hole 104, the rotating disk 122 prevents raw water from flowing towards the third flow hole 103, the fourth flow hole 104, and the fifth flow hole 105, thereby ensuring that only the first water treatment device 51 is backwashed.

Preferably, the tenth flow hole 1010 is a through hole, and the tenth flow hole 1010 forms the drain opening 11010.

It is worth mentioning that when the planar valve 10 is in the first backwash working position, the flow passage formed by the communication between the ninth flow hole 109 and the fourth flow hole 104, the third flow hole 103 and the fifth flow hole 105, are blocked by the rotating disk 122, which results in the third opening 1103, the fourth opening 1104, and the fifth opening 1105 all being blocked, and even though the ninth flow hole 109 and the fourth flow hole 104 are in communication with and form a corresponding flow passage, water cannot flow into or out of the passage formed by the ninth flow hole 109 and the fourth flow hole 104.

That is to say, the third opening 1103, the fourth opening 1104, and the fifth opening 1105 are all blocked by the rotating disk 122, which prevents water flow towards the second water treatment device 52 and isolates the third water treatment device 53 from the water flow, which ensures that only the first water treatment device 51 is backwashed, consequently, while increasing the intensity of the raw water flow used for backwashing the first water treatment device 51, it also prevents the generated wastewater from flowing into the second water treatment device 52 and/or the third water treatment device 53.

Therefore, when the planar valve 10 is in the first backwash working position, the first water treatment device 51 of the water treatment device of the present invention is backwashed individually.

As shown in FIGS. 10B, 12, and 21B, as an example, when the planar valve 10 of the water treatment device according to the first embodiment of the present invention is controlled to be in the first backwash working position, raw water from the planar valve 10, under water pressure, enters the first water treatment device 51 through its first water outlet 512, flows, under water pressure, from the first central tube 514 towards the first water treatment material 515, backwashing the first water treatment material 515, the generated wastewater exits the first water treatment device 51 through its first water inlet 511, flows, under water pressure, towards the first opening 1101 of the planar valve 10, passes through the second backwash flow passage 7102, is discharged through the drain opening 11010.

As shown in FIGS.10C, 13, and 21C, the planar valve 10 of the water treatment device according to the first embodiment of the present invention further has a second backwash working position, when the planar valve 10 of the water treatment device of the present invention is in the second backwash working position, the seventh flow hole 107 of the planar valve 10 is in communication with the third flow hole 103, thereby forming the third backwash flow passage 7103 communicating with the second fluid opening 1107 and the third opening 1103 respectively, the tenth flow hole 1010 is in communication with the second flow hole 102, thereby forming the fourth backwash flow passage 7104 communicating the drain opening 11010 and the second opening 1102 respectively.

As shown in FIGS. 7A to 7F, 10C, and 21C, when the planar valve 10 of the water treatment device of the present invention is in the second backwash working position, the eighth flow hole 108 is in communication with the second flow hole 102 and the fourth flow hole 104 respectively, the ninth flow hole 109 is in communication with the first flow hole 101, the fifth flow hole 105 is blocked by the second fluid control surface 1220 of the rotating disk 122.

As shown in FIGS. 10C, 13, and 21C, specifically, when the planar valve 10 is in the second backwash working position, although the eighth flow hole 108 is in communication with the second flow hole 102 and the fourth flow hole 104 respectively, the fifth flow hole 105 is blocked by the second fluid control surface 1220 of the rotating disk 122, which prevents the second flow hole 102, the eighth flow hole 108, and the fourth flow hole 104 from forming a passage that allows water to flow through, although the ninth flow hole 109 is in communication with the first flow hole 101, the ninth flow hole 109 is a communicating blind hole, causing the passage formed by the first flow hole 101 and the ninth flow hole 109 to be blocked by the rotating disk 122, consequently, the ninth flow hole 109 and the first flow hole 101 cannot form a passage that allows water to flow through either.

Therefore, when the planar valve 10 is in the second backwash working position, the flow passage formed by the first flow hole 101 and the ninth flow hole 109, the fifth flow hole 105, are blocked by the rotating disk 122, which prevents water flow through the first opening 1101, the fourth opening 1104, and the fifth opening 1105 of the valve body 11 of the planar valve 10, water flow from the fourth opening 1104 of the valve body 11 of the planar valve 10 towards the third water inlet 531 of the third water treatment device 53, water flow from the second water inlet 521 of the second water treatment device 52 towards the first water outlet 512 of the first water treatment device 51, water flow within the first water treatment device 51 and the third water treatment device 53.

Correspondingly, when the planar valve 10 is in the second backwash working position, water flow through the first water inlet 511 and the first water outlet 512 of the first water treatment device 51, water flow through the third water inlet 531 and the third water outlet 532 of the third water treatment device 53, are also prevented, to ensures that only the second water treatment device 52 is backwashed, so as to increase the intensity of the backwash flow directed at the second water treatment device 52 while simultaneously preventing the generated wastewater from flowing into the first water treatment device 51 and/or the third water treatment device 53.

Therefore, when the planar valve 10 is in the second backwash working position, the second treatment device 52 of the water treatment device of the present invention is backwashed individually.

Furthermore, when raw water backwashes the second water treatment device 52, the backwash water flow passing through the second opening 1102 cannot enter the first water outlet 512 of the first water treatment device 51, which ensures the intensity of the backwash water flow for the second water treatment device 52 and prevents the wastewater generated from backwashing the second water treatment device 52 from contaminating the first water treatment device 51 and the third water treatment device 53.

It is worth mentioning that when the planar valve 10 is in the second backwash working position, the flow passage formed by the communication between the first flow hole 101 and the ninth flow hole 109, the fifth flow hole 105, are blocked by the rotating disk 122, which results in both the first opening 1101 and the fifth opening 1105 being blocked, consequently, even though the eighth flow hole 108 is in communication with the second flow hole 102 and the fourth flow hole 104 respectively, no water flows into or out of the first opening 1101, the fourth opening 1104, or the fifth opening 1105, which prevents any water flow from flowing within the first water treatment device 51 and the third water treatment device 53, to ensure that only the second water treatment device 52 is backwashed, so as to enhance the intensity of the raw water flow used for backwashing the second water treatment device 52 while simultaneously preventing the generated wastewater from flowing into the first water treatment device 51 and/or the third water treatment device 53.

Therefore, when the planar valve 10 is in the second backwash working position, the second treatment device 52 of the water treatment device of the present invention is backwashed individually.

As shown in FIGS. 10C, 13, and 21C, as an example, when the planar valve 10 of the water treatment device according to the first embodiment of the present invention is controlled to be in the second backwash working position, raw water from the planar valve 10, under water pressure, enters the second water treatment device 52 through its second water outlet 522, flows, under water pressure, from the second central tube 524 towards the second water treatment material 525, backwashing the second water treatment material 525, the generated wastewater exits the second water treatment device 52 through its second water inlet 521, flows, under water pressure, towards the second opening 1102 of the valve body 11 of the planar valve 10, passes through the fourth backwash flow passage 7104, is discharged through the drain opening 11010.

As shown in FIGS. 7A to 7F, 10D, 14, and 21D, the planar valve 10 of the water treatment device according to the first embodiment of the present invention further has an eleventh flow hole 1011, the eleventh flow hole 1011 is provided in the fixed disk 121 and extends from the first fluid control surface 1210 of the fixed disk 121, and the eleventh flow hole 1011 is in communication with the fourth opening 1104, wherein the planar valve 10 further has a third backwash working position, when the planar valve 10 of the water treatment device of the present invention is in the third backwash working position, the seventh flow hole 107 is in communication with the fifth flow hole 105, thereby forming the fifth backwash flow passage 7105 communicating with the second fluid opening 1107 and the fifth opening 1105 respectively, the tenth flow hole 1010 is in communication with the eleventh flow hole 1011, thereby forming the sixth backwash flow passage 7106 communicating with the drain opening 11010 and the fourth opening 1104 respectively.

As shown in FIGS.7A to 7F, 10D, and 21D, when the planar valve 10 of the water treatment device of the present invention is in the third backwash working position, the eighth flow hole 108 is in communication with both the first flow hole 101 and the third flow hole 103 respectively, the ninth flow hole 109 is in communication with the fifth flow hole 105, the second flow hole 102 and the fourth flow hole 104 are blocked by the second fluid control surface 1220 of the rotating disk 122 respectively.

As shown in FIGS. 7A to 7F, 10D, and 21D, specifically, when the planar valve 10 is in the third backwash working position, although the eighth flow hole 108 is in communication with both the first flow hole 101 and the third flow hole 103 respectively, the eighth flow hole 108 is a communicating blind hole, consequently, even though the eighth flow hole 108 is in communication with both the first flow hole 101 and the third flow hole 103 respectively, the second flow hole 102 and the fourth flow hole 104 are blocked by the rotating disk 122 respectively, which results in the eighth flow hole 108, the first flow hole 101, the first opening 1101, the first water treatment device 51, the second opening 1102 (and the second flow hole 102), the second water treatment device 52, the third opening 1103, and the third flow hole 103 forming a closed, circulating flow path that is isolated from the raw water supply, and water cannot flow freely within this closed path.

Furthermore, although the ninth flow hole 109 is in communication with the fifth flow hole 105, the ninth flow hole 109 is a communicating blind hole, therefore, the flow passage formed by the communication between the ninth flow hole 109 and the fifth flow hole 105 is blocked by the rotating disk 122, preventing water from flowing into or out of the passage formed by the ninth flow hole 109 and the fifth flow hole 105.

In other words, when the planar valve 10 is in the third backwash working position, water flow through the first opening 1101, the second opening 1102, and the third opening 1103 of the valve body 11 of the planar valve 10 is prevented, consequently, even though the eighth flow hole 108 of the planar valve 10 is in communication with both the first flow hole 101 and the third flow hole 103 respectively, and the ninth flow hole 109 is in communication with the fifth flow hole 105, no flow passage that allows water to pass through can be formed.

Therefore, water flow within the first water treatment device 51 and the second water treatment device 52 is prevented.

Correspondingly, when the planar valve 10 is in the third backwash working position, water flow through the first water inlet 511 and the first water outlet 512 of the first water treatment device 51, water flow through the second water inlet 521 and the second water outlet 522 of the second water treatment device 52, are also prevented, to ensures that only the third water treatment device 53 is backwashed, so as to increase the intensity of the backwash flow directed at the third water treatment device 53 while simultaneously preventing the generated wastewater from flowing into the first water treatment device 51 and/or the second water treatment device 52.

Therefore, when the planar valve 10 is in the third backwash working position, the third treatment device 53 of the water treatment device of the present invention is backwashed individually.

It is worth mentioning that when the planar valve 10 is in the third backwash working position, the flow passage formed by the communication between the ninth flow hole 109 and the fifth flow hole 105, the second flow hole 102, are blocked by the rotating disk 122 respectively, which results in the second opening 1102 being blocked, consequently, even though the eighth flow hole 108 is in communication with both the first flow hole 101 and the third flow hole 103 respectively, and the ninth flow hole 109 is in communication with the fifth flow hole 105, both the eighth flow hole 108 and the ninth flow hole 109 are communicating blind holes, such that water flow is isolated from the first water treatment device 51 and the second water treatment device 52 and water cannot flow through the passage formed by the ninth flow hole 109 and the fifth flow hole 105, and no water flows into or out of the first opening 1101, the second opening 1102, or the third opening 1103, to ensure that only the third water treatment device 53 is backwashed, so as to enhance the intensity of the raw water flow used for backwashing the third water treatment device 53 while simultaneously prevent the generated wastewater from flowing into the first water treatment device 51 and/or the second water treatment device 52.

Therefore, when the planar valve 10 is in the third backwash working position, the third treatment device 53 of the water treatment device of the present invention is backwashed individually.

As shown in FIGS. 7A to 7F , 10D, and 21D, as an example, when the planar valve 10 of the water treatment device according to the first embodiment of the present invention is controlled to be in the third backwash working position, raw water from the planar valve 10, under water pressure, enters the third water treatment device 53 through its third water outlet 532, flows, under water pressure, from the third central tube 534 towards the third water treatment material 535, backwashing the third water treatment material 535, the generated wastewater exits the third water treatment device 53 through its third water inlet 531, flows, under water pressure, towards the fourth opening 1104 of the valve body 11 of the planar valve 10, passes through the sixth backwash flow passage 7106, is discharged through the drain opening 11010.

As shown in FIGS.10E, 15, and 21E, the planar valve 10 of the water treatment device according to the first embodiment of the present invention further has a first rinse working position, when the planar valve 10 of the water treatment device of the present invention is in the first rinse working position, the seventh flow hole 107 of the planar valve 10 is in communication with the first flow hole 101, thereby forming the first rinse flow passage 7201 communicating with the second fluid opening 1107 and the first opening 1101 respectively, the tenth flow hole 1010 is in communication with the second flow hole 102, thereby forming the second rinse flow passage 7202 communicating the drain opening 11010 and the second opening 1102 respectively.

As shown in FIGS. 7A to 7F, 10E, and 21E, when the planar valve 10 of the water treatment device of the present invention is in the first rinse working position, the eighth flow hole 108 of the planar valve 10 is in communication with the fifth flow hole 105, the ninth flow hole 109 is blocked by the first fluid control surface 1210 of the fixed disk 121, the third flow hole 103, the fourth flow hole 104, and the eleventh flow hole 1011 are blocked by the second fluid control surface 1220 of the rotating disk 122 respectively.

As shown in FIGS.10E, 15, and 21E, when the planar valve 10 is in the first rinse working position, even though the eighth flow hole 108 of the planar valve 10 is in communication with the fifth flow hole 105, the eighth flow hole 108 is a communicating blind hole, and the third flow hole 103, the fourth flow hole 104 and the eleventh flow hole 1011 are blocked by the rotating disk 122, as a result, raw water can only enter the seventh flow hole 107 from the second fluid opening 1107 of the planar valve 10, and then flow further through the first flow hole 101, the first opening 1101, towards the first water inlet 511 of the first water treatment device 51, and into the first water treatment device 51, the wastewater generated from rinsing the first water treatment device 51 flows from the first water outlet 512 of the first water treatment device 51 towards the second opening 1102 of the planar valve 10, and is further discharged under water pressure through the second flow hole 102, the tenth flow hole 1010, and the drain opening 11010 of the planar valve 10.

In other words, although the eighth flow hole 108 of the planar valve 10 is in communication with the fifth flow hole 105, the eighth flow hole 108 is a communicating blind hole, which causes the flow passage formed by the eighth flow hole 108 and the fifth flow hole 105 to be blocked by the rotating disk 122, consequently, water does not flow through the passage, and the third flow hole 103, the fourth flow hole 104, and the eleventh flow hole 1011 are blocked by the second fluid control surface 1220 of the rotating disk 122 respectively, because the third flow hole 103 is blocked by the second fluid control surface 1220 of the rotating disk 122, the wastewater generated from rinsing the first water treatment device 51, after exiting the first water outlet 512 of the first water treatment device 51, is prevented from flowing towards the second water inlet 521 of the second water treatment device 52.

Correspondingly, when the planar valve 10 is in the first rinse working position, the eighth flow hole 108 is in communication with the fifth flow hole 105, the third flow hole 103, the fourth flow hole 104, and the eleventh flow hole 1011 are blocked by the second fluid control surface 1220 of the rotating disk 122 respectively, so as to prevent water flow through the third opening 1103, the fourth opening 1104, and the fifth opening 1105 of the planar valve 10. Therefore, water flow is prevented from flowing through the third opening 1103, the fourth opening 1104, and the fifth opening 1105, so as to prevent water flow within the second water treatment device 52 and the third water treatment device 53 from flowing.

In other words, although the eighth flow hole 108 is in communication with the fifth flow hole 105, the rotating disk 122 prevents raw water from flowing towards the third flow hole 103, the fourth flow hole 104, and the fifth flow hole 105, thereby ensuring that only water flows to the water treatment device 51 and the first water treatment device 51 is rinsed.

It is worth mentioning that when the planar valve 10 is in the first rinse working position, the flow passage formed by the connection between the eighth flow hole 108 and the fifth flow hole 105, the third flow hole 103, the fourth flow hole 104, and the eleventh flow hole 1011, are all blocked by the rotating disk 122 respectively, which results in no water flowing into or out of the third opening 1103, the fourth opening 1104, or the fifth opening 1105, in other words, water flow cannot flow towards the second water treatment device 52, and the third water treatment device 53 is isolated from the water flow, to ensure that only the first water treatment device 51 is rinsed, so as to enhance the intensity of the raw water flow used for rinsing the first water treatment device 51, while simultaneously preventing the generated wastewater from flowing into the second water treatment device 52 and/or the third water treatment device 53.

Therefore, when the planar valve 10 is in the first rinse working position, the first water treatment device 51 of the water treatment device of the present invention is rinsed individually.

As shown in FIGS. 7A to 7F, 10E, and 21E, as an example, when the planar valve 10 of the water treatment device according to the first embodiment of the present invention is controlled to be in the first rinse working position, raw water from the planar valve 10, under water pressure, enters the first water treatment device 51 through its first water inlet 511, under water pressure, then rinses the first water treatment material 515, and the generated wastewater is collected by the first central tube 514, exits the first water treatment device 51 through its first water outlet 512, under water pressure, flows towards the second opening 1102 of the planar valve 10, passes through the second rinse flow passage 7202 and is discharged through the drain opening 11010.

As shown in FIGS.10F, 16, and 21F, the planar valve 10 of the water treatment device according to the first embodiment of the present invention further has a second rinse working position, when the planar valve 10 of the water treatment device is in the second rinse working position, the seventh flow hole 107 of the planar valve 10 is in communication with the second flow hole 102, thereby forming the third rinse flow passage 7203 communicating with the second fluid opening 1107 and the second opening 1102, the tenth flow hole 1010 is in communication with the third flow hole 103, thereby forming the fourth rinse flow passage 7204 communicating the drain opening 11010 and the third opening 1103 respectively.

As shown in FIGS. 7A to 7F, 10F, and 21F, when the planar valve 10 of the water treatment device of the present invention is in the second rinse working position, the eighth flow hole 108 is in communication with the first flow hole 101, the fourth flow hole 104, the fifth flow hole 105 and the eleventh flow hole 1011 are blocked by the second fluid control surface 1220 of the rotating disk 122 respectively.

As shown in FIGS.10F, 16, and 21F, specifically, when the planar valve 10 is in the second rinse working position, although the eighth flow hole 108 of the planar valve 10 is in communication with the first flow hole 101, the fourth flow hole 104, fifth flow hole 105, and eleventh flow hole 1011 are blocked by the second fluid control surface 1220 of the rotating disk 122 respectively, and the eighth flow hole 108 is a communicating blind hole, which results in the flow passage formed by the first flow hole 101 and the eighth flow hole 108, the fourth flow hole 104, the fifth flow holes 105, and the eleventh flow hole 1011, all being blocked by the rotating disk 122, consequently, raw water can only enter the seventh flow hole 107 from the second fluid opening 1107 of the planar valve 10, and then flows further through the second flow hole 102, the second opening 1102, towards the second water inlet 521 of the second water treatment device 52, and into the second water treatment device 52, the wastewater generated from forward rinsing the second water treatment device 52 flows from its second water outlet 522 towards the third opening 1103 of the planar valve 10, under water pressure, the wastewater is then discharged through the third flow hole 103 of the planar valve 10, the tenth flow hole 1010, and the drain opening 11010.

In other words, although the eighth flow hole 108 is in communication with the first flow hole 101, the eighth flow hole 108 is a communicating blind hole, so water does not flow through the passage formed by the eighth flow hole 108 and the first flow hole 101.

Correspondingly, when the planar valve 10 is in the second rinse working position, the flow passage formed by the first flow hole 101 and the eighth flow hole 108, the fourth flow hole 104, the fifth flow hole 105, and the eleventh flow hole 1011, are all blocked by the rotating disk 122, which prevents water flow through the first opening 1101, the fourth opening 1104, and the fifth opening 1105 of the planar valve 10, consequently, a rinsing water flowing from the second opening 1102 towards the second water inlet 521 of the second water treatment device 52 is prevented from flowing towards the first water outlet 512 of the first water treatment device 51, although the eighth flow hole 108 of the planar valve 10 is in communication with the first flow hole 101, both the eighth flow hole 108 and the ninth flow hole 109 are communicating blind holes, therefore, water flow is blocked through the first opening 1101, the fourth opening 1104, and the fifth opening 1105 of the planar valve 10, thereby preventing water flow within the first water treatment device 51 and the third water treatment device 53.

In other words, the first flow hole 101, the fourth flow hole 104, the fifth flow hole 105, and the eleventh flow hole 1011 are all blocked by the rotating disk 122, water flow is prevented from flowing towards the first flow hole 101, the fourth flow hole 104, the fifth flow hole 105 and the eleventh flow hole 1011, thereby ensuring that only the second water treatment device 52 is rinsed.

It is worth mentioning that when the planar valve 10 is in the second rinse working position, the flow passage formed by the communication between the first flow hole 101 and the eighth flow hole 108, the fourth flow hole 104, the fifth flow hole 105, and the eleventh flow hole 1011, are all blocked by the rotating disk 122 respectively, which results in the first opening 1101, the fourth opening 1104, and the fifth opening 1105 being blocked. In other words, there is no water flow within the first water treatment device 51, and the third water treatment device 53 is isolated from the water flow, which ensures that only the second water treatment device 52 is rinsed, so as to enhance the intensity of the raw water flow used for forward rinsing the second water treatment device 52, while simultaneously preventing the generated wastewater from flowing into the first water treatment device 51 and/or the third water treatment device 53.

Therefore, when the planar valve 10 is in the second rinse working position, the second treatment device 52 of the water treatment device of the present invention is rinsed individually.

As shown in FIGS.10F, 16, and 21F, as an example, when the planar valve 10 of the water treatment device according to the first embodiment of the present invention is controlled to be in the second rinse working position, raw water from the planar valve 10, under water pressure, enters the second water treatment device 52 through its second water inlet 521, under water pressure, rinses the second water treatment material 525, the generated wastewater is collected by the second central tube 524, exits the second water treatment device 52 through its second water outlet 522, and flows, under water pressure, towards the third opening 1103 of the planar valve 10, and then passes through the fourth rinse flow passage 7204 and is discharged through the drain opening 11010.

As shown in FIGS.10G, 17, and 21G, the planar valve 10 of the water treatment device according to the first embodiment of the present invention further has a third rinse working position, when the planar valve 10 of the water treatment device of the present invention is in the third rinse working position, the seventh flow hole 107 of the planar valve 10 is in communication with the eleventh flow hole 1011, thereby forming the fifth rinse flow passage 7205 communicating with the second fluid opening 1107 and the fourth opening 1104 respectively, the tenth flow hole 1010 is in communication with the fifth flow hole 105, thereby forming the sixth rinse flow passage 7206 communicating the drain opening 11010 and the fifth opening 1105 respectively.

As shown in FIGS. 7A to 7F, 10G, and 21G, when the planar valve 10 of the water treatment device of the present invention is in the third rinse working position, the eighth flow hole 108 is in communication with the second flow hole 102, the first flow hole 101, the third flow hole 103 and the fourth flow hole 104 are blocked by the second fluid control surface 1220 of the rotating disk 122 respectively.

As shown in FIGS. 10G, 17, and 21G, specifically, when the planar valve 10 is in the third rinse working position, although the eighth flow hole 108 is in communication with the second flow hole 102, the eighth flow hole 108 is a communicating blind hole, so water does not flow through the passage formed by them, and the first flow hole 101, the third flow hole 103, and the fourth flow hole 104 are blocked by the second fluid control surface 1220 of the rotating disk 122 respectively, consequently, raw water can only enter the seventh flow hole 107 from the second fluid opening 1107 of the planar valve 10, then flows further through the eleventh flow hole 1011 and the fourth opening 1104, towards the third water inlet 531 of the third water treatment device 53, and into the third water treatment device 53, and the wastewater generated from rinsing the third water treatment device 53 flows from its third water outlet 532 towards the fifth opening 1105 of the planar valve 10, under water pressure, it is then discharged through the fifth flow hole 105, the tenth flow hole 1010, and drain opening 11010 of the planar valve 10.

In other words, although the eighth flow hole 108 is in communication with the second flow hole 102, water flow does not pass through the passage formed by them.

Correspondingly, when the planar valve 10 is in the third rinse working position, wherein both the first flow hole 101 and the third flow hole 103 are blocked by the rotating disk 122, which results in the first opening 1101 and the third opening 1103 of the planar valve 10 being blocked, consequently, water flow within both the first water treatment device 51 and the second water treatment device 52 is prevented, water flow is also blocked through the first opening 1101, the second opening 1102, and the third opening 1103 of the planar valve 10.

In other words, although the eighth flow hole 108 of the planar valve 10 is in communication with the second flow hole 102, the rotating disk 122 prevents water from flowing towards the first flow hole 101, the second flow hole 102, the third flow hole 103, and the fourth flow hole 104, thereby ensuring that only the third water treatment device 53 is rinsed.

It is worth mentioning that when the planar valve 10 is in the third rinse working position, the flow passage formed by the communication between the eighth flow hole 108 and the second flow hole 102, the first flow hole 101 and the third flow hole 103, are blocked by the rotating disk 122 respectively, which results in the first opening 1101 and the third opening 1103 being blocked, in other words, although the eighth flow hole 108 of the planar valve 10 is in communication with the second flow hole 102, both the first water treatment device 51 and the second water treatment device 52 are isolated from the water flow, which ensures that only the third water treatment device 53 is rinsed to enhance the intensity of the raw water flow used for rinsing the third water treatment device 53, while simultaneously preventing the generated wastewater from flowing into the first water treatment device 51 and/or the second water treatment device 52.

Therefore, when the planar valve 10 is in the third rinse working position, the third treatment device 53 of the water treatment device of the present invention is rinsed individually.

As shown in FIGS.10G, 17, and 21G, as an example, when the planar valve 10 of the water treatment device according to the first embodiment of the present invention is controlled to be in the third rinse working position, raw water from the planar valve 10, under water pressure, enters the third water treatment device 53 through its third water inlet 531, under water pressure, rinses the third water treatment material 535, the generated wastewater is collected by the third central tube 534, exits the third water treatment device 53 through its third water outlet 532, and flows, under water pressure, towards the fifth opening 1105 of the planar valve 10, and then passes through the sixth rinse flow passage 7206 and is discharged through the drain opening 11010.

As shown in FIGS. 7A to 7F, 10H, 18A, 18B, and 21H, the planar valve 10 of the water treatment device according to the first embodiment of the present invention further has a twelfth flow hole 1012 and a thirteenth flow hole 1013, the twelfth flow hole 1012 and the thirteenth flow hole 1013 are respectively provided in the fixed disk 121 and extend from its first fluid control surface 1210, wherein the twelfth flow hole 1012 is in communication with the first injector opening 11012, the thirteenth flow hole 1013 is in communication with the second injector opening 11013, wherein the planar valve 10 further has a regeneration working position, when the planar valve 10 is in the regeneration working position, the seventh flow hole 107 is in communication with the twelfth flow hole 1012, thereby forming the first regeneration flow passage 7301 communicating with the second fluid opening 1107 and the first injector opening 11012 respectively, the eighth flow hole 108 is in communication with both the thirteenth flow hole 1013 and the eleventh flow hole 1011 respectively, thereby forming the second regeneration flow passage 7302 communicating with the second injector opening 11013 and the fourth opening 1104 respectively, and the tenth flow hole 1010 is in communication with the fifth flow hole 105, thereby forming the third regeneration flow passage 7303 communicating with the drain opening 11010 and the fifth opening 1105 respectively.

As shown in FIGS. 7A to 7F, 10H, and 21H, when the planar valve 10 is in the regeneration working position, the ninth flow hole 109 is in communication with the second flow hole 102, the first flow hole 101, the third flow hole 103 and the fourth flow hole 104 are blocked by the second fluid control surface 1220 of the rotating disk 122 respectively.

Therefore, when the planar valve 10 of the water treatment device of the present invention is in the regeneration working position, under water pressure, raw water flows from the second fluid opening 1107 of the valve body 11 of the planar valve 10, through the first regeneration flow passage 7301 (the seventh flow hole 107 and the twelfth flow hole 1012) to the first injector opening 11012 of the valve body 11, then into the nozzle outlet 182 of the injector 18, and after jetting through the injector 18 and mixing with brine (such as sodium chloride solution) from the brine suction inlet 181, a regenerant solution is generated and flows through the discharge outlet 183 of the injector 18 into the second injector opening 11013 of the valve body 11, then through the second regeneration flow passage 7302 (the thirteenth flow hole 1013, the eighth flow hole 108 and the eleventh flow hole 1011) into the fourth opening 1104 of the valve body 11, then into the third water treatment device 53 via the third water inlet 531 for down-flow regeneration of the third water treatment material 535 (e.g., softening resin), the wastewater exits through the third water outlet 532, then passes through the fifth opening 1105 of the valve body 11, the third regeneration flow passage 7303 (the fifth flow hole 105 and the tenth flow hole 1010), and the drain opening 11010.

As shown in FIGS. 7A to 7F, 10H, 18A, 18B, and 21H, specifically, when the planar valve 10 is in the regeneration working position, although the ninth flow hole 109 is in communication with the second flow hole 102, the ninth flow hole 109 is a communicating blind hole, causing the flow passage formed by the ninth flow hole 109 and the second flow hole 102 to be blocked by the rotating disk 122, and the first flow hole 101, the third flow hole 103, and the fourth flow hole 104 are blocked by the second fluid control surface 1220 of the rotating disk 122 respectively, consequently, raw water can only enter the seventh flow hole 107 from the second fluid opening 1107 of the planar valve 10, then flows sequentially through the twelfth flow hole 1012, the first injector opening 11012, the injector 18, the second injector opening 11013, the thirteenth flow hole 1013, the eighth flow hole 108, the eleventh flow hole 1011, the fourth opening 1104 towards and into the third water inlet 531 of the third water treatment device 53, to regenerate the softening material (e.g., softening resin) inside the third water treatment device 53 by down-flow the brine solution, the generated wastewater exits the third water treatment device 53 through its third water outlet 532, flows towards the fifth opening 1105 of the planar valve 10, and is subsequently discharged through the fifth flow hole 105, the tenth flow hole 1010, and the drain opening 11010 of the planar valve 10, under water pressure.

In other words, although the ninth flow hole 109 is in communication with the second flow hole 102, water does not flow through the passage formed by the ninth flow hole 109 and the second flow hole 102.

Correspondingly, when the planar valve 10 is in the regeneration working position, the first flow hole 101, the third flow hole 103, and the fourth flow hole 104 are all blocked by the rotating disk 122, the ninth flow hole 109 is a communicating blind hole, and the flow passage formed by the second flow hole 102 and the ninth flow hole 109 is blocked by the rotating disk 122, so as to prevent water flow through the first opening 1101, the second opening 1102, and the third opening 1103 of the planar valve 10, water flow is prevented from flowing flow through the first opening 1101, and the second opening 1102, and the third opening 1103 of the planar valve 10, such that water flows within both the first water treatment device 51 and the second water treatment device 52 is also prevented.

In other words, although the ninth flow hole 109 of the planar valve 10 is in communication with the second flow hole 102, the rotating disk 122 prevents water from flowing towards the first flow hole 101, the second flow hole 102, the third flow hole 103, and the fourth flow hole 104, thereby ensuring that only the third water treatment device 53 is regenerated in down-flow mode.

It is worth mentioning that when the planar valve 10 is in the regeneration working position, the flow passage formed by the communication between the ninth flow hole 109 and the second flow hole 102, the first flow hole 101, the third flow hole 103 and the fourth flow hole 104, are all blocked by the rotating disk 122 respectively, the flow passage formed by the ninth flow hole 109 and the second flow hole 102 is blocked by the rotating disk 122, resulting in the first opening 1101, the second opening 1102, and the third opening 1103 being blocked, in other words, both the first water treatment device 51 and the second water treatment device 52 are isolated from the water flow, which ensures that only the third water treatment device 53 is regenerated in down-flow mode , so as to enhances the intensity of the regenerant solution flow used for the down-flow regeneration of the third water treatment device 53, while simultaneously preventing the generated wastewater from flowing into the first water treatment device 51 and/or the second water treatment device 52.

Particularly, it is essential to prevent the regenerant brine (or the wastewater discharged after resin regeneration, which has a high salt content) from entering the first water treatment device 51 and/or the second water treatment device 52, this is because, in practical applications, the first water treatment device 51 or the second water treatment device 52 often contains adsorbent material such as activated carbon, the regenerant brine can contaminate these activated carbon or similar filter material, thereby reducing the purification capacity of the first or second water treatment device. The contamination risk is a primary reason why multi-stage purification and softening water treatment systems cannot simply connect an activated carbon water treatment device and a softening resin water treatment device directly in series.

Therefore, when the planar valve 10 is in regeneration working position, the third treatment device 53 of the water treatment device of the present invention is regenerated in down-flow mode individually.

As shown in FIGS. 7A to 7F, 10H, 18A, 18B, and 21H of the accompanying drawings, as an example, when the planar valve 10 of the water treatment device according to the first embodiment of the present invention is controlled to be in the regeneration working position, raw water from the planar valve 10, under water pressure, mixes with brine drawn from the injector 18 to form a regenerant solution, the regenerant solution then enters the third water treatment device 53 through its third water inlet 531, under water pressure, and then regenerate the third water treatment material 535 in down-flow mode , wherein the generated wastewater is collected by the third central tube 534 and exits the third water treatment device 53 through its third water outlet 532, under water pressure, flows towards the fifth opening 1105 of the planar valve 10, passes through the third regeneration flow passage 7303 and is discharged through the drain opening 11010.

As shown in FIGS.10I, 19, and 21I, the planar valve 10 of the water treatment device according to the first embodiment of the present invention further has a water refill working position, when the planar valve 10 is in the water refill working position, the seventh flow hole 107 is in communication with the thirteenth flow hole 1013, thereby forming the water refill flow passage 7401 communicating with the second fluid opening 1107 and the second injector opening 11013 respectively.

As shown in FIGS. 7A to 7F, 10I, and 21I, when the planar valve 10 is in the water refill working position, the eighth flow hole 108 is in communication with the second flow hole 102, the ninth flow hole 109 is in communication with the eleventh flow hole 1011, the tenth flow hole 1010 is in communication with the first flow hole 101, the third flow hole 103, the fourth flow hole 104, the fifth flow hole 105 and the twelfth flow hole 1012 are blocked by the second fluid control surface 1220 of the rotating disk 122 respectively.

Although the eighth flow hole 108 is in communication with the second flow hole 102, the ninth flow hole 109 is in communication with the eleventh flow hole 1011 and the tenth flow hole 1010 is in communication with the first flow hole 101, the third flow hole 103, the fourth flow hole 104, the fifth flow hole 105 and twelfth flow hole 1012 are blocked by the rotating disk 122 respectively. Furthermore, both the eighth flow hole 108 and the ninth flow hole 109 are communicating blind holes, resulting in the flow passages formed by the communication between the eighth flow hole 108 and the second flow hole 102, and between the ninth flow hole 109 and the eleventh flow hole 1011, also being blocked by the rotating disk 122 respectively. Although the tenth flow hole 1010 is in communication with the first flow hole 101, the tenth flow hole 1010 is also in communication with the drain opening 11010, so no water flows into the tenth flow hole 1010 and the first flow hole 101, such that the second opening 1102, the third opening 1103, the fourth opening 1104, and the fifth opening 1105 are blocked, and water flow is prevented from flowing through the first opening 1101, the second opening 1102, the third opening 1103, the fourth opening 1104, and the fifth opening 1105.

In other words, although the eighth flow hole 108 is in communication with the second flow hole 102, the ninth flow hole 109 is in communication with the eleventh flow hole 1011, and the tenth flow hole 1010 is in communication with the first flow hole 101, these communications do not form functional flow passages that allow water to pass through.

As shown in FIG. 10A, 11D, and 21A, the planar valve 10 of the water treatment device according to the first embodiment of the present invention further has a water supply flow hole 1015, wherein the water supply flow hole 1015 is provided in the fixed disk 121 and extends from the first fluid control surface 1210 of the fixed disk 121, the water supply flow hole 1015 is in communication with the third fluid opening 1115.

As shown in FIGS.10A, 11A to 11D, and 21A, when the planar valve 10 is in the water treatment working position, the eighth flow hole 108 of the planar valve 10 is further in communication with both the third flow hole 103 and the water supply flow hole 1015, thereby forming the fourth water treatment flow passage 7004 communicating with both the third opening 1103 of the valve body 11 and the third fluid opening 1115 respectively.

That is to say, when the planar valve 10 is in the water treatment working position, the seventh flow hole 107 of the planar valve 10 is in communication with the first flow hole 101, thereby forming the first water treatment flow passage 7001 communicating with the second fluid opening 1107 and the first opening 1101 respectively; the eighth flow hole 108 is in communication with the third flow hole 103, the fourth flow hole 104 and the water supply flow hole 1015 respectively, thereby forming the second water treatment flow passage 7002 communicating with the third opening 1103 and the fourth opening 1104 respectively, and forming the fourth water treatment flow passage 7004 communicating with the third opening 1103 and the third fluid opening 1115 respectively; and the ninth flow hole 109 is in communication with the fifth flow hole 105 and the sixth flow hole 106 respectively, thereby forming the third water treatment flow passage 7003 communicating with the fifth opening 1105 and the first fluid opening 1106 respectively.

It is understandable that when the planar valve 10 is in the water treatment working position, the third flow hole 103, the fourth flow hole 104, and the water supply flow hole 1015 are intercommunicated through the eighth flow hole 108, thereby causing the third opening 1103, the fourth opening 1104, and the third fluid opening 1115 to form a three-way structure.

Preferably, the water supply flow hole 1015 is arranged outward of the third flow hole 103.

As shown in FIGS. 7A to 7F, 10A, and 21A, when the planar valve 10 is in the water treatment working position, the second flow hole 102, the eleventh flow hole 1011, the twelfth flow hole 1012, and the thirteenth flow hole 1013 are blocked by the second fluid control surface 1220 of the rotating disk 122 respectively, and the tenth flow hole 1010 is blocked by the first fluid control surface 1210 of the fixed disk 121.

As shown in FIGS. 20A, 20B, and 21B to 21I, when the planar valve 10 of the water treatment device according to the first embodiment of the present invention is in the first backwash working position, the second backwash working position, the third backwash working position, the first rinse working position, the second rinse working position, the third rinse working position, the regeneration working position, or the water refill working position, the sixth flow hole 106 of the planar valve 10 is in communication with the valve chamber 110 of the valve body 11 and is further in communication with the second fluid opening 1107 through the valve chamber 110, thereby forming the first raw water supply flow passage 7501 communicating with the second fluid opening 1107 and the first fluid opening 1106 of the valve body 11 respectively; and the water supply flow hole 1015 of the planar valve 10 is in communication with the valve chamber 110 of the valve body 11 and is further in communication with the second fluid opening 1107 through the valve chamber 110, thereby forming the second raw water supply flow passage 7502 communicating with the second fluid opening 1107 and the third fluid opening 1115 of the valve body 11 respectively.

As shown in FIGS. 6C to 10I, the first flow hole 101 of the planar valve 10 of the water treatment device according to the first embodiment of the present invention has a first communication portion 10101 and a second communication portion 10102, wherein the first communication portion 10101 of the first flow hole 101 is in communication with the first opening 1101, and the second communication portion 10102 of the first flow hole 101 is in communication with the first opening 1101.

Preferably, the first flow hole 101 of the planar valve 10 further has a third communication portion 10103 extending between the first communication portion 10101 and the second communication portion 10102, wherein the second communication portion 10102 of the first flow hole 101 is in communication with the first opening 1101, and the first communication portion 10101 of the first flow hole 101 is in communication with the second communication portion 10102 through the third communication portion 10103. In other words, the first communication portion 10101 of the first flow hole 101 is in communication with the first opening 1101 through the third communication portion 10103 and the second communication portion 10102.

Preferably, the fifth flow hole 105 of the planar valve 10 is arranged outward of the third communication portion 10103.

The second flow hole 102 of the planar valve 10 has a first conduction portion 10201 and a second conduction portion 10202, wherein the first conduction portion 10201 of the second flow hole 102 is in communication with the second opening 1102, and the second conduction portion 10202 of the second flow hole 102 is in communication with the second opening 1102.

Preferably, the second flow hole 102 of the planar valve 10 further has a third conduction portion 10203 extending between the first conduction portion 10201 and the second conduction portion 10202, wherein the first conduction portion 10201 of the second flow hole 102 is in communication with the second opening 1102, and the second conduction portion 10202 of the second flow hole 102 is in communication with the first conduction portion 10201 through the third conduction portion 10203. In other words, the second conduction portion 10202 of the second flow hole 102 is in communication with the second opening 1102 through the third conduction portion 10203 and the first conduction portion 10201.

Preferably, the eleventh flow hole 1011, the twelfth flow hole 1012, and the thirteenth flow hole 1013 of the planar valve 10 are arranged outward of the third conduction portion 10203.

When the planar valve 10 is in the water treatment working position, the seventh flow hole 107 of the planar valve 10 is in communication with the first communication portion 10101 of the first flow hole 101; the eighth flow hole 108 is in communication with the third flow hole 103, the fourth flow hole 104, and the water supply flow hole 1015 respectively; the ninth flow hole 109 is in communication with the fifth flow hole 105 and the sixth flow hole 106 respectively; the eleventh flow hole 1011, the twelfth flow hole 1012, and the thirteenth flow hole 1013 are blocked by the second fluid control surface 1220 of the rotating disk 122 respectively; the second communication portion 10102 and the third communication portion 10103 of the first flow hole 101, and the first conduction portion 10201, the second conduction portion 10202, and the third conduction portion 10203 of the second flow hole 102 are blocked by the second fluid control surface 1220 of the rotating disk 122 respectively; the tenth flow hole 1010 is blocked by the first fluid control surface 1210 of the fixed disk 121.

When the planar valve 10 is in the first backwash working position, the seventh flow hole 107 of the planar valve 10 is in communication with the second conduction portion 10202 of the second flow hole 102; the tenth flow hole 1010 is in communication with the second communication portion 10102 of the first flow hole 101; the eighth flow hole 108 is in communication with the eleventh flow hole 1011 and the twelfth flow hole 1012 respectively; the ninth flow hole 109 is in communication with the fourth flow hole 104; the third flow hole 103, the fifth flow hole 105, and the thirteenth flow hole 1013 are blocked by the second fluid control surface 1220 of the rotating disk 122 respectively; the first communication portion 10101 and the third communication portion 10103 of the first flow hole 101, and the first conduction portion 10201 and the third conduction portion 10203 of the second flow hole 102 are blocked by the second fluid control surface 1220 of the rotating disk 122 respectively.

When the planar valve 10 is in the second backwash working position, the seventh flow hole 107 of the planar valve 10 is in communication with both the third flow hole 103 and the water supply flow hole 1015 respectively; the tenth flow hole 1010 is in communication with the first conduction portion 10201 of the second flow hole 102; the eighth flow hole 108 is in communication with both the second conduction portion 10202 of the second flow hole 102 and the fourth flow hole 104 respectively; the ninth flow hole 109 is in communication with the first communication portion 10101 of the first flow hole 101; the fifth flow hole 105, the eleventh flow hole 1011, the twelfth flow hole 1012, and the thirteenth flow hole 1013 are blocked by the second fluid control surface 1220 of the rotating disk 122 respectively; the second communication portion 10102 and the third communication portion 10103 of the first flow hole 101, and the third conduction portion 10203 of the second flow hole 102 are blocked by the second fluid control surface 1220 of the rotating disk 122 respectively.

When the planar valve 10 is in the third backwash working position, the seventh flow hole 107 is in communication with both the fifth flow hole 105 and the sixth flow hole 106 respectively; the tenth flow hole 1010 is in communication with the eleventh flow hole 1011; the eighth flow hole 108 is in communication with both the first communication portion 10101 of the first flow hole 101 and the third flow hole 103 respectively; the ninth flow hole 109 is in communication with the fifth flow hole 105; the fourth flow hole 104, the twelfth flow hole 1012, and the thirteenth flow hole 1013 are blocked by the second fluid control surface 1220 of the rotating disk 122 respectively; the first conduction portion 10201, the second conduction portion 10202, and the third conduction portion 10203 of the second flow hole 102, and the second communication portion 10102 and the third communication portion 10103 of the first flow hole 101 are blocked by the second fluid control surface 1220 of the rotating disk 122 respectively.

When the planar valve 10 is in the first rinse working position, the seventh flow hole 107 of the planar valve 10 is in communication with the second communication portion 10102 of the first flow hole 101; the tenth flow hole 1010 is in communication with the second conduction portion 10202 of the second flow hole 102; the eighth flow hole 108 is in communication with the fifth flow hole 105; the ninth flow hole 109 is blocked by the first fluid control surface 1210 of the fixed disk 121; the third flow hole 103, the fourth flow hole 104, the eleventh flow hole 1011, the twelfth flow hole 1012, and the thirteenth flow hole 1013 are blocked by the second fluid control surface 1220 of the rotating disk 122 respectively; the first communication portion 10101 and the third communication portion 10103 of the first flow hole 101, and the first conduction portion 10201 and the third conduction portion 10203 of the second flow hole 102 are blocked by the second fluid control surface 1220 of the rotating disk 122 respectively.

When the planar valve 10 is in the second rinse working position, the seventh flow hole 107 of the planar valve 10 is in communication with the first conduction portion 10201 of the second flow hole 102; the tenth flow hole 1010 is in communication with the third flow hole 103; the eighth flow hole 108 is in communication with the second communication portion 10102 of the first flow hole 101; the ninth flow hole 109 is in communication with the thirteenth flow hole 1013; the fourth flow hole 104, the fifth flow hole 105, the eleventh flow hole 1011, and the twelfth flow hole 1012 are blocked by the second fluid control surface 1220 of the rotating disk 122 respectively; the first communication portion 10101 and the third communication portion 10103 of the first flow hole 101, and the second conduction portion 10202 and the third conduction portion 10203 of the second flow hole 102 are blocked by the second fluid control surface 1220 of the rotating disk 122 respectively.

When the planar valve 10 is in the third rinse working position, the seventh flow hole 107 of the planar valve 10 is in communication with the eleventh flow hole 1011; the tenth flow hole 1010 is in communication with the fifth flow hole 105; the eighth flow hole 108 is in communication with both the first conduction portion 10201 of the second flow hole 102 and the thirteenth flow hole 1013 respectively; the ninth flow hole 109 is in communication with the twelfth flow hole 1012; the third flow hole 103 and the fourth flow hole 104 are blocked by the second fluid control surface 1220 of the rotating disk 122 respectively; the first communication portion 10101, the second communication portion 10102, and the third communication portion 10103 of the first flow hole 101, and the second conduction portion 10202 and the third conduction portion 10203 of the second flow hole 102 are blocked by the second fluid control surface 1220 of the rotating disk 122 respectively.

When the planar valve 10 is in the regeneration working position, the seventh flow hole 107 is in communication with the twelfth flow hole 1012; the eighth flow hole 108 is in communication with both the thirteenth flow hole 1013 and the eleventh flow hole 1011 respectively; the tenth flow hole 1010 is in communication with the fifth flow hole 105; the ninth flow hole 109 is in communication with the second conduction portion 10202 of the second flow hole 102; the third flow hole 103 and the fourth flow hole 104 are blocked by the second fluid control surface 1220 of the rotating disk 122 respectively; the first communication portion 10101, the second communication portion 10102, and the third communication portion 10103 of the first flow hole 101, and the first conduction portion 10201 and the third conduction portion 10203 of the second flow hole 102 are blocked by the second fluid control surface 1220 of the rotating disk 122 respectively.

When the planar valve 10 is in the water refill working position, the seventh flow hole 107 is in communication with the thirteenth flow hole 1013; the eighth flow hole 108 is in communication with the first conduction portion 10201 of the second flow hole 102; the ninth flow hole 109 is in communication with the eleventh flow hole 1011; the tenth flow hole 1010 is in communication with the first communication portion 10101 of the first flow hole 101; the third flow hole 103, the fourth flow hole 104, the fifth flow hole 105, and the twelfth flow hole 1012 are blocked by the second fluid control surface 1220 of the rotating disk 122 respectively; the second communication portion 10102 and the third communication portion 10103 of the first flow hole 101, and the second conduction portion 10202 and the third conduction portion 10203 of the second flow hole 102 are blocked by the second fluid control surface 1220 of the rotating disk 122 respectively.

Preferably, the third communication portion 10103 of the first flow hole 101 is disposed on the first fluid control surface 1210 of the fixed disk 121 of the planar valve 10.

Alternatively, the third communication portion 10103 of the first flow hole 101 is disposed inside the fixed disk 121 of the planar valve 10.

Alternatively, the third communication portion 10103 of the first flow hole 101 is disposed inside the valve body 11 of the planar valve 10.

Preferably, the third conduction portion 10203 of the second flow hole 102 is disposed on the first fluid control surface 1210 of the fixed disk 121 of the planar valve 10.

Alternatively, the third conduction portion 10203 of the second flow hole 102 is disposed inside the fixed disk 121 of the planar valve 10.

Alternatively, the third conduction portion 10203 of the second flow hole 102 is disposed inside the valve body 11 of the planar valve 10.

As shown in FIGS. 7A to 9B, the first fluid control surface 1210 of the fixed disk 121 of the planar valve 10 of the water treatment device according to the first embodiment of the present invention forms a central portion 12101, an extension portion 12102 extending outward from the central portion 12101, and an edge portion 12103 extending outward from the extension portion 12102, wherein the first communication portion 10101 of the first flow hole 101, the third flow hole 103 and the water supply flow hole 1015, the fourth flow hole 104, the second conduction portion 10202 of the second flow hole 102, the twelfth flow hole 1012, the eleventh flow hole 1011, the thirteenth flow hole 1013, the first conduction portion 10201 of the second flow hole 102, the second communication portion 10102 of the first flow hole 101, the fifth flow hole 105, and the sixth flow hole 106 of the planar valve 10 are arranged clockwise in this order on the edge portion 12103 of the first fluid control surface 1210 of the fixed disk 121, the seventh flow hole 107, the eighth flow hole 108, the tenth flow hole 1010, and the ninth flow hole 109 of the planar valve 10 are arranged clockwise in this order on the second fluid control surface 1220 of the rotating disk 122.

Alternatively, the first communication portion 10101 of the first flow hole 101, the third flow hole 103 and the water supply flow hole 1015, the fourth flow hole 104, the second conduction portion 10202 of the second flow hole 102, the twelfth flow hole 1012, the eleventh flow hole 1011, the thirteenth flow hole 1013, the first conduction portion 10201 of the second flow hole 102, the second communication portion 10102 of the first flow hole 101, the fifth flow hole 105, and the sixth flow hole 106 of the planar valve 10 are arranged counterclockwise in this order on the edge portion 12103 of the first fluid control surface 1210 of the fixed disk 121. The seventh flow hole 107, the eighth flow hole 108, the tenth flow hole 1010, and the ninth flow hole 109 of the planar valve 10 are arranged counterclockwise in this order on the second fluid control surface 1220 of the rotating disk 122.

Preferably, the first flow hole 101, the third flow hole 103, the fourth flow hole 104, the second flow hole 102, the twelfth flow hole 1012, the eleventh flow hole 1011, the thirteenth flow hole 1013, the fifth flow hole 105, the sixth flow hole 106, and the water supply flow hole 1015 are spaced apart from each other and arranged on the first fluid control surface 1210 of the fixed disk 121; the seventh flow hole 107, the eighth flow hole 108, the tenth flow hole 1010, and the ninth flow hole 109 of the planar valve 10 are spaced apart from each other and arranged on the second fluid control surface 1220 of the rotating disk 122.

Preferably, the third communication portion 10103 of the first flow hole 101 and the third conduction portion 10203 of the second flow hole 102 are arranged on the extension portion 12102 of the first fluid control surface 1210 of the fixed disk 121, the sixth flow hole 106 is arranged outward of the fifth flow hole 105, and the water supply flow hole 1015 is arranged outward of the third flow hole 103.

As shown in FIGS. 7A to 9B, the first fluid control surface 1210 of the fixed disk 121 of the planar valve 10 of the water treatment device according to the first embodiment of the present invention has the central portion 12101, the extension portion 12102, and the edge portion 12103, as indicated by the chain lines in the drawings, wherein the central portion 12101, the extension portion 12102, and the edge portion 12103 are provided at a top end portion 1214 of the fixed disk 121, wherein the edge portion 12103 (or the portion outside the extension portion 12102) of the first fluid control surface 1210 is equally divided into a first section 1201, a second section 1202, a third section 1203, a fourth section 1204, a fifth section 1205, a sixth section 1206, a seventh section 1207, an eighth section 1208, a ninth section 1209, a tenth section 12010, an eleventh section 12011, and a twelfth section 12012, as indicated by the chain lines, and the second fluid control surface 1220 of the rotating disk 122 of the planar valve 10 comprises a central region 12201, an extension region 12202 extending outward from the central region 12201, and an edge region 12203 extending outward from the extension region 12202, as indicated by the chain lines in the drawings, wherein the central region 12201, the extension region 12202, and the edge region 12203 are provided at a bottom end portion 1221 of the rotating disk 122, the edge region 12203 (the portion outside the extension region 12202) of the second fluid control surface 1220 is equally divided into a first area 2001, a second area 2002, a third area 2003, a fourth area 2004, a fifth area 2005, a sixth area 2006, a seventh area 2007, an eighth area 2008, a ninth area 2009, a tenth area 20010, an eleventh area 20011, and a twelfth area 20012, as indicated by the chain lines, wherein the first flow hole 101 extends downward from the first section 1201 and the tenth section 12010 of the first fluid control surface 1210 of the fixed disk 121, the third flow hole 103 and the water supply flow hole 1015 extend downward from the second section 1202 of the first fluid control surface 1210 of the fixed disk 121 respectively, the fourth flow hole 104 extends downward from the third section 1203 of the first fluid control surface 1210 of the fixed disk 121, the second flow hole 102 extends downward from the fourth section 1204 and the eighth section 1208 of the first fluid control surface 1210 of the fixed disk 121, the twelfth flow hole 1012 extends downward from the fifth section 1205 of the first fluid control surface 1210 of the fixed disk 121, the eleventh flow hole 1011 extends downward from the sixth section 1206 of the first fluid control surface 1210 of the fixed disk 121, the thirteenth flow hole 1013 extends downward from the seventh section 1207 of the first fluid control surface 1210 of the fixed disk 121, the fifth flow hole 105 extends downward from the eleventh section 12011 and the twelfth section 12012 of the first fluid control surface 1210 of the fixed disk 121, the sixth flow hole 106 extends downward from the twelfth section 12012 of the first fluid control surface 1210 of the fixed disk 121, with the sixth flow hole 106 arranged outward of the fifth flow hole 105 and the water supply flow hole 1015 arranged outward of the third flow hole 103, the seventh flow hole 107 extends upward from the first area 2001 of the second fluid control surface 1220 of the rotating disk 122, the eighth flow hole 108 extends upward from the second area 2002 and the third area 2003 of the second fluid control surface 1220 of the rotating disk 122, the tenth flow hole 1010 extends upward from the seventh area 2007 of the second fluid control surface 1220 of the rotating disk 122, the ninth flow hole 109 extends upward from the twelfth area 20012 of the second fluid control surface 1220 of the rotating disk 122.

More specifically, the first communication portion 10101 of the first flow hole 101 extends downward from the first section 1201 of the first fluid control surface 1210 of the fixed disk 121, the second communication portion 10102 of the first flow hole 101 extends downward from the tenth section 12010 of the first fluid control surface 1210 of the fixed disk 121, the first conduction portion 10201 of the second flow hole 102 extends downward from the eighth section 1208 of the first fluid control surface 1210 of the fixed disk 121, and the second conduction portion 10202 of the second flow hole 102 extends downward from the fourth section 1204 of the first fluid control surface 1210 of the fixed disk 121.

Preferably, the third communication portion 10103 of the first flow hole 101 and the third conduction portion 10203 of the second flow hole 102 extend downward from the extension portion 12102 of the first fluid control surface 1210 of the fixed disk 121, respectively.

As shown in FIGS. 7A to 10I and 21A to 21I, preferably, the edge portion 12103 of the first fluid control surface 1210 of the fixed disk 121 of the planar valve 10 is equally divided clockwise into the first section 1201, the second section 1202, the third section 1203, the fourth section 1204, the fifth section 1205, the sixth section 1206, the seventh section 1207, the eighth section 1208, the ninth section 1209, the tenth section 12010, the eleventh section 12011, and the twelfth section 12012, and the edge region 12203 of the second fluid control surface 1220 of the rotating disk 122 of the planar valve 10 is equally divided clockwise into the first area 2001, the second area 2002, the third area 2003, the fourth area 2004, the fifth area 2005, the sixth area 2006, the seventh area 2007, the eighth area 2008, the ninth area 2009, the tenth area 20010, the eleventh area 20011, and the twelfth area 20012.

Alternatively, the edge portion 12103 of the first fluid control surface 1210 is equally divided counterclockwise into the first section 1201, the second section 1202, the third section 1203, the fourth section 1204, the fifth section 1205, the sixth section 1206, the seventh section 1207, the eighth section 1208, the ninth section 1209, the tenth section 12010, the eleventh section 12011, and the twelfth section 12012. The edge region 12203 of the second fluid control surface 1220 of the rotating disk 122 of the planar valve 10 is equally divided counterclockwise into the first area 2001, the second area 2002, the third area 2003, the fourth area 2004, the fifth area 2005, the sixth area 2006, the seventh area 2007, the eighth area 2008, the ninth area 2009, the tenth area 20010, the eleventh area 20011, and the twelfth area 20012.

In other words, the first fluid control surface 1210 of the fixed disk 121 of the planar valve 10 is divided into twelve equal divisions, and the second fluid control surface 1220 of the rotating disk 122 of the planar valve 10 is also divided into twelve equal divisions, when the rotating disk 122 of the planar valve 10 is rotated such that the first equal division (the first area 2001) of the second fluid control surface 1220 of the rotating disk 122 aligns with the first equal division (the first section 1201) of the first fluid control surface 1210 of the fixed disk 121, the second and third equal sections (the second area 2002 and the third area 2003) of the second fluid control surface 1220 of the rotating disk 122 of the planar valve 10 align with the second and third equal divisions (the second section 1202 and the third section 1203) of the first fluid control surface 1210 of the fixed disk 121, respectively, the seventh equal division (the seventh area 2007) of the second fluid control surface 1220 of the rotating disk 122of the planar valve 10 aligns with the seventh equal division (the seventh section 1207) of the first fluid control surface 1210 of the fixed disk 121, and the twelfth equal division (the twelfth area 20012) of the second fluid control surface 1220 of the rotating disk 122 of the planar valve 10 aligns with the twelfth equal division (the twelfth section 12012) of the first fluid control surface 1210 of the fixed disk 121, such that the seventh flow hole 107 of the planar valve 10 is in communication with the first flow hole 101;the eighth flow hole 108 is in communication with the third flow hole 103, the fourth flow hole 104, and the water supply flow hole 1015 respectively; the ninth flow hole 109 is in communication with the fifth flow hole 105 and the sixth flow hole 106 respectively; the tenth flow hole 1010 is blocked by the first fluid control surface 1210 of the fixed disk 121; the second flow hole 102 is blocked by the second fluid control surface 1220 of the rotating disk 122; the eleventh flow hole 1011, the twelfth flow hole 1012, and the thirteenth flow hole 1013 are blocked by the second fluid control surface 1220 of the rotating disk 122 respectively, to allow raw water to enter through the second fluid opening 1107 of the valve body 11, water flow through the seventh flow hole 107 and the first flow hole 101 to the first opening 1101, and further enter the first water treatment device 51 through its first water inlet 511. After treatment by the first water treatment device 51, the primary treated water exits through the first water outlet 512 and enters the second water treatment device 52 through its second water inlet 521. After treatment by the second water treatment device 52, the secondary treated water exits through the second water outlet 522 and enters the third opening 1103, then flows into the third flow hole 103. One stream of the water entering the third flow hole 103 flows through the eighth flow hole 108, the water supply flow hole 1015, and the third fluid opening 1115, where it is provided to the user. The other stream of water entering the third flow hole 103 flows through the eighth flow hole 108 and the fourth flow hole 104 to the fourth opening 1104, then enters the third water treatment device 53 through its third water inlet 531, after treatment by the third water treatment device 53, the tertiary treated water (e.g., purified water after purification or softened water after softening) exits through the third water outlet 532 and enters the fifth opening 1105, then flows through the fifth flow hole 105, the ninth flow hole 109, the sixth flow hole 106, and the first fluid opening 1106, where it is provided to the user.

Accordingly, the water treatment device is now in the water treatment working state. Wherein when the rotating disk 122 of the planar valve 10 is rotated such that the first equal division (the first area 2001) of the second fluid control surface 1220 of the rotating disk 122 is aligned with the fourth equal division (the fourth section 1204) of the first fluid control surface 1210 of the fixed disk 121, the second equal division and the third equal division (the second area 2002 and the third area 2003) of the second fluid control surface 1220 of the rotating disk 122 of the planar valve 10 are respectively aligned with the fifth equal division and sixth equal division (the fifth section 1205 and the sixth section 1206) of the first fluid control surface 1210 of the fixed disk 121, the seventh equal division (the seventh area 2007) of the second fluid control surface 1220 of the rotating disk 122 of the planar valve 10 is aligned with the tenth equal division (the tenth section 12010) of the first fluid control surface 1210 of the fixed disk 121, and the twelfth equal division (the twelfth area 20012) of the second fluid control surface 1220 of the rotating disk 122 of the planar valve 10 is aligned with the third equal division (the third section 1203) of the first fluid control surface 1210 of the fixed disk 121, thereby, the seventh flow hole 107 of the planar valve 10 is in communication with the second flow hole 102, the tenth flow hole 1010 is in communication with the first flow hole 101, the eighth flow hole 108 is in communication with the eleventh flow hole 1011 and the twelfth flow hole 1012 respectively, and the ninth flow hole 109 is in communication with the fourth flow hole 104, the third flow hole 103 and the fifth flow hole 105 are blocked by the second fluid control surface 1220 of the rotating disk 122 respectively, and the thirteenth flow hole 1013 is blocked by the second fluid control surface 1220 of the rotating disk 122, which allows raw water to flow from the second fluid opening 1107 of the valve body 11, pass through the seventh flow hole 107 and the second flow hole 102 to the second opening 1102, further flow from the first water outlet 512 into the first water treatment device 51, and the wastewater generated after backwashing the first water treatment device 51 flows out from the first water inlet 511, and then is discharged through the first opening 1101, the first flow hole 101, the tenth flow hole 1010, and the drain opening 11010.

Accordingly, at this moment, the water treatment device is in the first backwash working state.

Wherein when the rotating disk 122 of the planar valve 10 is rotated such that the first equal division (the first area 2001) of the second fluid control surface 1220 of the rotating disk 122 is aligned with the second equal division (the second section 1202) of the first fluid control surface 1210 of the fixed disk 121, the second equal division and the third equal division (the second area 2002 and the third area 2003) of the second fluid control surface 1220 of the rotating disk 122 of the planar valve 10 are respectively aligned with the third equal division and the fourth equal division (the third section 1203 and the fourth section 1204) of the first fluid control surface 1210 of the fixed disk 121, the seventh equal division (the seventh area 2007) of the second fluid control surface 1220 of the rotating disk 122 of the planar valve 10 is aligned with the eighth equal division (the eighth section 1208) of the first fluid control surface 1210 of the fixed disk 121, the twelfth equal division (the twelfth area 20012) of the second fluid control surface 1220 of the rotating disk 122 of the planar valve 10 is aligned with the first equal division (the first section 1201) of the first fluid control surface 1210 of the fixed disk 121, so that the seventh flow hole 107 of the planar valve 10 is in communication with the third flow hole 103 of the planar valve 10, the tenth flow hole 1010 is in communication with the second flow hole 102, the eighth flow hole 108 is in communication with the second flow hole 102 and the fourth flow hole 104 respectively, the ninth flow hole 109 is in communication with the first flow hole 101, the eleventh flow hole 1011, the twelfth flow hole 1012 and the thirteenth flow hole 1013are blocked by the second fluid control surface 1220 of the rotating disk 122 respectively, to allow the raw water from the second fluid opening 1107 of the valve body 11 to flow in, through the seventh flow hole 107 and the third flow hole 103 to flow to the third opening 1103, further from the second water outlet 522 to flow into the second water treatment device 52, the waste water generated after backwashing the second water treatment device 52 flows out from the second water inlet 521, then passes through the second opening 1102, the second flow hole 102, the tenth flow hole 1010 and the drain opening 11010 to be discharged.

Accordingly, at this moment, the water treatment device is in the water second backwash working state.

Wherein when the rotating disk 122 of the planar valve 10 is rotated such that the first equal division (the first area 2001) of the second fluid control surface 1220 of the rotating disk 122 is aligned with the twelfth equal division (the twelfth section 12012) of the first fluid control surface 1210 of the fixed disk 121, the second equal division and the third equal division (the second area 2002 and the third area 2003) of the second fluid control surface 1220 of the rotating disk 122 of the planar valve 10 are respectively aligned with the first equal division and the second equal division (the first section 1201 and the second section 1202) of the first fluid control surface 1210 of the fixed disk 121, the seventh equal division (the seventh area 2007) of the second fluid control surface 1220 of the rotating disk 122 of the planar valve 10 is aligned with the sixth equal division (the sixth section 1206) of the first fluid control surface 1210 of the fixed disk 121, the twelfth equal division (the twelfth area 20012) of the second fluid control surface 1220 of the rotating disk 122 of the planar valve 10 is aligned with the eleventh equal division (the eleventh section 12011) of the first fluid control surface 1210 of the fixed disk 121, so that the seventh flow hole 107 of the planar valve 10 is in communication with the fifth flow hole 105, the tenth flow hole 1010 is in communication with the eleventh flow hole 1011, the eighth flow hole 108 is in communication with the first flow hole 101 and the third flow hole 103 respectively, the ninth flow hole 109 is in communication with the fifth flow hole 105, the second flow hole 102 and the fourth flow hole 104 are blocked by the second fluid control surface 1220 of the rotating disk 122 respectively, the twelfth flow hole 1012 and the thirteenth flow hole 1013 are blocked by the second fluid control surface 1220 of the rotating disk 122 respectively, to allow the raw water from the second fluid opening 1107 of the valve body 11 to flow in, through the seventh flow hole 107 and the fifth flow hole 105 to flow to the fifth opening 1105, further from the third water outlet 532 to flow into the third water treatment device 53, the waste water generated after backwashing the third water treatment device 53 flows out from the third water inlet 531, then passes through the fourth opening 1104, the eleventh flow hole 1011, the tenth flow hole 1010 and the drain opening 11010 to be discharged.

Accordingly, at this moment, the water treatment device is in the third backwash working state.

Wherein when the rotating disk 122 of the planar valve 10 is rotated such that the first equal division (the first area 2001) of the second fluid control surface 1220 of the rotating disk 122 is aligned with the tenth equal division (the tenth section 12010) of the first fluid control surface 1210 of the fixed disk 121, the second equal division and the third equal division (the second area 2002 and the third area 2003) of the second fluid control surface 1220 of the rotating disk 122 of the planar valve 10 are respectively aligned with the eleventh equal division and the twelfth equal division (the eleventh section 12011 and the twelfth section 12012) of the first fluid control surface 1210 of the fixed disk 121, the seventh equal division (the seventh area 2007) of the second fluid control surface 1220 of the rotating disk 122 of the planar valve 10 is aligned with the fourth equal division (the fourth section 1204) of the first fluid control surface 1210 of the fixed disk 121, the twelfth equal division (the twelfth area 20012) of the second fluid control surface 1220 of the rotating disk 122 of the planar valve 10 is aligned with the ninth equal division (the ninth section 1209) of the first fluid control surface 1210 of the fixed disk 121, so that the seventh flow hole 107 of the planar valve 10 is in communication with the first flow hole 101, the tenth flow hole 1010 is in communication with the second flow hole 102, the eighth flow hole 108 is in communication with the fifth flow hole 105, the ninth flow hole 109 is blocked by the first fluid control surface 1210 of the fixed disk 121, the third flow hole 103 and the fourth flow hole 104 are blocked by the second fluid control surface 1220 of the rotating disk 122 respectively, the eleventh flow hole 1011, the twelfth flow hole 1012 and the thirteenth flow hole 1013 are blocked by the second fluid control surface 1220 of the rotating disk 122 respectively, to allow the raw water from the second fluid opening 1107 of the valve body 11 to flow in, through the seventh flow hole 107 and the first flow hole 101 to flow to the first opening 1101, further from the first water inlet 511 to flow into the first water treatment device 51, the waste water after rinsing the first water treatment device 53 flows out from the first water outlet 512, then passes through the second opening 1102, the second flow hole 102, the tenth flow hole 1010 and the drain opening 11010 to be discharged.

Accordingly, at this moment, the water treatment device is in the first rinse working state.

Wherein when the rotating disk 122 of the planar valve 10 is rotated such that the first equal division (the first area 2001) of the second fluid control surface 1220 of the rotating disk 122 is aligned with the eighth equal division (the eighth section 1208) of the first fluid control surface 1210 of the fixed disk 121, the second equal division and the third equal division (the second area 2002 and the third area 2003) of the second fluid control surface 1220 of the rotating disk 122 of the planar valve 10 are respectively aligned with the ninth equal division and the tenth equal division (the ninth section 1209 and the tenth section 12010) of the first fluid control surface 1210 of the fixed disk 121, the seventh equal division (the seventh area 2007) of the second fluid control surface 1220 of the rotating disk 122 of the planar valve 10 is aligned with the second equal division (the second section 1202) of the first fluid control surface 1210 of the fixed disk 121, the twelfth equal division (the twelfth area 20012) of the second fluid control surface 1220 of the rotating disk 122 of the planar valve 10 is aligned with the seventh equal division (the seventh section 1207) of the first fluid control surface 1210 of the fixed disk 121, so that the seventh flow hole 107 of the planar valve 10 is in communication with the second flow hole 102, the tenth flow hole 1010 is in communication with the third flow hole 103, the eighth flow hole 108 is in communication with the first flow hole 101, the ninth flow hole 109 is in communication with the thirteenth flow hole 1013, the fourth flow hole 104 and the fifth flow hole 105 are blocked by the second fluid control surface 1220 of the rotating disk 122 respectively, the eleventh flow hole 1011 and the twelfth flow hole 1012 are blocked by the second fluid control surface 1220 of the rotating disk 122 respectively, to allow the raw water from the second fluid opening 1107 of the valve body 11 to flow in, through the seventh flow hole 107 and the second flow hole 102 to flow to the second opening 1102, further from the second water inlet 521 to flow into the second water treatment device 52, the waste water after rinsing the second water treatment device 52 flows out from the second water outlet 522, then passes through the third opening 1103, the third flow hole 103, the tenth flow hole 1010 and the drain opening 11010 to be discharged.

Accordingly, at this moment, the water treatment device is in the second rinse working state.

Wherein when the rotating disk 122 of the planar valve 10 is rotated such that the first equal division (the first area 2001) of the second fluid control surface 1220 of the rotating disk 122 is aligned with the sixth equal division (the sixth section 1206) of the first fluid control surface 1210 of the fixed disk 121, the second equal division and the third equal division (the second area 2002 and the third area 2003) of the second fluid control surface 1220 of the rotating disk 122 of the planar valve 10 are respectively aligned with the seventh equal division and the eighth equal division (the seventh section 1207 and the eighth section 1208) of the first fluid control surface 1210 of the fixed disk 121, the seventh equal division (the seventh area 2007) of the second fluid control surface 1220 of the rotating disk 122 of the planar valve 10 is aligned with the twelfth equal division (the twelfth section 12012) of the first fluid control surface 1210 of the fixed disk 121, the twelfth equal division (the twelfth area 20012) of the second fluid control surface 1220 of the rotating disk 122 of the planar valve 10 is aligned with the fifth equal division (the fifth section 1205) of the first fluid control surface 1210 of the fixed disk 121, so that the seventh flow hole 107 of the planar valve 10 is in communication with the eleventh flow hole 1011, the tenth flow hole 1010 is in communication with the fifth flow hole 105, the eighth flow hole 108 is in communication with the second flow hole 102 and the thirteenth flow hole 1013 respectively, the ninth flow hole 109 is in communication with the twelfth flow hole 1012, the first flow hole 101, the third flow hole 103 and the fourth flow hole 104 are blocked by the second fluid control surface 1220 of the rotating disk 122 respectively, to allow the raw water from the second fluid opening 1107 of the valve body 11 to flow in, through the seventh flow hole 107 and the eleventh flow hole 1011 to flow to the fourth opening 1104, further from the third water inlet 531 to flow into the third water treatment device 53, the waste water after rinsing the third water treatment device 53 flows out from the third water outlet 532, then passes through the fifth opening 1105, the fifth flow hole 105, the tenth flow hole 1010 and the drain opening 11010 to be discharged.

Accordingly, at this moment, the water treatment device is in the third rinse working state.

Wherein when the rotating disk 122 of the planar valve 10 is rotated to the position where the first equal division (the first area 2001) of the second fluid control surface 1220 of the rotating disk 122 is aligned with the fifth equal division (the fifth section 1205) of the first fluid control surface 1210 of the fixed disk 121, the second equal division and the third equal division (the second area 2002 and the third area 2003) of the second fluid control surface 1220 of the rotating disk 122 of the planar valve 10 are respectively aligned with the sixth equal division and the seventh equal division (the sixth section 1206 and the seventh section 1207) of the first fluid control surface 1210 of the fixed disk 121, the seventh equal division (the seventh area 2007) of the second fluid control surface 1220 of the rotating disk 122 of the planar valve 10 is aligned with the eleventh equal division (the eleventh section 12011) of the first fluid control surface 1210 of the fixed disk 121, the twelfth equal division (the twelfth area 20012) of the second fluid control surface 1220 of the rotating disk 122 of the planar valve 10 is aligned with the fourth equal division (the fourth section 1204) of the first fluid control surface 1210 of the fixed disk 121, so that the seventh flow hole 107 of the planar valve 10 is in communication with the twelfth flow hole 1012, the eighth flow hole 108 is in communication with the thirteenth flow hole 1013 and the eleventh flow hole 1011 respectively, the tenth flow hole 1010 is in communication with the fifth flow hole 105, the ninth flow hole 109 is in communication with the second flow hole 102, the first flow hole 101, the third flow hole 103 and the fourth flow hole 104 are blocked by the second fluid control surface 1220 of the rotating disk 122 respectively, to allow the raw water from the second fluid opening 1107 of the valve body 11 to flow in, through the seventh flow hole 107 and the twelfth flow hole 1012 to flow into the first injector opening 11012, then to flow into the nozzle outlet 182 of the injector 18, after being injected by the injector 18, to mix with the brine (such as sodium chloride solution) from the brine suction inlet 181 to form the regenerant solution, the regenerant solution flows through the discharge outlet 183 of the injector 18 into the second injector opening 11013 of the valve body 11, then passes through the thirteenth flow hole 1013, the eighth flow hole 108, the eleventh flow hole 1011 and the fourth opening 1104 to flow into the third water inlet 531, to regenerate the water treatment material or mechanism of the third water treatment device 53 in down-flow mode, such as the softening resin, after regeneration, the generated waste water flows out from the third water outlet 532, then sequentially passes through the fifth opening 1105 , the fifth flow hole 105, the tenth flow hole 1010 and the drain opening 11010 of the valve body 11 to be discharged.

Accordingly, at this moment, the water treatment device is in the regeneration working state.

Wherein when the rotating disk 122 of the planar valve 10 is rotated such that the first equal division (the first area 2001) of the second fluid control surface 1220 of the rotating disk 122 is aligned with the seventh equal division (the seventh section 1207) of the first fluid control surface 1210 of the fixed disk 121, the second equal division and the third equal division (the second area 2002 and the third area 2003) of the second fluid control surface 1220 of the rotating disk 122 of the planar valve 10 are respectively aligned with the eighth equal division and the ninth equal division (the eighth section 1208 and the ninth section 1209) of the first fluid control surface 1210 of the fixed disk 121, the seventh equal division (the seventh area 2007) of the second fluid control surface 1220 of the rotating disk 122 of the planar valve 10 is aligned with the first equal division (the first section 1201) of the first fluid control surface 1210 of the fixed disk 121, the twelfth equal division (the twelfth area 20012) of the second fluid control surface 1220 of the rotating disk 122 of the planar valve 10 is aligned with the sixth equal division (the sixth section 1206) of the first fluid control surface 1210 of the fixed disk 121, so that the seventh flow hole 107 of the planar valve 10 is in communication with the thirteenth flow hole 1013, the eighth flow hole 108 is in communication with the second flow hole 102, the ninth flow hole 109 is in communication with the eleventh flow hole 1011, the tenth flow hole 1010 is in communication with the first flow hole 101, the third flow hole 103, the fourth flow hole 104, the fifth flow hole 105 and the twelfth flow hole 1012 are blocked by the second fluid control surface 1220 of the rotating disk 122 respectively, to allow the raw water from the second fluid opening 1107 of the valve body 11 to flow in, through the seventh flow hole 107 and the thirteenth flow hole 1013 to flow into the second injector opening 11013, then sequentially pass through the discharge outlet 183 of the injector 18, the brine suction inlet 181 and the brine suction pipe 184 to flow into the regenerant solution tank 31 for water refill.

Accordingly, at this moment, the water treatment device is in the water refill working position.

It can be understood that when the second fluid control surface 1220 of the rotating disk 122 is placed against the first fluid control surface 1210 of the fixed disk 121, the central region 12201 of the second fluid control surface 1220 of the rotating disk 122 is aligned with the central portion 12101 of the first fluid control surface 1210 of the fixed disk 121, the extension region 12202 of the second fluid control surface 1220 of the rotating disk 122 is aligned with the extension portion 12102 of the first fluid control surface 1210 of the fixed disk 121, and the edge region 12203 of the second fluid control surface 1220 of the rotating disk 122 is aligned with the edge portion 12103 of the first fluid control surface 1210 of the fixed disk 121.

Alternatively, the first fluid control surface 1210 of the fixed disk 121 of the planar valve 10 and the second fluid control surface 1220 of the rotating disk 122 are both circular; the first communication part 10101 of the first flow hole 101, the third flow hole 103, the water supply flow hole 1015, the fourth flow hole 104, the second conduction portion 10202 of the second flow hole 102, the twelfth flow hole 1012, the eleventh flow hole 1011, the thirteenth flow hole 1013, the first conduction portion 10201 of the second flow hole 102, the second communication part 10102 of the first flow hole 101, the fifth flow hole 105, and the sixth flow hole 106 of the planar valve 10 are all arranged radially on the first fluid control surface 1210 of the fixed disk 121; and the seventh flow hole 107, the eighth flow hole 108, the tenth flow hole 1010, and the ninth flow hole 109 of the planar valve 10 are all arranged radially on the second fluid control surface 1220 of the rotating disk 122.

Preferably, the first flow hole 101 of the planar valve 10 extends downward and outward from the first fluid control surface 1210 of the fixed disk 121; the second flow hole 102 extends downward and outward from the first fluid control surface 1210 of the fixed disk 121; the third flow hole 103 extends downward and outward from the first fluid control surface 1210 of the fixed disk 121; the fourth flow hole 104 and the eleventh flow hole 1011 extend downward from the first fluid control surface 1210 of the fixed disk 121; the fifth flow hole 105 extends downward from the first fluid control surface 1210 of the fixed disk 121; the sixth flow hole 106 extends downward and outward from the first fluid control surface 1210 of the fixed disk 121; the twelfth flow hole 1012 extends downward and outward from the first fluid control surface 1210 of the fixed disk 121; the thirteenth flow hole 1013 extends downward and outward from the first fluid control surface 1210 of the fixed disk 121; the water supply flow hole 1015 extends downward and outward from the first fluid control surface 1210 of the fixed disk 121.

As shown in FIG. 6C to FIG. 7F, the valve body 11 of the planar valve 10 has an inner wall 111, wherein the fixed disk 121 is adapted to be arranged inside the valve chamber 110 with the first fluid control surface 1210 facing upward, and the rotating disk 122 is adapted to be arranged inside the valve chamber 110 with the second fluid control surface 1220 facing downward, wherein the valve chamber 110 is always in communication with the seventh flow hole 107.

It is worth mentioning that the fixed disk 121 of the planar valve 10 can be detachably arranged on the inner wall 111 of the valve body 11, or can be integrally formed with the inner wall 111 of the valve body 11 of the planar valve 10.

Those skilled in the art can understand that when the fixed disk 121 is detachably arranged in the valve body 11, a fixing mechanism is provided between the fixed disk 121 and the valve body 11 to maintain synchronization between the fixed disk 121 and the valve body 11.

For example, as shown in FIG. 6C to FIG. 7F, the fixed disk 121 has a locking member 123 protruding outward from the edge of the fixed disk 121, and the inner wall 111 of the valve body 11 has a locking portion 1110, wherein the locking member 123 of the fixed disk 121 is configured to be capable of engaging with the locking portion 1110 of the inner wall 111 of the valve body 11, so as to ensure synchronization between the fixed disk 121 and the valve body 11 (or to prevent relative rotation) and to ensure that the respective flow holes provided in the fixed disk 121 are in communication with the corresponding openings provided in the valve body 11.

It can be understood that when the fixed disk 121 is detachably arranged in the valve body 11, the fixed disk 121 can be manufactured separately.

In other words, in this case, the fixed disk 121 can be made of a wear-resistant material, thereby increasing the service life of the fixed disk 121 (or the entire planar valve).

Preferably, the first fluid control surface 1210 of the fixed disk 121 is smoothed to reduce its roughness.

As shown in FIG. 5 and FIG. 6L, the planar valve 10 further comprises a flow guiding element 15, wherein the flow guiding element 15 forms the water flow passage 150, and wherein the flow guiding element 15 is arranged to extend upward from the rotating disk 122 and the water flow passage 150 of the flow guiding element 15 is in communication with the tenth flow hole 1010 of the planar valve 10 and the drain opening 11010 respectively, so that sewage or waste water can flow out therefrom.

As shown in FIG. 5 and FIG. 6L, the planar valve 10 further comprises a driving element 17, wherein the driving element 17 is arranged on the valve core 12, and the driving element 17 is configured to be capable of driving the planar valve 10, so that the planar valve 10 is switched to a corresponding working position.

Specifically, the driving element 17 extends upward from the rotating disk 122, wherein the driving element 17 is configured to be capable of driving the rotating disk 122 of the planar valve 10 to rotate relative to the fixed disk 121.

Preferably, the driving element 17 and the flow guiding element 15 are integrally formed.

Alternatively, the driving element 17 and the flow guiding element 15 are two independent mechanisms.

As shown in FIG. 6C to FIG. 6L, the diameter of the rotating disk 122 of the planar valve 10 is set slightly smaller than the diameter of the valve chamber 110 of the valve body 11, so that the seventh flow hole 107 of the planar valve 10 can remain in communication with the valve chamber 110 of the valve body 11.

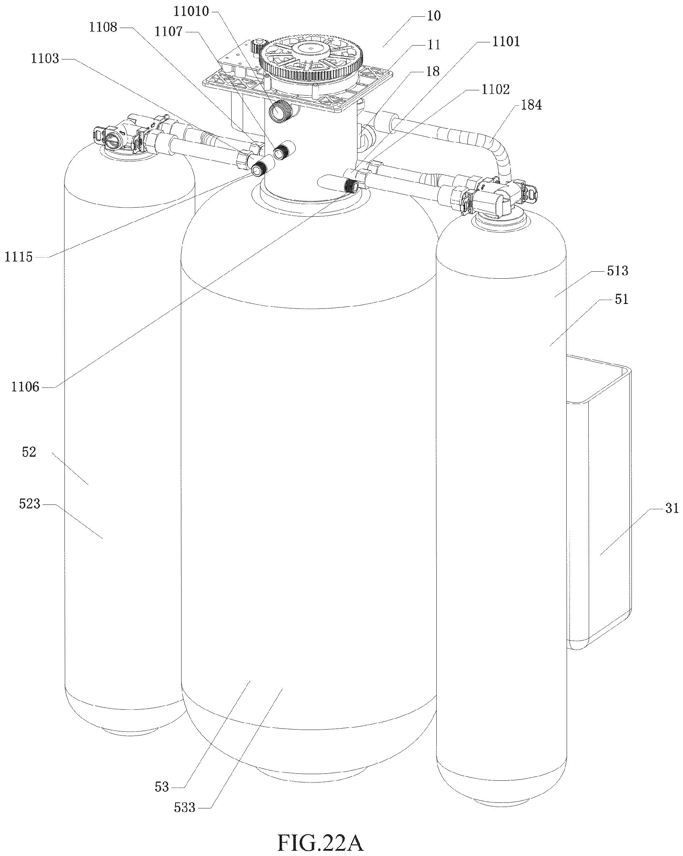

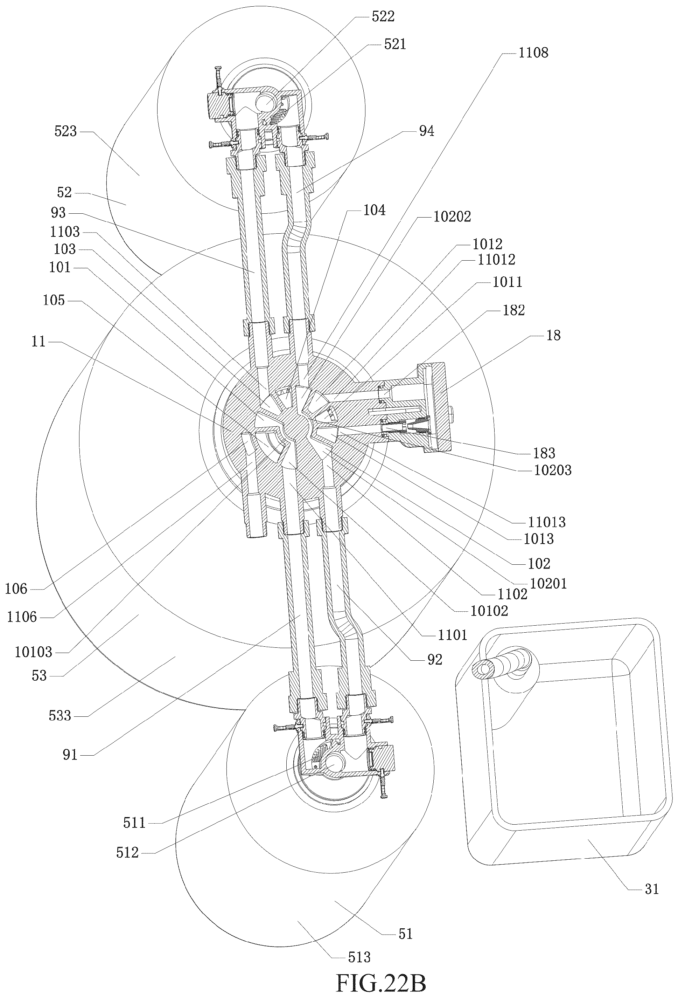

As shown in FIG. 22A and FIG. 22B, the valve body 11 of the control valve 10 of the water treatment device according to the first embodiment of the present invention further forms a communication opening 1108, wherein the communication opening 1108 is in communication with the second flow hole 102, and the communication opening 1108 and the second opening 1102 are arranged on two sides of the valve body 11 and spaced apart from each other, so as to facilitate the connection of the second flow hole 102 of the control valve 10 of the water treatment device of the present invention to the first water outlet 512 of the first water treatment device 51 and the second water inlet 521 of the second water treatment device 52 respectively.

In other words, since the communication opening 1108 and the second opening 1102 are both in communication with the second flow hole 102 respectively, and the communication opening 1108 and the second opening 1102 are arranged on two sides of the valve body 11 and spaced apart from each other, the arrangement of the connection pipe for connecting the second opening 1102 of the valve body 11 to the first water outlet 512 of the first water treatment device 51 and the connection pipe for connecting the communication opening 1108 of the valve body 11 to the second water inlet 521 of the second water treatment device 52 is made more convenient.

More specifically, the second opening 1102 of the control valve 10 of the water treatment device of the present invention is in communication with the first conduction portion 10201 of the second flow hole 102, the communication opening 1108 is in communication with the second conduction portion 10202 of the second flow hole 102, and the first conduction portion 10201 and the second conduction portion 10202 of the second flow hole 102 are in communication with each other through the third conduction portion 10203.

Therefore, the second flow hole 102, the second opening 1102 and the communication opening 1108 form a three-way structure.

As shown in FIG. 22A and FIG. 22B, it can be understood that the second opening 1102 and the communication opening 1108 of the control valve 10 of the water treatment device of the present invention are respectively in communication with the second flow hole 102, and the communication opening 1108 and the second opening 1102 are arranged on two sides of the valve body 11 and spaced apart from each other, such that the pipe 91, which is in communication with the first opening 1101 of the control valve 10 and the first water inlet 511 of the first water treatment device 51 respectively, the pipe 92, which is in communication with the second opening 1102 of the control valve 10 and the first water outlet 512 of the first water treatment device 51 respectively, the pipe 94, which is in communication with the communication opening 1108 of the control valve 10 and the second water inlet 521 of the second water treatment device 52 respectively, and the pipe 93, which is in communication with the third opening 1103 of the control valve 10 and the second water outlet 522 of the second water treatment device 52 respectively, can be fixed together in pairs, and two pairs of these pipes can be configured with the same specification, thus reducing the difficulty of pipe installation and providing more convenience for the user.

In addition, configuring the two sets of pipes to have the same specification also reduces the manufacturing difficulty of the pipes and lowers the manufacturing cost.

It can be understood that the pipe 91, which is in communication with the first opening 1101 and the first water inlet 511 of the first water treatment device 51 respectively and the pipe 92, which is in communication with the second opening 1102 and the first water outlet 512 of the first water treatment device 51 respectively are arranged parallel to each other without crossing; the pipe 94, which is in communication with the communication opening 1108 of the control valve 10 and the second water inlet 521 of the second water treatment device 52 respectively and the pipe 93, which is in communication with the third opening 1103 of the control valve 10 and the second water outlet 522 of the second water treatment device 52 respectively are arranged parallel to each other without crossing, which reduces the difficulty of pipe connection and facilitates the user's installation of the water treatment device of the present invention.

Furthermore, the second opening 1102 and the communication opening 1108 of the control valve 10 of the water treatment device of the present invention can be configured to help arrange the first water treatment device 51, the second water treatment device 52, and the third water treatment device 53 of the water treatment device of the present invention in a more regular pattern and occupy a smaller volume.

Preferably, the third conduction portion 10203 of the second flow hole 102 of the control valve 10 of the water treatment device according to the first embodiment of the present invention is arranged in the valve body 11, and the first conduction portion 10201 and the second conduction portion 10202 of the second flow hole 102 are in communication with each other through the third conduction portion 10203, wherein the third conduction portion 10203 of the second flow hole 102 is in communication with the second opening 1102 and the communication opening 1108 respectively, thereby causing the second flow hole 102 (the first conduction portion 10201 and the second conduction portion 10202 of the second flow hole 102), the second opening 1102, and the communication opening 1108 to form a three-way structure.

Accordingly, when the planar valve 10 of the water treatment device according to the first embodiment of the present invention is controlled to be in the water treatment working position, raw water flows in from the second fluid opening 1107 of the valve body 11, passes through the seventh flow hole 107 and the first flow hole 101 to flow to the first opening 1101, further flows from the first water inlet 511 into the first water treatment device 51, and the primary treated water after treatment by the first water treatment device 51 flows out from the first water outlet 512 and into the second opening 1102, then passes through the third conduction portion 10203 of the second flow hole 102 to flow into the communication opening 1108, the primary treated water flowing out from the communication opening 1108 further flows from the second water inlet 521 into the second water treatment device 52, the secondary treated water after treatment by the second water treatment device 52 flows out from the second water outlet 522 and into the third opening 1103, then flows into the third flow hole 103, one stream of the water flowing into the third flow hole 103 passes through the eighth flow hole 108, the water supply flow hole 1015 and the third fluid opening 1115 to flow out and be provided to the user, another stream of the water flowing into the third flow hole 103 passes through the eighth flow hole 108 and the fourth flow hole 104 to flow into the fourth opening 1104, further flows from the third water inlet 531 into the third water treatment device 53, and the softened water after softening treatment by the third water treatment device 53 flows out from the third water outlet 532 and into the fifth opening 1105, then passes through the fifth flow hole 105, the ninth flow hole 109, the sixth flow hole 106 and the first fluid opening 1106 to flow out and be provided to the user; when the planar valve 10 of the water treatment device of the present invention is in the first backwash working position, raw water flows in from the second fluid opening 1107 of the valve body 11, passes through the seventh flow hole 107, the second conduction portion 10202 and the third conduction portion 10203 of the second flow hole 102 to flow to the second opening 1102, further flows from the first water outlet 512 into the first water treatment device 51, and the wastewater generated after backwashing the first water treatment device 51 flows out from the first water inlet 511, then passes through the first opening 1101, the second communication portion 10102 of the first flow hole 101, the tenth flow hole 1010 and the drain opening 11010 to be discharged; when the planar valve 10 of the water treatment device of the present invention is in the second backwash working position, raw water flows in from the second fluid opening 1107 of the valve body 11, passes through the seventh flow hole 107 and the third flow hole 103 to flow to the third opening 1103, further flows from the second water outlet 522 into the second water treatment device 52, and the wastewater generated after backwashing the second water treatment device 52 flows out from the second water inlet 521 and into the communication opening 1108, then sequentially passes through the third conduction portion 10203 of the second flow hole 102 to flow into the first conduction portion 10201, then flows into the tenth flow hole 1010 and the drain opening 11010 to be discharged; when the planar valve 10 of the water treatment device of the present invention is in the first rinse working position, raw water flows in from the second fluid opening 1107 of the valve body 11, passes through the seventh flow hole 107 and the second communication portion 10102 of the first flow hole 101 to flow to the first opening 1101, further flows from the first water inlet 511 into the first water treatment device 51, and the wastewater after rinsing the first water treatment device 51 flows out from the first water outlet 512, then passes through the second opening 1102, the third conduction portion 10203 of the second flow hole 102, the second conduction portion 10202 of the second flow hole 102, the tenth flow hole 1010 and the drain opening 11010 to be discharged; when the planar valve 10 of the water treatment device of the present invention is in the second rinse working position, raw water flows in from the second fluid opening 1107 of the valve body 11, passes through the seventh flow hole 107, the first conduction portion 10201 and the third conduction portion 10203 of the second flow hole 102 to flow into the communication opening 1108, the water flow further flows from the second water inlet 521 into the second water treatment device 52, and the wastewater after rinsing the second water treatment device 52 flows out from the second water outlet 522, then passes through the third opening 1103, the third flow hole 103, the tenth flow hole 1010 and the drain opening 11010 to be discharged.

FIG. 3A to FIG. 3E and FIG. 23A to FIG. 24L show an alternative implementation of the planar valve 10 of the water treatment device according to the first embodiment of the present invention, a planar valve 10A, wherein the planar valve 10A comprises a valve body 11A and a valve core 12A, wherein the valve body 11A forms a valve chamber 110A, a first opening 1101, a second opening 1102, a third opening 1103, a fourth opening 1104, a fifth opening 1105, a first fluid opening 1106, a second fluid opening 1107 and a drain opening 11010A; wherein the valve core 12A is disposed in the valve chamber 110A, wherein the first opening 1101 of the valve body 11A is adapted to be in communication with the first water inlet 511 of the first water treatment device 51, the second opening 1102 is adapted to be in communication with the first water outlet 512 of the first water treatment device 51 and the second water inlet 521 of the second water treatment device 52 respectively, the third opening 1103 is adapted to be in communication with the second water outlet 522 of the second water treatment device 52, the fourth opening 1104 is adapted to be in communication with the third water inlet 531 of the third water treatment device 53, the fifth opening 1105 is adapted to be in communication with the third water outlet 532 of the third water treatment device 53, and the second fluid opening 1107 of the valve body 11A is adapted to be in communication with a raw water source (for example, tap water). The second opening 1102, the first water outlet 512 of the first water treatment device 51 and the second water inlet 521 of the second water treatment device 52 form a three-way structure 61.

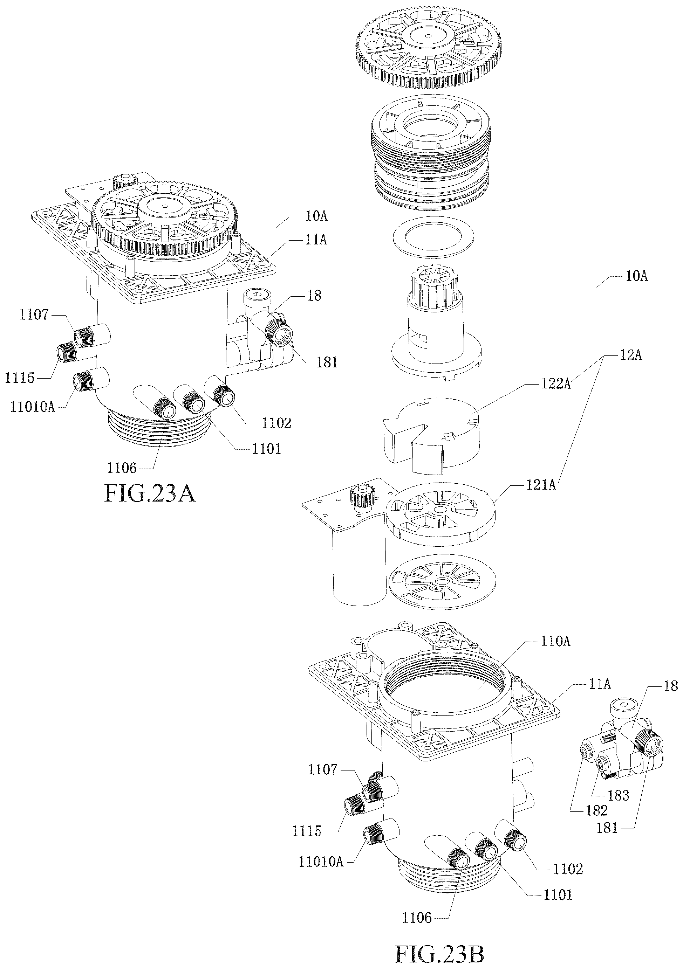

As shown in FIGS.23B to 26C, the valve core 12A of the planar valve 10A of the water treatment device according to the first embodiment of the present invention further comprises a fixed disk 121A and a rotating disk 122A, wherein the fixed disk 121A has a first fluid control surface 1210A, the rotating disk 122A has a second fluid control surface 1220A, wherein the rotating disk 122A and the fixed disk 121A are both disposed inside the valve chamber 110A, wherein the second fluid control surface 1220A of the rotating disk 122A is provided on the first fluid control surface 1210A of the fixed disk 121A, and the rotating disk 122A is provided to be capable of rotating relative to the fixed disk 121A. Preferably, the second fluid opening 1107 is in communication with the valve chamber 110A of the valve body 11A.

As shown in FIG. 23B to FIG. 26C, the planar valve 10A of the water treatment device according to the first embodiment of the present invention has a first flow hole 101A, a second flow hole 102A, a third flow hole 103A, a fourth flow hole 104A, a fifth flow hole 105A, a sixth flow hole 106A, a seventh flow hole 107A, an eighth flow hole 108A, a ninth flow hole 109A, a tenth flow hole 1010A and a drain flow hole 1014A, wherein the first flow hole 101A, the second flow hole 102A, the third flow hole 103A, the fourth flow hole 104A, the fifth flow hole 105A, the sixth flow hole 106A and the drain flow hole 1014A are respectively provided in the fixed disk 121A and respectively extend from the first fluid control surface 1210A of the fixed disk 121A; the seventh flow hole 107A, the eighth flow hole 108A, the ninth flow hole 109A and the tenth flow hole 1010A are respectively provided in the rotating disk 122A and respectively extend from the second fluid control surface 1220A of the rotating disk 122A, wherein the first flow hole 101A is in communication with the first opening 1101, the second flow hole 102A is in communication with the second opening 1102, the third flow hole 103A is in communication with the third opening 1103, the fourth flow hole 104A is in communication with the fourth opening 1104, the fifth flow hole 105A is in communication with the fifth opening 1105, the sixth flow hole 106A is in communication with the first fluid opening 1106, the seventh flow hole 107A is in communication with the second fluid opening 1107, and the drain flow hole 1014A is in communication with the tenth flow hole 1010A and the drain opening 11010A respectively. Preferably, the eighth flow hole 108A, the ninth flow hole 109A and the tenth flow hole 1010A are all communicating blind holes. Preferably, the seventh flow hole 107A is in communication with the valve chamber 110A and is further in communication with the second fluid opening 1107 through the valve chamber 110A.

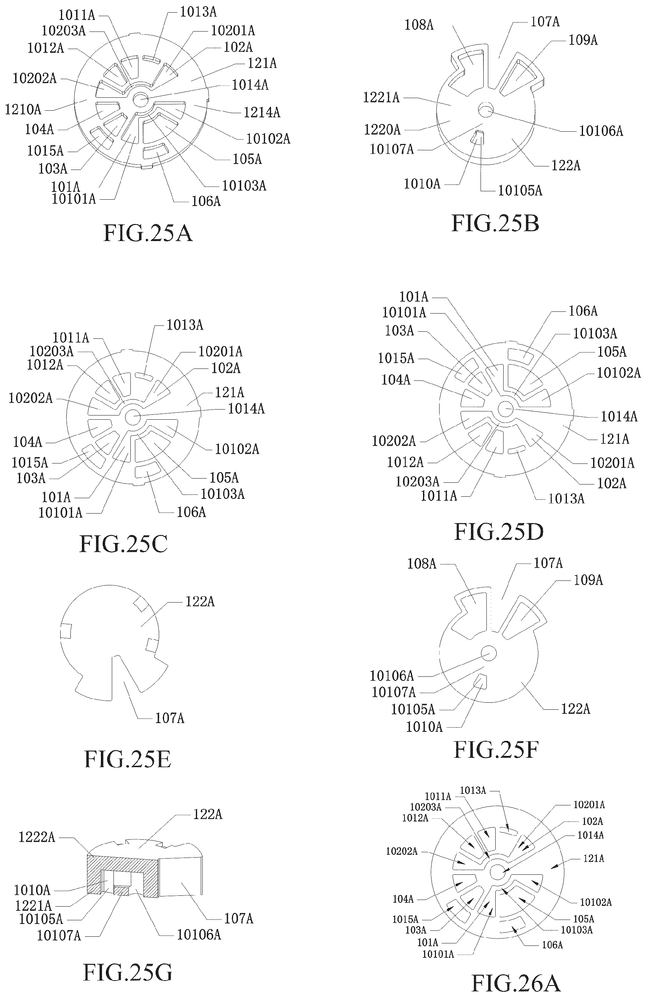

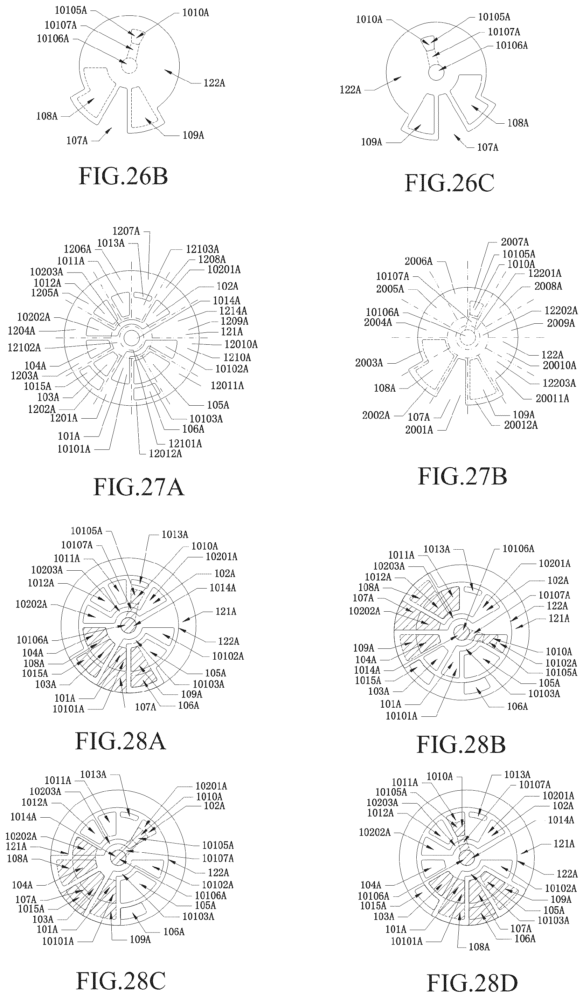

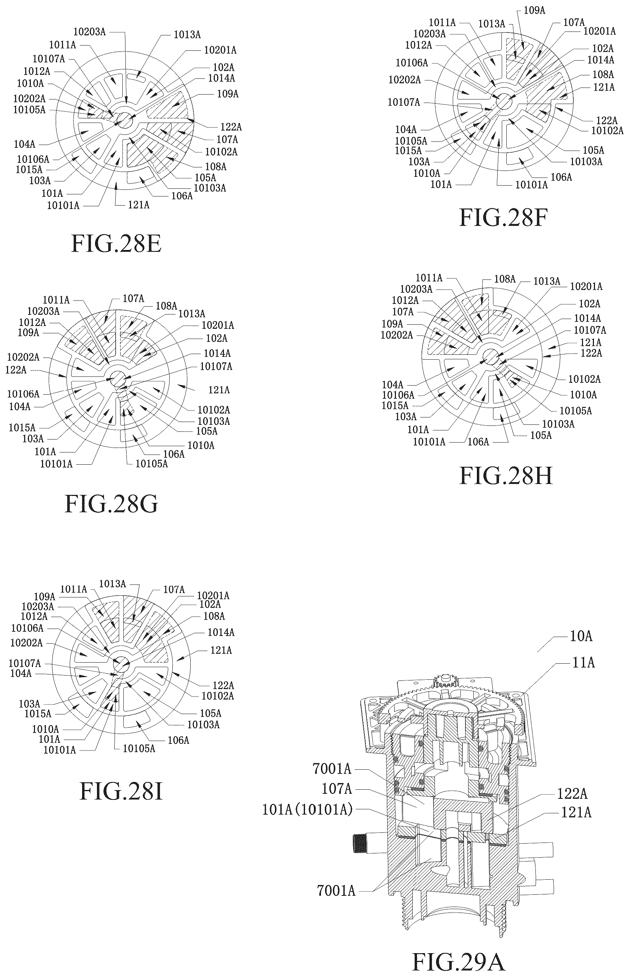

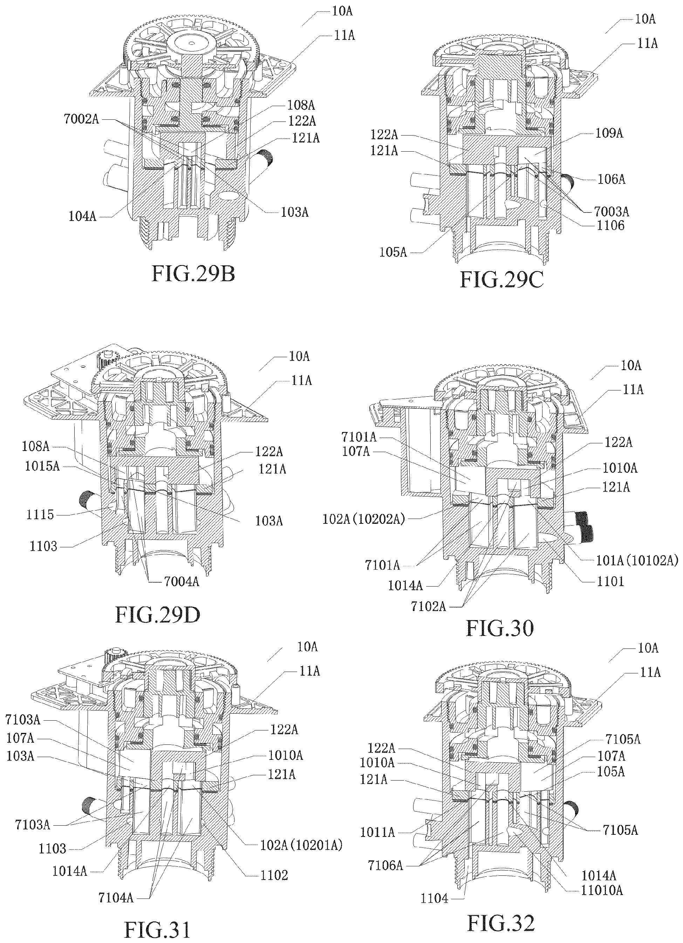

As shown in FIG. 28A, FIG. 29A to FIG. 29C, and FIG. 39A, the rotating disk 122A of the planar valve 10A of the water treatment device according to the first embodiment of the present invention is capable of rotating relative to the fixed disk 121A, thereby enabling the planar valve 10A to have a water treatment working position, and when the planar valve 10A is in the water treatment working position, the seventh flow hole 107A of the planar valve 10A is in communication with the first flow hole 101A, thereby forming a first water treatment flow passage 7001A communicating with the second fluid opening 1107 and the first opening 1101 respectively; the eighth flow hole 108A is in communication with the third flow hole 103A and the fourth flow hole 104A respectively, thereby forming a second water treatment flow passage 7002A communicating with the third opening 1103 and the fourth opening 1104 respectively; and the ninth flow hole 109A is in communication with the fifth flow hole 105A and the sixth flow hole 106A respectively, thereby forming a third water treatment flow passage 7003A communicating with the fifth opening 1105 and the first fluid opening 1106 respectively. In other words, when the planar valve 10A of the water treatment device of the present invention is in the water treatment working position, the water flow, under water pressure, sequentially passes through the second fluid opening 1107, the seventh flow hole 107A, the first flow hole 101A, the first opening 1101 of the planar valve 10A, the first water inlet 511 of the first water treatment device 51, the first water outlet 512 of the first water treatment device 51, the second water inlet 521 of the second water treatment device 52, the second water outlet 522 of the second water treatment device 52, the third opening 1103, the third flow hole 103A, the eighth flow hole 108A, the fourth flow hole 104A, the fourth opening 1104 of the planar valve 10A, the third water inlet 531 of the third water treatment device 53, the third water outlet 532 of the third water treatment device 53, the fifth opening 1105, the fifth flow hole 105A, the ninth flow hole 109A, the sixth flow hole 106A, the first fluid opening 1106 of the planar valve 10A. As shown in FIG. 25A to FIG. 25G, FIG. 28A, and FIG. 39A, as an example, when the planar valve 10A of the water treatment device of the present invention is in the water treatment working position, the second flow hole 102A is blocked by the second fluid control surface 1220A of the rotating disk 122A, and the tenth flow hole 1010A is in communication with the drain flow hole 1014A. Although the tenth flow hole 1010A is in communication with the drain flow hole 1014A, the flow passage formed by the communication between the tenth flow hole 1010A and the drain flow hole 1014A is blocked by the fixed disk 121A, and water flow cannot exit through the flow passage formed by the communication between the tenth flow hole 1010A and the drain flow hole 1014A.

It is worth mentioning that when the planar valve 10A of the water treatment device of the present invention is in the water treatment working position, the second opening 1102 is in communication with the first water outlet 512 of the first water treatment device 51 and the second water inlet 521 of the second water treatment device 52, the second flow hole 102A is blocked by the second fluid control surface 1220A of the rotating disk 122A. That is to say, when the planar valve 10A of the water treatment device of the present invention is in the water treatment working position, no water flows into or out of the second opening 1102, the first water outlet 512 of the first water treatment device 51 and the second water inlet 521 of the second water treatment device 52 form a series connection structure, the eighth flow hole 108A is in communication with the third flow hole 103A and the fourth flow hole 104A respectively, the third opening 1103 is in communication with the second water outlet 522 of the second water treatment device 52, the fourth opening 1104 is in communication with the third water inlet 531 of the third water treatment device 53, consequently, the second water outlet 522 of the second water treatment device 52 and the third water inlet 531 of the third water treatment device 53 also form a series connection structure, such that when the planar valve 10A is in the water treatment working position, the first water treatment device 51, the second water treatment device 52, and the third water treatment device 53 are configured in a three-stage series structure, the first water treatment material 515 of the first water treatment device 51, the second water treatment material 525 of the second water treatment device 52, and the third water treatment material 535 of the third water treatment device 53 will sequentially treat the raw water entering through the second fluid opening 1107 of the planar valve 10A, the treated water then flows out and is supplied via the first fluid opening 1106. It is understood that the three-stage series structure enables more thorough, in-depth treatment of the raw water. In particular, the first water treatment material 515 of the first water treatment device 51, the second water treatment material 525 of the second water treatment device 52, and the third water treatment material 535 of the third water treatment device 53 can be configured as different materials. For example, the first water treatment material 515 can be quartz sand, serving as a coarse filtration material, the second water treatment material 525 can be granular activated carbon, functioning as an adsorption material, and the third water treatment material 535 can be softening resin, performing softening treatment.

As shown in FIG. 28A, FIG. 29A to FIG. 29C, and FIG. 39A, as an example, when the planar valve 10A of the water treatment device according to the first embodiment of the present invention is controlled to be in the water treatment working position, raw water from the planar valve 10A, under water pressure, enters the valve chamber 110A through the second fluid opening 1107 of the valve body 11A, then flows through the seventh flow hole 107A and the first flow hole 101A into the first opening 1101, then enters the first water treatment device 51 via its first water inlet 511, and then is treated (e.g., purified or softened) by the first water treatment material 515 under water pressure, the generated primary treated water is collected by the first central tube 514 and exits the first water treatment device 51 through the first water outlet 512, flows towards and enters the second water treatment device 52 via its second water inlet 521, is treated (e.g., purified or softened) by the second water treatment material 525 under water pressure, the generated secondary treated water is collected by the second central tube 524 and exits the second water treatment device 52 through the second water outlet 522, flows, under water pressure, through the third opening 1103 of the planar valve 10A, then through the third flow hole 103A, the eighth flow hole 108A, the fourth flow hole 104A, and the fourth opening 1104, enters the third water treatment device 53 via its third water inlet 531, is treated (e.g., purified or softened) by the third water treatment material 535 under water pressure, the generated tertiary treated water is collected by the third central tube 534 and exits the third water treatment device 53 through the third water outlet 532, flows towards the fifth opening 1105 of the planar valve 10A, passes through the fifth flow hole 105A, the ninth flow hole 109A, the sixth flow hole 106A, and is finally supplied through the first fluid opening 1106.

As shown in FIG. 28B, FIG. 30, and FIG. 39B, the planar valve 10A of the water treatment device according to the first embodiment of the present invention further has a first backwash working position, when the planar valve 10A is in the first backwash working position, the seventh flow hole 107A of the planar valve 10A is in communication with the second flow hole 102A, thereby forming a first backwash flow passage 7101A communicating with the second fluid opening 1107 and the second opening 1102 respectively; and the tenth flow hole 1010A is in communication with the first flow hole 101A and the drain flow hole 1014A respectively, thereby forming a second backwash flow passage 7102A communicating with the drain opening 11010A and the first opening 1101 respectively. As shown in FIG. 25A to FIG. 25G, FIG. 28B, and FIG. 39B, when the planar valve 10A of the water treatment device of the present invention is in the first backwash working position, the ninth flow hole 109A is in communication with the fourth flow hole 104A, and the third flow hole 103A and the fifth flow hole 105A are blocked by the second fluid control surface 1220A of the rotating disk 122A respectively. Therefore, when the planar valve 10A is in the first backwash working position, although the ninth flow hole 109A of the planar valve 10A is in communication with the fourth flow hole 104A, the ninth flow hole 109A is a communicating blind hole, and the third flow hole 103A and the fifth flow hole 105A are blocked by the second fluid control surface 1220A of the rotating disk 122A respectively, so that raw water can only flow from the second fluid opening 1107 of the planar valve 10A into the seventh flow hole 107A, and further pass through the second flow hole 102A and the second opening 1102 to flow to the first water outlet 512 of the first water treatment device 51 and into the first water treatment device 51; the wastewater generated from backwashing the first water treatment device 51 flows from the first water inlet 511 of the first water treatment device 51 to the first opening 1101 of the planar valve 10A, and under water pressure, further passes through the first flow hole 101A, the tenth flow hole 1010A, the drain flow hole 1014A and the drain opening 11010A of the planar valve 10A to be discharged. In other words, although the ninth flow hole 109A is in communication with the fourth flow hole 104A, water flow does not pass through the passage formed by them. Correspondingly, when the planar valve 10A is in the first backwash working position, because the ninth flow hole 109A is a communicating blind hole, the flow passage formed by the communication between the fourth flow hole 104A and the ninth flow hole 109A is blocked by the rotating disk 122A, and the third flow hole 103A and the fifth flow hole 105A are blocked by the second fluid control surface 1220A of the rotating disk 122A, which prevents water flow through the third opening 1103, the fourth opening 1104, and the fifth opening 1105 of the planar valve 10A, and also prevents water flow within the second water treatment device 52 and the third water treatment device 53. More specifically, when the planar valve 10A is in the first backwash working position, it prevents water flow from the second opening 1102 towards the second water inlet 521 of the second water treatment device 52. In other words, although the ninth flow hole 109A is in communication with the fourth flow hole 104A, the rotating disk 122A prevents raw water from flowing toward the third flow hole 103A, the fourth flow hole 104A, and the fifth flow hole 105A, thereby ensuring that only the first water treatment device 51 is backwashed.

It is worth mentioning that when the planar valve 10A is in the first backwash working position, the flow passage formed by the communication between the ninth flow hole 109A and the fourth flow hole 104A, the third flow hole 103A and the fifth flow hole 105A, are blocked by the rotating disk 122A respectively, which results in the third opening 1103, the fourth opening 1104, and the fifth opening 1105 all being blocked, and even though the ninth flow hole 109A and the fourth flow hole 104A are in communication with and form a corresponding flow passage, water cannot flow into or out of the passage formed by the ninth flow hole 109A and the fourth flow hole 104A. That is to say, the third opening 1103, the fourth opening 1104 and the fifth opening 1105 are all blocked by the rotating disk 122A, which prevents water flow towards the second water treatment device 52 and isolates the third water treatment device 53 from the water flow to ensure that only the first water treatment device 51 is backwashed, so as to increase the intensity of the raw water flow used for backwashing the first water treatment device 51 and prevent the generated wastewater from flowing into the second water treatment device 52 and/or the third water treatment device 53. Therefore, when the planar valve 10A is in the first backwash working position, the first water treatment device 51 of the water treatment device of the present invention is backwashed individually.

As shown in FIGS. 28B, 30, and 39B, as an example, when the planar valve 10A of the water treatment device according to the first embodiment of the present invention is controlled to be in the first backwash working position, raw water from the planar valve 10A, under water pressure, enters the first water treatment device 51 through its first water outlet 512, flows, under water pressure, from the first central tube 514 towards the first water treatment material 515, backwashing the first water treatment material 515, the generated wastewater exits the first water treatment device 51 through its first water inlet 511, flows, under water pressure, towards the first opening 1101 of the planar valve 10A, passes through the second backwash flow passage 7102A, is discharged through the drain opening 11010A.

As shown in FIG. 28C, FIG. 31, and FIG. 39C, the planar valve 10A of the water treatment device according to the first embodiment of the present invention further has a second backwash working position, and when the planar valve 10A is in the second backwash working position, the seventh flow hole 107A of the planar valve 10A is in communication with the third flow hole 103A, thereby forming a third backwash flow passage 7103A communicating with the second fluid opening 1107 and the third opening 1103 respectively; and the tenth flow hole 1010A is in communication with the second flow hole 102A and the drain flow hole 1014A respectively, thereby forming a fourth backwash flow passage 7104A communicating with the drain opening 11010A and the second opening 1102 respectively. As shown in FIG. 25A to FIG. 25G, FIG. 28C, and FIG. 39C, when the planar valve 10A of the water treatment device of the present invention is in the second backwash working position, the eighth flow hole 108A is in communication with the second flow hole 102A and the fourth flow hole 104A respectively, the ninth flow hole 109A is in communication with the first flow hole 101A, and the fifth flow hole 105A is blocked by the second fluid control surface 1220A of the rotating disk 122A. As shown in FIG. 25A to FIG. 25G, FIG. 28C, and FIG. 39C, specifically, when the planar valve 10A is in the second backwash working position, although the eighth flow hole 108A is in communication with the second flow hole 102A and the fourth flow hole 104A respectively, since the fifth flow hole 105A is blocked by the second fluid control surface 1220A of the rotating disk 122A, the second flow hole 102A, the eighth flow hole 108A, and the fourth flow hole 104A cannot form a flow passage that allows water to flow through; although the ninth flow hole 109A is in communication with the first flow hole 101A, the ninth flow hole 109A is a communicating blind hole, causing the flow passage formed by the first flow hole 101A and the ninth flow hole 109A to be blocked by the rotating disk 122A; therefore, the ninth flow hole 109A and the first flow hole 101A cannot form a flow passage that allows water to flow through. Therefore, when the planar valve 10A is in the second backwash working position, the flow passage formed by the first flow hole 101A and the ninth flow hole 109A of the planar valve 10A, the fifth flow hole 105A, are blocked by the rotating disk 122A respectively, which prevents water flow through the first opening 1101, the fourth opening 1104, and the fifth opening 1105 of the valve body 11A of the planar valve 10A, water flow from the fourth opening 1104 of the valve body 11A of the planar valve 10A towards the third water inlet 531 of the third water treatment device 53, water flow from the second water inlet 521 of the second water treatment device 52 towards the first water outlet 512 of the first water treatment device 51, water flow within the first water treatment device 51 and the third water treatment device 53. Correspondingly, when the planar valve 10A is in the second backwash working position, water flow through the first water inlet 511 and the first water outlet 512 of the first water treatment device 51, water flow through the third water inlet 531 and the third water outlet 532 of the third water treatment device 53, are also prevented, to ensures that only the second water treatment device 52 is backwashed, so as to increase the intensity of the backwash flow directed at the second water treatment device 52 while simultaneously preventing the generated wastewater from flowing into the first water treatment device 51 and/or the third water treatment device 53. Therefore, when the planar valve 10A is in the second backwash working position, the second treatment device 52 of the water treatment device of the present invention is backwashed individually. Furthermore, when raw water backwashes the second water treatment device 52, the backwash water flow passing through the second opening 1102 cannot enter the first water outlet 512 of the first water treatment device 51, which ensures the intensity of the backwash water flow for the second water treatment device 52 and prevents the wastewater generated from backwashing the second water treatment device 52 from contaminating the first water treatment device 51 and the third water treatment device 53.

It is worth mentioning that when the planar valve 10A is in the second backwash working position, the flow passage formed by the communication between the first flow hole 101A and the ninth flow hole 109A, the fifth flow hole 105A, are blocked by the rotating disk 122A respectively, which results in both the first opening 1101 and the fifth opening 1105 being blocked, consequently, even though the eighth flow hole 108A is in communication with the second flow hole 102A and the fourth flow hole 104A respectively, no water flows into or out of the first opening 1101, the fourth opening 1104, or the fifth opening 1105, which prevents any water flow from flowing within the first water treatment device 51 and the third water treatment device 53, to ensure that only the second water treatment device 52 is backwashed, so as to enhance the intensity of the raw water flow used for backwashing the second water treatment device 52 while simultaneously preventing the generated wastewater from flowing into the first water treatment device 51 and/or the third water treatment device 53. Therefore, when the planar valve 10A is in the second backwash working position, the second treatment device 52 of the water treatment device of the present invention is backwashed individually.

As shown in FIG. 28C, FIG. 31, and FIG. 39C, as an example, when the planar valve 10A of the water treatment device according to the first embodiment of the present invention is controlled to be in the second backwash working position, raw water from the planar valve 10A, under water pressure, enters the second water treatment device 52 through its second water outlet 522, flows, under water pressure, from the second central tube 524 towards the second water treatment material 525, backwashing the second water treatment material 525, the generated wastewater exits the second water treatment device 52 through its second water inlet 521, flows, under water pressure, towards the second opening 1102 of the valve body 11A of the planar valve 10A, passes through the fourth backwash flow passage 7104A, is discharged through the drain opening 11010A.

As shown in FIG. 28D, FIG. 32, and FIG. 39D, the planar valve 10A of the water treatment device according to the first embodiment of the present invention further has an eleventh flow hole 1011A, the eleventh flow hole 1011A is provided in the fixed disk 121A and extends from the first fluid control surface 1210A of the fixed disk 121A, and the eleventh flow hole 1011A is in communication with the fourth opening 1104; the planar valve 10A further has a third backwash working position, and when the planar valve 10A is in the third backwash working position, the seventh flow hole 107A is in communication with the fifth flow hole 105A, thereby forming a fifth backwash flow passage 7105A communicating with the second fluid opening 1107 and the fifth opening 1105 respectively; and the tenth flow hole 1010A is in communication with the eleventh flow hole 1011A and the drain flow hole 1014A respectively, thereby forming a sixth backwash flow passage 7106A communicating with the drain opening 11010A and the fourth opening 1104 respectively. As shown in FIG. 25A to FIG. 25G, FIG. 28D, and FIG. 39D, when the planar valve 10A of the water treatment device of the present invention is in the third backwash working position, the eighth flow hole 108A is in communication with the first flow hole 101A and the third flow hole 103A respectively, the ninth flow hole 109A is in communication with the fifth flow hole 105A, and the second flow hole 102A and the fourth flow hole 104A are blocked by the second fluid control surface 1220A of the rotating disk 122A respectively. As shown in FIG. 25A to FIG. 25G, FIG. 28D, and FIG. 39D, specifically, when the planar valve 10A is in the third backwash working position, although the eighth flow hole 108A is in communication with the first flow hole 101A and the third flow hole 103A respectively, the eighth flow hole 108A is a communicating blind hole, so that although the eighth flow hole 108A is in communication with the first flow hole 101A and the third flow hole 103A respectively, since the second flow hole 102A and the fourth flow hole 104A are blocked by the rotating disk 122A respectively, the eighth flow hole 108A, the first flow hole 101A, the first opening 1101, the first water treatment device 51, the second opening 1102 (and the second flow hole 102A), the second water treatment device 52, the third opening 1103, and the third flow hole 103A form a closed circulation communication passage isolated from the raw water, and water flow cannot freely flow within the closed path. Furthermore, although the ninth flow hole 109A is in communication with the fifth flow hole 105A, the ninth flow hole 109A is a communicating blind hole; therefore, the flow passage formed by the communication between the ninth flow hole 109A and the fifth flow hole 105A is blocked by the rotating disk 122A, thereby preventing water from flowing in and out through the flow passage formed by the ninth flow hole 109A and the fifth flow hole 105A. In other words, when the planar valve 10A is in the third backwash working position, water flow through the first opening 1101, the second opening 1102, and the third opening 1103 of the valve body 11A of the planar valve 10A is prevented, consequently, even though the eighth flow hole 108A of the planar valve 10A is in communication with both the first flow hole 101A and the third flow hole 103A respectively, and the ninth flow hole 109A is in communication with the fifth flow hole 105A, no flow passage that allows water to pass through can be formed. Therefore, water flow within the first water treatment device 51 and the second water treatment device 52 is prevented. Correspondingly, when the planar valve 10A is in the third backwash working position, water flow through the first water inlet 511 and the first water outlet 512 of the first water treatment device 51, water flow through the second water inlet 521 and the second water outlet 522 of the second water treatment device 52, are also prevented, to ensures that only the third water treatment device 53 is backwashed, so as to increase the intensity of the backwash flow directed at the third water treatment device 53 while simultaneously preventing the generated wastewater from flowing into the first water treatment device 51 and/or the second water treatment device 52. Therefore, when the planar valve 10A is in the third backwash working position, the third treatment device 53 of the water treatment device of the present invention is backwashed individually.

It is worth mentioning that when the planar valve 10A is in the third backwash working position, the flow passage formed by the communication between the ninth flow hole 109A and the fifth flow hole 105A, the second flow hole 102A, are blocked by the rotating disk 122A respectively, which results in the second opening 1102 being blocked, consequently, even though the eighth flow hole 108A is in communication with both the first flow hole 101A and the third flow hole 103A respectively, and the ninth flow hole 109A is in communication with the fifth flow hole 105A, both the eighth flow hole 108A and the ninth flow hole 109A are communicating blind holes, such that water flow is isolated from the first water treatment device 51 and the second water treatment device 52 and water cannot flow through the passage formed by the ninth flow hole 109A and the fifth flow hole 105A, and no water flows into or out of the first opening 1101, the second opening 1102, or the third opening 1103, to ensure that only the third water treatment device 53 is backwashed, so as to enhance the intensity of the raw water flow used for backwashing the third water treatment device 53 while simultaneously prevent the generated wastewater from flowing into the first water treatment device 51 and/or the second water treatment device 52. Therefore, when the planar valve 10A is in the third backwash working position, the third treatment device 53 of the water treatment device of the present invention is backwashed individually.

As shown in FIGS. 28D, 32, and 39D, as an example, when the planar valve 10A of the water treatment device according to the first embodiment of the present invention is controlled to be in the third backwash working position, raw water from the planar valve 10A, under water pressure, enters the third water treatment device 53 through its third water outlet 532, flows, under water pressure, from the third central tube 534 towards the third water treatment material 535, backwashing the third water treatment material 535, the generated wastewater exits the third water treatment device 53 through its third water inlet 531, flows, under water pressure, towards the fourth opening 1104 of the valve body 11A of the planar valve 10A, passes through the sixth backwash flow passage 7106A, is discharged through the drain opening 11010A.

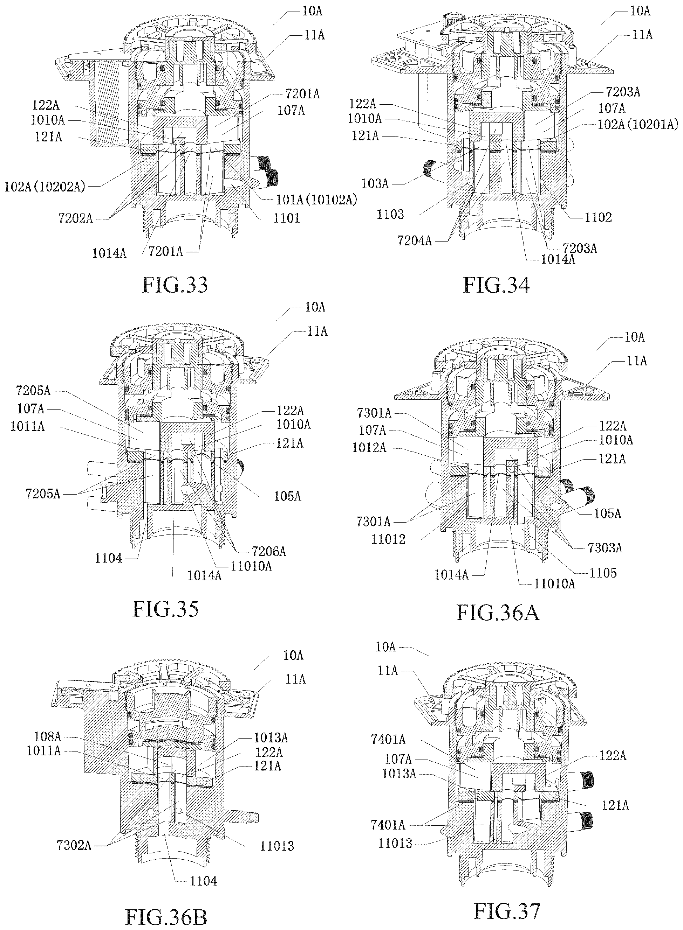

As shown in FIG. 28E, FIG. 33, and FIG. 39E, the planar valve 10A of the water treatment device according to the first embodiment of the present invention further has a first rinse working position, and when the planar valve 10A is in the first rinse working position, the seventh flow hole 107A of the planar valve 10A is in communication with the first flow hole 101A, thereby forming a first rinse flow passage 7201A communicating with the second fluid opening 1107 and the first opening 1101 respectively; and the tenth flow hole 1010A is in communication with the second flow hole 102A and the drain flow hole 1014A respectively, thereby forming a second rinse flow passage 7202A communicating with the drain opening 11010A and the second opening 1102 respectively. As shown in FIGS. 25A to 25G, 28E, and 39E, when the planar valve 10A of the water treatment device of the present invention is in the first rinse working position, the eighth flow hole 108A is in communication with the fifth flow hole 105A, the ninth flow hole 109A is blocked by the first fluid control surface 1210A of the fixed disk 121A, the third flow hole 103A, the fourth flow hole 104A and the eleventh flow hole 1011A are blocked by the second fluid control surface 1220A of the rotating disk 122A respectively. As shown in FIG. 25A to FIG. 25G, FIG. 28E, and FIG. 39E, when the planar valve 10A is in the first rinse working position, although the eighth flow hole 108A of the planar valve 10A is in communication with the fifth flow hole 105A, since the eighth flow hole 108A is a communicating blind hole, and the third flow hole 103A, the fourth flow hole 104A, and the eleventh flow hole 1011A are blocked by the rotating disk 122A respectively, raw water can only flow from the second fluid opening 1107 of the planar valve 10A into the seventh flow hole 107A, and further pass through the first flow hole 101A and the first opening 1101 to flow to the first water inlet 511 of the first water treatment device 51 and into the first water treatment device 51; the wastewater generated from rinsing the first water treatment device 51 flows from the first water outlet 512 of the first water treatment device 51 to the second opening 1102 of the planar valve 10A, and under water pressure, further passes through the second flow hole 102A, the tenth flow hole 1010A, the drain flow hole 1014A and the drain opening 11010A of the planar valve 10A to be discharged. In other words, although the eighth flow hole 108A of the planar valve 10A is in communication with the fifth flow hole 105A, the eighth flow hole 108A is a communicating blind hole, which causes the flow passage formed by the eighth flow hole 108A and the fifth flow hole 105A to be blocked by the rotating disk 122A, consequently, water does not flow through the passage formed by the eighth flow hole 108A and the fifth flow hole 105A, and the third flow hole 103A, the fourth flow hole 104A, and the eleventh flow hole 1011A are blocked by the second fluid control surface 1220A of the rotating disk 122A respectively, because the third flow hole 103A is blocked by the second fluid control surface 1220A of the rotating disk 122A, the wastewater generated from rinsing the first water treatment device 51, after exiting the first water outlet 512 of the first water treatment device 51, is prevented from flowing towards the second water inlet 521 of the second water treatment device 52. Correspondingly, when the planar valve 10A is in the first rinse working position, the eighth flow hole 108A is in communication with the fifth flow hole 105A, the third flow hole 103A, the fourth flow hole 104A and the eleventh flow hole 1011A are blocked by the second fluid control surface 1220A of the rotating disk 122A respectively, so as to prevent water flow through the third opening 1103, the fourth opening 1104, and the fifth opening 1105 of the planar valve 10A, consequently, water flow is blocked through the third opening 1103, the fourth opening 1104, and the fifth opening 1105, therefore, water flow is prevented from flowing through the third opening 1103, the fourth opening 1104, and the fifth opening 1105, so as to prevent water flow within the second water treatment device 52 and the third water treatment device 53 from flowing. In other words, although the eighth flow hole 108A is in communication with the fifth flow hole 105A, the rotating disk 122A prevents raw water from flowing towards the third flow hole 103A, the fourth flow hole 104A, and the fifth flow hole 105A, thereby ensuring that only water flows to the water treatment device 51 and the first water treatment device 51 is rinsed.

It is worth mentioning that when the planar valve 10A is in the first rinse working position, the flow passage formed by the connection between the eighth flow hole 108A and the fifth flow hole 105A, the third flow hole 103A, the fourth flow hole 104A, and the eleventh flow hole 1011A, are all blocked by the rotating disk 122A respectively, which results in no water flowing into or out of the third opening 1103, the fourth opening 1104, or the fifth opening 1105, in other words, water flow cannot flow towards the second water treatment device 52, and the third water treatment device 53 is isolated from the water flow, to ensure that only the first water treatment device 51 is rinsed, so as to enhance the intensity of the raw water flow used for rinsing the first water treatment device 51, while simultaneously preventing the generated wastewater from flowing into the second water treatment device 52 and/or the third water treatment device 53. Therefore, when the planar valve 10A is in the first rinse working position, the first water treatment device 51 of the water treatment device of the present invention is rinsed individually.

As shown in FIG. 28E, FIG. 33, and FIG. 39E, as an example, when the planar valve 10A of the water treatment device according to the first embodiment of the present invention is controlled to be in the first rinse working position, raw water from the planar valve 10A, under water pressure, enters the first water treatment device 51 through its first water inlet 511, under water pressure, then rinses the first water treatment material 515, and the generated wastewater is collected by the first central tube 514, exits the first water treatment device 51 through its first water outlet 512, under water pressure, flows towards the second opening 1102 of the planar valve 10A, passes through the second rinse flow passage 7202A and is discharged through the drain opening 11010A.

As shown in FIG. 28F, FIG. 34, and FIG. 39F, the planar valve 10A of the water treatment device according to the first embodiment of the present invention further has a second rinse working position, and when the planar valve 10A is in the second rinse working position, the seventh flow hole 107A of the planar valve 10A is in communication with the second flow hole 102A, thereby forming a third rinse flow passage 7203A communicating with the second fluid opening 1107 and the second opening 1102 respectively; and the tenth flow hole 1010A is in communication with the third flow hole 103A and the drain flow hole 1014A respectively, thereby forming a fourth rinse flow passage 7204A communicating with the drain opening 11010A and the third opening 1103 respectively. As shown in FIG. 25A to FIG. 25G, FIG. 28F, and FIG. 39F, when the planar valve 10A of the water treatment device of the present invention is in the second rinse working position, the eighth flow hole 108A is in communication with the first flow hole 101A, and the fourth flow hole 104A, the fifth flow hole 105A and the eleventh flow hole 1011A are blocked by the second fluid control surface 1220A of the rotating disk 122A respectively. As shown in FIG. 25A to FIG. 25G, FIG. 28F, and FIG. 39F, specifically, when the planar valve 10A is in the second rinse working position, although the eighth flow hole 108A of the planar valve 10A is in communication with the first flow hole 101A, since the fourth flow hole 104A, the fifth flow hole 105A, and the eleventh flow hole 1011A are blocked by the second fluid control surface 1220A of the rotating disk 122A respectively, and the eighth flow hole 108A is a communicating blind hole, the flow passage formed by the first flow hole 101A and the eighth flow hole 108A, the fourth flow hole 104A, the fifth flow hole 105A, and the eleventh flow hole 1011A are all blocked by the rotating disk 122A, so that raw water can only flow from the second fluid opening 1107 of the planar valve 10A into the seventh flow hole 107A, and further pass through the second flow hole 102A and the second opening 1102 to flow to the second water inlet 521 of the second water treatment device 52 and into the second water treatment device 52; the wastewater generated from rinsing the second water treatment device 52 flows from the second water outlet 522 of the second water treatment device 52 to the third opening 1103 of the planar valve 10A, and under water pressure, further passes through the third flow hole 103A, the tenth flow hole 1010A, the drain flow hole 1014A and the drain opening 11010A of the planar valve 10A to be discharged. In other words, although the eighth flow hole 108A is in communication with the first flow hole 101A, the eighth flow hole 108A is a communicating blind hole, so water does not flow through the passage formed by the eighth flow hole 108A and the first flow hole 101A. Correspondingly, when the planar valve 10A is in the second rinse working position, the flow passage formed by the first flow hole 101A and the eighth flow hole 108A, the fourth flow hole 104A, the fifth flow hole 105A, and the eleventh flow hole 1011A, are all blocked by the rotating disk 122A, which prevents water flow through the first opening 1101, the fourth opening 1104, and the fifth opening 1105 of the planar valve 10A, consequently, a rinsing water flowing from the second opening 1102 towards the second water inlet 521 of the second water treatment device 52 is prevented from flowing towards the first water outlet 512 of the first water treatment device 51, although the eighth flow hole 108A of the planar valve 10A is in communication with the first flow hole 101A, both the eighth flow hole 108A and the ninth flow hole 109A are communicating blind holes, therefore, water flow is blocked through the first opening 1101, the fourth opening 1104, and the fifth opening 1105 of the planar valve 10A, thereby preventing water flow within the first water treatment device 51 and the third water treatment device 53. In other words, the first flow hole 101A, the fourth flow hole 104A, the fifth flow hole 105A, and the eleventh flow hole 1011A are all blocked by the rotating disk 122A, water flow is prevented from flowing towards the first flow hole 101A, the fourth flow hole 104A, the fifth flow hole 105A and the eleventh flow hole 1011A, thereby ensuring that only the second water treatment device 52A is rinsed.

It is worth mentioning that when the planar valve 10A is in the second rinse working position, the flow passage formed by the communication between the first flow hole 101A and the eighth flow hole 108, the fourth flow hole 104A, the fifth flow hole 105A, and the eleventh flow hole 1011A, are all blocked by the rotating disk 122A respectively, which results in the first opening 1101, the fourth opening 1104, and the fifth opening 1105 being blocked. In other words, there is no water flow within the first water treatment device 51, and the third water treatment device 53 is isolated from the water flow, which ensures that only the second water treatment device 52 is rinsed, so as to enhance the intensity of the raw water flow used for forward rinsing the second water treatment device 52, while simultaneously preventing the generated wastewater from flowing into the first water treatment device 51 and/or the third water treatment device 53. Therefore, when the planar valve 10A is in the second rinse working position, the second treatment device 52 of the water treatment device of the present invention is rinsed individually.

As shown in FIGS.28F, 34, and 39F, as an example, when the planar valve 10A of the water treatment device according to the first embodiment of the present invention is controlled to be in the second rinse working position, raw water from the planar valve 10A, under water pressure, enters the second water treatment device 52 through its second water inlet 521, under water pressure, rinses the second water treatment material 525, the generated wastewater is collected by the second central tube 524, exits the second water treatment device 52 through its second water outlet 522, and flows, under water pressure, towards the third opening 1103 of the planar valve 10A, and then passes through the fourth rinse flow passage 7204A and is discharged through the drain opening 11010A.

As shown in FIG. 28G, FIG. 35, and FIG. 39G of the drawings, the planar valve 10A of the water treatment device according to the first embodiment of the present invention further has a third rinse working position, and when the planar valve 10A is in the third rinse working position, the seventh flow hole 107A of the planar valve 10A is in communication with the eleventh flow hole 1011A, thereby forming a fifth rinse flow passage 7205A communicating with the second fluid opening 1107 and the fourth opening 1104 respectively; and the tenth flow hole 1010A is in communication with the fifth flow hole 105A and the drain flow hole 1014A respectively, thereby forming a sixth rinse flow passage 7206A communicating with the drain opening 11010A and the fifth opening 1105 respectively. As shown in FIG. 25A to FIG. 25G, FIG. 28G, and FIG. 39G, when the planar valve 10A of the water treatment device of the present invention is in the third rinse working position, the eighth flow hole 108A is in communication with the second flow hole 102A, and the first flow hole 101A, the third flow hole 103A, and the fourth flow hole 104A are blocked by the second fluid control surface 1220A of the rotating disk 122A respectively. As shown in FIG. 25A to FIG. 25G, FIG. 28G, and FIG. 39G, specifically, when the planar valve 10A is in the third rinse working position, although the eighth flow hole 108A is in communication with the second flow hole 102A, since the eighth flow hole 108A is a communicating blind hole, water flow does not pass through the flow passage formed by the eighth flow hole 108A and the second flow hole 102A; and the first flow hole 101A, the third flow hole 103A, and the fourth flow hole 104A are blocked by the second fluid control surface 1220A of the rotating disk 122A respectively, so that raw water can only flow from the second fluid opening 1107 of the planar valve 10A into the seventh flow hole 107A, and further pass through the eleventh flow hole 1011A and the fourth opening 1104 to flow to the third water inlet 531 of the third water treatment device 53 and into the third water treatment device 53; the wastewater generated from rinsing the third water treatment device 53 flows from the third water outlet 532 of the third water treatment device 53 to the fifth opening 1105 of the planar valve 10A, and under water pressure, further passes through the fifth flow hole 105A, the tenth flow hole 1010A, the drain flow hole 1014A and the drain opening 11010A of the planar valve 10A to be discharged. In other words, although the eighth flow hole 108A is in communication with the second flow hole 102A, water flow does not pass through the passage formed by them. Correspondingly, when the planar valve 10A is in the third rinse working position, wherein both the first flow hole 101A and the third flow hole 103A are blocked by the rotating disk 122A, which results in the first opening 1101 and the third opening 1103 of the planar valve 10A being blocked, such that water flow within both the first water treatment device 51 and the second water treatment device 52 is prevented, water flow is also blocked through the first opening 1101, the second opening 1102, and the third opening 1103 of the planar valve 10A. In other words, although the eighth flow hole 108A of the planar valve 10A is in communication with the second flow hole 102A, the rotating disk 122A prevents water from flowing towards the first flow hole 101A, the second flow hole 102A, the third flow hole 103A, and the fourth flow hole 104A, thereby ensuring that only the third water treatment device 53 is rinsed.

It is worth mentioning that when the planar valve 10A is in the third rinse working position, the flow passage formed by the communication between the eighth flow hole 108A and the second flow hole 102A, the first flow hole 101A and the third flow hole 103A, are blocked by the rotating disk 122A respectively, which results in the first opening 1101 and the third opening 1103 being blocked. In other words, although the eighth flow hole 108A of the planar valve 10A is in communication with the second flow hole 102A, both the first water treatment device 51 and the second water treatment device 52 are isolated from the water flow, which ensures that only the third water treatment device 53 is rinsed to enhance the intensity of the raw water flow used for rinsing the third water treatment device 53, while simultaneously preventing the generated wastewater from flowing into the first water treatment device 51 and/or the second water treatment device 52. Therefore, when the planar valve 10A is in the third rinse working position, the third treatment device 53 of the water treatment device of the present invention is rinsed individually.

As shown in FIGS.28G, 35, and 39G, as an example, when the planar valve 10A of the water treatment device according to the first embodiment of the present invention is controlled to be in the third rinse working position, raw water from the planar valve 10A, under water pressure, enters the third water treatment device 53 through its third water inlet 531, under water pressure, rinses the third water treatment material 535, the generated wastewater is collected by the third central tube 534, exits the third water treatment device 53 through its third water outlet 532, and flows, under water pressure, towards the fifth opening 1105 of the planar valve 10A, and then passes through the sixth rinse flow passage 7206A and is discharged through the drain opening 11010A.

As shown in FIG. 25A to FIG. 25G, FIG. 28H, FIG. 36A, FIG. 36B, and FIG. 39H, the valve body 11A of the planar valve 10A of the water treatment device according to the first embodiment of the present invention further forms a first injector opening 11012 and a second injector opening 11013, the planar valve 10A further has a twelfth flow hole 1012A and a thirteenth flow hole 1013A, wherein the twelfth flow hole 1012A and the thirteenth flow hole 1013A are respectively provided in the fixed disk 121A and extend from the first fluid control surface 1210A of the fixed disk 121A, the twelfth flow hole 1012A is in communication with the first injector opening 11012 and the thirteenth flow hole 1013A is in communication with the second injector opening 11013, wherein the planar valve 10A further has a regeneration working position, when the planar valve 10A is in the regeneration working position, the seventh flow hole 107A is in communication with the twelfth flow hole 1012A, thereby forming a first regeneration flow passage 7301A communicating with the second fluid opening 1107 and the first injector opening 11012 respectively; the eighth flow hole 108A is in communication with the thirteenth flow hole 1013A and the eleventh flow hole 1011A respectively, thereby forming a second regeneration flow passage 7302A communicating with the second injector opening 11013 and the fourth opening 1104 respectively; and the tenth flow hole 1010A is in communication with the fifth flow hole 105A and the drain flow hole 1014A respectively, thereby forming a third regeneration flow passage 7303A communicating with the drain opening 11010A and the fifth opening 1105 respectively. As shown in FIG. 25A to FIG. 25G, FIG. 28H, and FIG. 39H, when the planar valve 10A of the water treatment device of the present invention is in the regeneration working position, the ninth flow hole 109A is in communication with the second flow hole 102A, and the first flow hole 101A, the third flow hole 103A, and the fourth flow hole 104A are blocked by the second fluid control surface 1220A of the rotating disk 122A respectively. Therefore, when the planar valve 10A of the water treatment device of the present invention is in the regeneration working position, raw water under water pressure flows in from the second fluid opening 1107 of the valve body 11A of the planar valve 10A, passes through the first regeneration flow passage 7301A (the seventh flow hole 107A and the twelfth flow hole 1012A) to flow to the first injector opening 11012 of the valve body 11A, then flows into the nozzle outlet 182 of the injector 18, and after being injected by the injector 18, mixes with the brine (such as sodium chloride solution) from the brine suction inlet 181 to form a regenerant solution, wherein the regenerant solution flows through the discharge outlet 183 of the injector 18 into the second injector opening 11013 of the valve body 11A, then passes through the second regeneration flow passage 7302A (the thirteenth flow hole 1013A, the eighth flow hole 108A, and the eleventh flow hole 1011A) to flow into the fourth opening 1104 of the valve body 11A; the regenerant solution flows from the third water inlet 531 into the third water treatment device 53, regenerates the third water treatment material 535 in down-flow mode, such as softening resin, and after regeneration, the generated wastewater flows out from the third water outlet 532, then sequentially passes through the fifth opening 1105 of the valve body 11A, the third regeneration flow passage 7303A (the fifth flow hole 105A, the tenth flow hole 1010A and the drain flow hole 1014A) and the drain opening 11010A to flow out. As shown in FIG. 25A to FIG. 25G, FIG. 28H, FIG. 36A, FIG. 36B, and FIG. 39H, specifically, when the planar valve 10A is in the regeneration working position, although the ninth flow hole 109A is in communication with the second flow hole 102A, since the ninth flow hole 109A is a communicating blind hole, the flow passage formed by the ninth flow hole 109A and the second flow hole 102A is blocked by the rotating disk 122A; and the first flow hole 101A, the third flow hole 103A, and the fourth flow hole 104A are blocked by the second fluid control surface 1220A of the rotating disk 122A respectively, so that raw water can only flow from the second fluid opening 1107 of the planar valve 10A into the seventh flow hole 107A, and further sequentially pass through the twelfth flow hole 1012A, the first injector opening 11012, the injector 18, the second injector opening 11013, the thirteenth flow hole 1013A, the eighth flow hole 108A, the eleventh flow hole 1011A, and the fourth opening 1104 to flow to the third water inlet 531 of the third water treatment device 53 and into the third water treatment device 53, regenerating the softening material (for example, softening resin) of the third water treatment device 53 in down-flow mode; the generated wastewater flows from the third water outlet 532 of the third water treatment device 53 to the fifth opening 1105 of the planar valve 10A, and under water pressure, further passes through the fifth flow hole 105A, the tenth flow hole 1010A, the drain flow hole 1014A and the drain opening 11010A of the planar valve 10A to be discharged. In other words, although the ninth flow hole 109A is in communication with the second flow hole 102A, water does not flow through the passage formed by the ninth flow hole 109A and the second flow hole 102A. Correspondingly, when the planar valve 10A is in the regeneration working position, the first flow hole 101A, the third flow hole 103A and the fourth flow hole 104A are all blocked by the rotating disk 122A, the ninth flow hole 109A is a communicating blind hole, and the flow passage formed by the second flow hole 102A and the ninth flow hole 109A is blocked by the rotating disk 122A, so as to prevent water flow through the first opening 1101, the second opening 1102 and the third opening 1103 of the planar valve 10A, water flow is prevented from flowing flow through the first opening 1101, the second opening 1102 and the third opening 1103 of the planar valve 10A, such that water flows within both the first water treatment device 51 and the second water treatment device 52 is also prevented. In other words, although the ninth flow hole 109A of the planar valve 10A is in communication with the second flow hole 102A, the rotating disk 122A prevents water flow from flowing toward the first flow hole 101A, the second flow hole 102A, the third flow hole 103A, and the fourth flow hole 104A, thereby ensuring that only the third water treatment device 53 is regenerated in down-flow mode.

It is worth mentioning that when the planar valve 10A is in the regeneration working position, the flow passage formed by the communication between the ninth flow hole 109A and the second flow hole 102A, the first flow hole 101A, the third flow hole 103A and the fourth flow hole 104A, are all blocked by the rotating disk 122A respectively, the flow passage formed by the ninth flow hole 109A and the second flow hole 102A is blocked by the rotating disk 122A, resulting in the first opening 1101, the second opening 1102, and the third opening 1103 being blocked, in other words, both the first water treatment device 51 and the second water treatment device 52 are isolated from the water flow, which ensures that only the third water treatment device 53 is regenerated in down-flow mode, so as to enhance the intensity of the regenerant solution flow used for the down-flow regeneration of the third water treatment device 53, while simultaneously preventing the generated wastewater from flowing into the first water treatment device 51 and/or the second water treatment device 52. Particularly, it is essential to prevent the regenerant brine (or the wastewater discharged after resin regeneration, which has a high salt content) from entering the first water treatment device 51 and/or the second water treatment device 52, this is because, in practical applications, the first water treatment device 51 or the second water treatment device 52 often contains adsorbent material such as activated carbon, the regenerant brine can contaminate these activated carbon or similar filter media, thereby reducing the purification capacity of the first or second water treatment device, which is also a primary reason why multi-stage purification and softening water treatment systems cannot simply connect an activated carbon water treatment device and a softening resin water treatment device directly in series. Therefore, when the planar valve 10A is in the regeneration working position, the third treatment device 53 of the water treatment device of the present invention regenerated in down-flow mode individually.

As shown in FIG. 25A to FIG. 25G, FIG. 28H, FIG. 36A, FIG. 36B, and FIG. 39H, as an example, when the planar valve 10A of the water treatment device according to the first embodiment of the present invention is controlled to be in the regeneration working position, raw water from the planar valve 10A, under water pressure, mixes with brine drawn from the injector 18 to form a regenerant solution, the regenerant solution then enters the third water treatment device 53 through its third water inlet 531, under water pressure, and then regenerate the third water treatment material 535 in down-flow mode, wherein the generated wastewater is collected by the third central tube 534 and exits the third water treatment device 53 through its third water outlet 532, under water pressure, flows towards the fifth opening 1105 of the planar valve 10A, passes through the third regeneration flow passage 7303A and is discharged through the drain opening 11010A.

As shown in FIG. 28I, FIG. 37, and FIG. 39I, the planar valve 10A of the water treatment device according to the first embodiment of the present invention further has a water refill working position, and when the planar valve 10A is in the water refill working position, the seventh flow hole 107A is in communication with the thirteenth flow hole 1013A, thereby forming a water refill flow passage 7401A communicating with the second fluid opening 1107 and the second injector opening 11013 respectively. As shown in FIG. 25A to FIG. 25G, FIG. 28I and FIG. 39I, when the planar valve 10A of the water treatment device of the present invention is in the water refill working position, the eighth flow hole 108A is in communication with the second flow hole 102A, the ninth flow hole 109A is in communication with the eleventh flow hole 1011A, the tenth flow hole 1010A is in communication with the first flow hole 101A and the drain flow hole 1014A respectively, and the third flow hole 103A, the fourth flow hole 104A, the fifth flow hole 105A and the twelfth flow hole 1012A are blocked by the second fluid control surface 1220A of the rotating disk 122A respectively. Although the eighth flow hole 108A is in communication with the second flow hole 102A, the ninth flow hole 109A is in communication with the eleventh flow hole 1011A and the tenth flow hole 1010A is in communication with the first flow hole 101A and the drain flow hole 1014A respectively, since the third flow hole 103A, the fourth flow hole 104A, the fifth flow hole 105A, and the twelfth flow hole 1012A are blocked by the rotating disk 122A respectively, and the eighth flow hole 108A, the ninth flow hole 109A and the tenth flow hole 1010A are all communicating blind holes, the flow passage formed by the communication between the eighth flow hole 108A and the second flow hole 102A and the flow passage formed by the communication between the ninth flow hole 109A and the eleventh flow hole 1011A are blocked by the rotating disk 122A respectively; although the tenth flow hole 1010A is in communication with the first flow hole 101A and the drain flow hole 1014A to form a flow passage, since the drain flow hole 1014A is in communication with the drain opening 11010A, no water flow enters the flow passage formed by the communication between the tenth flow hole 1010A, the first flow hole 101A, and the drain flow hole 1014A, thereby causing the second opening 1102, the third opening 1103, the fourth opening 1104, and the fifth opening 1105 to be blocked, and preventing water flow from passing through the first opening 1101, the second opening 1102, the third opening 1103, the fourth opening 1104 and the fifth opening 1105. In other words, although the eighth flow hole 108A is in communication with the second flow hole 102A, the ninth flow hole 109A is in communication with the eleventh flow hole 1011A, and the tenth flow hole 1010A is in communication with the first flow hole 101A and the drain flow hole 1014A respectively, they cannot form flow passages that allow water to flow through.

As shown in FIG. 24A, FIG. 24F, FIG. 28A, FIG. 29D, and FIG. 39A, the valve body 11A of the planar valve 10A of the water treatment device according to the first embodiment of the present invention further forms a third fluid opening 1115; the planar valve 10A further has a water supply flow hole 1015A, the water supply flow hole 1015A is provided in the fixed disk 121A and extends from the first fluid control surface 1210A of the fixed disk 121A, and the water supply flow hole 1015A is in communication with the third fluid opening 1115. As shown in FIG. 28A, FIG. 29A to FIG. 29D, and FIG. 39A, when the planar valve 10A is in the water treatment working position, the eighth flow hole 108A of the planar valve 10A is further in communication with both the third flow hole 103A and the water supply flow hole 1015A respectively, thereby forming the fourth water treatment flow passage 7004A communicating with both the third opening 1103 of the valve body 11A and the third fluid opening 1115 respectively. That is to say, when the planar valve 10A is in the water treatment working position, the seventh flow hole 107A of the planar valve 10A is in communication with the first flow hole 101A, thereby forming the first water treatment flow passage 7001A communicating with the second fluid opening 1107 and the first opening 1101 respectively; the eighth flow hole 108A is in communication with the third flow hole 103A, the fourth flow hole 104A and the water supply flow hole 1015A respectively, thereby forming the second water treatment flow passage 7002A communicating with the third opening 1103 and the fourth opening 1104 respectively, and forming the fourth water treatment flow passage 7004A communicating with the third opening 1103 and the third fluid opening 1115 respectively; and the ninth flow hole 109A is in communication with the fifth flow hole 105A and the sixth flow hole 106A respectively, thereby forming the third water treatment flow passage 7003A communicating with the fifth opening 1105 and the first fluid opening 1106 respectively. It is understandable that when the planar valve 10A is in the water treatment working position, the third flow hole 103A, the fourth flow hole 104A, and the water supply flow hole 1015A are intercommunicated through the eighth flow hole 108A, thereby causing the third opening 1103, the fourth opening 1104, and the third fluid opening 1115 to form a three-way structure. Preferably, the water supply flow hole 1015A is arranged outward of the third flow hole 103A. As shown in FIG. 25A to FIG. 25G, FIG. 28A, and FIG. 39A, when the planar valve 10A is in the water treatment working position, the second flow hole 102A, the eleventh flow hole 1011A, the twelfth flow hole 1012A and the thirteenth flow hole 1013A are blocked by the second fluid control surface 1220A of the rotating disk 122A respectively, and the tenth flow hole 1010A is in communication with the drain flow hole 1014A. Although the tenth flow hole 1010A is in communication with the drain flow hole 1014A, they cannot form a flow passage that allows water to flow through.

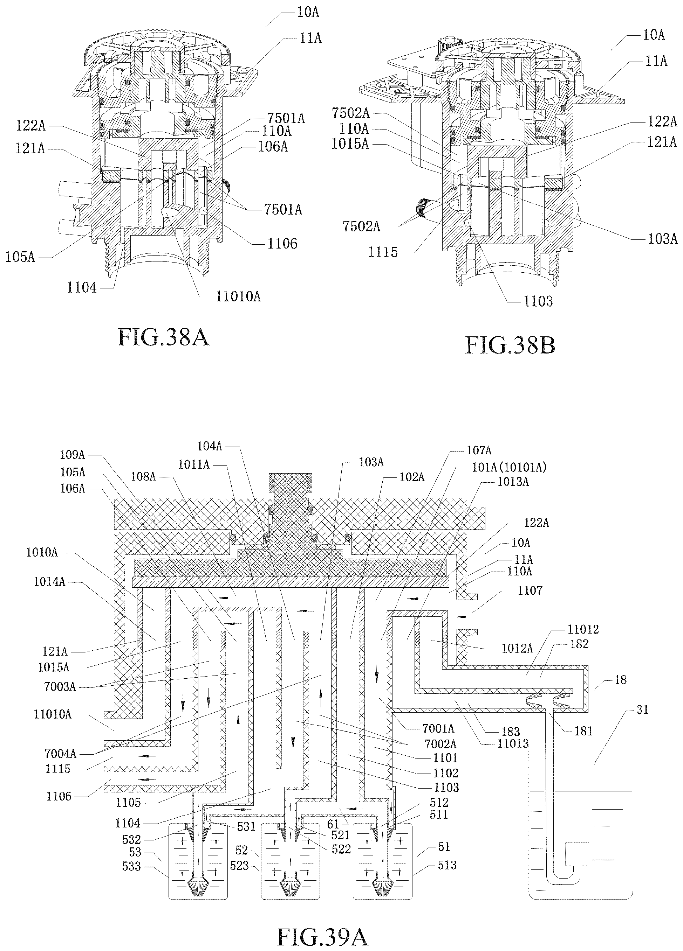

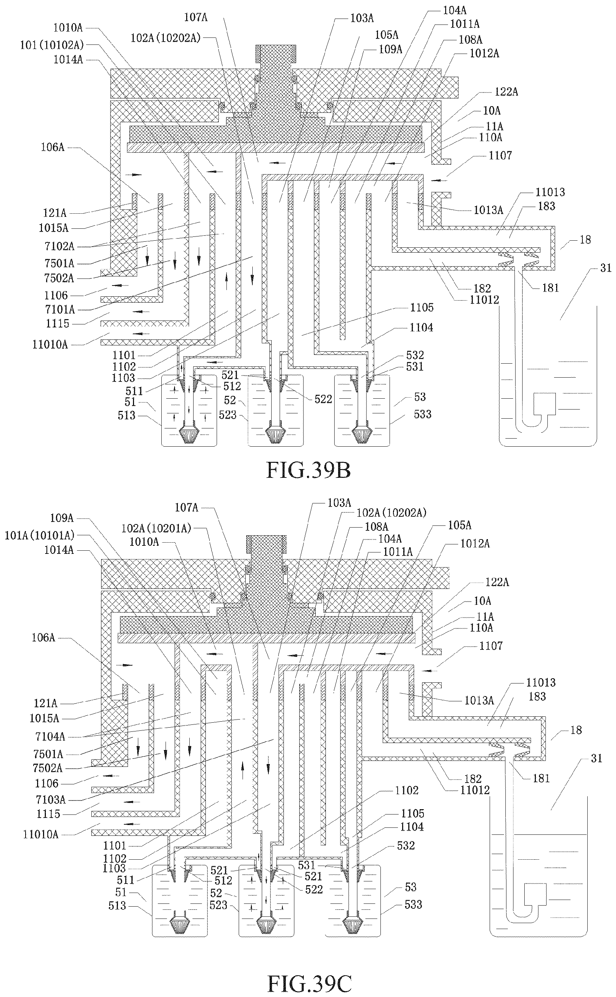

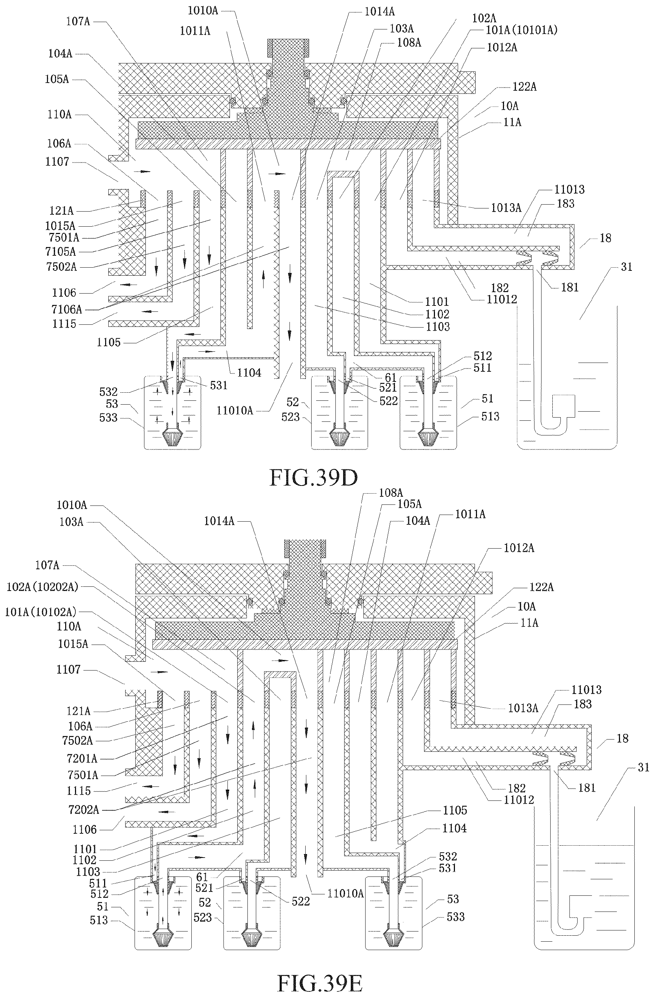

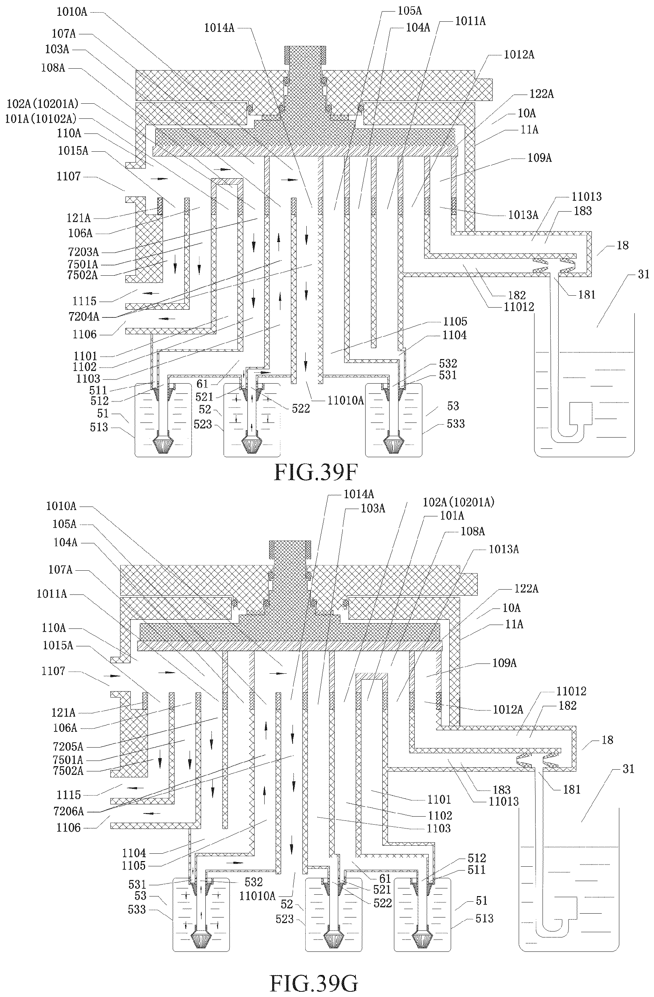

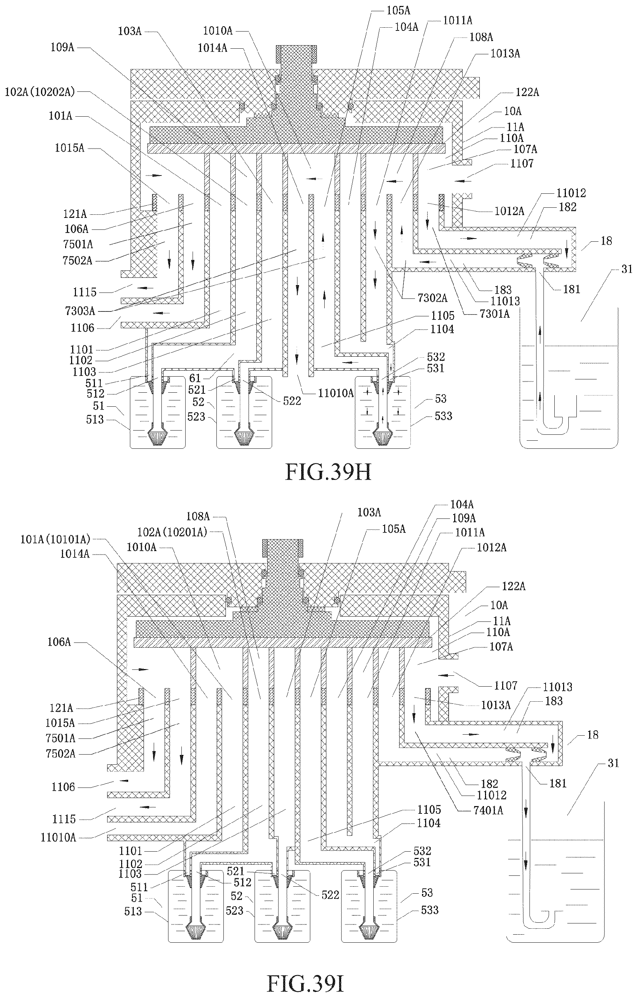

As shown in FIG. 38A, FIG. 38B, and FIG. 39B to FIG. 39I, when the planar valve 10A of the water treatment device according to the first embodiment of the present invention is in the first backwash working position, the second backwash working position, the third backwash working position, the first rinse working position, the second rinse working position, the third rinse working position, the regeneration working position, or the water refill working position, the sixth flow hole 106A of the planar valve 10A is in communication with the valve chamber 110A of the valve body 11A and is further in communication with the second fluid opening 1107 through the valve chamber 110A, thereby forming a first raw water supply flow passage 7501A communicating with the second fluid opening 1107 and the first fluid opening 1106 of the valve body 11A respectively; the water supply flow hole 1015A of the planar valve 10A is in communication with the valve chamber 110A of the valve body 11A and is further in communication with the second fluid opening 1107 through the valve chamber 110A, thereby forming a second raw water supply flow passage 7502A communicating with the second fluid opening 1107 and the third fluid opening 1115 of the valve body 11A respectively.

As shown in FIG. 24C to FIG. 28I, the first flow hole 101A of the planar valve 10A of the water treatment device according to the first embodiment of the present invention has a first communication portion 10101A and a second communication portion 10102A, wherein the first communication portion 10101A of the first flow hole 101A is in communication with the first opening 1101, and the second communication portion 10102A of the first flow hole 101A is in communication with the first opening 1101. Preferably, the first flow hole 101A of the planar valve 10A further has a third communication portion 10103A extending between the first communication portion 10101A and the second communication portion 10102A, wherein the second communication portion 10102A of the first flow hole 101A is in communication with the first opening 1101, and the first communication portion 10101A of the first flow hole 101A is in communication with the second communication portion 10102A through the third communication portion 10103A. In other words, the first communication portion 10101A of the first flow hole 101A is in communication with the first opening 1101 through the third communication portion 10103A and the second communication portion 10102A. Preferably, the fifth flow hole 105A of the planar valve 10A is arranged outward of the third communication portion 10103A. The second flow hole 102A of the planar valve 10A has a first conduction portion 10201A and a second conduction portion 10202A, wherein the first conduction portion 10201A of the second flow hole 102A is in communication with the second opening 1102, and the second conduction portion 10202A of the second flow hole 102A is in communication with the second opening 1102. Preferably, the second flow hole 102A of the planar valve 10A further has a third conduction portion 10203A extending between the first conduction portion 10201A and the second conduction portion 10202A, wherein the first conduction portion 10201A of the second flow hole 102A is in communication with the second opening 1102, and the second conduction portion 10202A of the second flow hole 102A is in communication with the first conduction portion 10201A through the third conduction portion 10203A. In other words, the second conduction portion 10202A of the second flow hole 102A is in communication with the second opening 1102 through the third conduction portion 10203A and the first conduction portion 10201A. Preferably, the eleventh flow hole 1011A, the twelfth flow hole 1012A, and the thirteenth flow hole 1013A of the planar valve 10A are arranged outward of the third conduction portion 10203A.

As shown in FIG. 25A to FIG. 27B, the first fluid control surface 1210A of the fixed disk 121A of the planar valve 10A of the water treatment device according to the first embodiment of the present invention forms a central portion 12101A, an extension portion 12102A extending outward from the central portion 12101A, and an edge portion 12103A extending outward from the extension portion 12102A; the second fluid control surface 1220A of the rotating disk 122A of the planar valve 10A forms a central region 12201A, an extension region 12202A extending outward from the central region 12201A, and an edge region 12203A extending outward from the extension region 12202A; the first communication portion 10101A of the first flow hole 101A, the third flow hole 103A and the water supply flow hole 1015A, the fourth flow hole 104A, the second conduction portion 10202A of the second flow hole 102A, the twelfth flow hole 1012A, the eleventh flow hole 1011A, the thirteenth flow hole 1013A, the first conduction portion 10201A of the second flow hole 102A, the second communication portion 10102A of the first flow hole 101A, the fifth flow hole 105A, and the sixth flow hole 106A of the planar valve 10A are arranged in this order clockwise on the edge portion 12103A of the first fluid control surface 1210A of the fixed disk 121A; the seventh flow hole 107A, the eighth flow hole 108A, the tenth flow hole 1010A, and the ninth flow hole 109A of the planar valve 10A are arranged in this order clockwise on the second fluid control surface 1220A of the rotating disk 122A. Alternatively, the first communication portion 10101A of the first flow hole 101A, the third flow hole 103A and the water supply flow hole 1015A, the fourth flow hole 104A, the second conduction portion 10202A of the second flow hole 102A, the twelfth flow hole 1012A, the eleventh flow hole 1011A, the thirteenth flow hole 1013A, the first conduction portion 10201A of the second flow hole 102A, the second communication portion 10102A of the first flow hole 101A, the fifth flow hole 105A, and the sixth flow hole 106A of the planar valve 10A are arranged counterclockwise in this order on the edge portion 12103A of the first fluid control surface 1210A of the fixed disk 121A, the seventh flow hole 107A, the eighth flow hole 108A, the tenth flow hole 1010A, and the ninth flow hole 109A of the planar valve 10A are arranged counterclockwise in this order on the second fluid control surface 1220A of the rotating disk 122A. The drain flow hole 1014A is arranged in the central portion 12101A of the first fluid control surface 1210A of the fixed disk 121A. Preferably, the first flow hole 101A, the third flow hole 103A, the fourth flow hole 104A, the second flow hole 102A, the twelfth flow hole 1012A, the eleventh flow hole 1011A, the thirteenth flow hole 1013A, the fifth flow hole 105A, the sixth flow hole 106A, the water supply flow hole 1015A, and the drain flow hole 1014A are arranged spaced apart from each other on the first fluid control surface 1210A of the fixed disk 121A; the seventh flow hole 107A, the eighth flow hole 108A, the tenth flow hole 1010A, and the ninth flow hole 109A of the planar valve 10A are arranged spaced apart from each other on the second fluid control surface 1220A of the rotating disk 122A. Preferably, the third communication portion 10103A of the first flow hole 101A and the third conduction portion 10203A of the second flow hole 102A are arranged on the extension portion 12102A of the first fluid control surface 1210A of the fixed disk 121A, the sixth flow hole 106A is arranged outward of the fifth flow hole 105A and the water supply flow hole 1015A is arranged outward of the third flow hole 103A.

As shown in FIG. 25A to FIG. 27B, preferably, the rotating disk 122A of the planar valve 10A of the water treatment device according to the first embodiment of the present invention has a bottom end portion 1221A and a top end portion 1222A; the tenth flow hole 1010A has a central flow hole portion 10106A and an edge flow hole portion 10105A in communication with the central flow hole portion 10106A, wherein the central flow hole portion 10106A is provided in the central region 12201A of the second fluid control surface 1220A of the rotating disk 122A and extends upward from the bottom end portion 1221A of the rotating disk 122A to the top end portion 1222A; the edge flow hole portion 10105A is provided in the edge region 12203A of the second fluid control surface 1220A of the rotating disk 122A and extends upward from the bottom end portion 1221A of the rotating disk 122A to the top end portion 1222A; wherein the central flow hole portion 10106A extends upward from the second fluid control surface 1220A and extends toward the direction of the edge flow hole portion 10105A; the edge flow hole portion 10105A extends upward from the second fluid control surface 1220A and extends toward the direction of the central flow hole portion 10106A, so that the central flow hole portion 10106A and the edge flow hole portion 10105A of the tenth flow hole 1010A are in communication with each other; the extension region 12202A forms a sealing bridge 10107A located between the central flow hole portion 10106A and the edge flow hole portion 10105A, wherein the sealing bridge 10107A is adapted to separate the tenth flow hole 1010A from the third communication portion 10103A of the first flow hole 101A and the third conduction portion 10203A of the second flow hole 102A respectively. Accordingly, the edge flow hole portion 10105A of the tenth flow hole 1010A is in communication with the central flow hole portion 10106A, the central flow hole portion 10106A of the tenth flow hole 1010A is in communication with the drain flow hole 1014A, and the drain flow hole 1014A is in communication with the drain opening 11010A.

As shown in FIG. 25A to FIG. 28I, when the planar valve 10A of the water treatment device according to the first embodiment of the present invention is in the water treatment working position, the seventh flow hole 107A of the planar valve 10A is in communication with the first communication portion 10101A of the first flow hole 101A; the eighth flow hole 108A is in communication with the third flow hole 103A, the fourth flow hole 104A, and the water supply flow hole 1015A respectively; the ninth flow hole 109A is in communication with the fifth flow hole 105A and the sixth flow hole 106A respectively; the eleventh flow hole 1011A, the twelfth flow hole 1012A, and the thirteenth flow hole 1013A are blocked by the second fluid control surface 1220A of the rotating disk 122A respectively; the second communication portion 10102A and the third communication portion 10103A of the first flow hole 101A, and the first conduction portion 10201A, the second conduction portion 10202A, and the third conduction portion 10203A of the second flow hole 102A are blocked by the second fluid control surface 1220A of the rotating disk 122A respectively; the central flow hole portion 10106A of the tenth flow hole 1010A is in communication with the drain flow hole 1014A; the edge flow hole portion 10105A of the tenth flow hole 1010A is blocked by the first fluid control surface 1210A of the fixed disk 121A; and the sealing bridge 10107A of the tenth flow hole 1010A separates the third conduction portion 10203A of the second flow hole 102A from the tenth flow hole 1010A. When the planar valve 10A is in the first backwash working position, the seventh flow hole 107A of the planar valve 10A is in communication with the second conduction portion 10202A of the second flow hole 102A; the edge flow hole portion 10105A of the tenth flow hole 1010A is in communication with the second communication portion 10102A of the first flow hole 101A; the central flow hole portion 10106A of the tenth flow hole 1010A is in communication with the drain flow hole 1014A; the eighth flow hole 108A is in communication with the eleventh flow hole 1011A and the twelfth flow hole 1012A respectively; the ninth flow hole 109A is in communication with the fourth flow hole 104A; the third flow hole 103A, the fifth flow hole 105A, and the thirteenth flow hole 1013A are blocked by the second fluid control surface 1220A of the rotating disk 122A respectively; and the first communication portion 10101A and the third communication portion 10103A of the first flow hole 101A, and the first conduction portion 10201A and the third conduction portion 10203A of the second flow hole 102A are blocked by the second fluid control surface 1220A of the rotating disk 122A respectively. When the planar valve 10A is in the second backwash working position, the seventh flow hole 107A of the planar valve 10A is in communication with the third flow hole 103A and the water supply flow hole 1015A respectively; the edge flow hole portion 10105A of the tenth flow hole 1010A is in communication with the first conduction portion 10201A of the second flow hole 102A; the central flow hole portion 10106A of the tenth flow hole 1010A is in communication with the drain flow hole 1014A; the eighth flow hole 108A is in communication with the second conduction portion 10202A of the second flow hole 102A and the fourth flow hole 104A respectively; the ninth flow hole 109A is in communication with the first communication portion 10101A of the first flow hole 101A; the fifth flow hole 105A, the eleventh flow hole 1011A, the twelfth flow hole 1012A, and the thirteenth flow hole 1013A are blocked by the second fluid control surface 1220A of the rotating disk 122A respectively; and the second communication portion 10102A and the third communication portion 10103A of the first flow hole 101A, and the third conduction portion 10203A of the second flow hole 102A are blocked by the second fluid control surface 1220A of the rotating disk 122A respectively. When the planar valve 10A is in the third backwash working position, the seventh flow hole 107A is in communication with the fifth flow hole 105A and the sixth flow hole 106A respectively; the edge flow hole portion 10105A of the tenth flow hole 1010A is in communication with the eleventh flow hole 1011A; the central flow hole portion 10106A of the tenth flow hole 1010A is in communication with the drain flow hole 1014A; the eighth flow hole 108A is in communication with the first communication portion 10101A of the first flow hole 101A and the third flow hole 103A respectively; the ninth flow hole 109A is in communication with the fifth flow hole 105A; the fourth flow hole 104A, the twelfth flow hole 1012A, and the thirteenth flow hole 1013A are blocked by the second fluid control surface 1220A of the rotating disk 122A respectively; and the first conduction portion 10201A, the second conduction portion 10202A, and the third conduction portion 10203A of the second flow hole 102A, and the second communication portion 10102A and the third communication portion 10103A of the first flow hole 101A are blocked by the second fluid control surface 1220A of the rotating disk 122A respectively. The sealing bridge 10107A of the tenth flow hole 1010A isolates the third conduction portion 10203A of the second flow hole 102A from the tenth flow hole 1010A. When the planar valve 10A is in the first rinse working position, the seventh flow hole 107A of the planar valve 10A is in communication with the second communication portion 10102A of the first flow hole 101A; the edge flow hole portion 10105A of the tenth flow hole 1010A is in communication with the second conduction portion 10202A of the second flow hole 102A; the central flow hole portion 10106A of the tenth flow hole 1010A is in communication with the drain flow hole 1014A; the eighth flow hole 108A is in communication with the fifth flow hole 105A; the ninth flow hole 109A is blocked by the first fluid control surface 1210A of the fixed disk 121A; the third flow hole 103A, the fourth flow hole 104A, the eleventh flow hole 1011A, the twelfth flow hole 1012A, and the thirteenth flow hole 1013A are blocked by the second fluid control surface 1220A of the rotating disk 122A respectively; and the first communication portion 10101A and the third communication portion 10103A of the first flow hole 101A, and the first conduction portion 10201A and the third conduction portion 10203A of the second flow hole 102A are blocked by the second fluid control surface 1220A of the rotating disk 122A respectively. When the planar valve 10A is in the second rinse working position, the seventh flow hole 107A of the planar valve 10A is in communication with the first conduction portion 10201A of the second flow hole 102A; the edge flow hole portion 10105A of the tenth flow hole 1010A is in communication with the third flow hole 103A; the central flow hole portion 10106A of the tenth flow hole 1010A is in communication with the drain flow hole 1014A; the eighth flow hole 108A is in communication with the second communication portion 10102A of the first flow hole 101A; the ninth flow hole 109A is in communication with the thirteenth flow hole 1013A; the fourth flow hole 104A, the fifth flow hole 105A, the eleventh flow hole 1011A, and the twelfth flow hole 1012A are blocked by the second fluid control surface 1220A of the rotating disk 122A respectively; and the first communication portion 10101A and the third communication portion 10103A of the first flow hole 101A, and the second conduction portion 10202A and the third conduction portion 10203A of the second flow hole 102A are blocked by the second fluid control surface 1220A of the rotating disk 122A respectively. When the planar valve 10A is in the third rinse working position, the seventh flow hole 107A of the planar valve 10A is in communication with the eleventh flow hole 1011A; the edge flow hole portion 10105A of the tenth flow hole 1010A is in communication with the fifth flow hole 105A; the central flow hole portion 10106A of the tenth flow hole 1010A is in communication with the drain flow hole 1014A; the eighth flow hole 108A is in communication with the first conduction portion 10201A of the second flow hole 102A and the thirteenth flow hole 1013A respectively; the ninth flow hole 109A is in communication with the twelfth flow hole 1012A; the third flow hole 103A and the fourth flow hole 104A are blocked by the second fluid control surface 1220A of the rotating disk 122A respectively; and the first communication portion 10101A, the second communication portion 10102A, and the third communication portion 10103A of the first flow hole 101A, and the second conduction portion 10202A and the third conduction portion 10203A of the second flow hole 102A are blocked by the second fluid control surface 1220A of the rotating disk 122A respectively. The sealing bridge 10107A of the tenth flow hole 1010A isolates the third communication portion 10103A of the first flow hole 101A from the tenth flow hole 1010A. When the planar valve 10A is in the regeneration working position, the seventh flow hole 107A is in communication with the twelfth flow hole 1012A; the eighth flow hole 108A is in communication with the thirteenth flow hole 1013A and the eleventh flow hole 1011A respectively; the edge flow hole portion 10105A of the tenth flow hole 1010A is in communication with the fifth flow hole 105A; the central flow hole portion 10106A of the tenth flow hole 1010A is in communication with the drain flow hole 1014A; the ninth flow hole 109A is in communication with the second conduction portion 10202A of the second flow hole 102A; the third flow hole 103A and the fourth flow hole 104A are blocked by the second fluid control surface 1220A of the rotating disk 122A respectively; and the first communication portion 10101A, the second communication portion 10102A, and the third communication portion 10103A of the first flow hole 101A, and the first conduction portion 10201A and the third conduction portion 10203A of the second flow hole 102A are blocked by the second fluid control surface 1220A of the rotating disk 122A respectively. The sealing bridge 10107A of the tenth flow hole 1010A isolates the third communication portion 10103A of the first flow hole 101A from the tenth flow hole 1010A. When the planar valve 10A is in the water refill working position, the seventh flow hole 107A is in communication with the thirteenth flow hole 1013A; the eighth flow hole 108A is in communication with the first conduction portion 10201A of the second flow hole 102A; the ninth flow hole 109A is in communication with the eleventh flow hole 1011A; the edge flow hole portion 10105A of the tenth flow hole 1010A is in communication with the first communication portion 10101A of the first flow hole 101A; the central flow hole portion 10106A of the tenth flow hole 1010A is in communication with the drain flow hole 1014A; the third flow hole 103A, the fourth flow hole 104A, the fifth flow hole 105A, and the twelfth flow hole 1012A are blocked by the second fluid control surface 1220A of the rotating disk 122A respectively; and the second communication portion 10102A and the third communication portion 10103A of the first flow hole 101A, and the second conduction portion 10202A and the third conduction portion 10203A of the second flow hole 102A are blocked by the second fluid control surface 1220A of the rotating disk 122A respectively. Preferably, the third communication portion 10103A of the first flow hole 101A is arranged on the first fluid control surface 1210A of the fixed disk 121A of the planar valve 10A. Alternatively, the third communication portion 10103A of the first flow hole 101A is disposed inside the fixed disk 121A of the planar valve 10A. Alternatively, the third communication portion 10103A of the first flow hole 101A is disposed inside the valve body 11A of the planar valve 10A. Preferably, the third conduction portion 10203A of the second flow hole 102A is arranged on the first fluid control surface 1210A of the fixed disk 121A of the planar valve 10A. Alternatively, the third conduction portion 10203A of the second flow hole 102A is disposed inside the fixed disk 121A of the planar valve 10A. Alternatively, the third conduction portion 10203A of the second flow hole 102A is disposed inside the valve body 11A of the planar valve 10A. It can be understood that when the third communication portion 10103A of the first flow hole 101A and the third conduction portion 10203A of the second flow hole 102A are arranged inside the fixed disk 121A of the planar valve 10A or inside the valve body 11A of the planar valve 10A, the tenth flow hole 1010A of the rotating disk 122A no longer needs to be provided with the sealing bridge 10107A, and the central flow hole portion 10106A and the edge flow hole portion 10105A of the tenth flow hole 1010A can be directly in communication with the second fluid control surface 1220A.

As shown in FIG. 25A to FIG. 27B, the first fluid control surface 1210A of the fixed disk 121A of the planar valve 10A of the water treatment device according to the first embodiment of the present invention has the central portion 12101A, the extension portion 12102A, and the edge portion 12103A, as indicated by the chain lines in the drawings, wherein the central portion 12101A, the extension portion 12102A, and the edge portion 12103A are provided at the top end portion 1214A of the fixed disk 121A, and the edge portion 12103A (or the portion outside the extension portion 12102A) of the first fluid control surface 1210A is equally divided into a first section 1201A, a second section 1202A, a third section 1203A, a fourth section 1204A, a fifth section 1205A, a sixth section 1206A, a seventh section 1207A, an eighth section 1208A, a ninth section 1209A, a tenth section 12010A, an eleventh section 12011A, and a twelfth section 12012A, as indicated by the chain lines in the drawings; the second fluid control surface 1220A of the rotating disk 122A of the planar valve 10A has the central region 12201A, the extension region 12202A, and the edge region 12203A shown by the dash-dot lines in the figures, wherein the central region 12201A, the extension region 12202A, and the edge region 12203A are provided at the bottom end portion 1221A of the rotating disk 122A, and the edge region 12203A (the portion outside the extension region 12202A) of the second fluid control surface 1220A is equally divided into a first area 2001A, a second area 2002A, a third area 2003A, a fourth area 2004A, a fifth area 2005A, a sixth area 2006A, a seventh area 2007A, an eighth area 2008A, a ninth area 2009A, a tenth area 20010A, an eleventh area 20011A, and a twelfth area 20012A, as indicated by the chain lines in the drawings; wherein the first flow hole 101A extends downward from the first section 1201A and the tenth section 12010A of the first fluid control surface 1210A of the fixed disk 121A; the third flow hole 103A and the water supply flow hole 1015A extend downward from the second section 1202A of the first fluid control surface 1210A of the fixed disk 121A respectively; the fourth flow hole 104A extends downward from the third section 1203A of the first fluid control surface 1210A of the fixed disk 121A; the second flow hole 102A extends downward from the fourth section 1204A and the eighth section 1208A of the first fluid control surface 1210A of the fixed disk 121A; the twelfth flow hole 1012A extends downward from the fifth section 1205A of the first fluid control surface 1210A of the fixed disk 121A; the eleventh flow hole 1011A extends downward from the sixth section 1206A of the first fluid control surface 1210A of the fixed disk 121A; the thirteenth flow hole 1013A extends downward from the seventh section 1207A of the first fluid control surface 1210A of the fixed disk 121A; the fifth flow hole 105A extends downward from the eleventh section 12011A and the twelfth section 12012A of the first fluid control surface 1210A of the fixed disk 121A; the sixth flow hole 106A extends downward from the twelfth section 12012A of the first fluid control surface 1210A of the fixed disk 121A; the sixth flow hole 106A is arranged outward of the fifth flow hole 105A; the water supply flow hole 1015A is arranged outward of the third flow hole 103A; the drain flow hole 1014A extends downward from the central portion 12101A of the first fluid control surface 1210A of the fixed disk 121A; the seventh flow hole 107A extends upward from the first area 2001A of the second fluid control surface 1220A of the rotating disk 122A; the eighth flow hole 108A extends upward from the second area 2002A and the third area 2003A of the second fluid control surface 1220A of the rotating disk 122A; the tenth flow hole 1010A extends upward from the seventh area 2007A and the central region 12201A of the second fluid control surface 1220A of the rotating disk 122A respectively; the ninth flow hole 109A extends upward from the twelfth area 20012A of the second fluid control surface 1220A of the rotating disk 122A. More specifically, the first communication portion 10101A of the first flow hole 101A extends downward from the first section 1201A of the first fluid control surface 1210A of the fixed disk 121A; the second communication portion 10102A of the first flow hole 101A extends downward from the tenth section 12010A of the first fluid control surface 1210A of the fixed disk 121A; the first conduction portion 10201A of the second flow hole 102A extends downward from the eighth section 1208A of the first fluid control surface 1210A of the fixed disk 121A; the second conduction portion 10202A of the second flow hole 102A extends downward from the fourth section 1204A of the first fluid control surface 1210A of the fixed disk 121A; the central flow hole portion 10106A of the tenth flow hole 1010A extends upward from the central region 12201A of the second fluid control surface 1220A of the rotating disk 122A and extends toward the direction of the seventh area 2007A; the edge flow hole portion 10105A of the tenth flow hole 1010A extends upward from the seventh area 2007A of the second fluid control surface 1220A of the rotating disk 122A and extends toward the direction of the central region 12201A, thereby causing the central flow hole portion 10106A and the edge flow hole portion 10105A of the tenth flow hole 1010A to be in communication with each other. Preferably, the third communication portion 10103A of the first flow hole 101A and the third conduction portion 10203A of the second flow hole 102A extend downward from the extension portion 12102A of the first fluid control surface 1210A of the fixed disk 121A respectively; the sealing bridge 10107A of the tenth flow hole 1010A is arranged on the extension region 12202A of the second fluid control surface 1220A of the rotating disk 122A; and the sealing bridge 10107A is adapted to isolate the tenth flow hole 1010A from the third communication portion 10103A of the first flow hole 101A and the third conduction portion 10203A of the second flow hole 102A respectively.

As shown in FIG. 6A to FIG. 21I and FIG. 24A to FIG. 39I, the structural difference between the planar valve 10 and the planar valve 10A of the water treatment device according to the first embodiment of the present invention lies in that the tenth flow hole 1010 of the planar valve 10 is different from the tenth flow hole 1010A of the planar valve 10A, and the drain flow hole 1014A of the planar valve 10A participates in drainage: the drain flow hole 1014A is arranged in the central portion 12101A of the first fluid control surface 1210A; the tenth flow hole 1010A is arranged in the seventh area 2007A and the central region 12201A of the second fluid control surface 1220A; and the central flow hole portion 10106A of the tenth flow hole 1010A is in communication with the drain flow hole 1014A, and the tenth flow hole 1010A is a communicating blind hole. Therefore, when the planar valve 10 and the planar valve 10A of the water treatment device according to the first embodiment of the present invention are in their respective working positions, the alignment manner of the equal divisions of the second fluid control surface 1220 of the rotating disk 122 of the planar valve 10 with the equal divisions of the first fluid control surface 1210 of the fixed disk 121 is the same as the alignment manner of the equal divisions of the second fluid control surface 1220A of the rotating disk 122A of the planar valve 10A with the equal divisions of the first fluid control surface 1210A of the fixed disk 121A. As described above, the functional implementation difference between the planar valve 10 and the planar valve 10A of the water treatment device according to the first embodiment of the present invention lies in that the planar valve 10A of the water treatment device according to the first embodiment of the present invention discharges wastewater through the tenth flow hole 1010A, the drain flow hole 1014A, and the drain opening 11010A, and the drain flow hole 1014A is arranged in the central portion 12101A of the first fluid control surface 1210A; the tenth flow hole 1010A is arranged in the seventh area 2007A and the central region 12201A of the second fluid control surface 1220A; the tenth flow hole 1010A is in communication with the drain flow hole 1014A; and the tenth flow hole 1010A is a communicating blind hole; accordingly, when the planar valve 10A is in the first backwash working position, the second backwash flow passage 7102A is formed by the communication of the first flow hole 101A, the tenth flow hole 1010A, and the drain flow hole 1014A. More specifically, the second backwash flow passage 7102A is formed by the communication of the second communication portion 10102A of the first flow hole 101A, the edge flow hole portion 10105A of the tenth flow hole 1010A, the central flow hole portion 10106A of the tenth flow hole 1010A, and the drain flow hole 1014A; when the planar valve 10A is in the second backwash working position, the fourth backwash flow passage 7104A is formed by the communication of the second flow hole 102A, the tenth flow hole 1010A, and the drain flow hole 1014A. More specifically, the fourth backwash flow passage 7104A is formed by the communication of the first conduction portion 10201A of the second flow hole 102A, the edge flow hole portion 10105A of the tenth flow hole 1010A, the central flow hole portion 10106A of the tenth flow hole 1010A, and the drain flow hole 1014A; when the planar valve 10A is in the third backwash working position, the sixth backwash flow passage 7106A is formed by the communication of the eleventh flow hole 1011A, the tenth flow hole 1010A, and the drain flow hole 1014A; more specifically, the sixth backwash flow passage 7106A is formed by the communication of the eleventh flow hole 1011A, the edge flow hole portion 10105A of the tenth flow hole 1010A, the central flow hole portion 10106A of the tenth flow hole 1010A, and the drain flow hole 1014A; when the planar valve 10A is in the first rinse working position, the second rinse flow passage 7202A is formed by the communication of the second flow hole 102A, the tenth flow hole 1010A, and the drain flow hole 1014A, more specifically, the second rinse flow passage 7202A is formed by the communication of the second conduction portion 10202A of the second flow hole 102A, the edge flow hole portion 10105A of the tenth flow hole 1010A, the central flow hole portion 10106A of the tenth flow hole 1010A, and the drain flow hole 1014A; when the planar valve 10A is in the second rinse working position, the fourth rinse flow passage 7204A is formed by the communication of the third flow hole 103A, the tenth flow hole 1010A, and the drain flow hole 1014A, more specifically, the fourth rinse flow passage 7204A is formed by the communication of the third flow hole 103A, the edge flow hole portion 10105A of the tenth flow hole 1010A, the central flow hole portion 10106A of the tenth flow hole 1010A, and the drain flow hole 1014A; when the planar valve 10A is in the third rinse working position, the sixth rinse flow passage 7206A is formed by the communication of the fifth flow hole 105A, the tenth flow hole 1010A, and the drain flow hole 1014A, more specifically, the sixth rinse flow passage 7206A is formed by the communication of the fifth flow hole 105A, the edge flow hole portion 10105A of the tenth flow hole 1010A, the central flow hole portion 10106A of the tenth flow hole 1010A, and the drain flow hole 1014A. When the planar valve 10A is in the regeneration working position, the third regeneration flow passage 7303A is formed by the communication of the fifth flow hole 105A, the tenth flow hole 1010A, and the drain flow hole 1014A; more specifically, the third regeneration flow passage 7303A is formed by the communication of the fifth flow hole 105A, the edge flow hole portion 10105A of the tenth flow hole 1010A, the central flow hole portion 10106A of the tenth flow hole 1010A, and the drain flow hole 1014A.

Furthermore, the aforementioned arrangement of the first communication portion 10101A of the first flow hole 101A, the third flow hole 103A and the water supply flow hole 1015A, the fourth flow hole 104A, the second conduction portion 10202A of the second flow hole 102A, the twelfth flow hole 1012A, the eleventh flow hole 1011A, the thirteenth flow hole 1013A, the first conduction portion 10201A of the second flow hole 102A, the second communication portion 10102A of the first flow hole 101A, the fifth flow hole 105A, and the sixth flow hole 106A of the planar valve 10A of the water treatment device according to the first embodiment of the present invention on the first fluid control surface 1210A, and the aforementioned arrangement of the seventh flow hole 107A, the eighth flow hole 108A, the tenth flow hole 1010A, and the ninth flow hole 109A of the planar valve 10A on the second fluid control surface 1220A of the rotating disk 122A, are basically the same as the aforementioned arrangement of the first communication portion 10101 of the first flow hole 101, the third flow hole 103, the water supply flow hole 1015, the fourth flow hole 104, the second conduction portion 10202 of the second flow hole 102, the twelfth flow hole 1012, the eleventh flow hole 1011, the thirteenth flow hole 1013, the first conduction portion 10201 of the second flow hole 102, the second communication portion 10102 of the first flow hole 101, the fifth flow hole 105, and the sixth flow hole 106 of the planar valve 10 of the water treatment device according to the first embodiment of the present invention on the first fluid control surface 1210, and the aforementioned arrangement of the seventh flow hole 107, the eighth flow hole 108, the tenth flow hole 1010, and the ninth flow hole 109 of the planar valve 10 on the second fluid control surface 1220 of the rotating disk 122 (except that the tenth flow hole 1010A extends upward from the seventh area 2007A and the central region 12201A of the second fluid control surface 1220A).

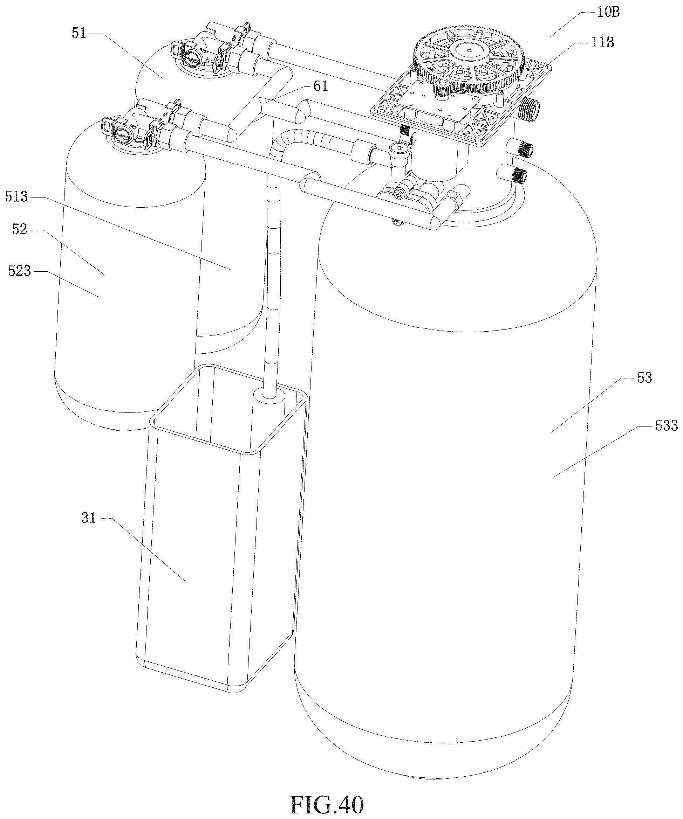

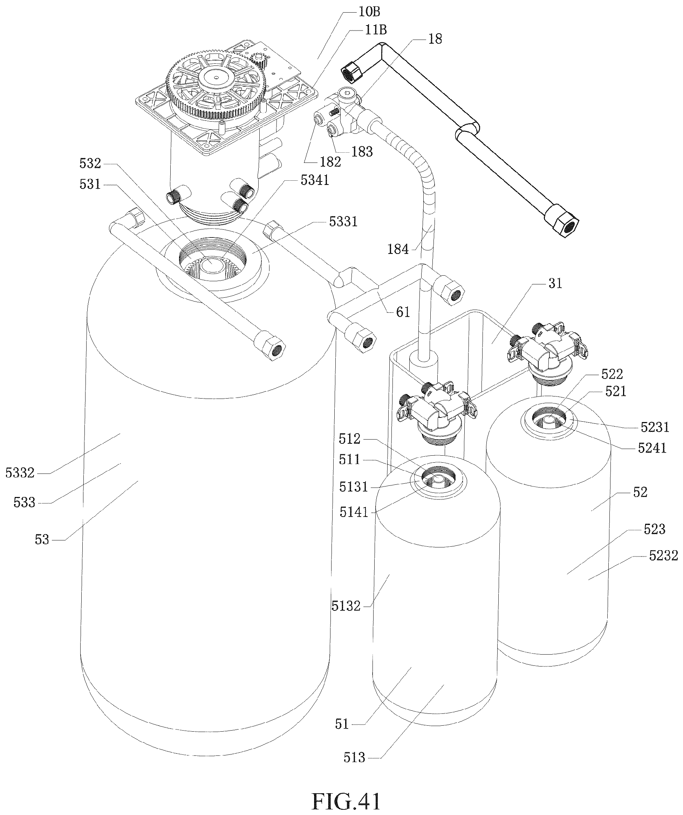

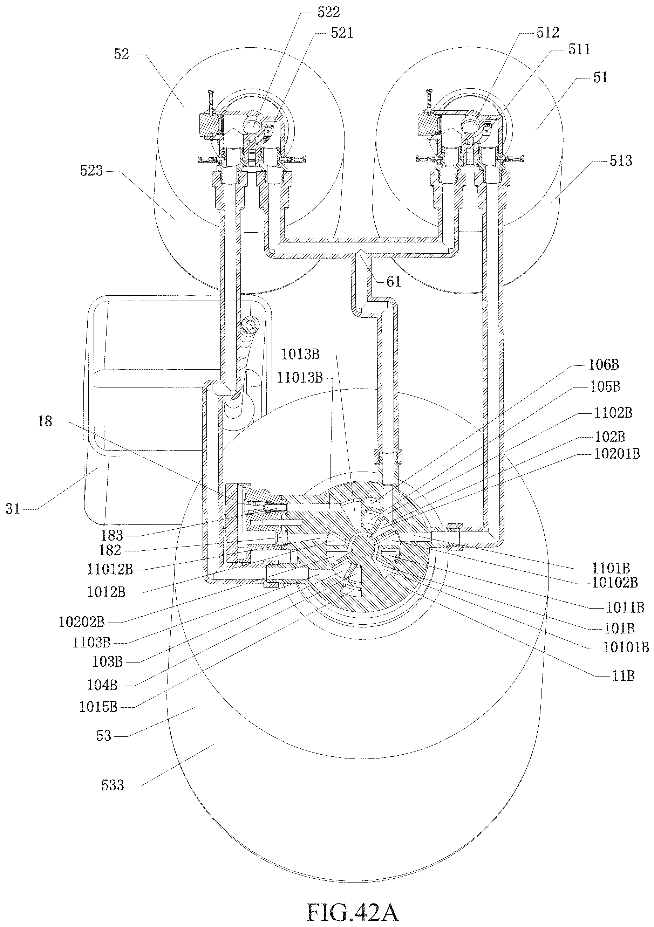

Referring to the accompanying drawings, FIGS.40 to 42E, a water treatment device according to a second embodiment of the present invention is illustrated, wherein the water treatment device of the present invention comprises a control valve 10B, a first water treatment device 51, a second water treatment device 52 and a third water treatment device 53, wherein the first water treatment device 51 has a first water inlet 511 and a first water outlet 512, the second water treatment device 52 has a second water inlet 521 and a second water outlet 522 and the third water treatment device 53 has a third water inlet 531 and a third water outlet 532, which allows water flow to enter through the first water inlet 511 and exit through the first water outlet 512 or enter through the first water outlet 512 and exit through the first water inlet 511, allows water flow to enter through the second water inlet 521 and exit through the second water outlet 522 or enter through the second water outlet 522 and exit through the second water inlet 521, and allows water flow to enter through the third water inlet 531 and exit through the third water outlet 532 or enter through the third water outlet 532 and exit through the third water inlet 531, wherein the control valve 10B is configured to control the water flow to flow, such as controlling the supply of water flow to the first water treatment device 51, the second water treatment device 52, and/or the third water treatment device 53, controlling the water flow within the first water treatment device 51, the second water treatment device 52 and the third water treatment device 53 to flow, and controlling the supply of treated water. It can be understood that the control valve 10B of the water treatment device of the present invention is in communication with a raw source, such as a tap water pipe. In other words, the control valve 10B controls the supply of raw water (e.g., the tap water) to the first water treatment device 51, the second water treatment device 52, and/or the third water treatment device 53.

As shown in FIGS. 42A to 42G, as an example, the first water treatment device 51 of the water treatment device according to the second embodiment of the present invention comprises a first housing 513, a first central tube 514, and a first water treatment material 515, wherein the first housing 513 has a first end 5131 and a first shell body 5132 extending from the first end 5131, the first central tube 514 has a first pipe upper end 5141 and a first pipe lower end 5142, wherein the first water inlet 511 is formed between the first end 5131 and the first pipe upper end 5141, and the first pipe upper end 5141 forms the first water outlet 512, wherein the first water treatment material 515 is disposed between the first housing 513 and the first central tube 514, wherein the first central tube 514 is configured such that a primary treated water produced by treating raw water through the first water treatment material 515 can be collected by the first central tube 514. It can be understood that the first water treatment material 515 of the first water treatment device 51 of the water treatment device of the second embodiment of the present invention can be filtration material, such as activated carbon, PP cotton, quartz sand, or other filtration material. It can also be understood that the first water treatment material 515 of the first water treatment device 51 of the water treatment device of the second embodiment of the present invention can be loosely distributed filter material or formed filter material obtained through various molding techniques. The first water treatment material 515 of the first water treatment device 51 of the first water treatment device 51 of the water treatment device of the second embodiment of the present invention may also be softening material, such as softening resin.

As shown in FIGS. 42A to 42G, as an example, the second water treatment device 52 of the water treatment device according to the second embodiment of the present invention comprises a second housing 523, a second central tube 524, and a second water treatment material 525, wherein the second housing 523 has a second end 5231 and a second shell body 5232 extending from the second end 5231, the second central tube 524 has a second pipe upper end 5241 and a second pipe lower end 5242 extending downward from the second pipe upper end 5241, wherein the second water inlet 521 is formed between the second end 5231 of the second housing 523 and the second pipe upper end 5241, wherein the second pipe upper end 5241 forms the second water outlet 522, wherein the second water treatment material 525 is disposed between the second housing 523 and the second central tube 524, wherein the second central tube 524 is configured such that the primary treated water flowing in from the second water inlet 521, after being treated by the second water treatment material 525 to produce a secondary treated water, which can be collected by the second central tube 524. It can be understood that the second water treatment material 525 of the second water treatment device 52 of the water treatment device of the second embodiment of the present invention can be filtration material, such as activated carbon, PP cotton, quartz sand, or other filtration material. It can also be understood that the second water treatment material 525 of the second embodiment of the present invention can be loosely distributed filter material or formed filter material obtained through various molding techniques. The second water treatment material 525 of the second water treatment device 52 of the water treatment device of the second embodiment of the present invention may also be softening material, such as softening resin.

As shown in FIGS. 42A to 42G, as an example, the third water treatment device 53 of the water treatment device according to the second embodiment of the present invention comprises a third housing 533, a third central tube 534, and third water treatment material 535, the third housing 533 has a third end 5331 and a third shell body 5332 extending from the third end 5331, the third central tube 534 has a third pipe upper end 5341 and a third pipe lower end 5342 extending downward from the third pipe upper end 5341, wherein the third water inlet 531 is formed between the third end 5331 and the third pipe upper end 5341, the third pipe upper end 5341 forms the third water outlet 532, wherein the third water treatment material 535 is disposed between the third housing 533 and the third central tube 534, wherein the third central tube 534 is configured such that the secondary treated water flowing in from the third water inlet 531, after being treated by the third water treatment material 535 to produce a tertiary treated water, which can be collected by the third central tube 534. It can be understood that the third water treatment material 535 of the third water treatment device 53 of the water treatment device of the second embodiment of the present invention can be filtration material, such as activated carbon, PP cotton, quartz sand, or other filtration material. It can also be understood that the third water treatment material 535 of the second embodiment of the present invention can be loosely distributed filter material or formed filter material obtained through various molding techniques. The third water treatment material 535 of the third water treatment device 53 of the water treatment device of the second embodiment of the present invention may also be softening material, such as softening resin.

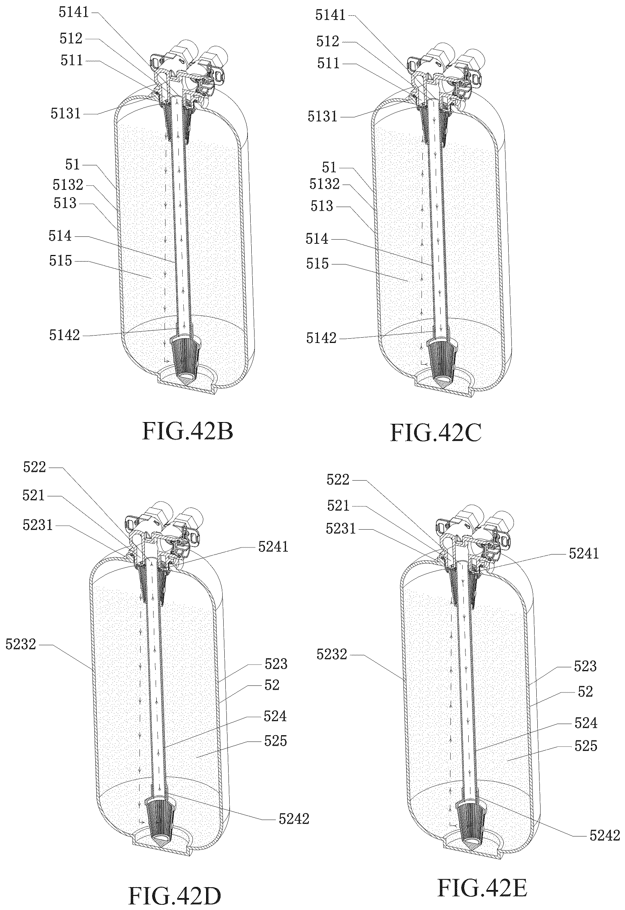

As shown in FIG.42B, when the first water treatment device 51 of the water treatment device according to the second embodiment of the present invention is used for water treatment (e.g., filtration) or when it is rinsed (forward rinse), a water flow flows into the first water treatment device 51 through the first water inlet 511, then sequentially passes through the first end 5131, the first water treatment material 515, the first pipe lower end 5142, the first central tube 514, and the first pipe upper end 5141, and exits through the first water outlet 512; as shown in FIG. 42C, when the first water treatment device 51 of the water treatment device according to the second embodiment of the present invention is backwashed (backwash), a water flow flows into the first water treatment device 51 through the first water outlet 512, then sequentially passes through the first pipe upper end 5141, the first central tube 514, the first pipe lower end 5142, the first water treatment material 515, and the first end 5131, and exits through the first water inlet 511.

As shown in FIG. 42D, when the second water treatment device 52 of the water treatment device according to the second embodiment of the present invention is used for water treatment or when it is rinsed (forward rinse), a water flow flows into the second water treatment device 52 through the second water inlet 521, then sequentially passes through the second end 5231, the second water treatment material 525, the second pipe lower end 5242, the second central tube 524, and the second pipe upper end 5241, and exits through the second water outlet 522; as shown in FIG. 42E, when the second water treatment device 52 of the water treatment device according to the second embodiment of the present invention is backwashed (backwash ), a water flow flows into the second water treatment device 52 through the second water outlet 522, then sequentially passes through the second pipe upper end 5241, the second central tube 524, the second pipe lower end 5242, the second water treatment material 525, and the second end 5231, and exits through the second water inlet 521.

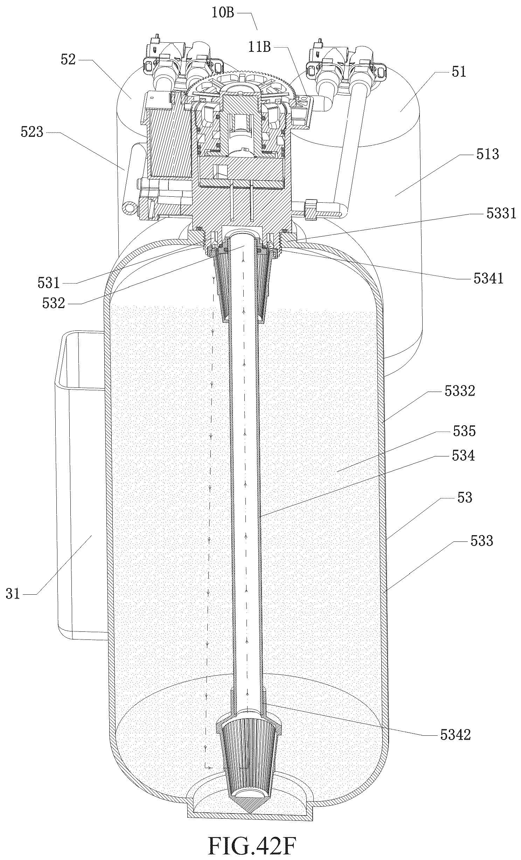

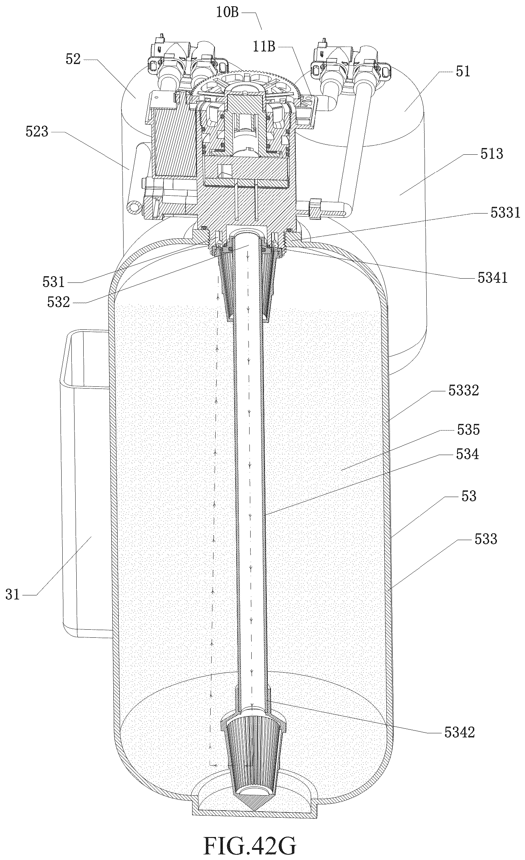

As shown in FIG. 42F, when the third water treatment device 53 of the water treatment device according to the second embodiment of the present invention is used as a purification filter for purifying water or when it is rinsed (forward rinse), a water flow flows into the third water treatment device 53 through the third water inlet 531, then sequentially passes through the third end 5331, the third water treatment material 535, the third pipe lower end 5342, the third central tube 534, and the third pipe upper end 5341, and exits through the third water outlet 532; as shown in FIG. 42G, when the third water treatment device 53 of the water treatment device according to the second embodiment of the present invention is backwashed (backwash), a water flow flows into the third water treatment device 53 through the third water outlet 532, then sequentially passes through the third pipe upper end 5341, the third central tube 534, the third pipe lower end 5342, the third water treatment material 535, and the third end 5331, and exits through the third water inlet 531. As shown in FIG. 42G, when the third water treatment device 53 of the water treatment device according to the second embodiment of the present invention is backwashed (backwash) as a softening filter element or when the third water treatment device 53 is regenerated with up-flow brine, a water flow or a regenerant solution flows from the third water outlet 532 into the third water treatment device 53, then sequentially passes through the third tube upper end 5341, the third central tube 534, the third tube lower end 5342, the third water treatment material 535, and the third end portion 5331, and flows out from the third water inlet 531.

As shown in FIGS. 42A to 45L, the control valve 10B of the water treatment device according to the second embodiment of the present invention comprises a valve body 11B and a valve core 12B, wherein the valve body 11B forms a valve chamber 110B, a first opening 1101B, a second opening 1102B, a third opening 1103B, a fourth opening 1104B, a fifth opening 1105B, a first fluid opening 1106B, a second fluid opening 1107B, and a drain opening 11010B, wherein the valve core 12B is disposed within the valve chamber 110B, wherein the first opening 1101B of the valve body 11B is adapted to be in communication with the first water inlet 511 of the first water treatment device 51, the second opening 1102B is adapted to be in communication with the first water outlet 512 of the first water treatment device 51 and the second water inlet 521 of the second water treatment device 52 respectively, the third opening 1103B is adapted to be in communication with the second water outlet 522 of the second water treatment device 52, the fourth opening 1104B is adapted to be in communication with the third water inlet 531 of the third water treatment device 53, the fifth opening 1105B is adapted to be in communication with the third water outlet 532 of the third water treatment device 53, the second fluid opening 1107B of the valve body 11B is adapted to be in communication with a raw water source (e.g., tap water). Preferably, the second opening 1102B of the valve body 11B of the control valve 10B of the water treatment device of the present invention, the first water outlet 512 of the first water treatment device 51 and the second water inlet 521 of the second water treatment device 52 form a three-way structure. Alternatively, the second opening 1102B of the valve body 11B of the control valve 10B of the water treatment device of the present invention is in communication with the first water outlet 512 of the first water treatment device 51 and the second water inlet 521 of the second water treatment device 52 via a three-way structure 61 respectively.

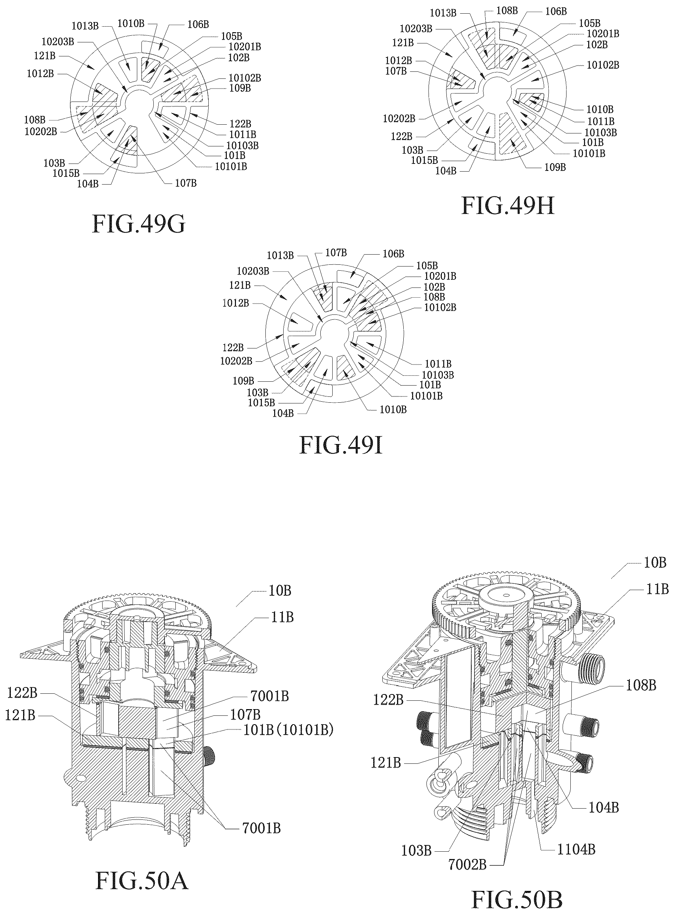

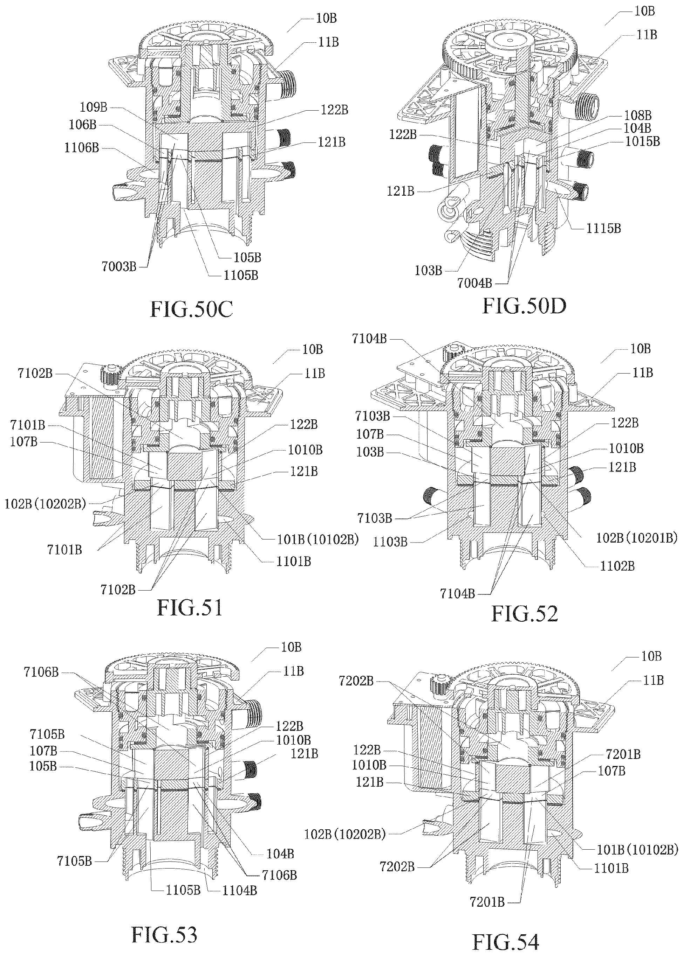

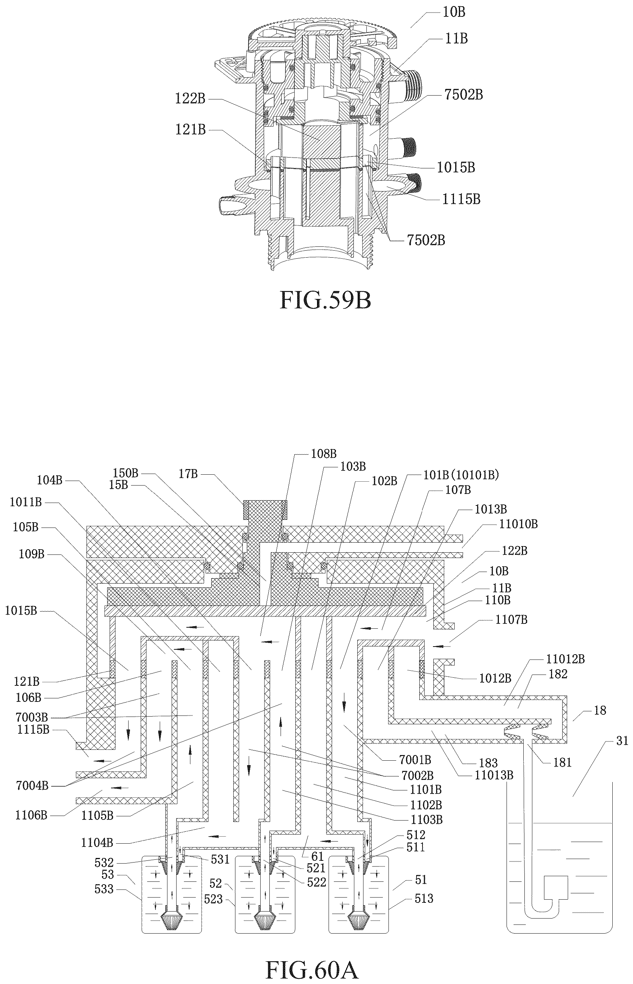

As shown in FIG. 50A to FIG. 50C and FIG. 60A, the control valve 10B of the water treatment device according to the second embodiment of the present invention has a water treatment working position, wherein when the control valve 10B of the water treatment device of the present invention is in the water treatment working position, the valve core 12B of the control valve 10B forms a first water treatment flow passage 7001B, a second water treatment flow passage 7002B and a third water treatment flow passage 7003B, wherein the first water treatment flow passage 7001B is in communication with the second fluid opening 1107B and the first opening 1101B respectively, the second water treatment flow passage 7002B is in communication with the third opening 1103B and the fourth opening 1104B respectively, and the third water treatment flow passage 7003B is in communication with the fifth opening 1105B and the first fluid opening 1106B respectively. Accordingly, when the control valve 10B of the water treatment device of the present invention is in the water treatment working position, raw water under water pressure flows through the second fluid opening 1107B of the valve body 11B of the control valve 10B, passes through the first water treatment flow passage 7001B to flow to the first opening 1101B of the valve body 11B, and under water pressure, further flows from the first water inlet 511 into the first water treatment device 51; the primary treated water obtained after treatment by the first water treatment device 51 flows out from the first water outlet 512 and further flows from the second water inlet 521 into the second water treatment device 52; the secondary treated water obtained after treatment by the second water treatment device 52 flows out from the second water outlet 522 and under water pressure, further flows into the third opening 1103B, then passes through the second water treatment flow passage 7002B to flow into the fourth opening 1104B, then flows from the third water inlet 531 into the third water treatment device 53; the tertiary treated water obtained after treatment (purification or softening treatment) by the third water treatment device 53 flows out from the third water outlet 532 and flows into the fifth opening 1105B, then passes through the third water treatment flow passage 7003B to flow to the first fluid opening 1106B and is supplied. Accordingly, when the control valve 10B of the water treatment device according to the second embodiment of the present invention is controlled to be in the water treatment working position, the water flow sequentially passes through the second fluid opening 1107B of the valve body 11B, the first water treatment flow passage 7001B, the first opening 1101B of the valve body 11B, the first water inlet 511 of the first water treatment device 51, the first water outlet 512 of the first water treatment device 51, the second water inlet 521 of the second water treatment device 52, the second water outlet 522 of the second water treatment device 52, the third opening 1103B of the valve body 11B, the second water treatment flow passage 7002B, the fourth opening 1104B of the valve body 11B, the third water inlet 531 of the third water treatment device 53, the third water outlet 532 of the third water treatment device 53, the fifth opening 1105B of the valve body 11B, the third water treatment flow passage 7003B, and the first fluid opening 1106B, thereby enabling the control valve 10B of the water treatment device of the present invention to control the three water treatment devices of the water treatment device of the present invention to be connected in series. Preferably, the control valve 10B of the water treatment device according to the second embodiment of the present invention is configured to be capable of, when the control valve 10B is controlled to be in the water treatment working position, preventing the flow of water in the second opening 1102B. Further, when the control valve 10B of the water treatment device according to the second embodiment of the present invention is in the water treatment working position, water cannot flow from the first water outlet 512 of the first water treatment device 51 to the second opening 1102B, nor from the second water inlet 521 of the second water treatment device 52 to the second opening 1102B, ensuring that raw water sequentially passes through and is treated by the first water treatment device 51, the second water treatment device 52, and the third water treatment device 53. It can be understood that when the control valve 10B of the water treatment device according to the second embodiment of the present invention is in the water treatment working position, the water treatment device of the present invention is controlled to be in its water treatment working state.

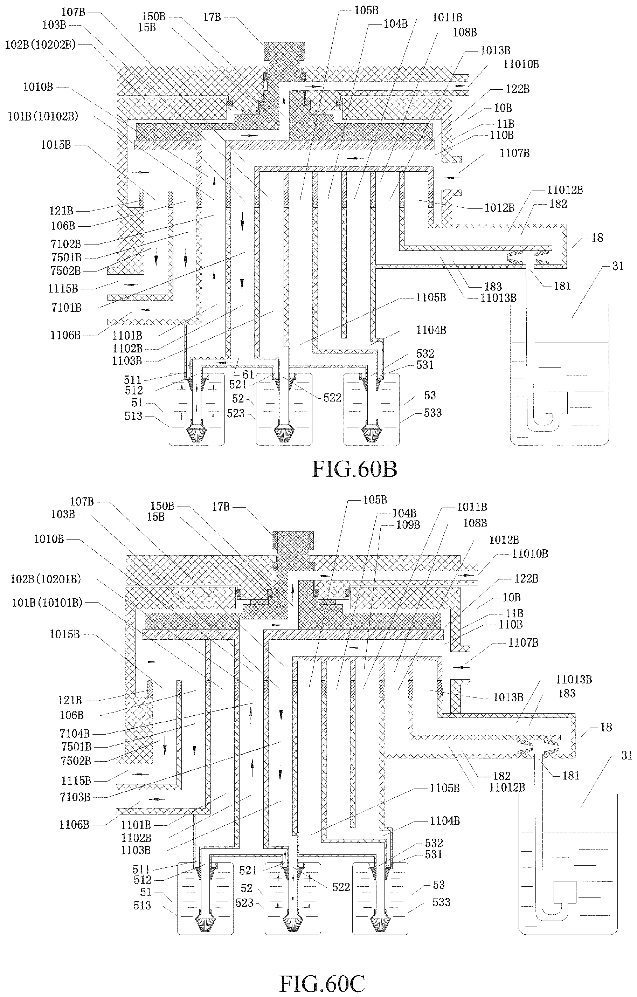

As shown in FIG. 51 and FIG. 60B, the control valve 10B of the water treatment device according to the second embodiment of the present invention has a first backwash working position, wherein when the control valve 10B of the water treatment device of the present invention is in the first backwash working position, the valve core 12B of the control valve 10B forms a first backwash flow passage 7101B and a second backwash flow passage 7102B, wherein the first backwash flow passage 7101B is in communication with the second fluid opening 1107B and the second opening 1102B respectively, and the second backwash flow passage 7102B is in communication with the drain opening 11010B and the first opening 1101B respectively. Accordingly, when the control valve 10B of the water treatment device of the present invention is in the first backwash working position, raw water under water pressure flows through the second fluid opening 1107B of the valve body 11B of the control valve 10B, passes through the first backwash flow passage 7101B to flow to the second opening 1102B, further flows from the first water outlet 512 into the first water treatment device 51, and the wastewater generated after backwashing the first water treatment device 51 flows out from the first water inlet 511, then passes through the first opening 1101B, the second backwash flow passage 7102B, and the drain opening 11010B to be discharged. Preferably, the control valve 10B of the water treatment device according to the second embodiment of the present invention is configured to be capable of, when the control valve 10B is controlled to be in the first backwash working position, preventing raw water from flowing from the second fluid opening 1107B of the valve body 11B of the control valve 10B to the third opening 1103B, the fourth opening 1104B, and the fifth opening 1105B. More preferably, when the control valve 10B of the water treatment device of the present invention is controlled to be in the first backwash working position, water flows in the third opening 1103B, the fourth opening 1104B and the fifth opening 1105B is prevented, thereby preventing the water flows within the second water treatment device 52 and the third water treatment device 53 from flowing. More specifically, when the control valve 10B of the water treatment device according to the second embodiment of the present invention is in the first backwash working position, water cannot flow from the second opening 1102B or the third opening 1103B of the valve body 11B to the second water treatment device 52, nor from the fourth opening 1104B or the fifth opening 1105B of the valve body 11B to the third water treatment device 53, nor from the first water outlet 512 of the first water treatment device 51 to the second water inlet 521 of the second water treatment device 52, ensuring that raw water can and only can backwash the first water treatment device 51 . It can be understood that when the control valve 10B of the water treatment device according to the second embodiment of the present invention is in the first backwash working position, the water treatment device of the present invention is controlled to be in its first backwash working state to backwash the first water treatment device 51 of the water treatment device of the present invention.

As shown in FIG. 52 and FIG. 60C, the control valve 10B of the water treatment device according to the second embodiment of the present invention has a second backwash working position, wherein when the control valve 10B of the water treatment device of the present invention is in the second backwash working position, the valve core 12B of the control valve 10B forms a third backwash flow passage 7103B and a fourth backwash flow passage 7104B, wherein the third backwash flow passage 7103B is in communication with the second fluid opening 1107B and the third opening 1103B respectively, and the fourth backwash flow passage 7104B is in communication with the drain opening 11010B and the second opening 1102B respectively. Accordingly, when the control valve 10B of the water treatment device of the present invention is in the second backwash working position, raw water under water pressure flows through the second fluid opening 1107B of the valve body 11B of the control valve 10B, passes through the third backwash flow passage 7103B to flow to the third opening 1103B, further flows from the second water outlet 522 into the second water treatment device 52, and the wastewater generated from backwashing the second water treatment device 52 flows out from the second water inlet 521, then passes through the second opening 1102B, the fourth backwash flow passage 7104B, and the drain opening 11010B to be discharged. Preferably, the control valve 10B of the water treatment device according to the second embodiment of the present invention is configured to be capable of, when the control valve 10B is controlled to be in the second backwash working position, preventing raw water from flowing from the second fluid opening 1107B of the valve body 11B of the control valve 10B to the first opening 1101B, the fourth opening 1104B, and the fifth opening 1105B. More preferably, when the control valve 10B of the water treatment device of the present invention is controlled to be in the second backwash working position, water flows in the first opening 1101B, the fourth opening 1104B and the fifth opening 1105B is prevented, thereby preventing the water flows within the first water treatment device 51 and the third water treatment device 53 from flowing. More specifically, when the control valve 10B of the water treatment device according to the second embodiment of the present invention is controlled to be in the second backwash working position, water flow cannot flow from the first opening 1101B or the second opening 1102B of the valve body 11B to the first water treatment device 51; water flow also cannot flow from the fourth opening 1104B or the fifth opening 1105B of the valve body 11B to the third water treatment device 53; and water flow cannot flow from the second water inlet 521 of the second water treatment device 52 to the first water outlet 512 of the first water treatment device 51, thereby ensuring that raw water can and only can backwash the second water treatment device 52. It can be understood that when the control valve 10B of the water treatment device according to the second embodiment of the present invention is in the second backwash working position, the water treatment device of the present invention is controlled to be in its second backwash working state to backwash the second treatment device 52 of the water treatment device of the present invention.

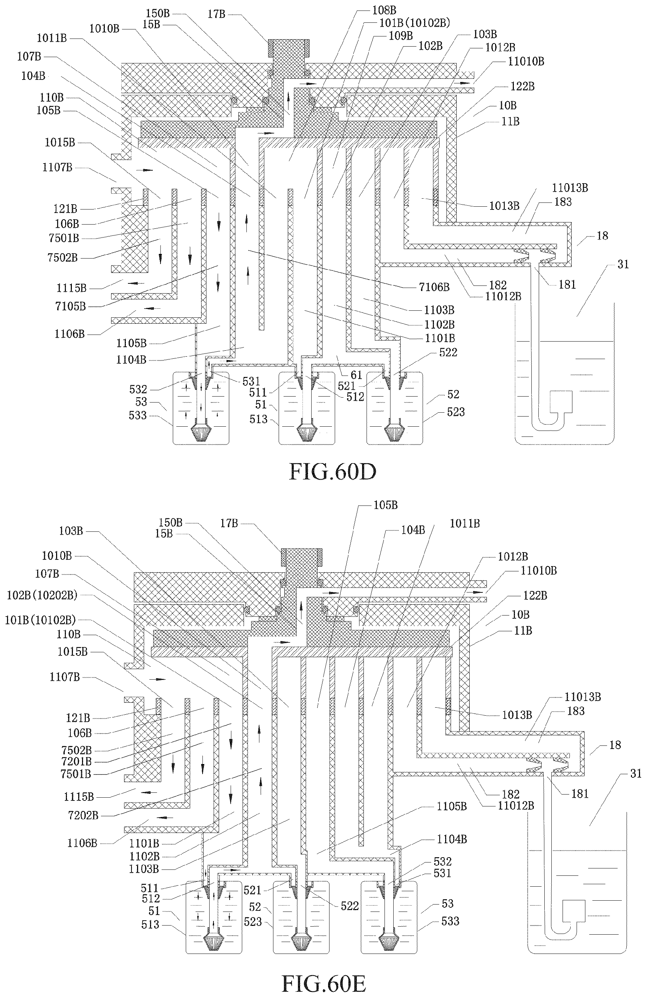

As shown in FIG. 53 and FIG. 60D, the control valve 10B of the water treatment device according to the second embodiment of the present invention has a third backwash working position, wherein when the control valve 10B of the water treatment device of the present invention is in the third backwash working position, the valve core 12B of the control valve 10B forms a fifth backwash flow passage 7105B and a sixth backwash flow passage 7106B, wherein the fifth backwash flow passage 7105B is in communication with the second fluid opening 1107B and the fifth opening 1105B respectively, and the sixth backwash flow passage 7106B is in communication with the drain opening 11010B and the fourth opening 1104B respectively. Accordingly, when the control valve 10B of the water treatment device of the present invention is in the third backwash working position, raw water under water pressure flows through the second fluid opening 1107B of the valve body 11B of the control valve 10B, passes through the fifth backwash flow passage 7105B to flow to the fifth opening 1105B, further flows from the third water outlet 532 into the third water treatment device 53, and the wastewater generated from backwashing the third water treatment device 53 flows out from the third water inlet 531, then passes through the fourth opening 1104B, the sixth backwash flow passage 7106B, and the drain opening 11010B to be discharged. Preferably, the control valve 10B of the water treatment device according to the second embodiment of the present invention is configured to be capable of, when the control valve 10B is controlled to be in the third backwash working position, preventing raw water from flowing from the second fluid opening 1107B of the valve body 11B of the control valve 10B to the first opening 1101B, the second opening 1102B, and the third opening 1103B. More preferably, when the control valve 10B of the water treatment device of the present invention is controlled to be in the third backwash working position, water flows in the first opening 1101B, the second opening 1102B, and the third opening 1103B are prevented, thereby preventing water within the first water treatment device 51 and the second water treatment device 52 from flowing. More specifically, when the control valve 10B of the water treatment device according to the second embodiment of the present invention is controlled to be in the third backwash working position, water flow cannot flow from the first opening 1101B or the second opening 1102B of the valve body 11B to the first water treatment device 51; water flow also cannot flow from the second opening 1102B or the third opening 1103B of the valve body 11B to the second water treatment device 52, thereby ensuring that raw water can and only can backwash the third water treatment device 53. It can be understood that when the control valve 10B of the water treatment device according to the second embodiment of the present invention is in the third backwash working position, the water treatment device of the present invention is controlled to be in its third backwash working state to backwash the third water treatment device 53 of the water treatment device of the present invention.

It is to be understood that "backwash" as used herein refers to the situation wherein water washes a water treatment device of the water treatment device of the present invention (the first water treatment device 51, the second water treatment device 52, or the third water treatment device 53) and the flow direction through the water treatment device is opposite to the direction wherein raw water passes through the same water treatment device when the water treatment device is performing normal water treatment.

As shown in FIG. 54 and FIG. 60E, the control valve 10B of the water treatment device according to the second embodiment of the present invention has a first rinse working position, wherein when the control valve 10B of the water treatment device of the present invention is in the first rinse working position, the valve core 12B of the control valve 10B forms a first rinse flow passage 7201B and a second rinse flow passage 7202B, wherein the first rinse flow passage 7201B is in communication with the second fluid opening 1107B and the first opening 1101B respectively, and the second rinse flow passage 7202B is in communication with the drain opening 11010B and the second opening 1102B respectively. Accordingly, when the control valve 10B of the water treatment device of the present invention is in the first rinse working position, raw water under water pressure flows through the second fluid opening 1107B of the valve body 11B of the control valve 10B, passes through the first rinse flow passage 7201B to flow to the first opening 1101B, further flows from the first water inlet 511 into the first water treatment device 51, and the wastewater after rinsing the first water treatment device 51 flows out from the first water outlet 512, then passes through the second opening 1102B, the second rinse flow passage 7202B, and the drain opening 11010B to be discharged. Preferably, the control valve 10B of the water treatment device according to the second embodiment of the present invention is configured to be capable of, when the control valve 10B is controlled to be in the first rinse working position, preventing raw water from flowing from the second fluid opening 1107B of the valve body 11B of the control valve 10B to the third opening 1103B, the fourth opening 1104B, and the fifth opening 1105B. More preferably, when the control valve 10B of the water treatment device of the present invention is controlled to be in the first rinse working position, water flows in the third opening 1103B, the fourth opening 1104B and the fifth opening 1105B is prevented, thereby preventing water flows within the second water treatment device 52 and the third water treatment device 53 from flowing. More specifically, when the control valve 10B of the water treatment device according to the second embodiment of the present invention is in the first rinse working position, water cannot flow from the second opening 1102B or the third opening 1103B of the valve body 11B to the second water treatment device 52, nor from the fourth opening 1104B or the fifth opening 1105B of the valve body 11B to the third water treatment device 53, nor from the first water outlet 512 of the first water treatment device 51 to the second water inlet 521 of the second water treatment device 52, ensuring that raw water can and only can rinse the first water treatment device 51 . It can be understood that when the control valve 10B of the water treatment device according to the second embodiment of the present invention is in the first rinse working position, the water treatment device of the present invention is controlled to be in its first rinse working state to rinse the first water treatment device 51 of the water treatment device of the present invention.

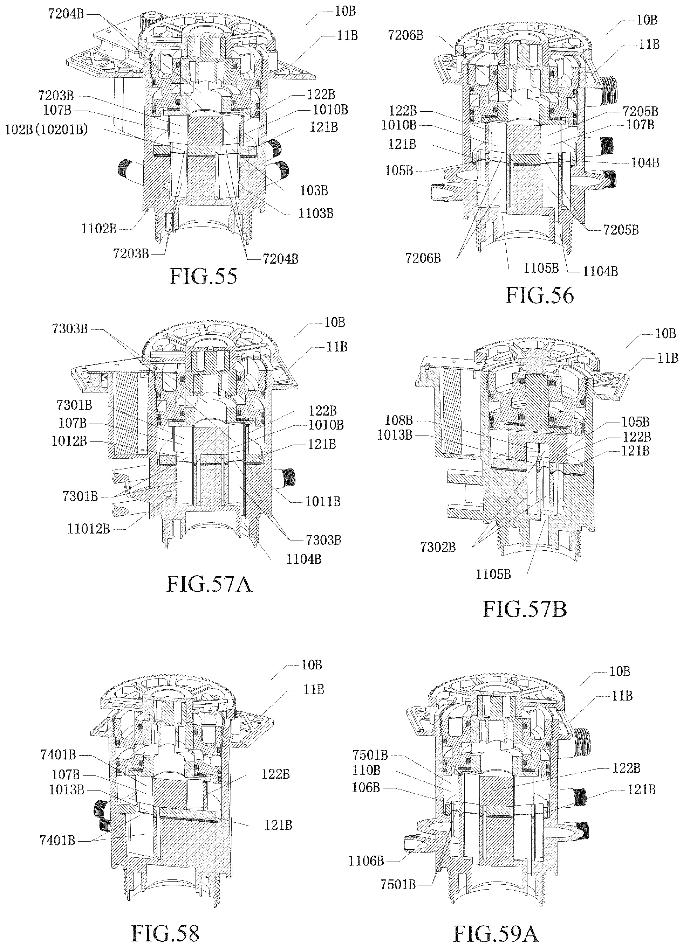

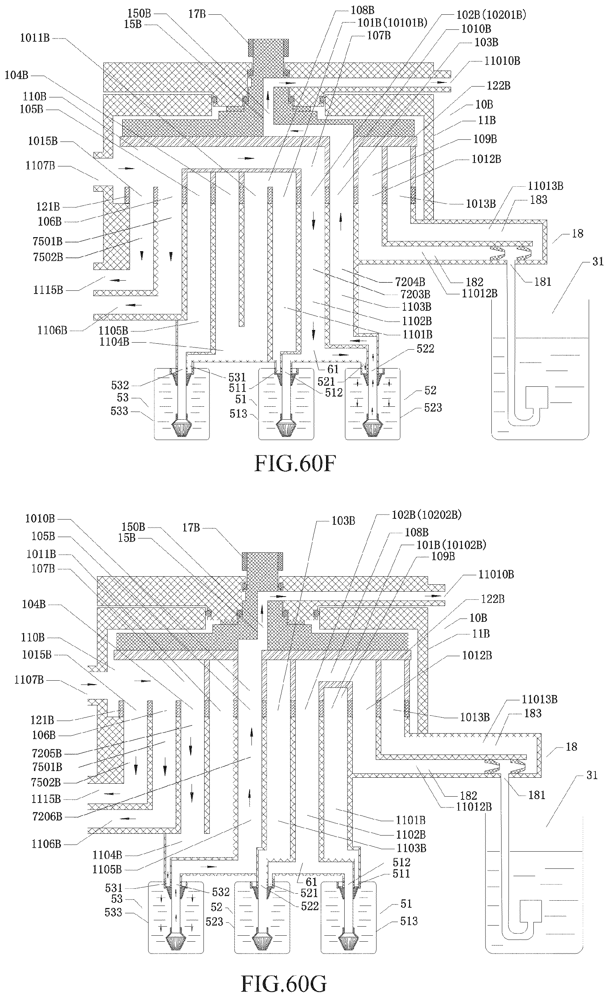

As shown in FIG. 55 and FIG. 60F, the control valve 10B of the water treatment device according to the second embodiment of the present invention has a second rinse working position, wherein when the control valve 10B of the water treatment device of the present invention is in the second rinse working position, the valve core 12B of the control valve 10B forms a third rinse flow passage 7203B and a fourth rinse flow passage 7204B, wherein the third rinse flow passage 7203B is in communication with the second fluid opening 1107B and the second opening 1102B respectively, and the fourth rinse flow passage 7204B is in communication with the drain opening 11010B and the third opening 1103B respectively. Accordingly, when the control valve 10B of the water treatment device of the present invention is in the second rinse working position, raw water under water pressure flows through the second fluid opening 1107B of the valve body 11B of the control valve 10B, passes through the third rinse flow passage 7203B to flow to the second opening 1102B, further flows from the second water inlet 521 into the second water treatment device 52, and the wastewater after rinsing the second water treatment device 52 flows out from the second water outlet 522, then passes through the third opening 1103B, the fourth rinse flow passage 7204B, and the drain opening 11010B to be discharged. Preferably, the control valve 10B of the water treatment device according to the second embodiment of the present invention is configured to be capable of, when the control valve 10B is controlled to be in the second rinse working position, preventing raw water from flowing from the second fluid opening 1107B of the valve body 11B of the control valve 10B to the first opening 1101B, the fourth opening 1104B, and the fifth opening 1105B. More preferably, when the control valve 10B of the water treatment device of the present invention is controlled to be in the second rinse working position, water flows in the first opening 1101B, the fourth opening 1104B and the fifth opening 1105B is prevented, thereby preventing the water flows within the first water treatment device 51 and the third water treatment device 53 from flowing. More specifically, when the control valve 10B of the water treatment device according to the second embodiment of the present invention is controlled to be in the second rinse working position, water flow cannot flow from the first opening 1101B or the second opening 1102B of the valve body 11B to the first water treatment device 51; water flow also cannot flow from the fourth opening 1104B and the fifth opening 1105B of the valve body 11B to the third water treatment device 53; and water flow cannot flow from the second water inlet 521 of the second water treatment device 52 to the first water outlet 512 of the first water treatment device 51, thereby ensuring that raw water can and only can rinse the second water treatment device 52. It can be understood that when the control valve 10B of the water treatment device according to the second embodiment of the present invention is in the second rinse working position, the water treatment device of the present invention is controlled to be in its second rinse working state to rinse the second treatment device 52 of the water treatment device of the present invention.

As shown in FIG. 56 and FIG. 60G, the control valve 10B of the water treatment device according to the second embodiment of the present invention has a third rinse working position, wherein when the control valve 10B of the water treatment device of the present invention is in the third rinse working position, the valve core 12B of the control valve 10B forms a fifth rinse flow passage 7205B and a sixth rinse flow passage 7206B, wherein the fifth rinse flow passage 7205B is in communication with the second fluid opening 1107B and the fourth opening 1104B respectively, and the sixth rinse flow passage 7206B is in communication with the drain opening 11010B and the fifth opening 1105B respectively. Accordingly, when the control valve 10B of the water treatment device of the present invention is in the third rinse working position, raw water under water pressure flows through the second fluid opening 1107B of the valve body 11B of the control valve 10B, passes through the fifth rinse flow passage 7205B to flow to the fourth opening 1104B, further flows from the third water inlet 531 into the third water treatment device 53, and the wastewater from rinsing the third water treatment device 53 flows out from the third water outlet 532, then passes through the fifth opening 1105B, the sixth rinse flow passage 7206B, and the drain opening 11010B to be discharged. Preferably, the control valve 10B of the water treatment device according to the second embodiment of the present invention is configured to be capable of, when the control valve 10B is controlled to be in the third rinse working position, preventing raw water from flowing from the second fluid opening 1107B of the valve body 11B of the control valve 10B to the first opening 1101B, the second opening 1102B, and the third opening 1103B. More preferably, when the control valve 10B of the water treatment device of the present invention is controlled to be in the third rinse working position, water flows in the first opening 1101B, the second opening 1102B, and the third opening 1103B are prevented, thereby preventing water within the first water treatment device 51 and the second water treatment device 52 from flowing. More specifically, when the control valve 10B of the water treatment device according to the second embodiment of the present invention is controlled to be in the third rinse working position, water flow cannot flow from the first opening 1101B or the second opening 1102B of the valve body 11B to the first water treatment device 51; water flow also cannot flow from the second opening 1102B or the third opening 1103B of the valve body 11B to the second water treatment device 52, thereby ensuring that raw water can and only can rinse the third water treatment device 53. It can be understood that when the control valve 10B of the water treatment device according to the second embodiment of the present invention is in the third rinse working position, the water treatment device of the present invention is controlled to be in its third rinse working state to rinse the third water treatment device 53 of the water treatment device of the present invention.

It is to be understood that "rinse" as used herein refers to the situation wherein water washes a water treatment device of the water treatment device of the present invention (the first water treatment device 51, the second water treatment device 52, or the third water treatment device 53) , the flow direction of the water through the water treatment device of the water treatment device of the present invention is same to the direction wherein raw water passes through the same water treatment device when the water treatment device of the water treatment device of the present invention is performing normal water treatment. Generally, rinsing a water treatment device of the water treatment device of the present invention with water flow follows backwashing the water treatment device, in order to wash away the wastewater generated by the backwashing that remains in the water treatment device. In addition, if the filter material (or softening material) of the water treatment device is granular, rinsing can also serve to compact the filter material (or softening material), thereby enhancing its water treatment effectiveness.

As shown in FIGS. 50A to 60G, the control valve 10B of the water treatment device according to the second embodiment of the present invention, more specifically, the single control valve 10B of the water treatment device of the present invention, is configured to control the first water treatment device 51, the second water treatment device 52, and the third water treatment device 53 of the water treatment device of the present invention to be in communication with in series for achieving three-stage treatment of raw water, and control raw water to backwash and rinse of the first water treatment device 51, the second water treatment device 52, and the third water treatment device 53 of the water treatment device of the present invention, respectively and separately.

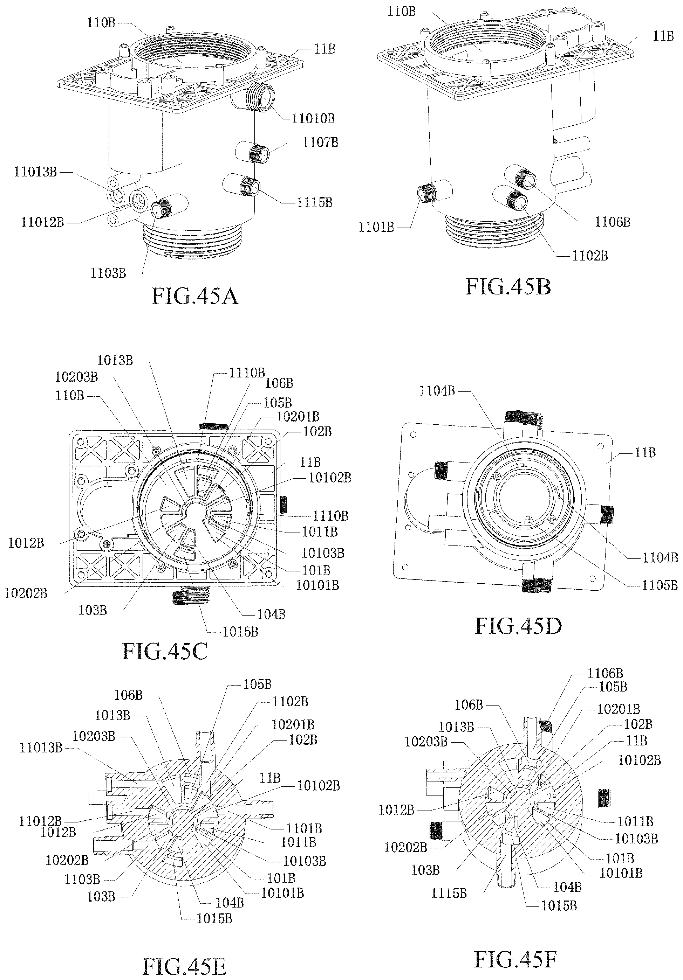

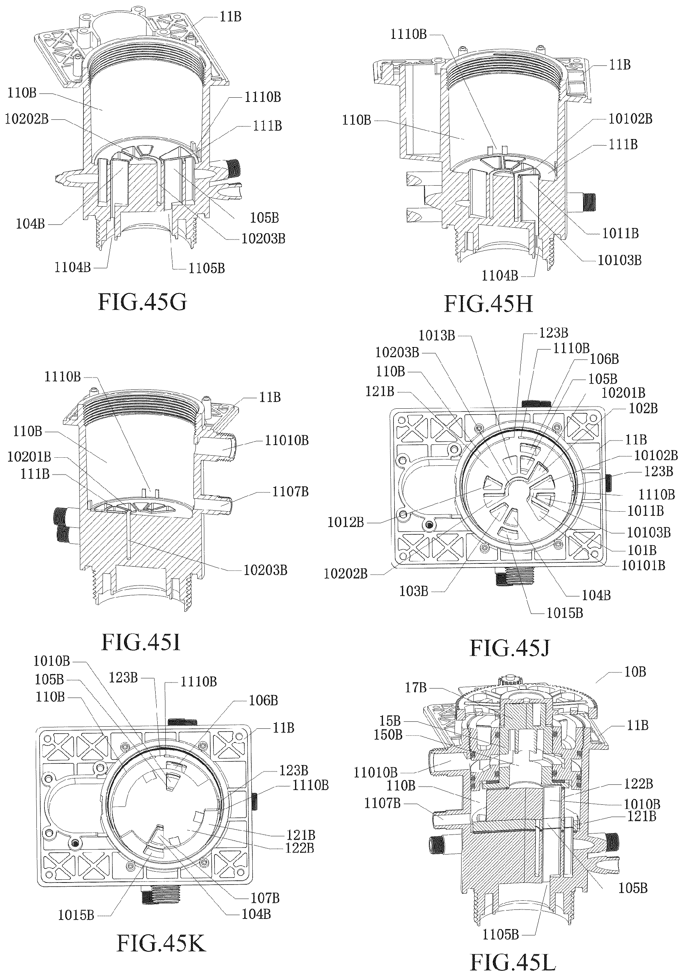

As shown in FIG. 45A and FIG. 45E, the third water treatment device 53 of the water treatment device according to the second embodiment of the present invention is a water softening device, and the valve body 11B of the control valve 10B further forms a first injector opening 11012B and a second injector opening 11013B. As shown in FIG. 40 to FIG. 44, the control valve 10B of the water treatment device according to the second embodiment of the present invention further comprises an injector 18, wherein the injector 18 has a nozzle outlet 182 adapted to be in communication with the first injector opening 11012B of the valve body 11B, a discharge outlet 183 adapted to be in communication with the second injector opening 11013B of the valve body 11B, and a brine suction inlet 181 in communication with the nozzle outlet 182 and the discharge outlet 183 respectively; when a water flow, such as tap water flow, flows from the nozzle outlet 182 of the injector 18 to the discharge outlet 183 of the injector 18, a negative pressure is generated at the brine suction inlet 181 of the injector 18, thereby allowing a regenerant solution to flow from the brine suction inlet 181 of the injector 18 to the discharge outlet 183 of the injector 18. Correspondingly, the brine suction inlet 181 of the injector 18 is in communication with the nozzle outlet 182 and the discharge outlet 183 of the injector 18, respectively.

As shown in FIGS. 40 to 44, the water treatment device according to the second embodiment of the present invention further comprises a brine tube 184 and a regenerant solution tank 31, wherein one end of the brine tube 184 communicates with the brine suction inlet 181, and the other end of the brine tube 184 communicates with the regenerant solution tank 31, allowing brine to be supplied to the brine suction inlet 181 through the brine tube 184 or allowing water to flow from the brine suction inlet 181 through the brine tube 184 to the regenerant solution tank 31 for water refill. It can be understood that the regenerant solution is typically brine.

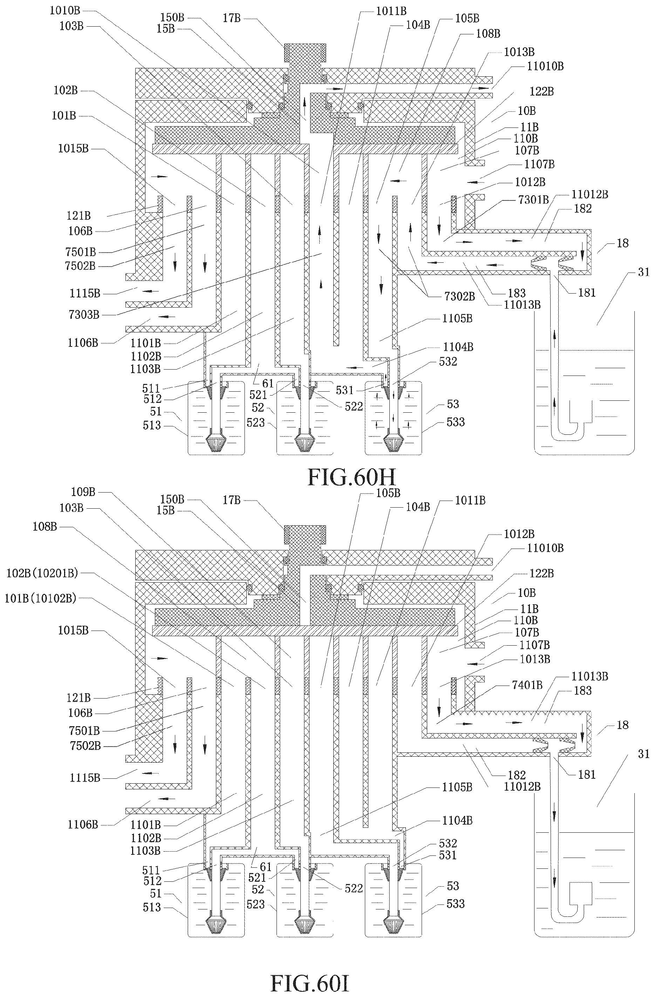

As shown in FIG. 57A, FIG. 57B, and FIG. 60H, the control valve 10B of the water treatment device according to the second embodiment of the present invention has a regeneration working position, wherein when the control valve 10B of the water treatment device of the present invention is in the regeneration working position, the valve core 12B of the control valve 10B forms a first regeneration flow passage 7301B, a second regeneration flow passage 7302B, and a third regeneration flow passage 7303B, wherein the first regeneration flow passage 7301B is in communication with the second fluid opening 1107B and the first injector opening 11012B of the valve body 11B respectively, the second regeneration flow passage 7302B is in communication with the second injector opening 11013B and the fifth opening 1105B respectively, and the third regeneration flow passage 7303B is in communication with the fourth opening 1104B and the drain opening 11010B respectively. Accordingly, when the control valve 10B of the water treatment device of the present invention is in the regeneration working position, raw water under water pressure flows through the second fluid opening 1107B of the valve body 11B of the control valve 10B, passes through the first regeneration flow passage 7301B to flow to the first injector opening 11012B of the valve body 11B, then flows into the nozzle outlet 182 of the injector 18, and after being injected by the injector 18, mixes with the brine (such as sodium chloride solution) from the brine suction inlet 181 to form a regenerant solution; the regenerant solution flows through the discharge outlet 183 of the injector 18 into the second injector opening 11013B of the valve body 11B, then passes through the second regeneration flow passage 7302B to flow into the fifth opening 1105B of the valve body 11B; the regenerant solution flows from the third water outlet 532 into the third water treatment device 53, regenerates the third water treatment material 535 in up-flow mode, such as softening resin, and after regeneration, the generated wastewater flows out from the third water inlet 531, then sequentially passes through the fourth opening 1104B of the valve body 11B, the third regeneration flow passage 7303B, and the drain opening 11010B to flow out. Preferably, the control valve 10B of the water treatment device according to the second embodiment of the present invention is configured to be capable of, when the control valve 10B is controlled to be in the regeneration working position, preventing the regenerant solution from flowing toward the first opening 1101, the second opening 1102, and the third opening 1103, and preventing raw water from flowing from the second fluid opening 1107B of the valve body 11B of the control valve 10B to the first opening 1101B, the second opening 1102B, and the third opening 1103B. More preferably, when the control valve 10B of the water treatment device of the present invention is controlled to be in the regeneration working position, water flows in the first opening 1101B, the second opening 1102B, and the third opening 1103B are prevented, thereby preventing water within the first water treatment device 51 and the second water treatment device 52 from flowing. More specifically, when the control valve 10B of the water treatment device according to the second embodiment of the present invention is controlled to be in the regeneration working position, water flow cannot flow from the first opening 1101B or the second opening 1102B of the valve body 11B to the first water treatment device 51; water flow also cannot flow from the second opening 1102B or the third opening 1103B of the valve body 11B to the second water treatment device 52, thereby ensuring that the regenerant solution can and only can flow to the third water treatment device 53. The up-flow regeneration of the present invention refers to the fact that when in the regeneration working position, the flow direction of the regenerant solution within the third water treatment device 53 is opposite to the flow direction of the water within the third water treatment device 53 when the control valve 10B is in the water treatment working position. It can be understood that when the control valve 10B of the water treatment device according to the second embodiment of the present invention is controlled to be in the regeneration working position, the water treatment device is controlled to be in its regeneration working state.

As shown in FIG. 58 and FIG. 60I, the control valve 10B of the water treatment device according to the second embodiment of the present invention further has a water refill working position, wherein when the control valve 10B is in the water refill working position, the valve core 12B of the control valve 10B forms a water refill flow passage 7401B, wherein the water refill flow passage 7401B is in communication with the second fluid opening 1107B and the second injector opening 11013B of the valve body 11B respectively. Correspondingly, when the control valve 10B is in the water refill working position, raw water flows into the second fluid opening 1107B of the valve body 11B of the control valve 10B under water pressure, passes through the water refill flow passage 7401B to the second injector opening 11013B of the valve body 11B, and then sequentially enters the discharge outlet 183, the brine suction inlet 181, and the brine suction pipe 184 of the injector 18 to the regenerant solution tank 31 for refilling the regenerant solution. Preferably, the control valve 10B of the water treatment device according to the second embodiment of the present invention is configured to be capable of, when the control valve 10B is controlled to be in the water refill working position, preventing raw water from flowing from the second fluid opening 1107B of the valve body 11B of the control valve 10B to the first opening 1101B, the second opening 1102B, the third opening 1103B, the fourth opening 1104B, and the fifth opening 1105B. More preferably, when the control valve 10B of the water treatment device of the present invention is in the water refill working position, water flows through the first opening 1101B, the second opening 1102B, the third opening 1103B, the fourth opening 1104B and the fifth opening 1105B of the valve body 11B are blocked, thus stopping water from flowing in the first water treatment device 51, the second water treatment device 52 and the third water treatment device 53. More specifically, when the control valve 10B of the water treatment device according to the second embodiment of the present invention is controlled to be in the water refill working position, water flow cannot flow from the first opening 1101B or the second opening 1102B of the valve body 11B to the first water treatment device 51; water flow also cannot flow from the second opening 1102B or the third opening 1103B of the valve body 11B to the second water treatment device 52; and water flow cannot flow from the fourth opening 1104B or the fifth opening 1105B of the valve body 11B to the third water treatment device 53. It can be understood that when the control valve 10B of the water treatment device according to the second embodiment of the present invention is controlled to be in the water refill working position, the water treatment device is controlled to be in its water refill working state.

As shown in FIG. 50D and FIG. 60A, the valve body 11B of the control valve 10B of the water treatment device according to the second embodiment of the present invention further forms a third fluid opening 1115B; when the control valve 10B is in the water treatment working position, the valve core 12B of the control valve 10B forms a fourth water treatment flow passage 7004B, wherein the fourth water treatment flow passage 7004B is in communication with the third opening 1103B and the third fluid opening 1115B of the valve body 11B respectively. Accordingly, when the control valve 10B is in the water treatment working position, raw water under water pressure flows through the second fluid opening 1107B of the valve body 11B of the control valve 10B, passes through the first water treatment flow passage 7001B to flow to the first opening 1101B of the valve body 11B, further flows from the first water inlet 511 into the first water treatment device 51; the primary treated water obtained after treatment by the first water treatment device 51 flows out from the first water outlet 512 and further flows from the second water inlet 521 into the second water treatment device 52; the secondary treated water obtained after treatment by the second water treatment device 52 flows out from the second water outlet 522 and further flows into the third opening 1103B, then passes through the fourth water treatment flow passage 7004B to flow to the third fluid opening 1115B and is supplied. It can be understood that when the control valve 10B is in the water treatment working position, the water treatment device of the present invention can not only supply the treated tertiary treated water (for example, purified water or purified softened water) to the user through the first fluid opening 1106B, but can also supply secondary treated water (for example, purified water) to the user through the third fluid opening 1115B. For example, if the first water treatment device 51 and the second water treatment device 52 of the water treatment device according to the second embodiment of the present invention are water purification devices (e.g., a purification filter), and the third water treatment device 53 is a water softening device (e.g., a softening filter), then when the water treatment device is in the water treatment working state, it can provide the user not only with purified softened water through the first fluid opening 1106B, but also with secondary purified water through the third fluid opening 1115B.

As shown in FIG. 59A, FIG. 59B, and FIG. 60B to FIG. 60I, when the control valve 10B of the water treatment device according to the second embodiment of the present invention is in the first backwash working position, the second backwash working position, the third backwash working position, the first rinse working position, the second rinse working position, the third rinse working position, the regeneration working position, or the water refill working position, the valve core 12B of the control valve 10B further forms a first raw water supply flow passage 7501B and a second raw water supply flow passage 7502B, wherein the first raw water supply flow passage 7501B is in communication with the second fluid opening 1107B and the first fluid opening 1106B of the valve body 11B respectively, and the second raw water supply flow passage 7502B is in communication with the second fluid opening 1107B and the third fluid opening 1115B of the valve body 11B respectively. Accordingly, when the control valve 10B is in the first backwash working position, the second backwash working position, the third backwash working position, the first rinse working position, the second rinse working position, the third rinse working position, the regeneration working position, or the water refill working position, raw water under water pressure flows in from the second fluid opening 1107B of the valve body 11B of the control valve 10B, passes through the first raw water supply flow passage 7501B to flow to the first fluid opening 1106B to supply raw water, and passes through the second raw water supply flow passage 7502B to flow to the third fluid opening 1115B to supply raw water. It is understandable that supplying raw water to the user through the first fluid opening 1106B and the third fluid opening 1115B not only addresses the user's water demand during the rinse working position, the regeneration working position, and the water refill working position of the water treatment device according to the second embodiment of the present invention but also can provide a water source during emergencies such as fire disaster.

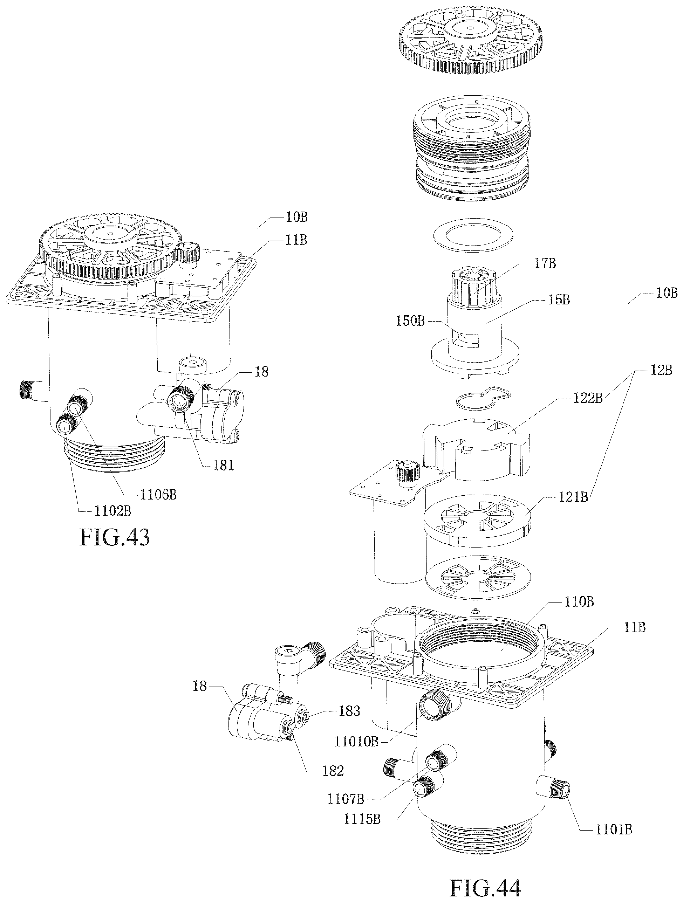

As shown in FIG. 44 to FIG. 47B, the control valve 10B of the water treatment device according to the second embodiment of the present invention is a planar valve, wherein the valve core 12B of the planar valve 10B further comprises a fixed disk 121B and a rotating disk 122B, wherein the fixed disk 121B has a first fluid control surface 1210B, and the rotating disk 122B has a second fluid control surface 1220B; wherein the rotating disk 122B and the fixed disk 121B are both arranged in the valve chamber 110B; wherein the second fluid control surface 1220B of the rotating disk 122B is placed against the first fluid control surface 1210B of the fixed disk 121B, and the rotating disk 122B is configured to be capable of rotating relative to the fixed disk 121B. Preferably, the second fluid opening 1107B is in communication with the valve chamber 110B of the valve body 11B.

As shown in FIG. 44 to FIG. 47B, the planar valve 10B of the water treatment device according to the second embodiment of the present invention has a first flow hole 101B, a second flow hole 102B, a third flow hole 103B, a fourth flow hole 104B, a fifth flow hole 105B, a sixth flow hole 106B, a seventh flow hole 107B, an eighth flow hole 108B, a ninth flow hole 109B, and a tenth flow hole 1010B, wherein the first flow hole 101B, the second flow hole 102B, the third flow hole 103B, the fourth flow hole 104B, the fifth flow hole 105B, and the sixth flow hole 106B are provided in the fixed disk 121B and extend from the first fluid control surface 1210B of the fixed disk 121B respectively; the seventh flow hole 107B, the eighth flow hole 108B, the ninth flow hole 109B, and the tenth flow hole 1010B are respectively provided in the rotating disk 122B and respectively extend from the second fluid control surface 1220B of the rotating disk 122B, wherein the first flow hole 101B is in communication with the first opening 1101B, the second flow hole 102B is in communication with the second opening 1102B, the third flow hole 103B is in communication with the third opening 1103B, the fourth flow hole 104B is in communication with the fourth opening 1104B, the fifth flow hole 105B is in communication with the fifth opening 1105B, the sixth flow hole 106B is in communication with the first fluid opening 1106B, the seventh flow hole 107B is in communication with the second fluid opening 1107B, and the tenth flow hole 1010B is in communication with the drain opening 11010B. Preferably, both the eighth flow hole 108B and the ninth flow hole 109B are communicating blind holes. Preferably, the seventh flow hole 107B is in communication with the valve chamber 110B and is further in communication with the second fluid opening 1107B through the valve chamber 110B. Preferably, the sixth flow hole 106B is arranged outward of the fifth flow hole 105B.

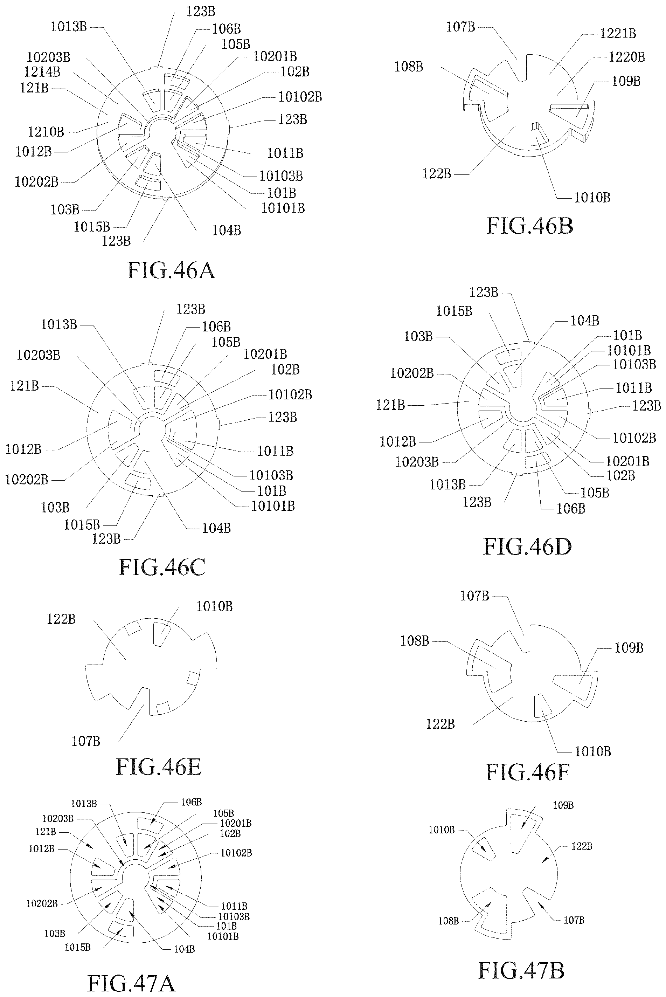

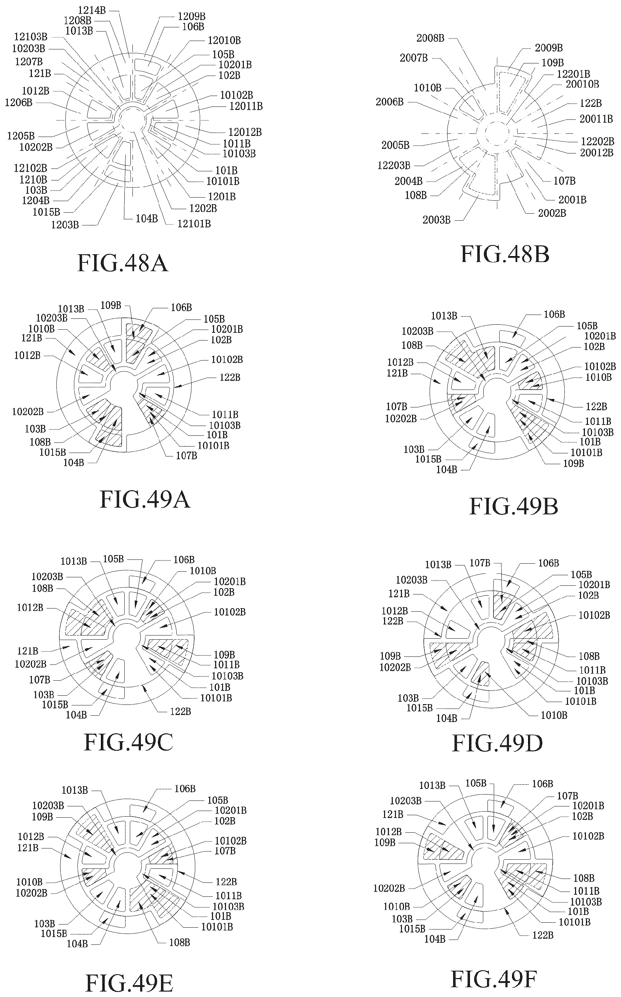

As shown in FIG. 49A, FIG. 50A to FIG. 50D, and FIG. 60A, the rotating disk 122B of the planar valve 10B of the water treatment device according to the second embodiment of the present invention is capable of rotating relative to the fixed disk 121B, thereby enabling the planar valve 10B to have a water treatment working position. When the planar valve 10B is in the water treatment working position, the seventh flow hole 107B of the planar valve 10B is in communication with the first flow hole 101B, thereby forming the first water treatment flow passage 7001B that is in communication with the second fluid opening 1107B and the first opening 1101B respectively; the eighth flow hole 108B is in communication with the third flow hole 103B and the fourth flow hole 104B respectively, thereby forming the second water treatment flow passage 7002B that is in communication with the third opening 1103B and the fourth opening 1104B respectively; the ninth flow hole 109B is in communication with the fifth flow hole 105B and the sixth flow hole 106B respectively, thereby forming the third water treatment flow passage 7003B that is in communication with the fifth opening 1105B and the first fluid opening 1106B respectively. As shown in FIG. 46A to FIG. 46F, FIG. 49A, and FIG. 60A, when the planar valve 10B is in the water treatment working position, the second flow hole 102B is blocked by the second fluid control surface 1220B of the rotating disk 122B, and the tenth flow hole 1010B is blocked by the first fluid control surface 1210B of the fixed disk 121B.

It is worth mentioning that when the planar valve 10B is in the water treatment working position, although the second opening 1102B is in communication with the first water outlet 512 of the first water treatment device 51 and the second water inlet 521 of the second water treatment device 52 respectively, the second flow hole 102B is blocked by the second fluid control surface 1220B of the rotating disk 122B, meaning that no water flows in or out through the second opening 1102B , at this time, the first water outlet 512 of the first water treatment device 51 and the second water inlet 521 of the second water treatment device 52 form a series connection structure; the eighth flow hole 108B is in communication with the third flow hole 103B and the fourth flow hole 104B respectively, the third opening 1103B is in communication with the second water outlet 522 of the second water treatment device 52, and the fourth opening 1104B is in communication with the third water inlet 531 of the third water treatment device 53, meaning that at this time, the second water outlet 522 of the second water treatment device 52 and the third water inlet 531 of the third water treatment device 53 form a series connection structure; therefore, when the planar valve 10B is in the water treatment working position, the first water treatment device 51, the second water treatment device 52, and the third water treatment device 53 form a three-stage series connection structure, and the first water treatment material 515 of the first water treatment device 51, the second water treatment material 525 of the second water treatment device 52, and the third water treatment material 535 of the third water treatment device 53 will sequentially treat the raw water entering the second fluid opening 1107B of the planar valve 10B, with the treated water flowing out from the first fluid opening 1106B and being supplied. The three-stage series connection structure can provide better in-depth treatment of raw water. Preferably, the first water treatment material 515 of the first water treatment device 51, the second water treatment material 525 of the second water treatment device 52, and the third water treatment material 535 of the third water treatment device 53 can be configured as different materials. For example, the first water treatment material 515 can be configured as quartz sand for coarse filtration, the second water treatment material 525 can be configured as granular activated carbon for adsorption, and the third water treatment material 535 can be configured as softening resin for softening treatment.

As shown in FIG. 49A, FIG. 50A to FIG. 50D, and FIG. 60A, as an example, when the planar valve 10B of the water treatment device according to the second embodiment of the present invention is controlled to be in the water treatment working position, raw water from the planar valve 10B, under water pressure, flows from the second fluid opening 1107B of the valve body 11B into the valve chamber 110B, then passes through the seventh flow hole 107B and the first flow hole 101B to flow into the first opening 1101B, then flows from the first water inlet 511 of the first water treatment device 51 into the first water treatment device 51; under water pressure, after being treated (for example, purified or softened) by the first water treatment material 515, the generated primary treated water is collected by the first central tube 514 and flows out from the first water outlet 512 of the first water treatment device 51, further flowing to the second water inlet 521 of the second water treatment device 52 and into the second water treatment device 52; then under water pressure, after being treated (for example, purified or softened) by the second water treatment material 525, the generated secondary treated water is collected by the second central tube 524 and flows out from the second water outlet 522 of the second water treatment device 52; then under water pressure, it further passes through the third opening 1103B of the planar valve 10B, the third flow hole 103B, the eighth flow hole 108B, the fourth flow hole 104B, and the fourth opening 1104B, flows to the third water inlet 531 of the third water treatment device 53 and into the third water treatment device 53; under water pressure, after being treated (for example, purified or softened) by the third water treatment material 535, the generated tertiary treated water is collected by the third central tube 534 and flows out from the third water outlet 532 of the third water treatment device 53 and flows to the fifth opening 1105B of the planar valve 10B, then passes through the fifth flow hole 105B, the ninth flow hole 109B, the sixth flow hole 106B, and the first fluid opening 1106B to be supplied.

As shown in FIG. 49B, FIG. 51, and FIG. 60B, the planar valve 10B of the water treatment device according to the second embodiment of the present invention further has a first backwash working position. When the planar valve 10B of the water treatment device of the present invention is in the first backwash working position, the seventh flow hole 107B of the planar valve 10B is in communication with the second flow hole 102B, thereby forming the first backwash flow passage 7101B that is in communication with the second fluid opening 1107B and the second opening 1102B respectively; and the tenth flow hole 1010B is in communication with the first flow hole 101B, thereby forming the second backwash flow passage 7102B that is in communication with the drain opening 11010B and the first opening 1101B respectively. As shown in FIG. 46A to FIG. 46F, FIG. 49B, and FIG. 60B, when the planar valve 10B of the water treatment device of the present invention is in the first backwash working position, the ninth flow hole 109B is in communication with the first flow hole 101B (the ninth flow hole 109B is in communication with one part of the first flow hole 101B, and the tenth flow hole 1010B is in communication with another part of the first flow hole 101B); and the third flow hole 103B, the fourth flow hole 104B, and the fifth flow hole 105B are blocked by the second fluid control surface 1220B of the rotating disk 122B respectively. Therefore, when the planar valve 10B is in the first backwash working position, although the ninth flow hole 109B of the planar valve 10B is in communication with the first flow hole 101B, the eighth flow hole 108B and the ninth flow hole 109B are both communicating blind holes, and the third flow hole 103B, the fourth flow hole 104B, and the fifth flow hole 105B are blocked by the second fluid control surface 1220B of the rotating disk 122B respectively, so that raw water can only flow from the second fluid opening 1107B of the planar valve 10B into the seventh flow hole 107B, and further pass through the second flow hole 102B and the second opening 1102B to flow to the first water outlet 512 of the first water treatment device 51 and into the first water treatment device 51; the wastewater generated from backwashing the first water treatment device 51 flows out from the first water inlet 511 of the first water treatment device 51 and flows to the first opening 1101B of the planar valve 10B, and under water pressure, further passes through the first flow hole 101B, the tenth flow hole 1010B and the drain opening 11010B of the planar valve 10B to be discharged. In other words, although the ninth flow hole 109B is in communication with the first flow hole 101B, water flow does not pass through the flow passage formed by them. Accordingly, when the planar valve 10B is in the first backwash working position, since the ninth flow hole 109B is a communicating blind hole, the flow passage formed by the communication between the ninth flow hole 109B and the first flow hole 101B is blocked by the rotating disk 122B; and the third flow hole 103B, the fourth flow hole 104B, and the fifth flow hole 105B are blocked by the second fluid control surface 1220B of the rotating disk 122B respectively, thereby preventing water flow from passing through the third opening 1103B, the fourth opening 1104B, and the fifth opening 1105B of the planar valve 10B, and preventing the flow of water within the second water treatment device 52 and the third water treatment device 53. More specifically, when the planar valve 10B is in the first backwash working position, it prevents water flow from the second opening 1102B towards the second water inlet 521 of the second water treatment device 52. In other words, although the ninth flow hole 109B is in communication with the first flow hole 101B, the rotating disk 122B prevents raw water from flowing toward the third flow hole 103B, the fourth flow hole 104B, and the fifth flow hole 105B, thereby ensuring that only the first water treatment device 51 is backwashed. Preferably, the tenth flow hole 1010B is a through hole, and the tenth flow hole 1010B forms the drain opening 11010B.

It is worth mentioning that when the planar valve 10B is in the first backwash working position, the flow passage formed by the communication between the ninth flow hole 109B and the first flow hole 101B, the third flow hole 103B, the fourth flow hole 104B, and the fifth flow hole 105B, are blocked by the rotating disk 122B respectively, thereby causing the third opening 1103B, the fourth opening 1104B, and the fifth opening 1105B to be blocked, although the ninth flow hole 109B is in communication with the first flow hole 101B to form a corresponding flow passage, the ninth flow hole 109B is a communicating blind hole, and water flow cannot exit or enter through the flow passage formed by the communication between the ninth flow hole 109B and the first flow hole 101B. In other words, the third opening 1103B, the fourth opening 1104B, and the fifth opening 1105B are all blocked by the rotating disk 122B, preventing water flow from flowing to the second water treatment device 52 and isolating the third water treatment device 53 from the water flow, thereby ensuring that only the first water treatment device 51 is backwashed, so as to not only increase the intensity of the raw water backwashing the first water treatment device 51 but also prevent the generated wastewater from flowing to the second water treatment device 52 and/or the third water treatment device 53. Therefore, when the planar valve 10B is in the first backwash working position, the first water treatment device 51 of the water treatment device of the present invention is backwashed individually.

As shown in FIGS. 49B, 51, and 60B, as an example, when the planar valve 10B of the water treatment device according to the second embodiment of the present invention is controlled to be in the first backwash working position, raw water from the planar valve 10B, under water pressure, enters the first water treatment device 51 through its first water outlet 512, flows, under water pressure, from the first central tube 514 towards the first water treatment material 515, backwashing the first water treatment material 515, the generated wastewater exits the first water treatment device 51 through its first water inlet 511, flows, under water pressure, towards the first opening 1101B of the planar valve 10B, passes through the second backwash flow passage 7102B, is discharged through the drain opening 11010B.

As shown in FIG. 49C, FIG. 52, and FIG. 60C, the planar valve 10B of the water treatment device according to the second embodiment of the present invention further has a second backwash working position, when the planar valve 10B of the water treatment device of the present invention is in the second backwash working position, the seventh flow hole 107B of the planar valve 10B is in communication with the third flow hole 103B, thereby forming the third backwash flow passage 7103B communicating with the second fluid opening 1107B and the third opening 1103B respectively; and the tenth flow hole 1010B is in communication with the second flow hole 102B, thereby forming the fourth backwash flow passage 7104B communicating with the drain opening 11010B and the second opening 1102B respectively. As shown in FIG. 46A to FIG. 46F, FIG. 49C, and FIG. 60C, when the planar valve 10B of the water treatment device of the present invention is in the second backwash working position, the first flow hole 101B, the fourth flow hole 104B and the fifth flow hole 105B are blocked by the second fluid control surface 1220B of the rotating disk 122B respectively. As shown in FIG. 49C, FIG. 52, and FIG. 60C, specifically, when the planar valve 10B is in the second backwash working position, the first flow hole 101B, the fourth flow hole 104B, and the fifth flow hole 105B are blocked by the second fluid control surface 1220B of the rotating disk 122B respectively, thereby preventing the flow of water in the first opening 1101B, the fourth opening 1104B, and the fifth opening 1105B of the valve body 11B of the planar valve 10B (or preventing water from flowing in or out of the first opening 1101B, the fourth opening 1104B, and the fifth opening 1105B); preventing water flow from the second water inlet 521 of the second water treatment device 52 to the first water outlet 512 of the first water treatment device 51; and preventing the flow of water within the first water treatment device 51 and the third water treatment device 53. Correspondingly, when the planar valve 10B is in the second backwash working position, water flow through the first water inlet 511 and the first water outlet 512 of the first water treatment device 51, water flow through the third water inlet 531 and the third water outlet 532 of the third water treatment device 53, are also prevented, to ensures that only the second water treatment device 52 is backwashed, so as to increase the intensity of the backwash flow directed at the second water treatment device 52 while simultaneously preventing the generated wastewater from flowing into the first water treatment device 51 and/or the third water treatment device 53. Therefore, when the planar valve 10B is in the second backwash working position, the second treatment device 52 of the water treatment device of the present invention is backwashed individually. Furthermore, when raw water backwashes the second water treatment device 52, the backwash water flow passing through the second opening 1102 cannot enter the first water outlet 512 of the first water treatment device 51, which ensures the intensity of the backwash water flow for the second water treatment device 52 and prevents the wastewater generated from backwashing the second water treatment device 52 from contaminating the first water treatment device 51.

It is worth mentioning that when the planar valve 10B is in the second backwash working position, the first flow hole 101B, the fourth flow hole 104B, and the fifth flow hole 105B are blocked by the rotating disk 122B respectively, thereby causing the first opening 1101B, the fourth opening 1104B, and the fifth opening 1105B to be blocked, no water flows in or out through the first opening 1101B, the fourth opening 1104B, and the fifth opening 1105B, thereby resulting in no water flow within the first water treatment device 51 and isolating the third water treatment device 53 from the water flow to ensure that only the second water treatment device 52 is backwashed, so as to not only increasing the intensity of the raw water backwashing the second water treatment device 52 but also preventing the generated wastewater from flowing to the first water treatment device 51 and/or the third water treatment device 53. Therefore, when the planar valve 10B is in the second backwash working position, the second treatment device 52 of the water treatment device of the present invention is backwashed individually.

As shown in FIG. 49C, FIG. 52, and FIG. 60C, as an example, when the planar valve 10B of the water treatment device according to the second embodiment of the present invention is controlled to be in the second backwash working position, raw water from the planar valve 10B, under water pressure, flows from the second water outlet 522 of the second water treatment device 52 into the second water treatment device 52, then under water pressure, flows from the second central tube 524 to the second water treatment material 525 and backwashes the second water treatment material 525; the generated wastewater flows out from the second water inlet 521 of the second water treatment device 52, and under water pressure, flows to the second opening 1102B of the valve body 11B of the planar valve 10B, then passes through the fourth backwash flow passage 7104B to flow to the drain opening 11010B and is discharged.

As shown in FIG. 49D, FIG. 53, and FIG. 60D, the planar valve 10B of the water treatment device according to the second embodiment of the present invention further has a third backwash working position. When the planar valve 10B of the water treatment device of the present invention is in the third backwash working position, the seventh flow hole 107B is in communication with the fifth flow hole 105B, thereby forming the fifth backwash flow passage 7105B that is in communication with the second fluid opening 1107B and the fifth opening 1105B respectively; and the tenth flow hole 1010B is in communication with the fourth flow hole 104B, thereby forming the sixth backwash flow passage 7106B communicating with the drain opening 11010B and the fourth opening 1104B respectively. As shown in FIG. 46A to FIG. 46F, FIG. 49D, and FIG. 60D, when the planar valve 10B of the water treatment device of the present invention is in the third backwash working position, the eighth flow hole 108B is in communication with the first flow hole 101B, the ninth flow hole 109B is in communication with the second flow hole 102B, and the third flow hole 103B is blocked by the second fluid control surface 1220B of the rotating disk 122B. As shown in FIG. 49D, FIG. 53, and FIG. 60D, specifically, when the planar valve 10B is in the third backwash working position, although the ninth flow hole 109B is in communication with the second flow hole 102B, the ninth flow hole 109B is a communicating blind hole; therefore, the flow passage formed by the communication between the ninth flow hole 109B and the second flow hole 102B is blocked by the rotating disk 122B, thereby preventing water flow from exiting or entering through the flow passage formed by the ninth flow hole 109B and the second flow hole 102B, simultaneously, the third flow hole 103B is blocked by the second fluid control surface 1220B of the rotating disk 122B, thereby preventing the flow of water in the second opening 1102B and the third opening 1103B, and further preventing the flow of water in the first opening 1101B. As a result, even though the eighth flow hole 108B of the planar valve 10B is in communication with the first flow hole 101B, it cannot form a flow passage that allows water to flow through; and even though the ninth flow hole 109B is in communication with the second flow hole 102B, it cannot form a flow passage that allows water to flow through. Therefore, water flow within the first water treatment device 51 and the second water treatment device 52 is prevented. Correspondingly, when the planar valve 10B is in the third backwash working position, water flow through the first water inlet 511 and the first water outlet 512 of the first water treatment device 51, water flow through the second water inlet 521 and the second water outlet 522 of the second water treatment device 52, are also prevented, to ensures that only the third water treatment device 53 is backwashed, so as to increase the intensity of the backwash flow directed at the third water treatment device 53 while simultaneously preventing the generated wastewater from flowing into the first water treatment device 51 and/or the third water treatment device 53. Therefore, when the planar valve 10B is in the third backwash working position, the third treatment device 53 of the water treatment device of the present invention is backwashed individually.

It is worth mentioning that when the planar valve 10B is in the third backwash working position, the flow passage formed by the communication between the ninth flow hole 109B and the second flow hole 102B, as well as the third flow hole 103B, are blocked by the rotating disk 122B respectively, thereby causing both the second opening 1102B and the third opening 1103B to be blocked. Even though the eighth flow hole 108B is in communication with the first flow hole 101B and the ninth flow hole 109B is in communication with the second flow hole 102B, the eighth flow hole 108B and the ninth flow hole 109B are both communicating blind holes, thereby resulting in no water flow within the first water treatment device 51 and the second water treatment device 52, and no water flowing in or out through the first opening 1101B, the second opening 1102B, and the third opening 1103B to ensure that only the third water treatment device 53 is backwashed, so as to not only increase the intensity of the raw water backwashing the third water treatment device 53 but also prevent the generated wastewater from flowing to the first water treatment device 51 and/or the second water treatment device 52. Therefore, when the planar valve 10B is in the third backwash working position, the third treatment device 53 of the water treatment device of the present invention is backwashed individually.

As shown in FIGS. 49D, 53, and 60D, as an example, when the planar valve 10B of the water treatment device according to the second embodiment of the present invention is controlled to be in the third backwash working position, raw water from the planar valve 10B, under water pressure, enters the third water treatment device 53 through its third water outlet 532, flows, under water pressure, from the third central tube 534 towards the third water treatment material 535, backwashing the third water treatment material 535, the generated wastewater exits the third water treatment device 53 through its third water inlet 531, flows, under water pressure, towards the fourth opening 1104B of the valve body 11B of the planar valve 10B, passes through the sixth backwash flow passage 7106B, is discharged through the drain opening 11010B.

As shown in FIG. 49E, FIG. 54, and FIG. 60E, the planar valve 10B of the water treatment device according to the second embodiment of the present invention further has a first rinse working position, when the planar valve 10B of the water treatment device of the present invention is in the first rinse working position, the seventh flow hole 107B of the planar valve 10B is in communication with the first flow hole 101B, thereby forming the first rinse flow passage 7201B that is in communication with the second fluid opening 1107B and the first opening 1101B respectively; and the tenth flow hole 1010B is in communication with the second flow hole 102B, thereby forming the second rinse flow passage 7202B communicating with the drain opening 11010B and the second opening 1102B respectively. As shown in FIG. 46A to FIG. 46F, FIG. 49E, and FIG. 60E, when the planar valve 10B of the water treatment device of the present invention is in the first rinse working position, the eighth flow hole 108B is in communication with the first flow hole 101B; the ninth flow hole 109B is blocked by the first fluid control surface 1210B of the fixed disk 121B; and the third flow hole 103B, the fourth flow hole 104B, and the fifth flow hole 105B are blocked by the second fluid control surface 1220B of the rotating disk 122B respectively. As shown in FIG. 49E, FIG. 54, and FIG. 60E, when the planar valve 10B is in the first rinse working position, the eighth flow hole 108B is in communication with the first flow hole 101B (the eighth flow hole 108B is in communication with one part of the first flow hole 101B, and the seventh flow hole 107B is in communication with another part of the first flow hole 101B); however, the eighth flow hole 108B is a communicating blind hole (a communicating blind hole that separately overlaps and communicates with a flow hole can be regarded as blocking the overlapping portion of the flow hole); the ninth flow hole 109B is blocked by the first fluid control surface 1210B of the fixed disk 121B; and the third flow hole 103B, the fourth flow hole 104B, and the fifth flow hole 105B are blocked by the second fluid control surface 1220B of the rotating disk 122B respectively, so that raw water can only flow from the second fluid opening 1107B of the planar valve 10B into the seventh flow hole 107B, and further pass through the first flow hole 101B and the first opening 1101B to flow to the first water inlet 511 of the first water treatment device 51 and into the first water treatment device 51; the wastewater generated from rinsing the first water treatment device 51 flows out from the first water outlet 512 of the first water treatment device 51 and flows to the second opening 1102B of the planar valve 10B, and under water pressure, further passes through the second flow hole 102B, the tenth flow hole 1010B, and the drain opening 11010B of the planar valve 10B to be discharged. In other words, although the eighth flow hole 108B is in communication with the first flow hole 101B, since the eighth flow hole 108B is a communicating blind hole, the flow passage formed by the eighth flow hole 108B and the first flow hole 101B is blocked by the rotating disk 122B; therefore, water flow does not pass through the flow passage formed by the eighth flow hole 108B and the first flow hole 101B, moreover, the ninth flow hole 109B is blocked by the first fluid control surface 1210B of the fixed disk 121B, and the third flow hole 103B, the fourth flow hole 104B, and the fifth flow hole 105B are blocked by the second fluid control surface 1220B of the rotating disk 122B respectively; since the third flow hole 103B is blocked by the second fluid control surface 1220B of the rotating disk 122B, the flow of wastewater generated from rinsing the first water treatment device 51 from the first water outlet 512 of the first water treatment device 51 toward the second water inlet 521 of the second water treatment device 52 is prevented. Therefore, when the planar valve 10B is in the first rinse working position, the eighth flow hole 108B is in communication with the first flow hole 101B, and the third flow hole 103B, the fourth flow hole 104B, and the fifth flow hole 105B are blocked by the second fluid control surface 1220B of the rotating disk 122B respectively, thereby preventing water flow from passing through the third opening 1103B, the fourth opening 1104B, and the fifth opening 1105B of the planar valve 10B, consequently, water flow is prevented from passing through the third opening 1103B, the fourth opening 1104B, and the fifth opening 1105B of the planar valve 10B, thus preventing the flow of water within the second water treatment device 52 and the third water treatment device 53. In other words, although the eighth flow hole 108B is in communication with the first flow hole 101B, the rotating disk 122B prevents raw water from flowing toward the third flow hole 103B, the fourth flow hole 104B, and the fifth flow hole 105B, thereby directing water flow only to the first water treatment device 51 and causing the first water treatment device 51 to be rinsed.

It is worth mentioning that when the planar valve 10B is in the first rinse working position, the flow passage formed by the communication between the eighth flow hole 108B and the first flow hole 101B, the third flow hole 103B, the fourth flow hole 104B, and the fifth flow hole 105B, are blocked by the rotating disk 122B respectively, so that no water flows in or out through the third opening 1103B, the fourth opening 1104B, and the fifth opening 1105B, in other words, water flow cannot reach the second water treatment device 52, and the third water treatment device 53 is isolated from the water flow, to ensure that only the first water treatment device 51 is rinsed, so as to not only increase the intensity of the raw water rinsing the first water treatment device 51 but also prevent the generated wastewater from flowing to the second water treatment device 52 and/or the third water treatment device 53. Therefore, when the planar valve 10B is in the first rinse working position, the first water treatment device 51 of the water treatment device of the present invention is rinsed individually.

As shown in FIG. 49E, FIG. 54, and FIG. 60E of the drawings, as an example, when the planar valve 10B of the water treatment device according to the second embodiment of the present invention is controlled to be in the first rinse working position, raw water from the planar valve 10B, under water pressure, flows from the first water inlet 511 of the first water treatment device 51 into the first water treatment device 51, then under water pressure, rinses the first water treatment material 515; the generated wastewater is collected by the first central tube 514 and flows out from the first water outlet 512 of the first water treatment device 51, and under water pressure, flows to the second opening 1102B of the planar valve 10B, then passes through the second rinse flow passage 7202B to flow to the drain opening 11010B and is discharged.

As shown in FIG. 49F, FIG. 55, and FIG. 60F, the planar valve 10B of the water treatment device according to the second embodiment of the present invention further has a second rinse working position, when the planar valve 10B of the water treatment device of the present invention is in the second rinse working position, the seventh flow hole 107B of the planar valve 10B is in communication with the second flow hole 102B, thereby forming the third rinse flow passage 7203B communicating with the second fluid opening 1107B and the second opening 1102B respectively; and the tenth flow hole 1010B is in communication with the third flow hole 103B, thereby forming the fourth rinse flow passage 7204B communicating with the drain opening 11010B and the third opening 1103B respectively.

As shown in FIG. 49G, FIG. 56, and FIG. 60G of the drawings, the planar valve 10B of the water treatment device according to the second embodiment of the present invention further has a third rinse working position, when the planar valve 10B of the water treatment device of the present invention is in the third rinse working position, the seventh flow hole 107B of the planar valve 10B is in communication with the fourth flow hole 104B, thereby forming the fifth rinse flow passage 7205B communicating with the second fluid opening 1107B and the fourth opening 1104B respectively; and the tenth flow hole 1010B is in communication with the fifth flow hole 105B, thereby forming the sixth rinse flow passage 7206B communicating with the drain opening 11010B and the fifth opening 1105B respectively.

As shown in FIG. 46A to FIG. 46F, FIG. 49H, FIG. 57A, FIG. 57B, and FIG. 60H, the planar valve 10B of the water treatment device according to the second embodiment of the present invention further has an eleventh flow hole 1011B, a twelfth flow hole 1012B, and a thirteenth flow hole 1013B; the eleventh flow hole 1011B, the twelfth flow hole 1012B, and the thirteenth flow hole 1013B are respectively provided in the fixed disk 121B and extend from the first fluid control surface 1210B of the fixed disk 121B; the eleventh flow hole 1011B is in communication with the fourth opening 1104B; the twelfth flow hole 1012B is in communication with the first injector opening 11012B; and the thirteenth flow hole 1013B is in communication with the second injector opening 11013B; wherein the planar valve 10B further has a regeneration working position; when the planar valve 10B of the water treatment device of the present invention is in the regeneration working position, the seventh flow hole 107B is in communication with the twelfth flow hole 1012B, thereby forming the first regeneration flow passage 7301B communicating with the second fluid opening 1107B and the first injector opening 11012B respectively; the eighth flow hole 108B is in communication with the thirteenth flow hole 1013B and the fifth flow hole 105B respectively, thereby forming the second regeneration flow passage 7302B communicating with the second injector opening 11013B and the fifth opening 1105B respectively; and the tenth flow hole 1010B is in communication with the eleventh flow hole 1011B, thereby forming the third regeneration flow passage 7303B communicating with the drain opening 11010B and the fourth opening 1104B respectively. As shown in FIG. 46A to FIG. 46F, FIG. 49H, and FIG. 60H, when the planar valve 10B of the water treatment device of the present invention is in the regeneration working position, the ninth flow hole 109B is blocked by the first fluid control surface 1210B of the fixed disk 121B; and the first flow hole 101B, the second flow hole 102B, the third flow hole 103B, and the fourth flow hole 104B are blocked by the second fluid control surface 1220B of the rotating disk 122B respectively. Therefore, when the planar valve 10B of the water treatment device of the present invention is in the regeneration working position, raw water under water pressure flows in from the second fluid opening 1107B of the valve body 11B of the planar valve 10B, passes through the first regeneration flow passage 7301B (the seventh flow hole 107B and the twelfth flow hole 1012B) to flow to the first injector opening 11012B of the valve body 11B, then flows into the nozzle outlet 182 of the injector 18, and after being injected by the injector 18, mixes with the brine (such as sodium chloride solution) from the brine suction inlet 181 to form a regenerant solution; the regenerant solution flows through the discharge outlet 183 of the injector 18 into the second injector opening 11013B of the valve body 11B, then passes through the second regeneration flow passage 7302B (the thirteenth flow hole 1013B, the eighth flow hole 108B, and the fifth flow hole 105B) to flow into the fifth opening 1105B of the valve body 11B; the regenerant solution flows from the third water outlet 532 into the third water treatment device 53, regenerates the third water treatment material 535 in up-flow mode, such as softening resin, and after regeneration, the generated wastewater flows out from the third water inlet 531, then sequentially passes through the fourth opening 1104B of the valve body 11B, the third regeneration flow passage 7303B (the eleventh flow hole 1011B and the tenth flow hole 1010B), and the drain opening 11010B to flow out. As shown in FIG. 46A to FIG. 46F, FIG. 49H, FIG. 57A, FIG. 57B, and FIG. 60H, specifically, when the planar valve 10B is in the regeneration working position, the ninth flow hole 109B is blocked by the first fluid control surface 1210B of the fixed disk 121B; and the first flow hole 101B, the second flow hole 102B, the third flow hole 103B, and the fourth flow hole 104B are blocked by the second fluid control surface 1220B of the rotating disk 122B respectively, so that raw water can only flow from the second fluid opening 1107B of the planar valve 10B into the seventh flow hole 107B, and further sequentially pass through the twelfth flow hole 1012B, the first injector opening 11012B, the injector 18, the second injector opening 11013B, the thirteenth flow hole 1013B, the eighth flow hole 108B, the fifth flow hole 105B, and the fifth opening 1105B to flow to the third water outlet 532 of the third water treatment device 53 and into the third water treatment device 53, regenerating the softening material (for example, softening resin) of the third water treatment device 53 in up-flow mode. The generated wastewater flows out from the third water inlet 531 of the third water treatment device 53 and flows to the fourth opening 1104B of the planar valve 10B, and under water pressure, further passes through the eleventh flow hole 1011B, the tenth flow hole 1010B, and the drain opening 11010B of the planar valve 10B to be discharged. In other words, when the planar valve 10B is in the regeneration working position, the ninth flow hole 109B is blocked by the first fluid control surface 1210B of the fixed disk 121B; and the first flow hole 101B, the second flow hole 102B, the third flow hole 103B, and the fourth flow hole 104B are blocked by the second fluid control surface 1220B of the rotating disk 122B respectively, thereby preventing water flow from passing through the first opening 1101B, the second opening 1102B, and the third opening 1103B of the planar valve 10B and preventing the flow of water within the first water treatment device 51 and the second water treatment device 52, so as to ensure that only the third water treatment device 53 (or the softening material of the third water treatment device 53) is regenerated in up-flow mode.

It is worth mentioning that when the planar valve 10B is in the regeneration working position, the ninth flow hole 109B is blocked by the fixed disk 121B; and the first flow hole 101B, the second flow hole 102B, the third flow hole 103B, and the fourth flow hole 104B are blocked by the rotating disk 122B respectively. In other words, both the first water treatment device 51 and the second water treatment device 52 are isolated from the water flow, to ensure that only the third water treatment device 53 is regenerated in up-flow mode, so as to not only increase the intensity of the regenerant solution regenerating the third water treatment device 53 in up-flow mode but also prevent the generated wastewater from flowing to the first water treatment device 51 and/or the second water treatment device 52. Especially, to prevent the regenerant solution (or the discharged wastewater after resin regeneration, as such wastewater has a high salt content) from entering the first water treatment device 51 and/or the second water treatment device 52. In practical use, the first water treatment device 51 or the second water treatment device 52 is often filled with filter material such as activated carbon or other adsorbent materials, the regenerant solution can contaminate filter material like activated carbon, thereby reducing the purification capacity of the first water treatment device 51 or the second water treatment device 52 (if they are configured as water purification devices). This is also a primary reason why multi-stage purification and softening water treatment systems cannot simply connect an activated carbon water treatment device and a softening resin water treatment device directly in series. Therefore, when the planar valve 10B is in the regeneration working position, the third water treatment device 53 of the water treatment device of the present invention is individually regenerated in up-flow mode, thereby preventing substances such as sodium chloride in the regeneration waste liquid from contaminating the activated carbon particles in the first water treatment device 51 or the second water treatment device 52 (if the first water treatment device 51 or the second water treatment device 52 uses activated carbon as the filter material).

As shown in FIG. 46A to FIG. 46F, FIG. 49H, FIG. 57A, FIG. 57B, and FIG. 60H, as an example, when the planar valve 10B of the water treatment device according to the second embodiment of the present invention is controlled to be in the regeneration working position, raw water from the planar valve 10B, under water pressure, mixes with the brine from the injector 18 to form a regenerant solution, flows from the third water outlet 532 of the third water treatment device 53 into the third water treatment device 53; then under water pressure, it passes through the third central tube 534 and regenerates the third water treatment material 535 in up-flow mode; the generated wastewater flows out from the third water inlet 531 of the third water treatment device 53, and under water pressure, flows to the fourth opening 1104B of the planar valve 10B, then passes through the third regeneration flow passage 7303B to flow to the drain opening 11010B and is discharged.

As shown in FIG. 46A to FIG. 46F, FIG. 49F, and FIG. 60F, when the planar valve 10B of the water treatment device of the present invention is in the second rinse working position, the eighth flow hole 108B is in communication with the first flow hole 101B and the eleventh flow hole 1011B respectively; the ninth flow hole 109B is in communication with the twelfth flow hole 1012B; and the fourth flow hole 104B, the fifth flow hole 105B, and the thirteenth flow hole 1013B are blocked by the second fluid control surface 1220B of the rotating disk 122B respectively. As shown in FIG. 46A to FIG. 46F, FIG. 49F, and FIG. 60F, specifically, when the planar valve 10B is in the second rinse working position, the eighth flow hole 108B is in communication with the first flow hole 101B and the eleventh flow hole 1011B respectively; the ninth flow hole 109B is in communication with the twelfth flow hole 1012B; and both the eighth flow hole 108B and the ninth flow hole 109B are communicating blind holes, so that the flow passage formed by the communication between the ninth flow hole 109B and the twelfth flow hole 1012B is blocked by the rotating disk 122B, simultaneously, the fourth flow hole 104B, the fifth flow hole 105B, and the thirteenth flow hole 1013B are blocked by the second fluid control surface 1220B of the rotating disk 122B respectively, thereby preventing water flow from entering the first opening 1101B, the fourth opening 1104B, the fifth opening 1105B, the first injector opening 11012B, and the second injector opening 11013B of the planar valve 10B through the valve chamber 110B of the planar valve 10B, and causing raw water to only flow from the second fluid opening 1107B of the planar valve 10B into the seventh flow hole 107B, and further pass through the second flow hole 102B and the second opening 1102B to flow to the second water inlet 521 of the second water treatment device 52 and into the second water treatment device 52; the wastewater generated from rinsing the second water treatment device 52 flows from the second water outlet 522 of the second water treatment device 52 to the third opening 1103B of the planar valve 10B, and under water pressure, further passes through the third flow hole 103B, the tenth flow hole 1010B, and the drain opening 11010B of the planar valve 10B to be discharged. In other words, when the planar valve 10B is in the second rinse working position, the eighth flow hole 108B is in communication with the first flow hole 101B and the eleventh flow hole 1011B respectively, and the ninth flow hole 109B is in communication with the twelfth flow hole 1012B, a water flow does not pass through the flow passages formed by them. Accordingly, when the planar valve 10B is in the second rinse working position, since the eighth flow hole 108B is in communication with the first flow hole 101B and the eleventh flow hole 1011B respectively, such that the second flow hole 102B, the second opening 1102B, the first water treatment device 51, the first opening 1101B, the first flow hole 101B, the eighth flow hole 108B, the eleventh flow hole 1011B, the fourth opening 1104B, the third water treatment device 53, the fifth opening 1105B and the fifth flow hole 105B form a flow passage, however, both the fourth flow hole 104B and the fifth flow hole 105B are blocked by the rotating disk 122B, the fifth opening 1105B is blocked, which prevents water flow from passing through the flow passage formed by the second flow hole 102B, the second opening 1102B, the first water treatment device 51, the first opening 1101B, the first flow hole 101B, the eighth flow hole 108B, the eleventh flow hole 1011B, the fourth opening 1104B, the third water treatment device 53, the fifth opening 1105B, and the fifth flow hole 105B. Furthermore, when the planar valve 10B is in the second rinse working position, the ninth flow hole 109B is in communication with the twelfth flow hole 1012B, and the ninth flow hole 109B is a communicating blind hole, so that the flow passage formed by the communication between the ninth flow hole 109B and the twelfth flow hole 1012B is blocked by the rotating disk 122B, thereby preventing water flow from exiting or entering through the flow passage formed by the communication between the ninth flow hole 109B and the twelfth flow hole 1012B; the fifth flow hole 105B is blocked by the rotating disk 122B, thereby preventing water flow from flowing from the fifth flow hole 105B to the third water treatment device 53, or from the third water treatment device 53 to the fifth flow hole 105B. In other words, the flow of rinse water from the second opening 1102B toward the first water outlet 512 of the first water treatment device 51 is prevented, thereby preventing water flow from passing through the first water treatment device 51 and the third water treatment device 53, thus ensuring that only the second water treatment device 52 is rinsed.

It is worth mentioning that when the planar valve 10B is in the second rinse working position, the flow passage formed by the communication between the ninth flow hole 109B and the twelfth flow hole 1012B, as well as the fourth flow hole 104B, the fifth flow hole 105B, and the thirteenth flow hole 1013B, are blocked by the rotating disk 122B respectively; there is no water flow within the first water treatment device 51, and there is no water flow within the third water treatment device 53, to ensure that only the second water treatment device 52 is rinsed, so as to not only increase the intensity of the raw water rinsing the second water treatment device 52 but also prevent the generated wastewater from flowing to the first water treatment device 51 and/or the third water treatment device 53. Therefore, when the planar valve 10B is in the second rinse working position, the second treatment device 52 of the water treatment device of the present invention is rinsed individually.

As shown in FIG. 46A to FIG. 46F, FIG. 49F, and FIG. 60F, as an example, when the planar valve 10B of the water treatment device according to the second embodiment of the present invention is controlled to be in the second rinse working position, raw water from the planar valve 10B, under water pressure, flows from the second water inlet 521 of the second water treatment device 52 into the second water treatment device 52, then under water pressure, rinses the second water treatment material 525; the generated wastewater is collected by the second central tube 524 and flows out from the second water outlet 522 of the second water treatment device 52, and under water pressure, flows to the third opening 1103B of the planar valve 10B, then passes through the fourth rinse flow passage 7204B to flow to the drain opening 11010B and is discharged.

As shown in FIG. 46A to FIG. 46F, FIG. 49G, and FIG. 60G, when the planar valve 10B of the water treatment device of the present invention is in the third rinse working position, the eighth flow hole 108B is in communication with the second flow hole 102B and the twelfth flow hole 1012B respectively; the ninth flow hole 109B is in communication with the first flow hole 101B; and the third flow hole 103B, the eleventh flow hole 1011B, and the thirteenth flow hole 1013B are blocked by the second fluid control surface 1220B of the rotating disk 122B respectively. As shown in FIG. 46A to FIG. 46F, FIG. 49G, and FIG. 60G, specifically, when the planar valve 10B is in the third rinse working position, the eighth flow hole 108B is in communication with the second flow hole 102B and the twelfth flow hole 1012B respectively; the ninth flow hole 109B is in communication with the first flow hole 101B; the third flow hole 103B, the eleventh flow hole 1011B, and the thirteenth flow hole 1013B are blocked by the second fluid control surface 1220B of the rotating disk 122B respectively; and both the eighth flow hole 108B and the ninth flow hole 109B are communicating blind holes, so that raw water can only flow from the second fluid opening 1107B of the planar valve 10B into the seventh flow hole 107B, and further pass through the fourth flow hole 104B and the fourth opening 1104B to flow to the third water inlet 531 of the third water treatment device 53 and into the third water treatment device 53; the wastewater generated from rinsing the third water treatment device 53 flows out from the third water outlet 532 of the third water treatment device 53 and flows to the fifth opening 1105B of the planar valve 10B, and under water pressure, further passes through the fifth flow hole 105B, the tenth flow hole 1010B, and the drain opening 11010B of the planar valve 10B to be discharged. In other words, the eighth flow hole 108B is in communication with the second flow hole 102B and the twelfth flow hole 1012B respectively; the ninth flow hole 109B is in communication with the first flow hole 101B; However, both the eighth flow hole 108B and the ninth flow hole 109B are communicating blind holes, so that the flow passage formed by the communication between the ninth flow hole 109B and the first flow hole 101B is blocked by the rotating disk 122B, although the eighth flow hole 108B is in communication with the second flow hole 102B and the twelfth flow hole 1012B respectively, the third flow hole 103B, the eleventh flow hole 1011B, and the thirteenth flow hole 1013B are blocked by the second fluid control surface 1220B of the rotating disk 122B respectively, thereby preventing water flow from entering the first opening 1101B, the second opening 1102B, the third opening 1103B, the first injector opening 11012B, and the second injector opening 11013B of the planar valve 10B, and causing raw water to only flow from the second fluid opening 1107B of the planar valve 10B into the seventh flow hole 107B, and further pass through the fourth flow hole 104B and the fourth opening 1104B to flow to the third water inlet 531 of the third water treatment device 53 and into the third water treatment device 53; then under water pressure, rinses the third water treatment material 535; the generated wastewater is collected by the third central tube 534 and flows out from the third water outlet 532 of the third water treatment device 53, flows to the fifth opening 1105B of the planar valve 10B, and under water pressure, further passes through the fifth flow hole 105B, the tenth flow hole 1010B, and the drain opening 11010B of the planar valve 10B to be discharged. In other words, when the planar valve 10B is in the third rinse working position, although the eighth flow hole 108B is in communication with the second flow hole 102B and the twelfth flow hole 1012B respectively, and the ninth flow hole 109B is in communication with the first flow hole 101B, but water flow does not pass through the flow passages formed by them. Accordingly, when the planar valve 10B is in the third rinse working position, since the eighth flow hole 108B is in communication with the second flow hole 102B and the twelfth flow hole 1012B respectively, and the second opening 1102B of the valve body 11B, the first water outlet 512 of the first water treatment device 51, and the second water inlet 521 of the second water treatment device 52 form the three-way structure 61, a flow passage is formed by the first injector opening 11012B, the twelfth flow hole 1012B, the eighth flow hole 108B, the second flow hole 102B, the second opening 1102B, the first water treatment device 51, the first opening 1101B, and the first flow hole 101B; and another flow passage is formed by the first injector opening 11012B, the twelfth flow hole 1012B, the eighth flow hole 108B, the second flow hole 102B, the second opening 1102B, the second water treatment device 52, the third opening 1103B, and the third flow hole 103B, however, since the flow passage formed by the communication between the ninth flow hole 109B and the first flow hole 101B is blocked by the rotating disk 122B, and the third flow hole 103B is blocked by the second fluid control surface 1220B of the rotating disk 122B, the first opening 1101B and the third opening 1103B are blocked, thereby preventing water flow from passing through the second opening 1102B and the first injector opening 11012B, furthermore, since the thirteenth flow hole 1013B is blocked by the second fluid control surface 1220B of the rotating disk 122B, the second injector opening 11013B is blocked by the rotating disk 122B, thereby preventing water flow from passing through the injector 18. In other words, water flow cannot enter the first water treatment device 51 and the second water treatment device 52, thereby ensuring that only the third water treatment device 53 is rinsed.

It is worth mentioning that when the planar valve 10B is in the third rinse working position, the flow passage formed by the communication between the ninth flow hole 109B and the first flow hole 101B, as well as the third flow hole 103B, the eleventh flow hole 1011B, and the thirteenth flow hole 1013B, are blocked by the rotating disk 122B respectively, causing the first injector opening 11012B, the twelfth flow hole 1012B, the eighth flow hole 108B, the second flow hole 102B, the second opening 1102B, the first water treatment device 51 (and the second water treatment device 52), the first opening 1101B (and the third opening 1103B), and the first flow hole 101B (and the third flow hole 103B) to form a flow passage isolated from the raw water. In other words, when the planar valve 10B is in the third rinse working position, the first water treatment device 51 and the second water treatment device 52 are isolated from the water flow, to ensure that only the third water treatment device 53 is rinsed, so as to increase the intensity of the raw water rinsing the third water treatment device 53 but also prevent the generated wastewater from flowing to the first water treatment device 51 and/or the second water treatment device 52. Therefore, when the planar valve 10B is in the third rinse working position, the third treatment device 53 of the water treatment device of the present invention is rinsed individually.

As shown in FIG. 46A to FIG. 46F, FIG. 49G, and FIG. 60G, as an example, when the planar valve 10B of the water treatment device according to the second embodiment of the present invention is controlled to be in the third rinse working position, raw water from the planar valve 10B, under water pressure, flows from the third water inlet 531 of the third water treatment device 53 into the third water treatment device 53, then under water pressure, rinses the third water treatment material 535; the generated wastewater is collected by the third central tube 534 and flows out from the third water outlet 532 of the third water treatment device 53, and under water pressure, flows to the fifth opening 1105B of the planar valve 10B, then passes through the sixth rinse flow passage 7206B to flow to the drain opening 11010B and is discharged.

As shown in FIG. 49I, FIG. 58, and FIG. 60I, the planar valve 10B of the water treatment device according to the second embodiment of the present invention further has a water refill working position. When the planar valve 10B is in the water refill working position, the seventh flow hole 107B is in communication with the thirteenth flow hole 1013B, thereby forming the water refill flow passage 7401B communicating with the second fluid opening 1107B and the second injector opening 11013B respectively. As shown in FIG. 46A to FIG. 46F, FIG. 49I, and FIG. 60I, when the planar valve 10B is in the water refill working position, the eighth flow hole 108B is in communication with the first flow hole 101B and the second flow hole 102B respectively; the ninth flow hole 109B is in communication with the third flow hole 103B; the tenth flow hole 1010B is blocked by the first fluid control surface 1210B of the fixed disk 121B; and the fourth flow hole 104B, the fifth flow hole 105B, the eleventh flow hole 1011B, and the twelfth flow hole 1012B are blocked by the second fluid control surface 1220B of the rotating disk 122B respectively. Although the eighth flow hole 108B is in communication with the first flow hole 101B and the second flow hole 102B respectively, and the ninth flow hole 109B is in communication with the third flow hole 103B, since the fourth flow hole 104B, the fifth flow hole 105B, the eleventh flow hole 1011B, and the twelfth flow hole 1012B are blocked by the rotating disk 122B respectively, the fourth flow hole 104B (and the eleventh flow hole 1011B), the fourth opening 1104B, the third water treatment device 53, the fifth opening 1105B, and the fifth flow hole 105B form a flow passage isolated from the raw water; the eighth flow hole 108B is in communication with the first flow hole 101B and the second flow hole 102B respectively, the ninth flow hole 109B is in communication with the third flow hole 103B, and both the eighth flow hole 108B and the ninth flow hole 109B are communicating blind holes; the flow passage formed by the communication between the ninth flow hole 109B and the third flow hole 103B is blocked by the rotating disk 122B, thereby causing the eighth flow hole 108B, the second flow hole 102B, the second opening 1102B, the first water treatment device 51, the first opening 1101B, the first flow hole 101B, and the eighth flow hole 108B to form a flow passage isolated from the raw water; and causing the eighth flow hole 108B, the second flow hole 102B, the second opening 1102B, the second water treatment device 52, the third opening 1103B, the third flow hole 103B, and the ninth flow hole 109B to form another flow passage isolated from the raw water, so that raw water cannot flow to the first water treatment device 51, the second water treatment device 52, and the third water treatment device 53.

As shown in FIG. 49A, FIG. 50D, and FIG. 60A, the planar valve 10B of the water treatment device according to the second embodiment of the present invention further has a water supply flow hole 1015B; the water supply flow hole 1015B is provided in the fixed disk 121B and extends from the first fluid control surface 1210B of the fixed disk 121B; and the water supply flow hole 1015B is in communication with the third fluid opening 1115B. As shown in FIG. 49A, FIG. 50A to FIG. 50D, and FIG. 60A, when the planar valve 10B is in the water treatment working position, the eighth flow hole 108B of the planar valve 10B is further in communication with the third flow hole 103B and the water supply flow hole 1015B respectively, thereby forming the fourth water treatment flow passage 7004B communicating with the third opening 1103B and the third fluid opening 1115B of the valve body 11B respectively. That is to say, when the planar valve 10B is in the water treatment working position, the seventh flow hole 107B of the planar valve 10B is in communication with the first flow hole 101B, thereby forming the first water treatment flow passage 7001B that is in communication with the second fluid opening 1107B and the first opening 1101B respectively; the eighth flow hole 108B is in communication with the third flow hole 103B, the fourth flow hole 104B, and the water supply flow hole 1015B respectively, thereby forming the second water treatment flow passage 7002B communicating with the third opening 1103B and the fourth opening 1104B respectively and forming the fourth water treatment flow passage 7004B communicating with the third opening 1103B and the third fluid opening 1115B respectively; and the ninth flow hole 109B is in communication with the fifth flow hole 105B and the sixth flow hole 106B respectively, thereby forming the third water treatment flow passage 7003B communicating with the fifth opening 1105B and the first fluid opening 1106B respectively. It can be understood that when the planar valve 10B is in the water treatment working position, the third flow hole 103B, the fourth flow hole 104B, and the water supply flow hole 1015B are in communication with each other through the eighth flow hole 108B, thereby causing the third opening 1103B, the fourth opening 1104B, and the third fluid opening 1115B to form a three-way structure. Preferably, the water supply flow hole 1015B is arranged outward of the fourth flow hole 104B. As shown in FIG. 46A to FIG. 46F, FIG. 49A, and FIG. 60A, when the planar valve 10B is in the water treatment working position, the second flow hole 102B, the eleventh flow hole 1011B, the twelfth flow hole 1012B, and the thirteenth flow hole 1013B are blocked by the second fluid control surface 1220B of the rotating disk 122B respectively, and the tenth flow hole 1010B is blocked by the first fluid control surface 1210B of the fixed disk 121B.

As shown in FIG. 59A, FIG. 59B, and FIG. 60B to FIG. 60I, when the planar valve 10B of the water treatment device according to the second embodiment of the present invention is in the first backwash working position, the second backwash working position, the third backwash working position, the first rinse working position, the second rinse working position, the third rinse working position, the regeneration working position, or the water refill working position, the sixth flow hole 106B of the planar valve 10B is in communication with the valve chamber 110B of the valve body 11B and is further in communication with the second fluid opening 1107B through the valve chamber 110B, thereby forming the first raw water supply flow passage 7501B communicating with the second fluid opening 1107B and the first fluid opening 1106B of the valve body 11B respectively; the water supply flow hole 1015B of the planar valve 10B is in communication with the valve chamber 110B of the valve body 11B and is further in communication with the second fluid opening 1107B through the valve chamber 110B, thereby forming the second raw water supply flow passage 7502B communicating with the second fluid opening 1107B and the third fluid opening 1115B of the valve body 11B respectively.

As shown in FIG. 45C to FIG. 49I of the drawings, the first flow hole 101B of the planar valve 10B of the water treatment device according to the second embodiment of the present invention has a first communication portion 10101B and a second communication portion 10102B, wherein the first communication portion 10101B of the first flow hole 101B is in communication with the first opening 1101B, and the second communication portion 10102B of the first flow hole 101B is in communication with the first opening 1101B. Preferably, the first flow hole 101B of the planar valve 10B further has a third communication portion 10103B extending between the first communication portion 10101B and the second communication portion 10102B; the second communication portion 10102B of the first flow hole 101B is in communication with the first opening 1101B; and the first communication portion 10101B of the first flow hole 101B is in communication with the second communication portion 10102B through the third communication portion 10103B; that is to say, the first communication portion 10101B of the first flow hole 101B is in communication with the first opening 1101B through the third communication portion 10103B and the second communication portion 10102B. Preferably, the eleventh flow hole 1011B of the planar valve 10B is arranged outward of the third communication portion 10103B. The second flow hole 102B of the planar valve 10B has a first conduction portion 10201B and a second conduction portion 10202B, wherein the first conduction portion 10201B of the second flow hole 102B is in communication with the second opening 1102B, and the second conduction portion 10202B of the second flow hole 102B is in communication with the second opening 1102B. Preferably, the second flow hole 102B of the planar valve 10B further has a third conduction portion 10203B extending between the first conduction portion 10201B and the second conduction portion 10202B; the first conduction portion 10201B of the second flow hole 102B is in communication with the second opening 1102B; and the second conduction portion 10202B of the second flow hole 102B is in communication with the first conduction portion 10201B through the third conduction portion 10203B; that is to say, the second conduction portion 10202B of the second flow hole 102B is in communication with the second opening 1102B through the third conduction portion 10203B and the first conduction portion 10201B. Preferably, the fifth flow hole 105B, the twelfth flow hole 1012B, and the thirteenth flow hole 1013B of the planar valve 10B are arranged on the outer side of the third conduction portion 10203B; when the planar valve 10B is in the water treatment working position, the seventh flow hole 107B of the planar valve 10B is in communication with the first communication portion 10101B of the first flow hole 101B; the eighth flow hole 108B is in communication with the third flow hole 103B, the fourth flow hole 104B, and the water supply flow hole 1015B respectively; the ninth flow hole 109B is in communication with the fifth flow hole 105B and the sixth flow hole 106B respectively; the eleventh flow hole 1011B, the twelfth flow hole 1012B, and the thirteenth flow hole 1013B are blocked by the second fluid control surface 1220B of the rotating disk 122B respectively; the second communication portion 10102B and the third communication portion 10103B of the first flow hole 101B, and the first conduction portion 10201B, the second conduction portion 10202B, and the third conduction portion 10203B of the second flow hole 102B are blocked by the second fluid control surface 1220B of the rotating disk 122B respectively; and the tenth flow hole 1010B is blocked by the first fluid control surface 1210B of the fixed disk 121B; when the planar valve 10B is in the first backwash working position, the seventh flow hole 107B of the planar valve 10B is in communication with the second conduction portion 10202B of the second flow hole 102B; the tenth flow hole 1010B is in communication with the second communication portion 10102B of the first flow hole 101B; the eighth flow hole 108B is in communication with the thirteenth flow hole 1013B; the ninth flow hole 109B is in communication with the first communication portion 10101B of the first flow hole 101B; the third flow hole 103B, the fourth flow hole 104B, the fifth flow hole 105B, the eleventh flow hole 1011B, and the twelfth flow hole 1012B are blocked by the second fluid control surface 1220B of the rotating disk 122B respectively; and the third communication portion 10103B of the first flow hole 101B, and the first conduction portion 10201B and the third conduction portion 10203B of the second flow hole 102B are blocked by the second fluid control surface 1220B of the rotating disk 122B respectively; when the planar valve 10B is in the second backwash working position, the seventh flow hole 107B of the planar valve 10B is in communication with the third flow hole 103B; the tenth flow hole 1010B is in communication with the first conduction portion 10201B of the second flow hole 102B; the eighth flow hole 108B is in communication with the twelfth flow hole 1012B; the ninth flow hole 109B is in communication with the eleventh flow hole 1011B; the fourth flow hole 104B, the fifth flow hole 105B, and the thirteenth flow hole 1013B are blocked by the second fluid control surface 1220B of the rotating disk 122B respectively; and the first communication portion 10101B, the second communication portion 10102B, and the third communication portion 10103B of the first flow hole 101B, and the second conduction portion 10202B and the third conduction portion 10203B of the second flow hole 102B are blocked by the second fluid control surface 1220B of the rotating disk 122B respectively; when the planar valve 10B is in the third backwash working position, the seventh flow hole 107B is in communication with the fifth flow hole 105B; the tenth flow hole 1010B is in communication with the fourth flow hole 104B; the eighth flow hole 108B is in communication with the second communication portion 10102B of the first flow hole 101B and the eleventh flow hole 1011B respectively; the ninth flow hole 109B is in communication with the second conduction portion 10202B of the second flow hole 102B; the third flow hole 103B, the twelfth flow hole 1012B, and the thirteenth flow hole 1013B are blocked by the second fluid control surface 1220B of the rotating disk 122B respectively; and the first communication portion 10101B and the third communication portion 10103B of the first flow hole 101B, and the first conduction portion 10201B and the third conduction portion 10203B of the second flow hole 102B are blocked by the second fluid control surface 1220B of the rotating disk 122B respectively; when the planar valve 10B is in the first rinse working position, the seventh flow hole 107B of the planar valve 10B is in communication with the second communication portion 10102B of the first flow hole 101B; the tenth flow hole 1010B is in communication with the second conduction portion 10202B of the second flow hole 102B; the eighth flow hole 108B is in communication with the first communication portion 10101B of the first flow hole 101B; the ninth flow hole 109B is blocked by the first fluid control surface 1210B of the fixed disk 121B; the third flow hole 103B, the fourth flow hole 104B, the fifth flow hole 105B, the eleventh flow hole 1011B, the twelfth flow hole 1012B, and the thirteenth flow hole 1013B are blocked by the second fluid control surface 1220B of the rotating disk 122B respectively; and the third communication portion 10103B of the first flow hole 101B, and the first conduction portion 10201B and the third conduction portion 10203B of the second flow hole 102B are blocked by the second fluid control surface 1220B of the rotating disk 122B respectively; when the planar valve 10B is in the second rinse working position, the seventh flow hole 107B of the planar valve 10B is in communication with the first conduction portion 10201B of the second flow hole 102B; the tenth flow hole 1010B is in communication with the third flow hole 103B; the eighth flow hole 108B is in communication with the first communication portion 10101B of the first flow hole 101B and the eleventh flow hole 1011B respectively; the ninth flow hole 109B is in communication with the twelfth flow hole 1012B; the fourth flow hole 104B, the fifth flow hole 105B, and the thirteenth flow hole 1013B are blocked by the second fluid control surface 1220B of the rotating disk 122B respectively; and the second communication portion 10102B and the third communication portion 10103B of the first flow hole 101B, and the second conduction portion 10202B and the third conduction portion 10203B of the second flow hole 102B are blocked by the second fluid control surface 1220B of the rotating disk 122B respectively; when the planar valve 10B is in the third rinse working position, the seventh flow hole 107B of the planar valve 10B is in communication with the fourth flow hole 104B; the tenth flow hole 1010B is in communication with the fifth flow hole 105B; the eighth flow hole 108B is in communication with the second conduction portion 10202B of the second flow hole 102B and the twelfth flow hole 1012B respectively; the ninth flow hole 109B is in communication with the second communication portion 10102B of the first flow hole 101B; the third flow hole 103B, the eleventh flow hole 1011B, and the thirteenth flow hole 1013B are blocked by the second fluid control surface 1220B of the rotating disk 122B respectively; and the first communication portion 10101B and the third communication portion 10103B of the first flow hole 101B, and the first conduction portion 10201B and the third conduction portion 10203B of the second flow hole 102B are blocked by the second fluid control surface 1220B of the rotating disk 122B respectively; when the planar valve 10B is in the regeneration working position, the seventh flow hole 107B is in communication with the twelfth flow hole 1012B; the eighth flow hole 108B is in communication with the thirteenth flow hole 1013B and the fifth flow hole 105B respectively; the tenth flow hole 1010B is in communication with the eleventh flow hole 1011B; the ninth flow hole 109B is blocked by the first fluid control surface 1210B of the fixed disk 121B; the third flow hole 103B and the fourth flow hole 104B are blocked by the second fluid control surface 1220B of the rotating disk 122B respectively; and the first communication portion 10101B, the second communication portion 10102B, and the third communication portion 10103B of the first flow hole 101B, and the first conduction portion 10201B, the second conduction portion 10202B, and the third conduction portion 10203B of the second flow hole 102B are blocked by the second fluid control surface 1220B of the rotating disk 122B respectively; when the planar valve 10B is in the water refill working position, the seventh flow hole 107B is in communication with the thirteenth flow hole 1013B; the eighth flow hole 108B is in communication with the second communication portion 10102B of the first flow hole 101B and the first conduction portion 10201B of the second flow hole 102B respectively; the ninth flow hole 109B is in communication with the third flow hole 103B; the tenth flow hole 1010B is blocked by the first fluid control surface 1210B of the fixed disk 121B; the fourth flow hole 104B, the fifth flow hole 105B, the eleventh flow hole 1011B, and the twelfth flow hole 1012B are blocked by the second fluid control surface 1220B of the rotating disk 122B respectively; and the first communication portion 10101B and the third communication portion 10103B of the first flow hole 101B, and the second conduction portion 10202B and the third conduction portion 10203B of the second flow hole 102B are blocked by the second fluid control surface 1220B of the rotating disk 122B respectively. Preferably, the third communication portion 10103B of the first flow hole 101B is arranged on the first fluid control surface 1210B of the fixed disk 121B of the planar valve 10B. Alternatively, the third communication portion 10103B of the first flow hole 101B is disposed inside the fixed disk 121B of the planar valve 10B. Alternatively, the third communication portion 10103B of the first flow hole 101B is disposed inside the valve body 11B of the planar valve 10B. Preferably, the third conduction portion 10203B of the second flow hole 102B is arranged on the first fluid control surface 1210B of the fixed disk 121B of the planar valve 10B. Alternatively, the third conduction portion 10203B of the second flow hole 102B is disposed inside the fixed disk 121B of the planar valve 10B. Alternatively, the third conduction portion 10203B of the second flow hole 102B is disposed inside the valve body 11B of the planar valve 10B.

As shown in FIG. 46A to FIG. 48B, the first fluid control surface 1210B of the fixed disk 121B of the planar valve 10B of the water treatment device according to the second embodiment of the present invention forms a central portion 12101B, an extension portion 12102B extending outward from the central portion 12101B, and an edge portion 12103B extending outward from the extension portion 12102B; the first communication portion 10101B of the first flow hole 101B, the fourth flow hole 104B and the water supply flow hole 1015B, the third flow hole 103B, the second conduction portion 10202B of the second flow hole 102B, the twelfth flow hole 1012B, the thirteenth flow hole 1013B, the fifth flow hole 105B and the sixth flow hole 106B, the first conduction portion 10201B of the second flow hole 102B, the second communication portion 10102B of the first flow hole 101B, and the eleventh flow hole 1011B of the planar valve 10B are arranged in this order clockwise on the edge portion 12103B of the first fluid control surface 1210B of the fixed disk 121B; the seventh flow hole 107B, the eighth flow hole 108B, the tenth flow hole 1010B, and the ninth flow hole 109B of the planar valve 10B are arranged in this order clockwise on the second fluid control surface 1220B of the rotating disk 122B. Alternatively, the first communication portion 10101B of the first flow hole 101B, the fourth flow hole 104B and the water supply flow hole 1015B, the third flow hole 103B, the second conduction portion 10202B of the second flow hole 102B, the twelfth flow hole 1012B, the thirteenth flow hole 1013B, the fifth flow hole 105B and the sixth flow hole 106B, the first conduction portion 10201B of the second flow hole 102B, the second communication portion 10102B of the first flow hole 101B, and the eleventh flow hole 1011B of the planar valve 10B are arranged in this order counterclockwise on the edge portion 12103B of the first fluid control surface 1210B of the fixed disk 121B; the seventh flow hole 107B, the eighth flow hole 108B, the tenth flow hole 1010B, and the ninth flow hole 109B of the planar valve 10B are arranged in this order counterclockwise on the second fluid control surface 1220B of the rotating disk 122B. Preferably, the first flow hole 101B, the fourth flow hole 104B and the water supply flow hole 1015B, the third flow hole 103B, the second flow hole 102B, the twelfth flow hole 1012B, the thirteenth flow hole 1013B, the fifth flow hole 105B and the sixth flow hole 106B, and the eleventh flow hole 1011B of the planar valve 10B are arranged spaced apart from each other on the first fluid control surface 1210B of the fixed disk 121B; the seventh flow hole 107B, the eighth flow hole 108B, the tenth flow hole 1010B, and the ninth flow hole 109B of the planar valve 10B are arranged spaced apart from each other on the second fluid control surface 1220B of the rotating disk 122B. Preferably, the third communication portion 10103B of the first flow hole 101B and the third conduction portion 10203B of the second flow hole 102B are arranged in the extension portion 12102B of the first fluid control surface 1210B of the fixed disk 121B; the sixth flow hole 106B is arranged on the outer side of the fifth flow hole 105B; and the water supply flow hole 1015B is arranged on the outer side of the fourth flow hole 104B.

As shown in FIG. 46A to FIG. 48B, the first fluid control surface 1210B of the fixed disk 121B of the planar valve 10B of the water treatment device according to the second embodiment of the present invention has the central portion 12101B, the extension portion 12102B, and the edge portion 12103B, as shown by the chain lines in the figures, wherein the central portion 12101B, the extension portion 12102B, and the edge portion 12103B are provided at the top end portion 1214B of the fixed disk 121B, and the edge portion 12103B (or the portion outside the extension portion 12102B) of the first fluid control surface 1210B is equally divided into a first section 1201B, a second section 1202B, a third section 1203B, a fourth section 1204B, a fifth section 1205B, a sixth section 1206B, a seventh section 1207B, an eighth section 1208B, a ninth section 1209B, a tenth section 12010B, an eleventh section 12011B, and a twelfth section 12012B, as shown by the chain lines in the figures; the second fluid control surface 1220B of the rotating disk 122B of the planar valve 10B has a central region 12201B, an extension region 12202B extending outward from the central region 12201B, and an edge region 12203B extending outward from the extension region 12202B, as shown by the chain lines in the figures, wherein the central region 12201B, the extension region 12202B, and the edge region 12203B are provided at the bottom end portion 1221B of the rotating disk 122B, and the edge region 12203B (the portion outside the extension region 12202B) of the second fluid control surface 1220B is equally divided into a first area 2001B, a second area 2002B, a third area 2003B, a fourth area 2004B, a fifth area 2005B, a sixth area 2006B, a seventh area 2007B, an eighth area 2008B, a ninth area 2009B, a tenth area 20010B, an eleventh area 20011B, and a twelfth area 20012B, as shown by the chain lines in the figures; wherein the first flow hole 101B extends downward from the first section 1201B and the eleventh section 12011B of the first fluid control surface 1210B of the fixed disk 121B respectively; the fourth flow hole 104B and the water supply flow hole 1015B extend downward from the third section 1203B of the first fluid control surface 1210B of the fixed disk 121B respectively; the third flow hole 103B extends downward from the fourth section 1204B of the first fluid control surface 1210B of the fixed disk 121B; the second flow hole 102B extends downward from the fifth section 1205B and the tenth section 12010B of the first fluid control surface 1210B of the fixed disk 121B respectively; the twelfth flow hole 1012B extends downward from the sixth section 1206B of the first fluid control surface 1210B of the fixed disk 121B; the thirteenth flow hole 1013B extends downward from the eighth section 1208B of the first fluid control surface 1210B of the fixed disk 121B; the fifth flow hole 105B and the sixth flow hole 106B extend downward from the ninth section 1209B of the first fluid control surface 1210B of the fixed disk 121B respectively; the eleventh flow hole 1011B extends downward from the twelfth section 12012B of the first fluid control surface 1210B of the fixed disk 121B; the sixth flow hole 106B is arranged on the outer side of the fifth flow hole 105B; the water supply flow hole 1015B is arranged on the outer side of the fourth flow hole 104B; the seventh flow hole 107B extends upward from the first area 2001B of the second fluid control surface 1220B of the rotating disk 122B; the eighth flow hole 108B extends upward from the third area 2003B and the fourth area 2004B of the second fluid control surface 1220B of the rotating disk 122B; the tenth flow hole 1010B extends upward from the seventh area 2007B of the second fluid control surface 1220B of the rotating disk 122B; and the ninth flow hole 109B extends upward from the ninth area 2009B of the second fluid control surface 1220B of the rotating disk 122B. More specifically, the first communication portion 10101B of the first flow hole 101B extends downward from the first section 1201B of the first fluid control surface 1210B of the fixed disk 121B; the second communication portion 10102B of the first flow hole 101B extends downward from the eleventh section 12011B of the first fluid control surface 1210B of the fixed disk 121B; the first conduction portion 10201B of the second flow hole 102B extends downward from the tenth section 12010B of the first fluid control surface 1210B of the fixed disk 121B; and the second conduction portion 10202B of the second flow hole 102B extends downward from the fifth section 1205B of the first fluid control surface 1210B of the fixed disk 121B. Preferably, the third communication portion 10103B of the first flow hole 101B and the third conduction portion 10203B of the second flow hole 102B extend downward from the extension portion 12102B of the first fluid control surface 1210B of the fixed disk 121B, respectively.

As shown in FIG. 46A to FIG. 49I and FIG. 60A to FIG. 60I, preferably, the edge portion 12103B of the first fluid control surface 1210B of the fixed disk 121B of the planar valve 10B is equally divided clockwise into the first section 1201B, the second section 1202B, the third section 1203B, the fourth section 1204B, the fifth section 1205B, the sixth section 1206B, the seventh section 1207B, the eighth section 1208B, the ninth section 1209B, the tenth section 12010B, the eleventh section 12011B, and the twelfth section 12012B; the edge region 12203B of the second fluid control surface 1220B of the rotating disk 122B of the planar valve 10B is equally divided clockwise into the first area 2001B, the second area 2002B, the third area 2003B, the fourth area 2004B, the fifth area 2005B, the sixth area 2006B, the seventh area 2007B, the eighth area 2008B, the ninth area 2009B, the tenth area 20010B, the eleventh area 20011B and the twelfth area 20012B. Alternatively, the edge portion 12103B of the first fluid control surface 1210B is equally divided counterclockwise into the first section 1201B, the second section 1202B, the third section 1203B, the fourth section 1204B, the fifth section 1205B, the sixth section 1206B, the seventh section 1207B, the eighth section 1208B, the ninth section 1209B, the tenth section 12010B, the eleventh section 12011B, and the twelfth section 12012B; the edge region 12203B of the second fluid control surface 1220B of the rotating disk 122B of the planar valve 10B is equally divided counterclockwise into the first area 2001B, the second area 2002B, the third area 2003B, the fourth area 2004B, the fifth area 2005B, the sixth area 2006B, the seventh area 2007B, the eighth area 2008B, the ninth area 2009B, the tenth area 20010B, the eleventh area 20011B, and the twelfth area 20012B. In other words, the first fluid control surface 1210B of the fixed disk 121B of the planar valve 10B forms twelve equal divisions, and the second fluid control surface 1220B of the rotating disk 122B of the planar valve 10B forms twelve equal divisions; wherein when the rotating disk 122B of the planar valve 10B is rotated such that the first equal division (the first area 2001B) of the second fluid control surface 1220B of the rotating disk 122B is aligned with the first equal division (the first section 1201B) of the first fluid control surface 1210B of the fixed disk 121B, the third equal division and the fourth equal division (the third area 2003B and the fourth area 2004B) of the second fluid control surface 1220B of the rotating disk 122B of the planar valve 10B are respectively aligned with the third equal division and the fourth equal division (the third section 1203B and the fourth section 1204B) of the first fluid control surface 1210B of the fixed disk 121B, the seventh equal division (the seventh area 2007B) of the second fluid control surface 1220B of the rotating disk 122B of the planar valve 10B is aligned with the seventh equal division (the seventh section 1207B) of the first fluid control surface 1210B of the fixed disk 121B, and the ninth equal division (the ninth area 2009B) of the second fluid control surface 1220B of the rotating disk 122B of the planar valve 10B is aligned with the ninth equal division (the ninth section 1209B) of the first fluid control surface 1210B of the fixed disk 121B, thereby causing the seventh flow hole 107B of the planar valve 10B to be in communication with the first flow hole 101B; the eighth flow hole 108B to be in communication with the third flow hole 103B, the fourth flow hole 104B, and the water supply flow hole 1015B respectively; the ninth flow hole 109B to be in communication with the fifth flow hole 105B and the sixth flow hole 106B respectively; the tenth flow hole 1010B to be blocked by the first fluid control surface 1210B of the fixed disk 121B; the second flow hole 102B to be blocked by the second fluid control surface 1220B of the rotating disk 122B; and the eleventh flow hole 1011B, the twelfth flow hole 1012B, and the thirteenth flow hole 1013B to be blocked by the second fluid control surface 1220B of the rotating disk 122B respectively; to allow raw water to flow in from the second fluid opening 1107B of the valve body 11B, pass through the seventh flow hole 107B and the first flow hole 101B to flow to the first opening 1101B, further flow from the first water inlet 511 into the first water treatment device 51; the primary treated water obtained after treatment by the first water treatment device 51 flows out from the first water outlet 512 and further flows from the second water inlet 521 into the second water treatment device 52; the secondary treated water obtained after treatment by the second water treatment device 52 flows out from the second water outlet 522 and flows into the third opening 1103B, then flows into the third flow hole 103B; one stream of the water flowing into the third flow hole 103B passes through the eighth flow hole 108B, the water supply flow hole 1015B, and the third fluid opening 1115B to flow out and be provided to the user; another stream of the water flowing into the third flow hole 103B passes through the eighth flow hole 108B and the fourth flow hole 104B to flow into the fourth opening 1104B, further flows from the third water inlet 531 into the third water treatment device 53; the tertiary treated water (for example, purified water after purification treatment or softened water after softening treatment) obtained after treatment by the third water treatment device 53 flows out from the third water outlet 532 and flows into the fifth opening 1105B, then passes through the fifth flow hole 105B, the ninth flow hole 109B, the sixth flow hole 106B, and the first fluid opening 1106B to flow out and be provided to the user. Accordingly, the water treatment device is now in the water treatment working state.

Wherein when the rotating disk 122B of the planar valve 10B is rotated such that the first equal division (the first area 2001B) of the second fluid control surface 1220B of the rotating disk 122B is aligned with the fifth equal division (the fifth section 1205B) of the first fluid control surface 1210B of the fixed disk 121B, the third equal division and the fourth equal division (the third area 2003B and the fourth area 2004B) of the second fluid control surface 1220B of the rotating disk 122B of the planar valve 10B are respectively aligned with the seventh equal division and the eighth equal division (the seventh section 1207B and the eighth section 1208B) of the first fluid control surface 1210B of the fixed disk 121B, the seventh equal division (the seventh area 2007B) of the second fluid control surface 1220B of the rotating disk 122B of the planar valve 10B is aligned with the eleventh equal division (the eleventh section 12011B) of the first fluid control surface 1210B of the fixed disk 121B, and the ninth equal division (the ninth area 2009B) of the second fluid control surface 1220B of the rotating disk 122B of the planar valve 10B is aligned with the first equal division (the first section 1201B) of the first fluid control surface 1210B of the fixed disk 121B, thereby causing the seventh flow hole 107B of the planar valve 10B to be in communication with the second flow hole 102B; the tenth flow hole 1010B to be in communication with the first flow hole 101B; the third flow hole 103B, the fourth flow hole 104B, and the fifth flow hole 105B to be blocked by the second fluid control surface 1220B of the rotating disk 122B respectively; the ninth flow hole 109B to be in communication with the first flow hole 101B; the eighth flow hole 108B to be in communication with the thirteenth flow hole 1013B; and the eleventh flow hole 1011B and the twelfth flow hole 1012B to be blocked by the second fluid control surface 1220B of the rotating disk 122B respectively; to allow raw water to flow in from the second fluid opening 1107B of the valve body 11B, pass through the seventh flow hole 107B and the second flow hole 102B to flow to the second opening 1102B, further flow from the first water outlet 512 into the first water treatment device 51, and the wastewater generated after backwashing the first water treatment device 51 flows out from the first water inlet 511, then passes through the first opening 1101B, the first flow hole 101B, the tenth flow hole 1010B, and the drain opening 11010B to be discharged. Accordingly, at this moment, the water treatment device is in the first backwash working state.

Wherein when the rotating disk 122B of the planar valve 10B is rotated such that the first equal division (the first area 2001B) of the second fluid control surface 1220B of the rotating disk 122B is aligned with the fourth equal division (the fourth section 1204B) of the first fluid control surface 1210B of the fixed disk 121B, the third equal division and the fourth equal division (the third area 2003B and the fourth area 2004B) of the second fluid control surface 1220B of the rotating disk 122B of the planar valve 10B are respectively aligned with the sixth equal division and the seventh equal division (the sixth section 1206B and the seventh section 1207B) of the first fluid control surface 1210B of the fixed disk 121B, the seventh equal division (the seventh area 2007B) of the second fluid control surface 1220B of the rotating disk 122B of the planar valve 10B is aligned with the tenth equal division (the tenth section 12010B) of the first fluid control surface 1210B of the fixed disk 121B, and the ninth equal division (the ninth area 2009B) of the second fluid control surface 1220B of the rotating disk 122B of the planar valve 10B is aligned with the twelfth equal division (the twelfth section 12012B) of the first fluid control surface 1210B of the fixed disk 121B, thereby causing the seventh flow hole 107B of the planar valve 10B to be in communication with the third flow hole 103B; the tenth flow hole 1010B to be in communication with the second flow hole 102B; the first flow hole 101B, the fourth flow hole 104B, and the fifth flow hole 105B to be blocked by the second fluid control surface 1220B of the rotating disk 122B respectively; the eighth flow hole 108B to be in communication with the twelfth flow hole 1012B; the ninth flow hole 109B to be in communication with the eleventh flow hole 1011B; and the thirteenth flow hole 1013B to be blocked by the second fluid control surface 1220B of the rotating disk 122B; to allow raw water to flow in from the second fluid opening 1107B of the valve body 11B, pass through the seventh flow hole 107B and the third flow hole 103B to flow to the third opening 1103B, further flow from the second water outlet 522 into the second water treatment device 52, and the wastewater generated after backwashing the second water treatment device 52 flows out from the second water inlet 521, then passes through the second opening 1102B, the second flow hole 102B, the tenth flow hole 1010B, and the drain opening 11010B to be discharged Accordingly, at this moment, the water treatment device is in the second backwash working state.

Wherein when the rotating disk 122B of the planar valve 10B is rotated such that the first equal division (the first area 2001B) of the second fluid control surface 1220B of the rotating disk 122B is aligned with the ninth equal division (the ninth section 1209B) of the first fluid control surface 1210B of the fixed disk 121B, the third equal division and the fourth equal division (the third area 2003B and the fourth area 2004B) of the second fluid control surface 1220B of the rotating disk 122B of the planar valve 10B are respectively aligned with the eleventh equal division and the twelfth equal division (the eleventh section 12011B and the twelfth section 12012B) of the first fluid control surface 1210B of the fixed disk 121B, the seventh equal division (the seventh area 2007B) of the second fluid control surface 1220B of the rotating disk 122B of the planar valve 10B is aligned with the third equal division (the third section 1203B) of the first fluid control surface 1210B of the fixed disk 121B, and the ninth equal division (the ninth area 2009B) of the second fluid control surface 1220B of the rotating disk 122B of the planar valve 10B is aligned with the fifth equal division (the fifth section 1205B) of the first fluid control surface 1210B of the fixed disk 121B, thereby causing the seventh flow hole 107B of the planar valve 10B to be in communication with the fifth flow hole 105B; the tenth flow hole 1010B to be in communication with the fourth flow hole 104B; the ninth flow hole 109B to be in communication with the second flow hole 102B; the third flow hole 103B to be blocked by the second fluid control surface 1220B of the rotating disk 122B; the eighth flow hole 108B to be in communication with the first flow hole 101B and the eleventh flow hole 1011B respectively; and the twelfth flow hole 1012B and the thirteenth flow hole 1013B to be blocked by the second fluid control surface 1220B of the rotating disk 122B respectively; to allow raw water to flow in from the second fluid opening 1107B of the valve body 11B, pass through the seventh flow hole 107B and the fifth flow hole 105B to flow to the fifth opening 1105B, further flow from the third water outlet 532 into the third water treatment device 53, and the wastewater generated after backwashing the third water treatment device 53 flows out from the third water inlet 531, then passes through the fourth opening 1104B, the fourth flow hole 104B, the tenth flow hole 1010B, and the drain opening 11010B to be discharged. Accordingly, at this moment, the water treatment device is in the third backwash working state.

Wherein when the rotating disk 122B of the planar valve 10B is rotated such that the first equal division (the first area 2001B) of the second fluid control surface 1220B of the rotating disk 122B is aligned with the eleventh equal division (the eleventh section 12011B) of the first fluid control surface 1210B of the fixed disk 121B, the third equal division and the fourth equal division (the third area 2003B and the fourth area 2004B) of the second fluid control surface 1220B of the rotating disk 122B of the planar valve 10B are respectively aligned with the first equal division and the second equal division (the first section 1201B and the second section 1202B) of the first fluid control surface 1210B of the fixed disk 121B, the seventh equal division (the seventh area 2007B) of the second fluid control surface 1220B of the rotating disk 122B of the planar valve 10B is aligned with the fifth equal division (the fifth section 1205B) of the first fluid control surface 1210B of the fixed disk 121B, and the ninth equal division (the ninth area 2009B) of the second fluid control surface 1220B of the rotating disk 122B of the planar valve 10B is aligned with the seventh equal division (the seventh section 1207B) of the first fluid control surface 1210B of the fixed disk 121B, thereby causing the seventh flow hole 107B of the planar valve 10B to be in communication with the first flow hole 101B; the tenth flow hole 1010B to be in communication with the second flow hole 102B; the eighth flow hole 108B to be in communication with the first flow hole 101B; the ninth flow hole 109B to be blocked by the first fluid control surface 1210B of the fixed disk 121B; the third flow hole 103B, the fourth flow hole 104B, and the fifth flow hole 105B to be blocked by the second fluid control surface 1220B of the rotating disk 122B respectively; and the eleventh flow hole 1011B, the twelfth flow hole 1012B, and the thirteenth flow hole 1013B to be blocked by the second fluid control surface 1220B of the rotating disk 122B respectively; to allow raw water to flow in from the second fluid opening 1107B of the valve body 11B, pass through the seventh flow hole 107B and the first flow hole 101B to flow to the first opening 1101B, further flow from the first water inlet 511 into the first water treatment device 51, and the wastewater after rinsing the first water treatment device 51 flows out from the first water outlet 512, then passes through the second opening 1102B, the second flow hole 102B, the tenth flow hole 1010B, and the drain opening 11010B to be discharged. Accordingly, at this moment, the water treatment device is in the first rinse working state.

Wherein when the rotating disk 122B of the planar valve 10B is rotated such that the first equal division (the first area 2001B) of the second fluid control surface 1220B of the rotating disk 122B is aligned with the tenth equal division (the tenth section 12010B) of the first fluid control surface 1210B of the fixed disk 121B, the third equal division and the fourth equal division (the third area 2003B and the fourth area 2004B) of the second fluid control surface 1220B of the rotating disk 122B of the planar valve 10B are respectively aligned with the twelfth equal division and the first equal division (the twelfth section 12012B and the first section 1201B) of the first fluid control surface 1210B of the fixed disk 121B, the seventh equal division (the seventh area 2007B) of the second fluid control surface 1220B of the rotating disk 122B of the planar valve 10B is aligned with the fourth equal division (the fourth section 1204B) of the first fluid control surface 1210B of the fixed disk 121B, and the ninth equal division (the ninth area 2009B) of the second fluid control surface 1220B of the rotating disk 122B of the planar valve 10B is aligned with the sixth equal division (the sixth section 1206B) of the first fluid control surface 1210B of the fixed disk 121B, thereby causing the seventh flow hole 107B of the planar valve 10B to be in communication with the second flow hole 102B; the tenth flow hole 1010B to be in communication with the third flow hole 103B; the fourth flow hole 104B and the fifth flow hole 105B to be blocked by the second fluid control surface 1220B of the rotating disk 122B respectively; the eighth flow hole 108B to be in communication with the first flow hole 101B and the eleventh flow hole 1011B respectively; the ninth flow hole 109B to be in communication with the twelfth flow hole 1012B; and the thirteenth flow hole 1013B to be blocked by the second fluid control surface 1220B of the rotating disk 122B; to allow raw water to flow in from the second fluid opening 1107B of the valve body 11B, pass through the seventh flow hole 107B and the second flow hole 102B to flow to the second opening 1102B, further flow from the second water inlet 521 into the second water treatment device 52, and the wastewater after rinsing the second water treatment device 52 flows out from the second water outlet 522, then passes through the third opening 1103B, the third flow hole 103B, the tenth flow hole 1010B, and the drain opening 11010B to be discharged. Accordingly, at this moment, the water treatment device is in the second rinse working state.

Wherein when the rotating disk 122B of the planar valve 10B is rotated such that the first equal division (the first area 2001B) of the second fluid control surface 1220B of the rotating disk 122B is aligned with the third equal division (the third section 1203B) of the first fluid control surface 1210B of the fixed disk 121B, the third equal division and the fourth equal division (the third area 2003B and the fourth area 2004B) of the second fluid control surface 1220B of the rotating disk 122B of the planar valve 10B are respectively aligned with the fifth equal division and the sixth equal division (the fifth section 1205B and the sixth section 1206B) of the first fluid control surface 1210B of the fixed disk 121B, the seventh equal division (the seventh area 2007B) of the second fluid control surface 1220B of the rotating disk 122B of the planar valve 10B is aligned with the ninth equal division (the ninth section 1209B) of the first fluid control surface 1210B of the fixed disk 121B, and the ninth equal division (the ninth area 2009B) of the second fluid control surface 1220B of the rotating disk 122B of the planar valve 10B is aligned with the eleventh equal division (the eleventh section 12011B) of the first fluid control surface 1210B of the fixed disk 121B, thereby causing the seventh flow hole 107B of the planar valve 10B to be in communication with the fourth flow hole 104B; the tenth flow hole 1010B to be in communication with the fifth flow hole 105B; the ninth flow hole 109B to be in communication with the first flow hole 101B; the third flow hole 103B to be blocked by the second fluid control surface 1220B of the rotating disk 122B; the eighth flow hole 108B to be in communication with the second flow hole 102B and the twelfth flow hole 1012B respectively; the eleventh flow hole 1011B and the thirteenth flow hole 1013B to be blocked by the second fluid control surface 1220B of the rotating disk 122B respectively; to allow raw water to flow in from the second fluid opening 1107B of the valve body 11B, pass through the seventh flow hole 107B and the fourth flow hole 104B to flow to the fourth opening 1104B, further flow from the third water inlet 531 into the third water treatment device 53, and the wastewater after rinsing the third water treatment device 53 flows out from the third water outlet 532, then passes through the fifth opening 1105B, the fifth flow hole 105B, the tenth flow hole 1010B, and the drain opening 11010B to be discharged. Accordingly, at this moment, the water treatment device is in the third rinse working state.

Wherein when the rotating disk 122B of the planar valve 10B is rotated such that the first equal division (the first area 2001B) of the second fluid control surface 1220B of the rotating disk 122B is aligned with the sixth equal division (the sixth section 1206B) of the first fluid control surface 1210B of the fixed disk 121B, the third equal division and the fourth equal division (the third area 2003B and the fourth area 2004B) of the second fluid control surface 1220B of the rotating disk 122B of the planar valve 10B are respectively aligned with the eighth equal division and the ninth equal division (the eighth section 1208B and the ninth section 1209B) of the first fluid control surface 1210B of the fixed disk 121B, the seventh equal division (the seventh area 2007B) of the second fluid control surface 1220B of the rotating disk 122B of the planar valve 10B is aligned with the twelfth equal division (the twelfth section 12012B) of the first fluid control surface 1210B of the fixed disk 121B, and the ninth equal division (the ninth area 2009B) of the second fluid control surface 1220B of the rotating disk 122B of the planar valve 10B is aligned with the second equal division (the second section 1202B) of the first fluid control surface 1210B of the fixed disk 121B, thereby causing the seventh flow hole 107B of the planar valve 10B to be in communication with the twelfth flow hole 1012B; the eighth flow hole 108B to be in communication with the thirteenth flow hole 1013B and the fifth flow hole 105B respectively; the tenth flow hole 1010B to be in communication with the eleventh flow hole 1011B; the ninth flow hole 109B to be blocked by the first fluid control surface 1210B of the fixed disk 121B; and the first flow hole 101B, the second flow hole 102B, the third flow hole 103B, and the fourth flow hole 104B to be blocked by the second fluid control surface 1220B of the rotating disk 122B respectively; to allow raw water to flow in from the second fluid opening 1107B of the valve body 11B, pass through the seventh flow hole 107B and the twelfth flow hole 1012B to flow into the first injector opening 11012B, then flow into the nozzle outlet 182 of the injector 18, and after being injected by the injector 18, mix with the brine (such as sodium chloride solution) from the brine suction inlet 181 to form a regenerant solution; the regenerant solution flows through the discharge outlet 183 of the injector 18 into the second injector opening 11013B of the valve body 11B, then passes through the thirteenth flow hole 1013B, the eighth flow hole 108B, the fifth flow hole 105B, and the fifth opening 1105B to flow into the third water outlet 532, regenerating the water treatment material or mechanism of the third water treatment device 53 in up-flow mode, such as softening resin, and after regeneration, the generated wastewater flows out from the third water inlet 531, then sequentially passes through the fourth opening 1104B, the eleventh flow hole 1011B, the tenth flow hole 1010B, and the drain opening 11010B of the valve body 11B to be discharged. Accordingly, at this moment, the water treatment device is in the regeneration working state.

Wherein when the rotating disk 122B of the planar valve 10B is rotated such that the first equal division (the first area 2001B) of the second fluid control surface 1220B of the rotating disk 122B is aligned with the eighth equal division (the eighth section 1208B) of the first fluid control surface 1210B of the fixed disk 121B, the third equal division and the fourth equal division (the third area 2003B and the fourth area 2004B) of the second fluid control surface 1220B of the rotating disk 122B of the planar valve 10B are respectively aligned with the tenth equal division and the eleventh equal division (the tenth section 12010B and the eleventh section 12011B) of the first fluid control surface 1210B of the fixed disk 121B, the seventh equal division (the seventh area 2007B) of the second fluid control surface 1220B of the rotating disk 122B of the planar valve 10B is aligned with the second equal division (the second section 1202B) of the first fluid control surface 1210B of the fixed disk 121B, and the ninth equal division (the ninth area 2009B) of the second fluid control surface 1220B of the rotating disk 122B of the planar valve 10B is aligned with the fourth equal division (the fourth section 1204B) of the first fluid control surface 1210B of the fixed disk 121B, thereby causing the seventh flow hole 107B of the planar valve 10B to be in communication with the thirteenth flow hole 1013B; the eighth flow hole 108B to be in communication with the first flow hole 101B and the second flow hole 102B respectively; the ninth flow hole 109B to be in communication with the third flow hole 103B; the tenth flow hole 1010B to be blocked by the first fluid control surface 1210B of the fixed disk 121B; the fourth flow hole 104B and the fifth flow hole 105B to be blocked by the second fluid control surface 1220B of the rotating disk 122B respectively; and the eleventh flow hole 1011B and the twelfth flow hole 1012B to be blocked by the second fluid control surface 1220B of the rotating disk 122B respectively; to allow raw water to flow in from the second fluid opening 1107B of the valve body 11B, pass through the seventh flow hole 107B and the thirteenth flow hole 1013B to flow into the second injector opening 11013B, then sequentially pass through the discharge outlet 183 of the injector 18, the brine suction inlet 181, and the brine suction pipe 184 to flow into the regenerant solution tank 31 for water refill. Accordingly, at this moment, the water treatment device is in the water refill working position.

It can be understood that when the second fluid control surface 1220B of the rotating disk 122B is placed against the first fluid control surface 1210B of the fixed disk 121B, the central region 12201B of the second fluid control surface 1220B of the rotating disk 122B is aligned with the central portion 12101B of the first fluid control surface 1210B of the fixed disk 121B, the extension region 12202B of the second fluid control surface 1220B of the rotating disk 122B is aligned with the extension portion 12102B of the first fluid control surface 1210B of the fixed disk 121B, and the edge region 12203B of the second fluid control surface 1220B of the rotating disk 122B is aligned with the edge portion 12103B of the first fluid control surface 1210B of the fixed disk 121B.

Alternatively, the first fluid control surface 1210B of the fixed disk 121B of the planar valve 10B and the second fluid control surface 1220B of the rotating disk 122B are both circular; the first communication portion 10101B of the first flow hole 101B, the fourth flow hole 104B and the water supply flow hole 1015B, the third flow hole 103B, the second conduction portion 10202B of the second flow hole 102B, the twelfth flow hole 1012B, the thirteenth flow hole 1013B, the fifth flow hole 105B and the sixth flow hole 106B, the first conduction portion 10201B of the second flow hole 102B, the second communication portion 10102B of the first flow hole 101B, and the eleventh flow hole 1011B of the planar valve 10B are all arranged radially on the first fluid control surface 1210B of the fixed disk 121B; and the seventh flow hole 107B, the eighth flow hole 108B, the tenth flow hole 1010B, and the ninth flow hole 109B of the planar valve 10B are all arranged radially on the second fluid control surface 1220B of the rotating disk 122B.

Preferably, the first flow hole 101B of the planar valve 10B extends downward and outward from the first fluid control surface 1210B of the fixed disk 121B; the second flow hole 102B extends downward and outward from the first fluid control surface 1210B of the fixed disk 121B; the third flow hole 103B extends downward and outward from the first fluid control surface 1210B of the fixed disk 121B; the fourth flow hole 104B and the eleventh flow hole 1011B extend downward from the first fluid control surface 1210B of the fixed disk 121B; the fifth flow hole 105B extends downward from the first fluid control surface 1210B of the fixed disk 121B; the sixth flow hole 106B extends downward and outward from the first fluid control surface 1210B of the fixed disk 121B; the twelfth flow hole 1012B extends downward and outward from the first fluid control surface 1210B of the fixed disk 121B; the thirteenth flow hole 1013B extends downward and outward from the first fluid control surface 1210B of the fixed disk 121B; and the water supply flow hole 1015B extends downward and outward from the first fluid control surface 1210B of the fixed disk 121B.

As shown in FIG. 45C to FIG. 46F, the valve body 11B of the planar valve 10B has an inner wall 111B, wherein the fixed disk 121B is adapted to be arranged in the valve chamber 110B with the first fluid control surface 1210B facing upward, and the rotating disk 122B is adapted to be arranged in the valve chamber 110B with the second fluid control surface 1220B facing downward, wherein the valve chamber 110B is always in communication with the seventh flow hole 107B. It is worth mentioning that the fixed disk 121B of the planar valve 10B can be detachably arranged on the inner wall 111B of the valve body 11B, or can be integrally formed with the inner wall 111B of the valve body 11B of the planar valve 10B. Those skilled in the art can understand that when the fixed disk 121B is detachably arranged in the valve body 11B, a fixing mechanism is provided between the fixed disk 121B and the valve body 11B to maintain synchronization between the fixed disk 121B and the valve body 11B. For example, as shown in FIG. 45C to FIG. 46F, the fixed disk 121B has a locking member 123B protruding outward from the edge of the fixed disk 121B, and the inner wall 111B of the valve body 11B has a locking portion 1110B, wherein the locking member 123B of the fixed disk 121B is configured to be capable of engaging with the locking portion 1110B of the inner wall 111B of the valve body 11B, so as to ensure synchronization between the fixed disk 121B and the valve body 11B (or to prevent relative rotation) and to ensure that the respective flow holes provided in the fixed disk 121B are in communication with the corresponding openings provided in the valve body 11B. It can be understood that when the fixed disk 121B is detachably arranged in the valve body 11B, the fixed disk 121B can be manufactured separately. In other words, in this case, the fixed disk 121B can be made of a wear-resistant material, thereby increasing the service life of the fixed disk 121B (or the entire planar valve). Preferably, the first fluid control surface 1210B of the fixed disk 121B is smoothed to reduce its roughness.

As shown in FIG. 44 and FIG. 45L, the planar valve 10B further comprises a flow guiding element 15B, wherein the flow guiding element 15B forms the water flow passage 150B, and wherein the flow guiding element 15B is arranged to extend upward from the rotating disk 122B and the water flow passage 150B of the flow guiding element 15B is in communication with the tenth flow hole 1010B of the planar valve 10B and the drain opening 11010B respectively, so that sewage or waste water can flow out therefrom.

As shown in FIG. 44 and FIG. 45L, the planar valve 10B further comprises a driving element 17B, wherein the driving element 17B is arranged on the valve core 12B, and the driving element 17B is configured to be capable of driving the planar valve 10B, so that the planar valve 10B is switched to a corresponding working position. Specifically, the driving element 17B extends upward from the rotating disk 122B, wherein the driving element 17B is configured to be capable of driving the rotating disk 122B of the planar valve 10B to rotate relative to the fixed disk 121B. Preferably, the driving element 17B and the flow guiding element 15B are integrally formed. Alternatively, the driving element 17B and the flow guiding element 15B are two independent mechanisms.

As shown in FIG. 45C to FIG.45L, the diameter of the rotating disk 122B of the planar valve 10B is set slightly smaller than the diameter of the valve chamber 110B of the valve body 11B, so that the seventh flow hole 107B of the planar valve 10B can remain in communication with the valve chamber 110B of the valve body 11B.

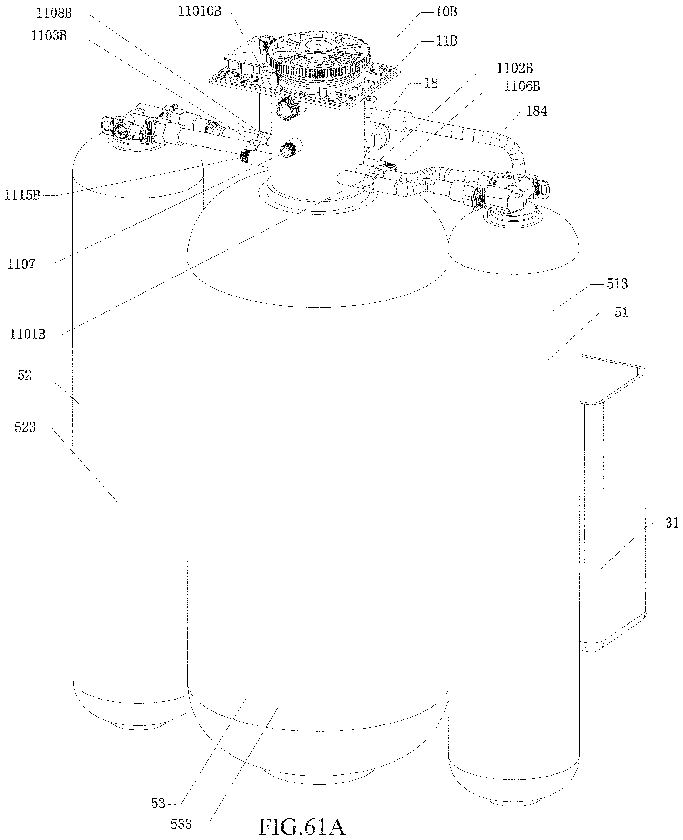

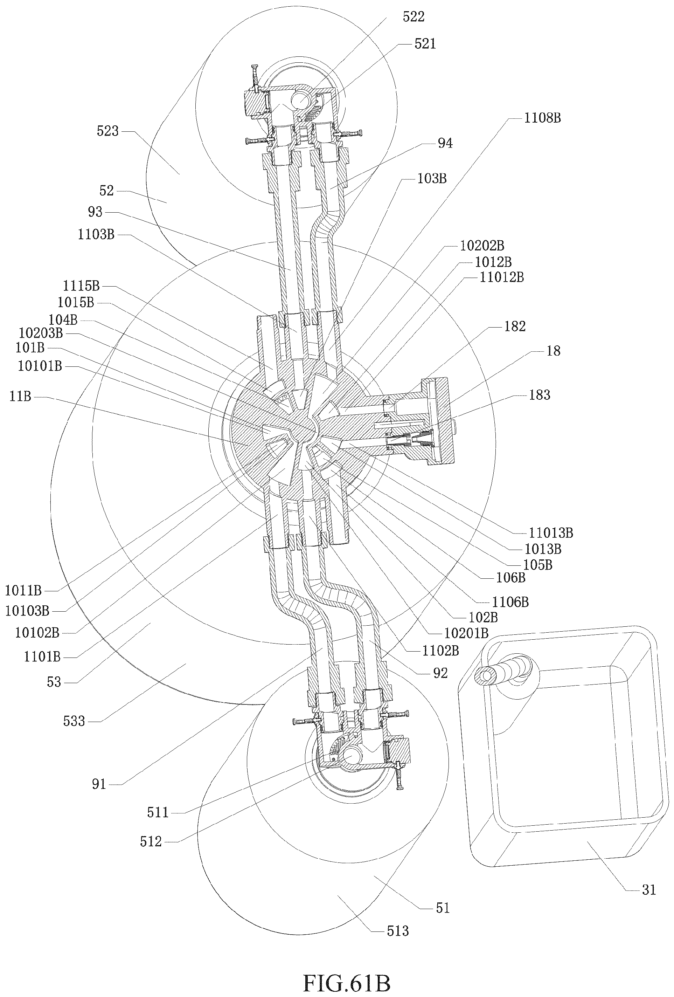

As shown in FIG. 61A and FIG. 61B, the valve body 11B of the control valve 10B of the water treatment device according to the second embodiment of the present invention further forms a communication opening 1108B, wherein the communication opening 1108B is in communication with the second flow hole 102B, and the communication opening 1108B and the second opening 1102B are arranged on two sides of the valve body 11B and spaced apart from each other, so as to facilitate the connection of the second flow hole 102B of the control valve 10B of the water treatment device of the present invention to the first water outlet 512 of the first water treatment device 51 and the second water inlet 521 of the second water treatment device 52 respectively. In other words, since the communication opening 1108B and the second opening 1102B are both in communication with the second flow hole 102B, and the communication opening 1108B and the second opening 1102B are arranged on two sides of the valve body 11B and spaced apart from each other, the arrangement of the connection pipe for connecting the second opening 1102B of the valve body 11B to the first water outlet 512 of the first water treatment device 51 and the connection pipe for connecting the communication opening 1108B of the valve body 11B to the second water inlet 521 of the second water treatment device 52 is made more convenient. More specifically, the second opening 1102B of the control valve 10B of the water treatment device of the present invention is in communication with the first conduction portion 10201B of the second flow hole 102B, the communication opening 1108B is in communication with the second conduction portion 10202B of the second flow hole 102B, and the first conduction portion 10201B and the second conduction portion 10202B of the second flow hole 102B are in communication with each other through the third conduction portion 10203B. Therefore, the second flow hole 102B, the second opening 1102B and the communication opening 1108B form a three-way structure.

As shown in FIG. 61A and FIG. 61B, it can be understood that the second opening 1102B and the communication opening 1108B of the control valve 10B of the water treatment device of the present invention are respectively in communication with the second flow hole 102B, and the communication opening 1108B and the second opening 1102B are arranged on two sides of the valve body 11B and spaced apart from each other, such that the pipe 91, which is in communication with the first opening 1101B of the control valve 10B and the first water inlet 511 of the first water treatment device 51 respectively, the pipe 92, which is in communication with the second opening 1102B of the control valve 10B and the first water outlet 512 of the first water treatment device 51 respectively, the pipe 94, which is in communication with the communication opening 1108B of the control valve 10B and the second water inlet 521 of the second water treatment device 52 respectively, and the pipe 93, which is in communication with the third opening 1103B of the control valve 10B and the second water outlet 522 of the second water treatment device 52 respectively can be fixed together in pairs, and two pairs of these pipes can be configured with the same specification, thus reducing the difficulty of pipe installation and providing more convenience for the user. In addition, configuring the two sets of pipes to have the same specification also reduces the manufacturing difficulty of the pipes and lowers the manufacturing cost. It can be understood that the pipe 91, which is in communication with the first opening 1101B and the first water inlet 511 of the first water treatment device 51 respectively and the pipe 92, which is in communication with the second opening 1102B and the first water outlet 512 of the first water treatment device 51 respectively are arranged parallel to each other without crossing; the pipe 94, which is in communication with the communication opening 1108B of the control valve 10B and the second water inlet 521 of the second water treatment device 52 respectively and the pipe 93, which is in communication with the third opening 1103B of the control valve 10B and the second water outlet 522 of the second water treatment device 52 respectively are arranged parallel to each other without crossing, which reduces the difficulty of pipe connection and facilitates the user's installation of the water treatment device of the present invention.

Furthermore, the second opening 1102B and the communication opening 1108B of the control valve 10B of the water treatment device of the present invention can be configured to help arrange the first water treatment device 51, the second water treatment device 52, and the third water treatment device 53 of the water treatment device of the present invention in a more regular pattern and occupy a smaller volume. Preferably, the third conduction portion 10203B of the second flow hole 102B of the control valve 10B of the water treatment device according to the second embodiment of the present invention is arranged in the valve body 11B, and the first conduction portion 10201B and the second conduction portion 10202B of the second flow hole 102B are in communication with each other through the third conduction portion 10203B, wherein the third conduction portion 10203B of the second flow hole 102B is in communication with the second opening 1102B and the communication opening 1108B respectively, thereby causing the second flow hole 102B (the first conduction portion 10201B and the second conduction portion 10202B of the second flow hole 102B), the second opening 1102B, and the communication opening 1108B to form a three-way structure. Accordingly, when the planar valve 10B of the water treatment device according to the second embodiment of the present invention is controlled to be in the water treatment working position, raw water flows in from the second fluid opening 1107B of the valve body 11B, passes through the seventh flow hole 107B and the first flow hole 101B to flow to the first opening 1101B, further flows from the first water inlet 511 into the first water treatment device 51, and the primary treated water after treatment by the first water treatment device 51 flows out from the first water outlet 512 and into the second opening 1102B, then passes through the third conduction portion 10203B of the second flow hole 102B to flow into the communication opening 1108B, the primary treated water flowing out from the communication opening 1108B further flows from the second water inlet 521 into the second water treatment device 52, the secondary treated water after treatment by the second water treatment device 52 flows out from the second water outlet 522 and into the third opening 1103B, then flows into the third flow hole 103B, one stream of the water flowing into the third flow hole 103B passes through the eighth flow hole 108B, the water supply flow hole 1015B and the third fluid opening 1115B to flow out and be provided to the user, another stream of the water flowing into the third flow hole 103B passes through the eighth flow hole 108B and the fourth flow hole 104B to flow into the fourth opening 1104B, further flows from the third water inlet 531 into the third water treatment device 53, the softened water after softening treatment by the third water treatment device 53 flows out from the third water outlet 532 and into the fifth opening 1105B, then passes through the fifth flow hole 105B, the ninth flow hole 109B, the sixth flow hole 106B and the first fluid opening 1106B to flow out and be provided to the user; when the planar valve 10B of the water treatment device of the present invention is in the first backwash working position, raw water flows in from the second fluid opening 1107B of the valve body 11B, passes through the seventh flow hole 107B, the second conduction portion 10202B and the third conduction portion 10203B of the second flow hole 102B to flow to the second opening 1102B, further flows from the first water outlet 512 into the first water treatment device 51, and the wastewater generated after backwashing the first water treatment device 51 flows out from the first water inlet 511, then passes through the first opening 1101B, the second communication portion 10102B of the first flow hole 101B, the tenth flow hole 1010B and the drain opening 11010B to be discharged; when the planar valve 10B of the water treatment device of the present invention is in the second backwash working position, raw water flows in from the second fluid opening 1107B of the valve body 11B, passes through the seventh flow hole 107B and the third flow hole 103B to flow to the third opening 1103B, further flows from the second water outlet 522 into the second water treatment device 52, and the wastewater generated after backwashing the second water treatment device 52 flows out from the second water inlet 521 and into the communication opening 1108B, then sequentially passes through the third conduction portion 10203B of the second flow hole 102B to flow into the first conduction portion 10201B, then flows into the tenth flow hole 1010B and the drain opening 11010B to be discharged; when the planar valve 10B of the water treatment device of the present invention is in the first rinse working position, raw water flows in from the second fluid opening 1107B of the valve body 11B, passes through the seventh flow hole 107B and the second communication portion 10102B of the first flow hole 101B to flow to the first opening 1101B, further flows from the first water inlet 511 into the first water treatment device 51, and the wastewater after rinsing the first water treatment device 51 flows out from the first water outlet 512, then passes through the second opening 1102B, the third conduction portion 10203B of the second flow hole 102B, the second conduction portion 10202B of the second flow hole 102B, the tenth flow hole 1010B and the drain opening 11010B to be discharged; when the planar valve 10B of the water treatment device of the present invention is in the second rinse working position, raw water flows in from the second fluid opening 1107B of the valve body 11B, passes through the seventh flow hole 107B, the first conduction portion 10201B and the third conduction portion 10203B of the second flow hole 102B to flow into the communication opening 1108B, the water flow further flows from the second water inlet 521 into the second water treatment device 52, and the wastewater after rinsing the second water treatment device 52 flows out from the second water outlet 522, then passes through the third opening 1103B, the third flow hole 103B, the tenth flow hole 1010B and the drain opening 11010B to be discharged.

FIG. 42A to FIG. 42E and FIG. 62A to FIG. 63L show an alternative implementation planar valve 10C of the planar valve 10B of the water treatment device according to the second embodiment of the present invention, wherein the planar valve 10C comprises a valve body 11C and a valve core 12C, wherein the valve body 11C forms a valve chamber 110C, a first opening 1101B, a second opening 1102B, a third opening 1103B, a fourth opening 1104B, a fifth opening 1105B, a first fluid opening 1106B, a second fluid opening 1107B, and a drain opening 11010C; wherein the valve core 12C is disposed in the valve chamber 110C; wherein the first opening 1101B of the valve body 11C is adapted to be in communication with the first water inlet 511 of the first water treatment device 51, the second opening 1102B is adapted to be in communication with the first water outlet 512 of the first water treatment device 51 and the second water inlet 521 of the second water treatment device 52 respectively, the third opening 1103B is adapted to be in communication with the second water outlet 522 of the second water treatment device 52, the fourth opening 1104B is adapted to be in communication with the third water inlet 531 of the third water treatment device 53, the fifth opening 1105B is adapted to be in communication with the third water outlet 532 of the third water treatment device 53, and the second fluid opening 1107B of the valve body 11C is adapted to be in communication with a raw water source (for example, tap water). The second opening 1102B, the first water outlet 512 of the first water treatment device 51 and the second water inlet 521 of the second water treatment device 52 form a three-way structure 61.

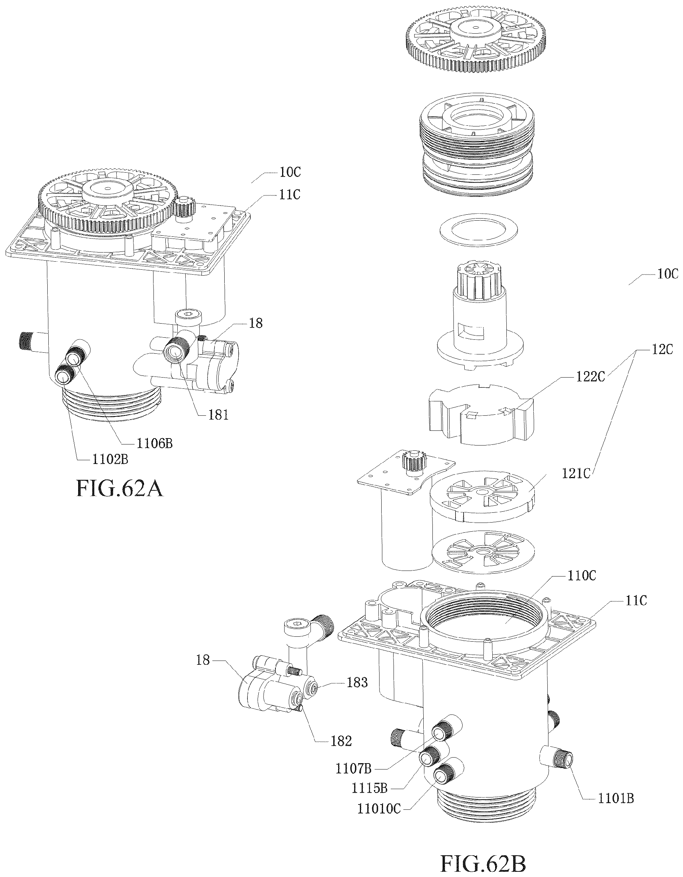

As shown in FIG.62B to FIG.65C, the valve core 12C of the plane valve 10C according to the second embodiment of the present invention further comprises a fixed disk 121C and a rotating disk 122C, wherein the fixed disk 121C has a first fluid control surface 1210C, the rotating disk 122C has a second fluid control surface 1220C, wherein the rotating disk 122C and the fixed disk 121C are both disposed inside the valve chamber 110C, wherein the second fluid control surface 1220C of the rotating disk 122C is provided on the first fluid control surface 1210C of the fixed disk 121C, and the rotating disk 122C is disposed to be capable of rotating relative to the fixed disk 121C. Preferably, the second fluid opening 1107B is in communication with the valve chamber 110C of the valve body 11C.

As shown in FIG. 62B to FIG. 65C, the planar valve 10C of the water treatment device according to the second embodiment of the present invention has a first flow hole 101C, a second flow hole 102C, a third flow hole 103C, a fourth flow hole 104C, a fifth flow hole 105C, a sixth flow hole 106C, a seventh flow hole 107C, an eighth flow hole 108C, a ninth flow hole 109C, a tenth flow hole 1010C, and a drain flow hole 1014C, wherein the first flow hole 101C, the second flow hole 102C, the third flow hole 103C, the fourth flow hole 104C, the fifth flow hole 105C, the sixth flow hole 106C, and the drain flow hole 1014C are respectively provided in the fixed disk 121C and respectively extend from the first fluid control surface 1210C of the fixed disk 121C; the seventh flow hole 107C, the eighth flow hole 108C, the ninth flow hole 109C, and the tenth flow hole 1010C are respectively provided in the rotating disk 122C and respectively extend from the second fluid control surface 1220C of the rotating disk 122C, wherein the first flow hole 101C is in communication with the first opening 1101B, the second flow hole 102C is in communication with the second opening 1102B, the third flow hole 103C is in communication with the third opening 1103B, the fourth flow hole 104C is in communication with the fourth opening 1104B, the fifth flow hole 105C is in communication with the fifth opening 1105B, the sixth flow hole 106C is in communication with the first fluid opening 1106B, the seventh flow hole 107C is in communication with the second fluid opening 1107B, and the drain flow hole 1014C is in communication with the tenth flow hole 1010C and the drain opening 11010C respectively. Preferably, the eighth flow hole 108C, the ninth flow hole 109C and the tenth flow hole 1010C are communicating blind holes. Preferably, the seventh flow hole 107C is in communication with the valve chamber 110C and is further in communication with the second fluid opening 1107B through the valve chamber 110C. Preferably, the sixth flow hole 106C is arranged outward of the fifth flow hole 105C.

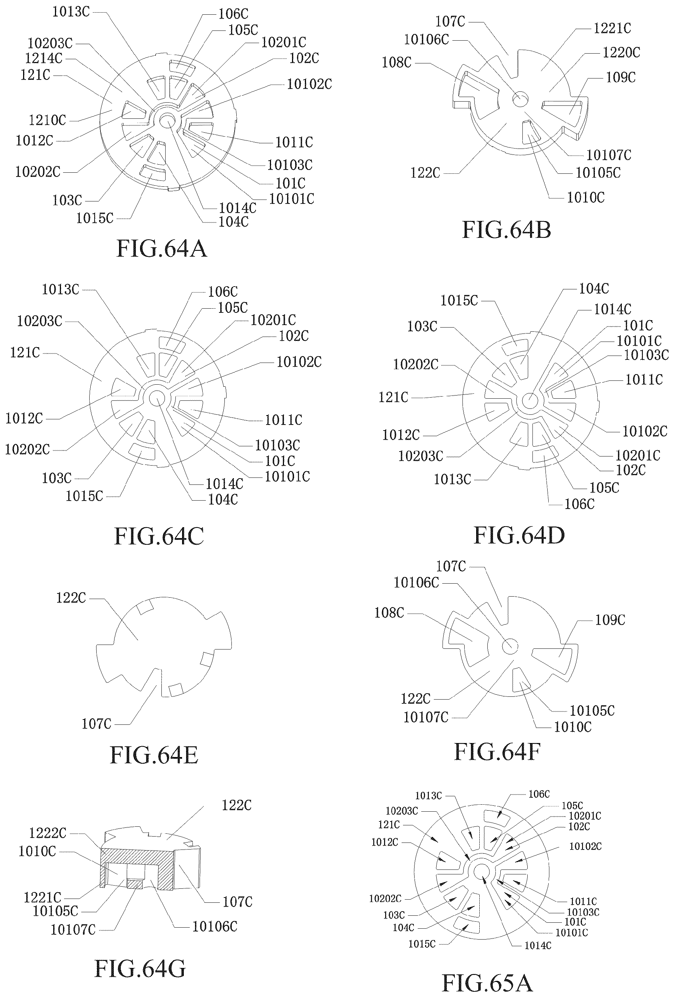

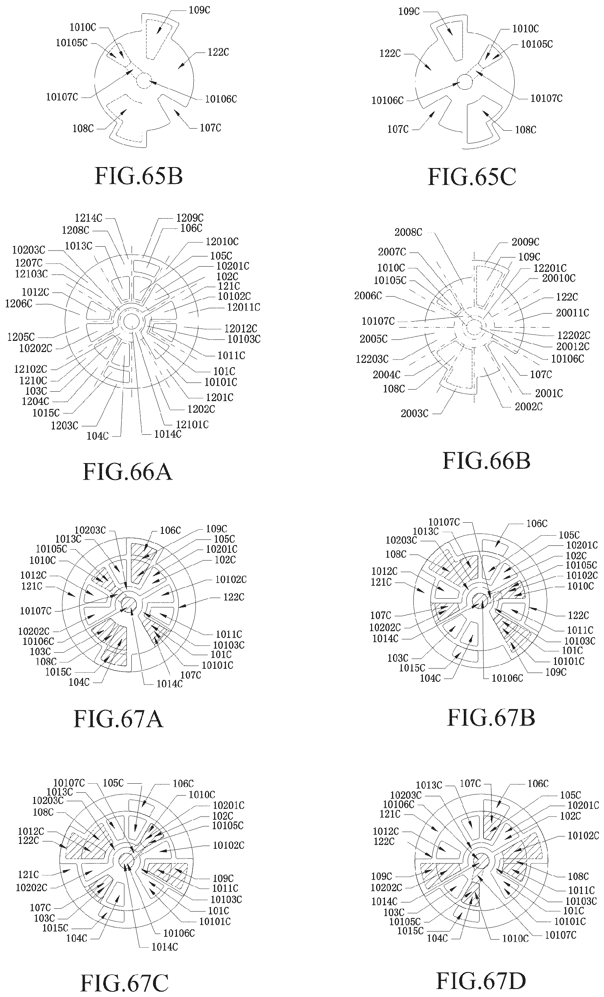

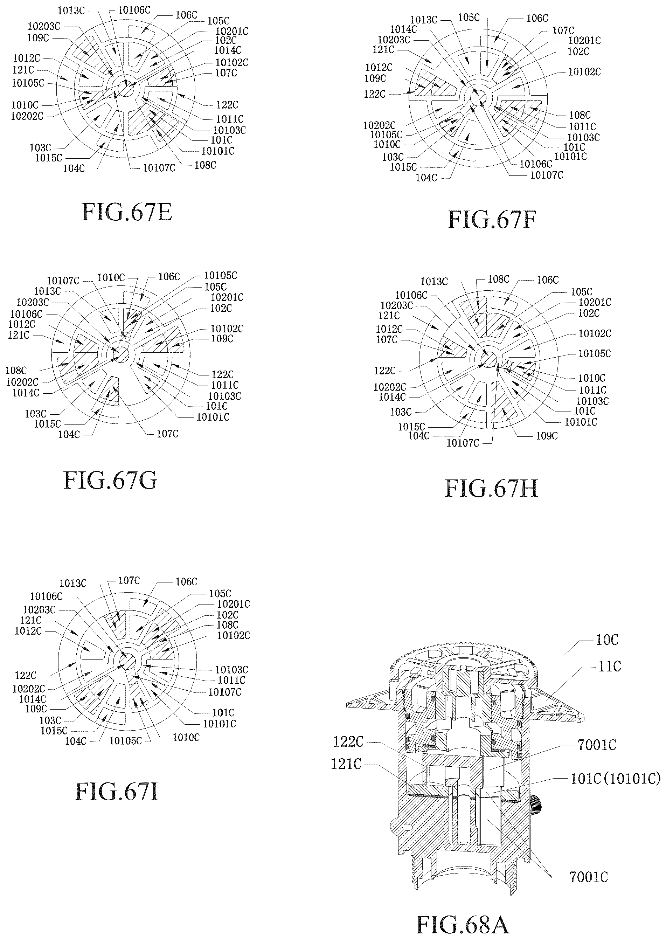

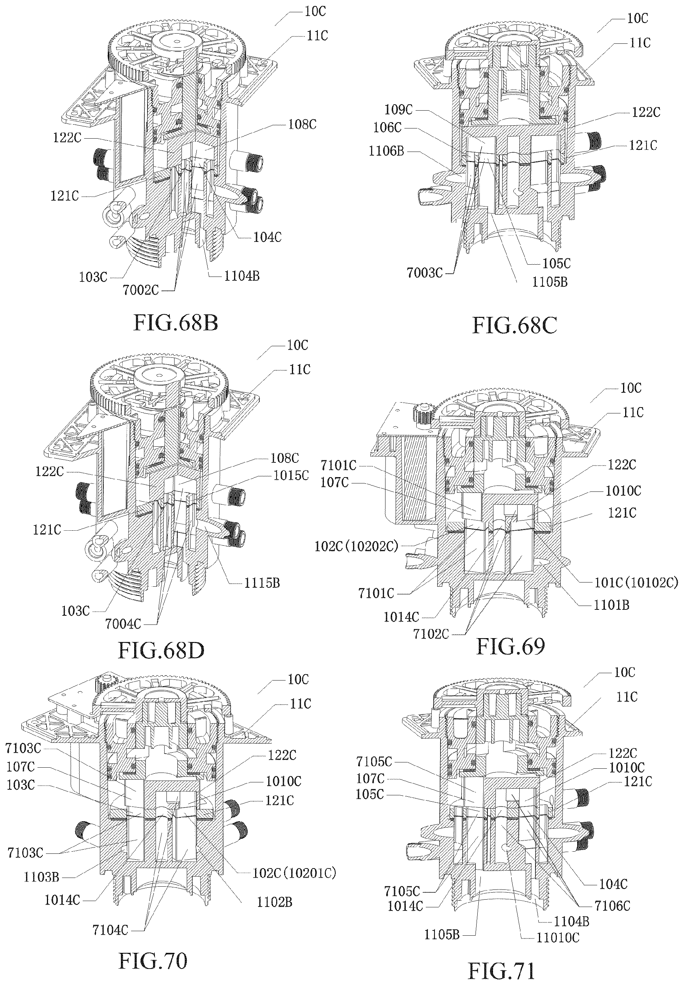

As shown in FIG. 67A, FIG. 68A to FIG. 68C, and FIG. 78A, the rotating disk 122C of the planar valve 10C of the water treatment device according to the second embodiment of the present invention is capable of rotating relative to the fixed disk 121C, thereby enabling the planar valve 10C to have a water treatment working position. When the planar valve 10C is in the water treatment working position, the seventh flow hole 107C of the planar valve 10C is in communication with the first flow hole 101C, thereby forming a first water treatment flow passage 7001C communicating with the second fluid opening 1107B and the first opening 1101B respectively; the eighth flow hole 108C is in communication with the third flow hole 103C and the fourth flow hole 104C respectively, thereby forming a second water treatment flow passage 7002C communicating with the third opening 1103B and the fourth opening 1104B respectively; and the ninth flow hole 109C is in communication with the fifth flow hole 105C and the sixth flow hole 106C respectively, thereby forming a third water treatment flow passage 7003C communicating with the fifth opening 1105B and the first fluid opening 1106B respectively. As shown in FIG. 64A to FIG. 64G, FIG. 67A, and FIG. 78A, when the planar valve 10C is in the water treatment working position, the second flow hole 102C is blocked by the second fluid control surface 1220C of the rotating disk 122C, and the tenth flow hole 1010C is in communication with the drain flow hole 1014C. Although the tenth flow hole 1010C is in communication with the drain flow hole 1014C, they cannot form a flow passage that allows water to flow through.

It is worth mentioning that when the planar valve 10C is in the water treatment working position, although the second opening 1102B is in communication with the first water outlet 512 of the first water treatment device 51 and the second water inlet 521 of the second water treatment device 52 respectively, the second flow hole 102C is blocked by the second fluid control surface 1220C of the rotating disk 122C, meaning that no water flows in or out through the second opening 1102B , at this time, the first water outlet 512 of the first water treatment device 51 and the second water inlet 521 of the second water treatment device 52 form a series connection structure; the eighth flow hole 108C is in communication with the third flow hole 103C and the fourth flow hole 104C respectively, the third opening 1103B is in communication with the second water outlet 522 of the second water treatment device 52, and the fourth opening 1104B is in communication with the third water inlet 531 of the third water treatment device 53, meaning that at this time, the second water outlet 522 of the second water treatment device 52 and the third water inlet 531 of the third water treatment device 53 form a series connection structure; therefore, when the planar valve 10C is in the water treatment working position, the first water treatment device 51, the second water treatment device 52, and the third water treatment device 53 form a three-stage series connection structure, and the first water treatment material 515 of the first water treatment device 51, the second water treatment material 525 of the second water treatment device 52, and the third water treatment material 535 of the third water treatment device 53 will sequentially treat the raw water entering the second fluid opening 1107B of the planar valve 10C, with the treated water flowing out from the first fluid opening 1106B and being supplied. The three-stage series connection structure can provide better in-depth treatment of raw water. Preferably, the first water treatment material 515 of the first water treatment device 51, the second water treatment material 525 of the second water treatment device 52, and the third water treatment material 535 of the third water treatment device 53 can be configured as different materials. For example, the first water treatment material 515 can be configured as quartz sand for coarse filtration, the second water treatment material 525 can be configured as granular activated carbon for adsorption, and the third water treatment material 535 can be configured as softening resin for softening treatment.

As shown in FIG. 67A, FIG. 68A to FIG. 68C, and FIG. 78A, as an example, when the planar valve 10C of the water treatment device according to the second embodiment of the present invention is controlled to be in the water treatment working position, raw water from the planar valve 10C, under water pressure, flows from the second fluid opening 1107B of the valve body 11C into the valve chamber 110C, then passes through the seventh flow hole 107C and the first flow hole 101C to flow into the first opening 1101B, then flows from the first water inlet 511 of the first water treatment device 51 into the first water treatment device 51; under water pressure, after being treated (for example, purified or softened) by the first water treatment material 515, the generated primary treated water is collected by the first central tube 514 and flows out from the first water outlet 512 of the first water treatment device 51, further flowing to the second water inlet 521 of the second water treatment device 52 and into the second water treatment device 52; then under water pressure, after being treated (for example, purified or softened) by the second water treatment material 525, the generated secondary treated water is collected by the second central tube 524 and flows out from the second water outlet 522 of the second water treatment device 52; then under water pressure, it further passes through the third opening 1103B of the planar valve 10C, the third flow hole 103C, the eighth flow hole 108C, the fourth flow hole 104C, and the fourth opening 1104B, flows to the third water inlet 531 of the third water treatment device 53 and into the third water treatment device 53; under water pressure, after being treated (for example, purified or softened) by the third water treatment material 535, the generated tertiary treated water is collected by the third central tube 534 and flows out from the third water outlet 532 of the third water treatment device 53 and flows to the fifth opening 1105B of the planar valve 10C, then passes through the fifth flow hole 105C, the ninth flow hole 109C, the sixth flow hole 106C, and the first fluid opening 1106B to be supplied.

As shown in FIG. 67B, FIG. 69, and FIG. 78B, the planar valve 10C of the water treatment device according to the second embodiment of the present invention further has a first backwash working position, when the planar valve 10C is in the first backwash working position, the seventh flow hole 107C of the planar valve 10C is in communication with the second flow hole 102C, thereby forming a first backwash flow passage 7101C communicating with the second fluid opening 1107B and the second opening 1102B respectively; and the tenth flow hole 1010C is in communication with the first flow hole 101C and the drain flow hole 1014C respectively, thereby forming a second backwash flow passage 7102C communicating with the drain opening 11010C and the first opening 1101B respectively. As shown in FIG. 64A to FIG. 64G, FIG. 67B, and FIG. 78B, when the planar valve 10C is in the first backwash working position, the ninth flow hole 109C is in communication with the first flow hole 101C (the ninth flow hole 109C is in communication with one part of the first flow hole 101C, and the tenth flow hole 1010C is in communication with another part of the first flow hole 101C and the drain flow hole 1014C respectively); and the third flow hole 103C, the fourth flow hole 104C, and the fifth flow hole 105C are blocked by the second fluid control surface 1220C of the rotating disk 122C respectively. Therefore, when the planar valve 10C is in the first backwash working position, although the ninth flow hole 109C of the planar valve 10C is in communication with the first flow hole 101C, the eighth flow hole 108C and the ninth flow hole 109C are both communicating blind holes, and the third flow hole 103C, the fourth flow hole 104C, and the fifth flow hole 105C are blocked by the second fluid control surface 1220C of the rotating disk 122C respectively, so that raw water can only flow from the second fluid opening 1107B of the planar valve 10C into the seventh flow hole 107C, and further pass through the second flow hole 102C and the second opening 1102B to flow to the first water outlet 512 of the first water treatment device 51 and into the first water treatment device 51; the wastewater generated from backwashing the first water treatment device 51 flows out from the first water inlet 511 of the first water treatment device 51 and flows to the first opening 1101B of the planar valve 10C, and under water pressure, further passes through the first flow hole 101C, the tenth flow hole 1010C, the drain flow hole 1014C, and the drain opening 11010C of the planar valve 10C to be discharged. In other words, although the ninth flow hole 109C is in communication with the first flow hole 101C, water flow does not pass through the flow passage formed by them. Accordingly, when the planar valve 10C is in the first backwash working position, since the ninth flow hole 109C is a communicating blind hole, the flow passage formed by the communication between the ninth flow hole 109C and the first flow hole 101C is blocked by the rotating disk 122C; and the third flow hole 103C, the fourth flow hole 104C, and the fifth flow hole 105C are blocked by the second fluid control surface 1220C of the rotating disk 122C respectively, thereby preventing water flow from passing through the third opening 1103B, the fourth opening 1104B, and the fifth opening 1105B of the planar valve 10C, and preventing the flow of water within the second water treatment device 52 and the third water treatment device 53. More specifically, when the planar valve 10C is in the first backwash working position, it prevents water flow from the second opening 1102B towards the second water inlet 521 of the second water treatment device 52. In other words, although the ninth flow hole 109C is in communication with the first flow hole 101C, the rotating disk 122C prevents raw water from flowing toward the third flow hole 103C, the fourth flow hole 104C, and the fifth flow hole 105C, thereby ensuring that only the first water treatment device 51 is backwashed.

It is worth mentioning that when the planar valve 10C is in the first backwash working position, the flow passage formed by the communication between the ninth flow hole 109C and the first flow hole 101C, the third flow hole 103C, the fourth flow hole 104C, and the fifth flow hole 105C, are blocked by the rotating disk 122C respectively, thereby causing the third opening 1103B, the fourth opening 1104B, and the fifth opening 1105B to all be blocked, although the ninth flow hole 109C is in communication with the first flow hole 101C to form a corresponding flow passage, the ninth flow hole 109C is a communicating blind hole, and water flow cannot exit or enter through the flow passage formed by the communication between the ninth flow hole 109C and the first flow hole 101C. In other words, the third opening 1103B, the fourth opening 1104B, and the fifth opening 1105B are all blocked by the rotating disk 122C, preventing water flow from flowing to the second water treatment device 52 and isolating the third water treatment device 53 from the water flow, thereby ensuring that only the first water treatment device 51 is backwashed, so as to not only increase the intensity of the raw water backwashing the first water treatment device 51 but also prevent the generated wastewater from flowing to the second water treatment device 52 and/or the third water treatment device 53. Therefore, when the planar valve 10C is in the first backwash working position, the first water treatment device 51 of the water treatment device of the present invention is backwashed individually.

As shown in FIGS. 67B, 69, and 78B, as an example, when the planar valve 10C of the water treatment device according to the second embodiment of the present invention is controlled to be in the first backwash working position, raw water from the planar valve 10C, under water pressure, enters the first water treatment device 51 through its first water outlet 512, flows, under water pressure, from the first central tube 514 towards the first water treatment material 515, backwashing the first water treatment material 515, the generated wastewater exits the first water treatment device 51 through its first water inlet 511, flows, under water pressure, towards the first opening 1101B of the planar valve 10C, passes through the second backwash flow passage 7102C, is discharged through the drain opening 11010B.

As shown in FIG. 67C, FIG. 70, and FIG. 78C, the planar valve 10C of the water treatment device according to the second embodiment of the present invention further has a second backwash working position, when the planar valve 10C is in the second backwash working position, the seventh flow hole 107C of the planar valve 10C is in communication with the third flow hole 103C, thereby forming a third backwash flow passage 7103C communicating with the second fluid opening 1107B and the third opening 1103B respectively; and the tenth flow hole 1010C is in communication with the second flow hole 102C and the drain flow hole 1014C respectively, thereby forming a fourth backwash flow passage 7104C communicating with the drain opening 11010C and the second opening 1102B respectively. As shown in FIGS. 64A to 64G, FIG. 67C, and FIG. 78C, when the planar valve 10C is in the second backwash working position, the first flow hole 101C, the fourth flow hole 104C, and the fifth flow hole 105C are respectively blocked by the second fluid control surface 1220C of the rotating disk 122C. As shown in FIGS. 64A to 64G, FIG. 67C, and FIG. 78C, specifically, when the planar valve 10C is in the second backwash working position, the first flow hole 101C, the fourth flow hole 104C, and the fifth flow hole 105C are respectively blocked by the second fluid control surface 1220C of the rotating disk 122C, thereby causing the flow of water in the first opening 1101B, the fourth opening 1104B, and the fifth opening 1105B of the valve body 11C of the planar valve 10C to be prevented (or water is unable to flow out of or into the first opening 1101B, the fourth opening 1104B, and the fifth opening 1105B); causing the flow of water from the second water inlet 521 of the second water treatment device 52 to the first water outlet 512 of the first water treatment device 51 to be prevented; and causing the flow of water in the first water treatment device 51 and the third water treatment device 53 to be prevented. Correspondingly, when the planar valve 10C is in the second backwash working position, water flow through the first water inlet 511 and the first water outlet 512 of the first water treatment device 51, water flow through the third water inlet 531 and the third water outlet 532 of the third water treatment device 53, are also prevented, to ensures that only the second water treatment device 52 is backwashed, so as to increase the intensity of the backwash flow directed at the second water treatment device 52 while simultaneously preventing the generated wastewater from flowing into the first water treatment device 51 and/or the third water treatment device 53. Therefore, when the planar valve 10C is in the second backwash working position, the second treatment device 52 of the water treatment device of the present invention is backwashed individually. Furthermore, when raw water backwashes the second water treatment device 52, the backwash water flow passing through the second opening 1102 cannot enter the first water outlet 512 of the first water treatment device 51, which ensures the intensity of the backwash water flow for the second water treatment device 52 and prevents the wastewater generated from backwashing the second water treatment device 52 from contaminating the first water treatment device 51.

It is worth mentioning that when the planar valve 10C is in the second backwash working position, the first flow hole 101C, the fourth flow hole 104C, and the fifth flow hole 105C are blocked by the second fluid control surface 1220C of the rotating disk 122C respectively, thereby causing the first opening 1101B, the fourth opening 1104B, and the fifth opening 1105B to all be blocked, no water flows in or out through the first opening 1101B, the fourth opening 1104B, and the fifth opening 1105B, thereby resulting in no water flow within the first water treatment device 51 and isolating the third water treatment device 53 from the water flow to ensure that only the second water treatment device 52 is backwashed, so as to not only increasing the intensity of the raw water backwashing the second water treatment device 52 but also preventing the generated wastewater from flowing to the first water treatment device 51 and/or the third water treatment device 53. Therefore, when the planar valve 10C is in the second backwash working position, the second treatment device 52 of the water treatment device of the present invention is backwashed individually.

As shown in FIGS. 67C, 70, and 78C, as an example, when the planar valve 10C of the water treatment device according to the second embodiment of the present invention is controlled to be in the second backwash working position, raw water from the planar valve 10C, under water pressure, enters the second water treatment device 52 through its second water outlet 522, flows, under water pressure, from the second central tube 524 towards the second water treatment material 525, backwashing the second water treatment material 525, the generated wastewater exits the second water treatment device 52 through its second water inlet 521, flows, under water pressure, towards the second opening 1102B of the valve body 11C of the planar valve 10C, passes through the fourth backwash flow passage 7104C, is discharged through the drain opening 11010C.

As shown in FIG. 67D, FIG. 71, and FIG. 78D, the planar valve 10C of the water treatment device according to the second embodiment of the present invention further has a third backwash working position, when the planar valve 10C is in the third backwash working position, the seventh flow hole 107C is in communication with the fifth flow hole 105C, thereby forming a fifth backwash flow passage 7105C communicating with the second fluid opening 1107B and the fifth opening 1105B respectively, the tenth flow hole 1010C is in communication with the fourth flow hole 104C and the drain flow hole 1014C respectively, thereby forming a sixth backwash flow passage 7106C communicating with the drain opening 11010C and the fourth opening 1104B respectively. As shown in FIG. 64A to FIG. 64G, FIG. 67D, and FIG. 78D, when the planar valve 10C is in the third backwash working position, the eighth flow hole 108C is in communication with the first flow hole 101C, the ninth flow hole 109C is in communication with the second flow hole 102C, and the third flow hole 103C is blocked by the second fluid control surface 1220C of the rotating disk 122C. As shown in FIG. 64A to FIG. 64G, FIG. 67D, and FIG. 78D, specifically, when the planar valve 10C is in the third backwash working position, although the ninth flow hole 109C is in communication with the second flow hole 102C, the ninth flow hole 109C is a communicating blind hole, therefore, the flow passage formed by the ninth flow hole 109C being in communication with the second flow hole 102C is blocked by the rotating disk 122C, thereby preventing the water flow from flowing out of or into the flow passage formed by the ninth flow hole 109C and the second flow hole 102C, simultaneously, the third flow hole 103C is blocked by the second fluid control surface 1220C of the rotating disk 122C, thereby preventing the flow of the water in the second opening 1102B and the third opening 1103B, further preventing the flow of the water in the first opening 1101B, so that even if the eighth flow hole 108C of the planar valve 10C is in communication with the first flow hole 101C, a flow passage that allows the water to flow through cannot be formed, and even if the ninth flow hole 109C is in communication with the second flow hole 102C, a flow passage that allows the water to flow through cannot be formed. Therefore, water flow within the first water treatment device 51 and the second water treatment device 52 is prevented. Correspondingly, when the planar valve 10C is in the third backwash working position, water flow through the first water inlet 511 and the first water outlet 512 of the first water treatment device 51, water flow through the second water inlet 521 and the second water outlet 522 of the second water treatment device 52, are also prevented, to ensures that only the third water treatment device 53 is backwashed, so as to increase the intensity of the backwash flow directed at the third water treatment device 53 while simultaneously preventing the generated wastewater from flowing into the first water treatment device 51 and/or the second water treatment device 52. Therefore, when the planar valve 10C is in the third backwash working position, the third treatment device 53 of the water treatment device of the present invention is backwashed individually.

It is worth mentioning that when the planar valve 10C is in the third backwash working position, the flow passage formed by the communication between the ninth flow hole 109C and the second flow hole 102C, as well as the third flow hole 103C, are blocked by the rotating disk 122C respectively, thereby causing the second opening 1102B and the third opening 1103B to all be blocked. Even though the eighth flow hole 108C is in communication with the first flow hole 101B and the ninth flow hole 109C is in communication with the second flow hole 102C, the eighth flow hole 108C and the ninth flow hole 109C are both communicating blind holes, thereby resulting in no water flow within the first water treatment device 51 and the second water treatment device 52, and no water flowing in or out through the first opening 1101B, the second opening 1102B, and the third opening 1103B to ensure that only the third water treatment device 53 is backwashed, so as to not only increase the intensity of the raw water backwashing the third water treatment device 53 but also prevent the generated wastewater from flowing to the first water treatment device 51 and/or the second water treatment device 52. Therefore, when the planar valve 10C is in the third backwash working position, the third treatment device 53 of the water treatment device of the present invention is backwashed individually.

As shown in FIGS. 67A, 71, and 78D, as an example, when the planar valve 10C of the water treatment device according to the second embodiment of the present invention is controlled to be in the third backwash working position, raw water from the planar valve 10C, under water pressure, enters the third water treatment device 53 through its third water outlet 532, flows, under water pressure, from the third central tube 534 towards the third water treatment material 535, backwashing the third water treatment material 535, the generated wastewater exits the third water treatment device 53 through its third water inlet 531, flows, under water pressure, towards the fourth opening 1104B of the valve body 11C of the planar valve 10C, passes through the sixth backwash flow passage 7106C, is discharged through the drain opening 11010C.

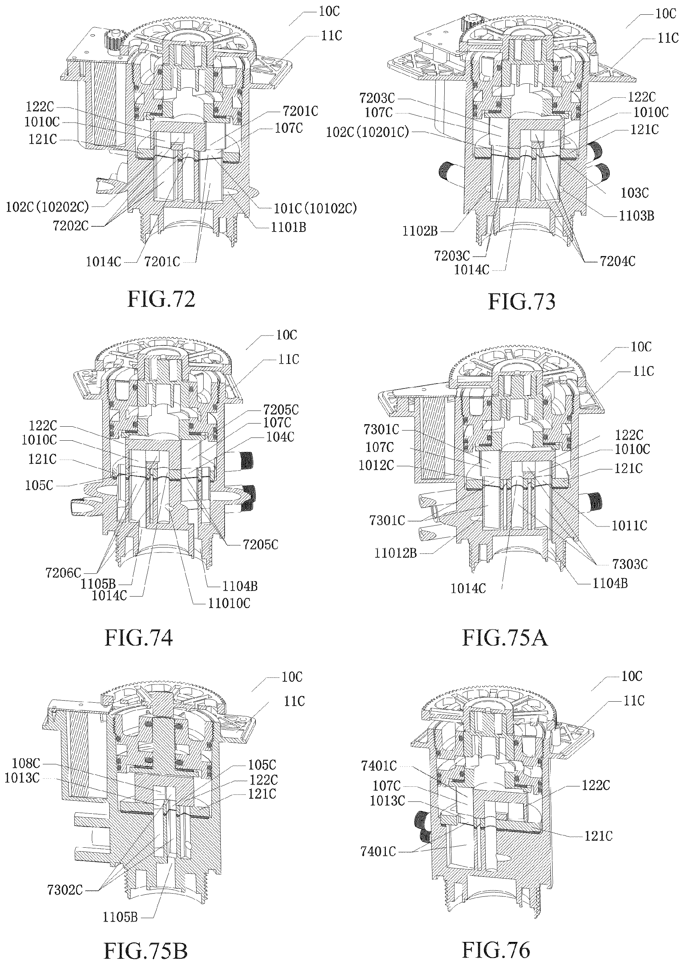

As shown in FIG. 67E, FIG. 72, and FIG. 78E, the planar valve 10C of the water treatment device according to the second embodiment of the present invention further has a first rinse working position, when the planar valve 10C is in the first rinse working position, the seventh flow hole 107C of the planar valve 10C is in communication with the first flow hole 101C, thereby forming a first rinse flow passage 7201C communicating with the second fluid opening 1107B and the first opening 1101B respectively, the tenth flow hole 1010C is in communication with the second flow hole 102C and the drain flow hole 1014C respectively, thereby forming a second rinse flow passage 7202C communicating with the drain opening 11010C and the second opening 1102B respectively. As shown in FIG. 64A to FIG. 64G, FIG. 67E, and FIG. 78E, when the planar valve 10C is in the first rinse working position, the eighth flow hole 108C is in communication with the first flow hole 101C, the ninth flow hole 109C is blocked by the first fluid control surface 1210C of the fixed disk 121C, and the third flow hole 103C, the fourth flow hole 104C, and the fifth flow hole 105C are respectively blocked by the second fluid control surface 1220C of the rotating disk 122C. As shown in FIG. 64A to FIG. 64G, FIG. 67E, and FIG. 78E, when the planar valve 10C is in the first rinse working position, the eighth flow hole 108C is in communication with the first flow hole 101C (the eighth flow hole 108C is in communication with one part of the first flow hole 101C, and the seventh flow hole 107C is in communication with another part of the first flow hole 101C), but the eighth flow hole 108C is a communicating blind hole, the ninth flow hole 109C is blocked by the first fluid control surface 1210C of the fixed disk 121C, and the third flow hole 103C, the fourth flow hole 104C, and the fifth flow hole 105C are respectively blocked by the second fluid control surface 1220C of the rotating disk 122C, thereby allowing the raw water to only flow into the seventh flow hole 107C from the second fluid opening 1107B of the planar valve 10C, and further pass through the first flow hole 101C and the first opening 1101B, flow toward the first water inlet 511 of the first water treatment device 51 and flow into the first water treatment device 51, and the waste water generated by the forward rinsing of the first water treatment device 51 flows out from the first water outlet 512 of the first water treatment device 51 and flows toward the second opening 1102B of the planar valve 10C, and under the water pressure, further passes through the second flow hole 102C of the planar valve 10C, the tenth flow hole 1010C, the drain flow hole 1014C and the drain opening 11010C to be discharged. In other words, although the eighth flow hole 108C is in communication with the first flow hole 101C, because the eighth flow hole 108C is a communicating blind hole, the flow passage formed by the eighth flow hole 108C and the first flow hole 101C is blocked by the rotating disk 122C, therefore the water flow does not flow through the flow passage formed by the eighth flow hole 108C and the first flow hole 101C, and the ninth flow hole 109C is blocked by the first fluid control surface 1210C of the fixed disk 121C, and the third flow hole 103C, the fourth flow hole 104C, and the fifth flow hole 105C are respectively blocked by the second fluid control surface 1220C of the rotating disk 122C; because the third flow hole 103C is blocked by the second fluid control surface 1220C of the rotating disk 122C, the flow of the waste water, which is generated by the forward rinsing of the first water treatment device 51 and flows out from the first water outlet 512 of the first water treatment device 51, toward the second water inlet 521 of the second water treatment device 52 is prevented. Therefore, when the planar valve 10C is in the first rinse working position, the eighth flow hole 108C is in communication with the first flow hole 101C, and the third flow hole 103C, the fourth flow hole 104C, and the fifth flow hole 105C are respectively blocked by the second fluid control surface 1220C of the rotating disk 122C, thereby preventing the water flow from flowing through the third opening 1103B, the fourth opening 1104B, and the fifth opening 1105B of the planar valve 10C, therefore, the water flow is prevented from flowing through the third opening 1103B, the fourth opening 1104B, and the fifth opening 1105B of the planar valve 10C, thereby preventing the flow of the water in the second water treatment device 52 and the third water treatment device 53. In other words, although the eighth flow hole 108C is in communication with the first flow hole 101C, the rotating disk 122C prevents raw water from flowing towards the third flow hole 103C, the fourth flow hole 104C, and the fifth flow hole 105C, thereby ensuring that only water flows to the water treatment device 51 and the first water treatment device 51 is rinsed.

It is worth mentioning that when the planar valve 10C is in the first rinse working position, the flow passage formed by the communication between the eighth flow hole 108C and the first flow hole 101C, the third flow hole 103C, the fourth flow hole 104C, and the fifth flow hole 105C, are all blocked by the rotating disk 122C respectively, which results in no water flowing into or out of the third opening 1103B, the fourth opening 1104B, or the fifth opening 1105B, in other words, water flow cannot flow towards the second water treatment device 52, and the third water treatment device 53 is isolated from the water flow, to ensure that only the first water treatment device 51 is rinsed, so as to enhance the intensity of the raw water flow used for rinsing the first water treatment device 51, while simultaneously preventing the generated wastewater from flowing into the second water treatment device 52 and/or the third water treatment device 53. Therefore, when the planar valve 10C is in the first rinse working position, the first water treatment device 51 of the water treatment device of the present invention is rinsed individually.

As shown in FIG. 67E, FIG. 72, and FIG. 78E, as an example, when the planar valve 10C of the water treatment device according to the second embodiment of the present invention is controlled to be in the first rinse working position, raw water from the planar valve 10C, under water pressure, flows from the first water inlet 511 of the first water treatment device 51 into the first water treatment device 51, then under water pressure, rinses the first water treatment material 515; the generated wastewater is collected by the first central tube 514 and flows out from the first water outlet 512 of the first water treatment device 51, and under water pressure, flows to the second opening 1102B of the planar valve 10C, then passes through the second rinse flow passage 7202C to flow to the drain opening 11010C and is discharged.

As shown in FIG. 67F, FIG. 73, and FIG. 78F, the planar valve 10C of the water treatment device according to the second embodiment of the present invention further has a second rinse working position, when the planar valve 10C is in the second rinse working position, the seventh flow hole 107C of the planar valve 10C is in communication with the second flow hole 102C, thereby forming a third rinse flow passage 7203C communicating with the second fluid opening 1107B and the second opening 1102B respectively, the tenth flow hole 1010C is in communication with the third flow hole 103C and the drain flow hole 1014C respectively, thereby forming a fourth rinse flow passage 7204C communicating with the drain opening 11010C and the third opening 1103B respectively.

As shown in FIG. 67G, FIG. 74, and FIG. 78G, the planar valve 10C of the water treatment device according to the second embodiment of the present invention further has a third rinse working position, when the planar valve 10C is in the third rinse working position, the seventh flow hole 107C of the planar valve 10C is in communication with the fourth flow hole 104C, thereby forming a fifth rinse flow passage 7205C communicating with the second fluid opening 1107B and the fourth opening 1104B respectively, the tenth flow hole 1010C is in communication with the fifth flow hole 105C and the drain flow hole 1014C respectively, thereby forming a sixth rinse flow passage 7206C communicating with the drain opening 11010C and the fifth opening 1105B respectively.

As shown in FIG. 64A to FIG. 64G, FIG. 67H, FIG. 75A, FIG. 75B, and FIG. 78H, the valve body 11C of the planar valve 10C of the water treatment device according to the second embodiment of the present invention further forms a first injector opening 11012B and a second injector opening 11013B, the planar valve 10C further has an eleventh flow hole 1011C, a twelfth flow hole 1012C, and a thirteenth flow hole 1013C, the eleventh flow hole 1011C, the twelfth flow hole 1012C, and the thirteenth flow hole 1013C are respectively arranged on the fixed disk 121C and extend from the first fluid control surface 1210C of the fixed disk 121C, the eleventh flow hole 1011C is in communication with the fourth opening 1104B, the twelfth flow hole 1012C is in communication with the first injector opening 11012B, the thirteenth flow hole 1013C is in communication with the second injector opening 11013B, the planar valve 10C further has a regeneration working position, when the planar valve 10C is in the regeneration working position, the seventh flow hole 107C is in communication with the twelfth flow hole 1012C, thereby forming a first regeneration flow passage 7301C communicating with the second fluid opening 1107B and the first injector opening 11012B respectively, the eighth flow hole 108C is in communication with the thirteenth flow hole 1013C and the fifth flow hole 105C respectively, thereby forming a second regeneration flow passage 7302C communicating with the second injector opening 11013B and the fifth opening 1105B respectively, the tenth flow hole 1010C is in communication with the eleventh flow hole 1011C and the drain flow hole 1014C respectively, thereby forming a third regeneration flow passage 7303C communicating with the drain opening 11010C and the fourth opening 1104B respectively. As shown in FIG. 64A to FIG. 64G, FIG. 67H, and FIG. 78H, when the planar valve 10C is in the regeneration working position, the ninth flow hole 109C is blocked by the first fluid control surface 1210C of the fixed disk 121C, and the first flow hole 101C, the second flow hole 102C, the third flow hole 103C, and the fourth flow hole 104C are respectively blocked by the second fluid control surface 1220C of the rotating disk 122C. Therefore, when the planar valve 10C of the water treatment device of the present invention is in the regeneration working position, the raw water, under the water pressure, flows in from the second fluid opening 1107B of the valve body 11C of the planar valve 10C, passes through the first regeneration flow passage 7301C (the seventh flow hole 107C and the twelfth flow hole 1012C) and flows toward the first injector opening 11012B of the valve body 11C, then flows into the nozzle outlet 182 of the injector 18, after being injected by the injector 18, mixes with the brine (such as a sodium chloride solution) from the brine suction inlet 181 to form a regenerant solution, the regenerant solution flows through the discharge outlet 183 of the injector 18 and into the second injector opening 11013B of the valve body 11C, then passes through the second regeneration flow passage 7302C (the thirteenth flow hole 1013C, the eighth flow hole 108C, and the fifth flow hole 105C) and flows into the fifth opening 1105B of the valve body 11C, the regenerant solution flows from the third water outlet 532 into the third water treatment device 53, after up-flow regeneration of the third water treatment material 535, such as softening resin, the waste water generated after regeneration flows out from the third water inlet 531, then sequentially passes through the fourth opening 1104B of the valve body 11C, the third regeneration flow passage 7303C (the eleventh flow hole 1011C, the tenth flow hole 1010C, and the drain flow hole 1014C) and the drain opening 11010C to flow out. As shown in FIG. 64A to FIG. 64G, FIG. 67H, and FIG. 78H, specifically, when the planar valve 10C is in the regeneration working position, the ninth flow hole 109C is blocked by the first fluid control surface 1210C of the fixed disk 121C, and the first flow hole 101C, the second flow hole 102C, the third flow hole 103C, and the fourth flow hole 104C are respectively blocked by the second fluid control surface 1220C of the rotating disk 122C, so that the raw water can only flow into the seventh flow hole 107C from the second fluid opening 1107B of the planar valve 10C, and further sequentially pass through the twelfth flow hole 1012C, the first injector opening 11012B, the injector 18, the second injector opening 11013B, the thirteenth flow hole 1013C, the eighth flow hole 108C, the fifth flow hole 105C, and the fifth opening 1105B to flow toward the third water outlet 532 of the third water treatment device 53 and flow into the third water treatment device 53, performing up-flow regeneration of the softening material (for example, softening resin) of the third water treatment device 53, the generated waste water flows out from the third water inlet 531 of the third water treatment device 53 and flows toward the fourth opening 1104B of the planar valve 10C, and under the water pressure, further passes through the eleventh flow hole 1011C of the planar valve 10C, the tenth flow hole 1010C, the drain flow hole 1014C and the drain opening 11010C to be discharged. In other words, when the planar valve 10C is in the regeneration working position, the ninth flow hole 109C is blocked by the first fluid control surface 1210C of the fixed disk 121C, and the first flow hole 101C, the second flow hole 102C, the third flow hole 103C, and the fourth flow hole 104C are respectively blocked by the second fluid control surface 1220C of the rotating disk 122C, thereby preventing the water flow from flowing through the first opening 1101B, the second opening 1102B, and the third opening 1103B of the planar valve 10C and preventing the flow of the water in the first water treatment device 51 and the second water treatment device 52, so as to ensure that only the third water treatment device 53 (or the softening material of the third water treatment device 53) is up-flow regenerated.

It is worth mentioning that when the planar valve 10C is in the regeneration working position, the ninth flow hole 109C is blocked by the first fluid control surface 1210C of the fixed disk 121C, and the first flow hole 101C, the second flow hole 102C, the third flow hole 103C, and the fourth flow hole 104C are respectively blocked by the second fluid control surface 1220C of the rotating disk 122C, that is to say, the first water treatment device 51 and the second water treatment device 52 are both isolated from the water flow, so as to ensure that only the third water treatment device 53 is regenerated by the up-flow regeneration, thereby not only increasing the intensity of the water flow for the up-flow regeneration of the third water treatment device 53 by the regenerant solution, but also preventing the generated waste water from flowing to the first water treatment device 51 and/or the second water treatment device 52. Especially to prevent the regenerant solution (or the discharged wastewater after resin regeneration, as such wastewater has a high salt content) from entering the first water treatment device 51 and/or the second water treatment device 52. In practical use, the first water treatment device 51 or the second water treatment device 52 is often filled with filter material such as activated carbon or other adsorbent materials, the regenerant solution can contaminate filter material like activated carbon, thereby reducing the purification capacity of the first water treatment device 51 or the second water treatment device 52 (if they are configured as water purification devices). This is also a primary reason why multi-stage purification and softening water treatment systems cannot simply connect an activated carbon water treatment device and a softening resin water treatment device directly in series. Therefore, when the planar valve 10C is in the regeneration working position, the third water treatment device 53 of the water treatment device of the present invention is individually regenerated by up-flow regeneration, thereby preventing substances such as sodium chloride in the regeneration waste liquid from contaminating the activated carbon particles in the first water treatment device 51 or the second water treatment device 52 (if the first water treatment device 51 or the second water treatment device 52 uses activated carbon as the filter material).

As shown in FIG. 64A to FIG. 64G, FIG. 67H, FIG. 75A, FIG. 75B, and FIG. 78H, as an example, when the planar valve 10C of the water treatment device according to the second embodiment of the present invention is controlled to be in the regeneration working position, raw water from the planar valve 10C, under water pressure, mixes with the brine from the injector 18 to form a regenerant solution, flows from the third water outlet 532 of the third water treatment device 53 into the third water treatment device 53; then under water pressure, it passes through the third central tube 534 and regenerates the third water treatment material 535 in up-flow mode; the generated wastewater flows out from the third water inlet 531 of the third water treatment device 53, and under water pressure, flows to the fourth opening 1104B of the planar valve 10C, then passes through the third regeneration flow passage 7303C to flow to the drain opening 11010C and is discharged.

As shown in FIG. 64A to FIG. 64G, FIG. 67F, and FIG. 78F, when the planar valve 10C is in the second rinse working position, the eighth flow hole 108C is in communication with the first flow hole 101C and the eleventh flow hole 1011C respectively, the ninth flow hole 109C is in communication with the twelfth flow hole 1012C, and the fourth flow hole 104C, the fifth flow hole 105C, and the thirteenth flow hole 1013C are respectively blocked by the second fluid control surface 1220C of the rotating disk 122C. As shown in FIG. 64A to FIG. 64G, FIG. 67F, and FIG. 78F, specifically, when the planar valve 10C is in the second rinse working position, the eighth flow hole 108C is in communication with the first flow hole 101C and the eleventh flow hole 1011C respectively, the ninth flow hole 109C is in communication with the twelfth flow hole 1012C, and the eighth flow hole 108C and the ninth flow hole 109C are both communicating blind holes, so that the flow passage formed by the ninth flow hole 109C being in communication with the twelfth flow hole 1012C is blocked by the rotating disk 122C, simultaneously, the fourth flow hole 104C, the fifth flow hole 105C, and the thirteenth flow hole 1013C are respectively blocked by the second fluid control surface 1220C of the rotating disk 122C, thereby preventing the water flow from flowing into the first opening 1101B, the fourth opening 1104B, the fifth opening 1105B, the first injector opening 11012B, and the second injector opening 11013B of the planar valve 10C through the valve chamber 110C of the planar valve 10C, and allowing the raw water to only flow into the seventh flow hole 107C from the second fluid opening 1107B of the planar valve 10C, and further pass through the second flow hole 102C, the second opening 1102B, flow toward the second water inlet 521 of the second water treatment device 52 and flow into the second water treatment device 52, the waste water generated by the forward rinsing of the second water treatment device 52 flows from the second water outlet 522 of the second water treatment device 52 toward the third opening 1103B of the planar valve 10C, and under the water pressure, further passes through the third flow hole 103C of the planar valve 10C, the tenth flow hole 1010C, the drain flow hole 1014C and the drain opening 11010C to be discharged. In other words, when the planar valve 10C is in the second rinse working position, the eighth flow hole 108C is in communication with the first flow hole 101C and the eleventh flow hole 1011C respectively, and the ninth flow hole 109C is in communication with the twelfth flow hole 1012C, but the water flow does not flow through the flow passages formed by them. Accordingly, when the planar valve 10C is in the second rinse working position, since the eighth flow hole 108C is in communication with the first flow hole 101C and the eleventh flow hole 1011C respectively, the second flow hole 102C, the second opening 1102B, the first water treatment device 51, the first opening 1101B, the first flow hole 101C, the eighth flow hole 108C, the eleventh flow hole 1011C, the fourth opening 1104B, the third water treatment device 53, the fifth opening 1105B, and the fifth flow hole 105C form a flow passage, but because the fourth flow hole 104C and the fifth flow hole 105C are both blocked by the rotating disk 122C, the fifth opening 1105B is blocked, so that the water flow cannot flow through the flow passage formed by the second flow hole 102C, the second opening 1102B, the first water treatment device 51, the first opening 1101B, the first flow hole 101C, the eighth flow hole 108C, the eleventh flow hole 1011C, the fourth opening 1104B, the third water treatment device 53, the fifth opening 1105B, and the fifth flow hole 105C. Furthermore, when the planar valve 10C is in the second rinse working position, the ninth flow hole 109C is in communication with the twelfth flow hole 1012C, and the ninth flow hole 109C is a communicating blind hole, so that the flow passage formed by the communication between the ninth flow hole 109C and the twelfth flow hole 1012C is blocked by the rotating disk 122C, thereby preventing water from flowing in and out through the flow passage formed by the communication between the ninth flow hole 109C and the twelfth flow hole 1012C; the fifth flow hole 105C is blocked by the rotating disk 122C, thereby preventing water flow from flowing from the fifth flow hole 105C to the third water treatment device 53, or from the third water treatment device 53 to the fifth flow hole 105C. In other words, the flow of rinse water from the second opening 1102B toward the first water outlet 512 of the first water treatment device 51 is prevented, thereby preventing water flow from passing through the first water treatment device 51 and the third water treatment device 53, thus ensuring that only the second water treatment device 52 is rinsed.

It is worth mentioning that when the planar valve 10C is in the second rinse working position, the flow passage formed by the communication between the ninth flow hole 109C and the twelfth flow hole 1012C, the fourth flow hole 104C, the fifth flow hole 105C, and the thirteenth flow hole 1013C, are blocked by the rotating disk 122C respectively; there is no water flow within the first water treatment device 51, and there is no water flow within the third water treatment device 53, to ensure that only the second water treatment device 52 is rinsed, so as to not only increase the intensity of the raw water rinsing the second water treatment device 52 but also prevent the generated wastewater from flowing to the first water treatment device 51 and/or the third water treatment device 53. Therefore, when the planar valve 10C is in the second rinse working position, the second treatment device 52 of the water treatment device of the present invention is rinsed individually.

As shown in FIGS.67F, 73, and 78F, as an example, when the planar valve 10C of the water treatment device according to the second embodiment of the present invention is controlled to be in the second rinse working position, raw water from the planar valve 10C, under water pressure, enters the second water treatment device 52 through its second water inlet 521, under water pressure, rinses the second water treatment material 525, the generated wastewater is collected by the second central tube 524, exits the second water treatment device 52 through its second water outlet 522, and flows, under water pressure, towards the third opening 1103B of the planar valve 10C, and then passes through the fourth rinse flow passage 7204C and is discharged through the drain opening 11010C.

As shown in FIG. 64A to FIG. 64G, FIG. 67G, and FIG. 78G, when the planar valve 10C is in the third rinse working position, the eighth flow hole 108C is in communication with the second flow hole 102C and the twelfth flow hole 1012C respectively, the ninth flow hole 109C is in communication with the first flow hole 101C, and the third flow hole 103C, the eleventh flow hole 1011C, and the thirteenth flow hole 1013C are respectively blocked by the second fluid control surface 1220C of the rotating disk 122C. As shown in FIG. 64A to FIG. 64G, FIG. 67G, and FIG. 78G, specifically, when the planar valve 10C is in the third rinse working position, the eighth flow hole 108C is in communication with the second flow hole 102C and the twelfth flow hole 1012C respectively, the ninth flow hole 109C is in communication with the first flow hole 101C, the third flow hole 103C, the eleventh flow hole 1011C, and the thirteenth flow hole 1013C are respectively blocked by the second fluid control surface 1220C of the rotating disk 122C, and the eighth flow hole 108C and the ninth flow hole 109C are both communicating blind holes, so that the raw water can only flow into the seventh flow hole 107C from the second fluid opening 1107B of the planar valve 10C, and further pass through the fourth flow hole 104C, the fourth opening 1104B, flow toward the third water inlet 531 of the third water treatment device 53 and flow into the third water treatment device 53, the waste water generated by the forward rinsing of the third water treatment device 53 flows out from the third water outlet 532 of the third water treatment device 53 and flows toward the fifth opening 1105B of the planar valve 10C, and under the water pressure, further passes through the fifth flow hole 105C of the planar valve 10C, the tenth flow hole 1010C, the drain flow hole 1014C and the drain opening 11010C to be discharged. In other words, the eighth flow hole 108C is in communication with the second flow hole 102C and the twelfth flow hole 1012C respectively, and the ninth flow hole 109C is in communication with the first flow hole 101C, but the eighth flow hole 108C and the ninth flow hole 109C are both communicating blind holes, so that the flow passage formed by the ninth flow hole 109C being in communication with the first flow hole 101C is blocked by the rotating disk 122C, although the eighth flow hole 108C is in communication with the second flow hole 102C and the twelfth flow hole 1012C respectively, the third flow hole 103C, the eleventh flow hole 1011C, and the thirteenth flow hole 1013C are respectively blocked by the second fluid control surface 1220C of the rotating disk 122C, thereby preventing the water flow from flowing through the first opening 1101B, the second opening 1102B, the third opening 1103B, the first injector opening 11012B, and the second injector opening 11013B of the planar valve 10C, and allowing the raw water to only flow into the seventh flow hole 107C from the second fluid opening 1107B of the planar valve 10C, and further pass through the fourth flow hole 104C and the fourth opening 1104B to flow toward the third water inlet 531 of the third water treatment device 53 and flow into the third water treatment device 53, then under the water pressure, the third water treatment material 535 is forward rinsed, the generated waste water is collected by the third center pipe 534, and flows out from the third water outlet 532 of the third water treatment device 53 and flows into the fifth opening 1105B, and under the water pressure, further passes through the fifth flow hole 105C of the planar valve 10C, the tenth flow hole 1010C, the drain flow hole 1014C and the drain opening 11010C to be discharged. In other words, when the planar valve 10C is in the third rinse working position, the eighth flow hole 108C is in communication with the second flow hole 102C and the twelfth flow hole 1012C respectively, and the ninth flow hole 109C is in communication with the first flow hole 101C, but the water flow does not flow through the flow passages formed by them. Accordingly, when the planar valve 10C is in the third rinse working position, because the eighth flow hole 108C is in communication with the second flow hole 102C and the twelfth flow hole 1012C respectively, and the second opening 1102B of the valve body 11C, the first water outlet 512 of the first water treatment device 51, and the second water inlet 521 of the second water treatment device 52 form the three-way structure 61, the first injector opening 11012B, the twelfth flow hole 1012C, the eighth flow hole 108C, the second flow hole 102C, the second opening 1102B, the first water treatment device 51, the first opening 1101B, and the first flow hole 101C form one flow passage, and the first injector opening 11012B, the twelfth flow hole 1012C, the eighth flow hole 108C, the second flow hole 102C, the second opening 1102B, the second water treatment device 52, the third opening 1103B, and the third flow hole 103C form another flow passage, but because the flow passage formed by the ninth flow hole 109C being in communication with the first flow hole 101C is blocked by the rotating disk 122C, and the third flow hole 103C is blocked by the second fluid control surface 1220C of the rotating disk 122C, the first opening 1101B and the third opening 1103B are blocked, further preventing the water flow from flowing through the second opening 1102B and the first injector opening 11012B; because the thirteenth flow hole 1013C is blocked by the second fluid control surface 1220C of the rotating disk 122C, the second injector opening 11013B is blocked by the rotating disk 122C, thereby preventing the water flow from flowing through the injector 18. In other words, water flow cannot enter the first water treatment device 51 and the second water treatment device 52, thereby ensuring that only the third water treatment device 53 is rinsed.

It is worth mentioning that when the planar valve 10C is in the third rinse working position, the flow passage formed by the communication between the ninth flow hole 109C and the first flow hole 101C, the third flow hole 103C, the eleventh flow hole 1011C, and the thirteenth flow hole 1013C are respectively blocked by the rotating disk 122C, causing the first injector opening 11012B, the twelfth flow hole 1012C, the eighth flow hole 108C, the second flow hole 102C, the second opening 1102B, the first water treatment device 51 (the second water treatment device 52), the first opening 1101B (the third opening 1103B), and the first flow hole 101C (the third flow hole 103C) to form a flow passage isolated from the raw water, that is to say, when the planar valve 10C is in the third rinse working position, the first water treatment device 51 and the second water treatment device 52 are isolated from the water flow, so as to ensure that only the third water treatment device 53 is forward rinsed, thereby not only increasing the intensity of the water flow for the forward rinsing of the third water treatment device 53 by the raw water, but also preventing the generated waste water from flowing to the first water treatment device 51 and/or the second water treatment device 52. Therefore, when the planar valve 10C is in the third rinse working position, the third treatment device 53 of the water treatment device of the present invention is rinsed individually.

As shown in FIGS.67G, 74, and 78G, as an example, when the planar valve 10C of the water treatment device according to the second embodiment of the present invention is controlled to be in the third rinse working position, raw water from the planar valve 10C, under water pressure, enters the third water treatment device 53 through its third water inlet 531, under water pressure, rinses the third water treatment material 535, the generated wastewater is collected by the third central tube 534, exits the third water treatment device 53 through its third water outlet 532, and flows, under water pressure, towards the fifth opening 1105B of the planar valve 10C, and then passes through the sixth rinse flow passage 7206C and is discharged through the drain opening 11010C.

As shown in FIG. 67I, FIG. 76, and FIG. 78I, the planar valve 10C of the water treatment device according to the second embodiment of the present invention further has a water refill working position, when the planar valve 10C is in the water refill working position, the seventh flow hole 107C is in communication with the thirteenth flow hole 1013C, thereby forming a water refill flow passage 7401C communicating with the second fluid opening 1107B and the second injector opening 11013B respectively. As shown in FIG. 64A to FIG. 64G, FIG. 67I, and FIG. 78I, when the planar valve 10C is in the water refill working position, the eighth flow hole 108C is in communication with the first flow hole 101C and the second flow hole 102C respectively, the ninth flow hole 109C is in communication with the third flow hole 103C, the tenth flow hole 1010C is in communication with the drain flow hole 1014C, and the fourth flow hole 104C, the fifth flow hole 105C, the eleventh flow hole 1011C, and the twelfth flow hole 1012C are respectively blocked by the second fluid control surface 1220C of the rotating disk 122C. Although the eighth flow hole 108C is in communication with the first flow hole 101C and the second flow hole 102C respectively, and the ninth flow hole 109C is in communication with the third flow hole 103C, because the fourth flow hole 104C, the fifth flow hole 105C, the eleventh flow hole 1011C, and the twelfth flow hole 1012C are respectively blocked by the rotating disk 122C, the fourth flow hole 104C (the eleventh flow hole 1011C), the fourth opening 1104B, the third water treatment device 53, the fifth opening 1105B, and the fifth flow hole 105C form a flow passage isolated from the raw water; the eighth flow hole 108C is in communication with the first flow hole 101C and the second flow hole 102C respectively, the ninth flow hole 109C is in communication with the third flow hole 103C, and the eighth flow hole 108C and the ninth flow hole 109C are both communicating blind holes, the flow passage formed by the ninth flow hole 109C being in communication with the third flow hole 103C is blocked by the rotating disk 122C, thereby causing the eighth flow hole 108C, the second flow hole 102C, the second opening 1102B, the first water treatment device 51, the first opening 1101B, the first flow hole 101C, and the eighth flow hole 108C to form a flow passage isolated from the raw water, and thereby causing the eighth flow hole 108C, the second flow hole 102C, the second opening 1102B, the second water treatment device 52, the third opening 1103B, the third flow hole 103C, and the ninth flow hole 109C to form another flow passage isolated from the raw water, so that the raw water cannot flow to the first water treatment device 51, the second water treatment device 52, and the third water treatment device 53. Although the tenth flow hole 1010C is in communication with the drain flow hole 1014C, they cannot form a flow passage that allows water to flow through.

As shown in FIG. 63A, FIG. 63F, FIG. 67A, FIG. 68D, and FIG. 78A, the valve body 11C of the planar valve 10C of the water treatment device according to the second embodiment of the present invention further forms a third fluid opening 1115B, the planar valve 10C further has a water supply flow hole 1015C, the water supply flow hole 1015C is arranged on the fixed disk 121C and extends from the first fluid control surface 1210C of the fixed disk 121C, the water supply flow hole 1015C is in communication with the third fluid opening 1115B. As shown in FIG. 67A, FIG. 68A to FIG. 68D, and FIG. 78A, when the planar valve 10C is in the water treatment working position, the eighth flow hole 108C of the planar valve 10C is further in communication with the third flow hole 103C and the water supply flow hole 1015C respectively, thereby forming a fourth water treatment flow passage 7004C communicating with the third opening 1103B and the third fluid opening 1115B of the valve body 11C respectively. That is to say, when the planar valve 10C is in the water treatment working position, the seventh flow hole 107C of the planar valve 10C is in communication with the first flow hole 101C, thereby forming the first water treatment flow passage 7001C communicating with the second fluid opening 1107B and the first opening 1101B respectively, the eighth flow hole 108C is in communication with the third flow hole 103C, the fourth flow hole 104C, and the water supply flow hole 1015C respectively, thereby forming the second water treatment flow passage 7002C communicating with the third opening 1103B and the fourth opening 1104B respectively and forming the fourth water treatment flow passage 7004C which is in communication with the third opening 1103B and the third fluid opening 1115B respectively, the ninth flow hole 109C is in communication with the fifth flow hole 105C and the sixth flow hole 106C respectively, thereby forming the third water treatment flow passage 7003C communicating with the fifth opening 1105B and the first fluid opening 1106B respectively. It is understandable that when the planar valve 10C is in the water treatment working position, the third flow hole 103C, the fourth flow hole 104C, and the water supply flow hole 1015C are intercommunicated through the eighth flow hole 108C, thereby causing the third opening 1103B, the fourth opening 1104B, and the third fluid opening 1115B to form a three-way structure. Preferably, the water supply flow hole 1015C is arranged outward of the fourth flow hole 104B. As shown in FIG. 64A to FIG. 64G, FIG. 67A, and FIG. 78A, when the planar valve 10C is in the water treatment working position, the second flow hole 102C, the eleventh flow hole 1011C, the twelfth flow hole 1012C, and the thirteenth flow hole 1013C are respectively blocked by the second fluid control surface 1220C of the rotating disk 122C, and the tenth flow hole 1010C is in communication with the drain flow hole 1014C. Although the tenth flow hole 1010C is in communication with the drain flow hole 1014C, they cannot form a flow passage that allows water to flow through.

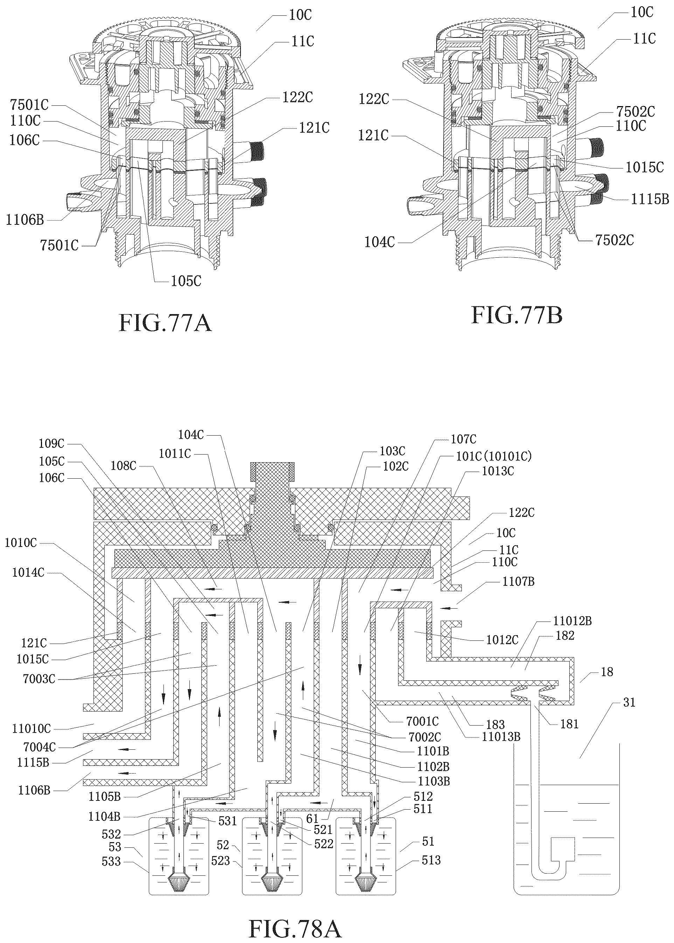

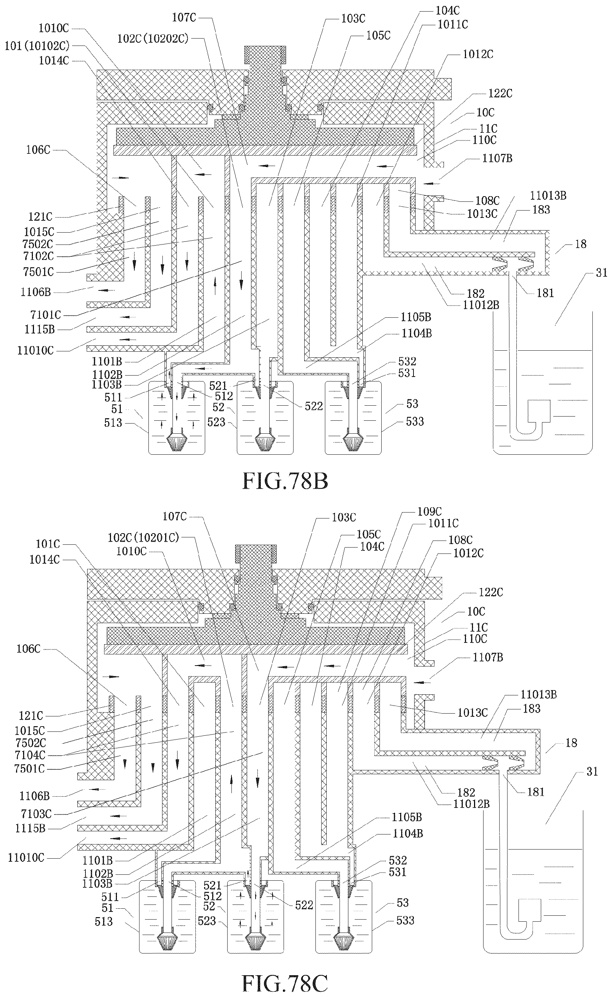

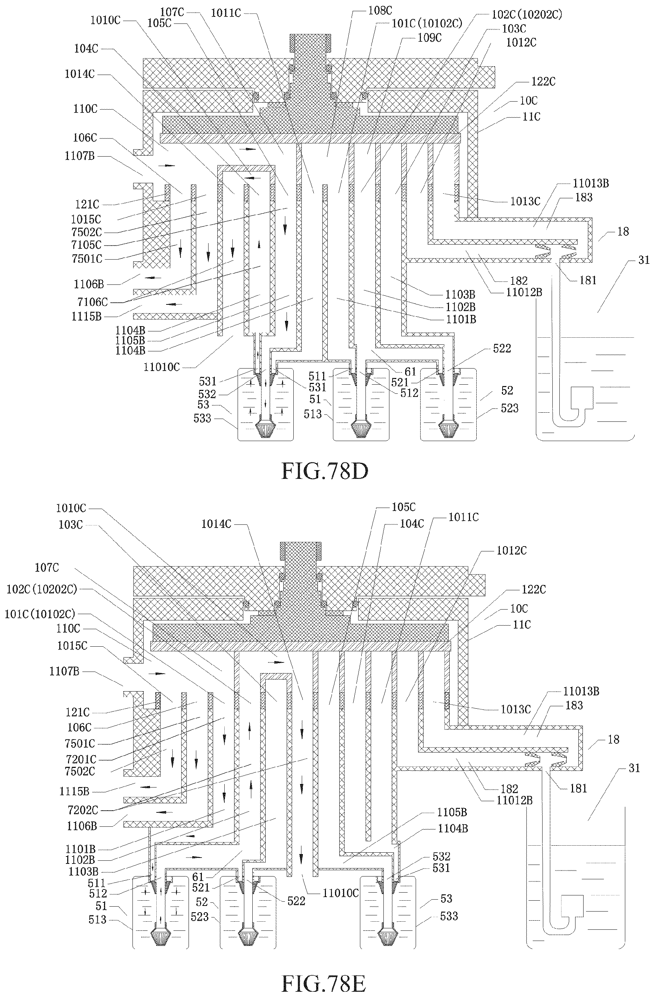

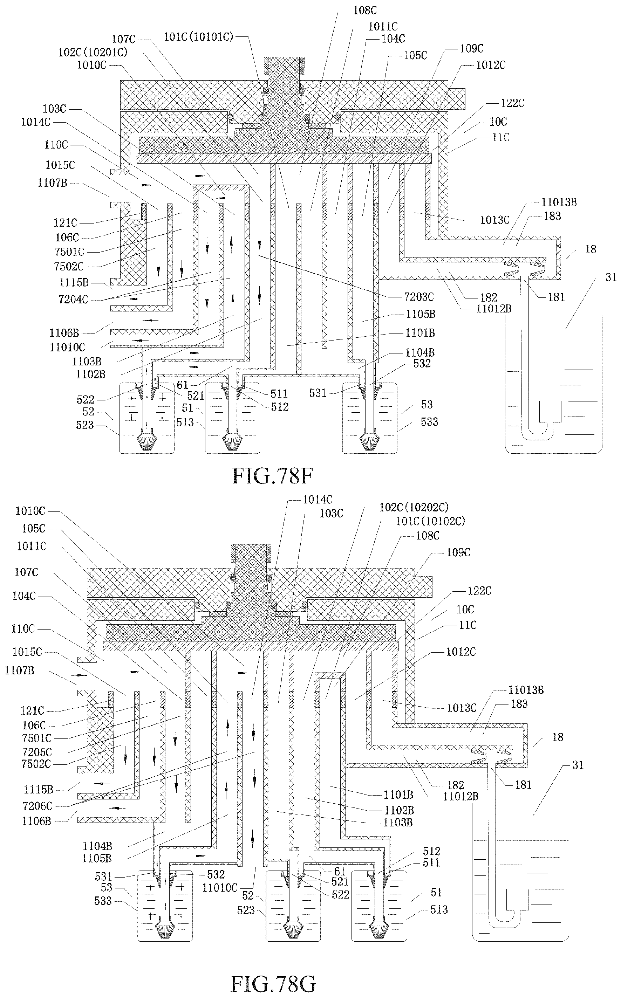

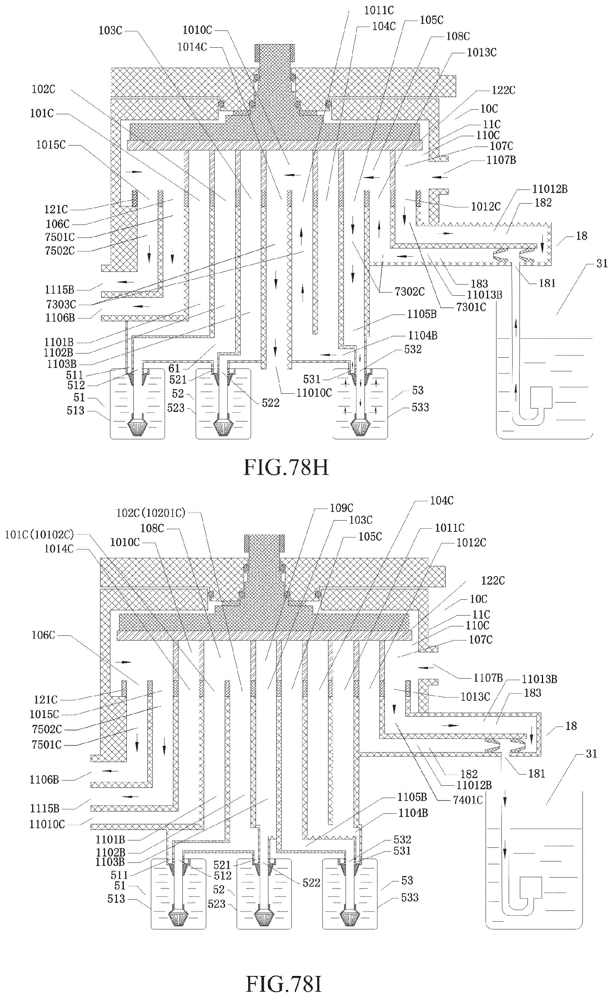

As shown in FIGS. 77A, 77B, and 78B to 78I, when the planar valve 10C of the water treatment device according to the second embodiment of the present invention is in the first backwash working position, the second backwash working position, the third backwash working position, the first rinse working position, the second rinse working position, the third rinse working position, the regeneration working position, or the water refill working position, the sixth flow hole 106C of the planar valve 10C is in communication with the valve chamber 110C of the valve body 11C and is further in communication with the second fluid opening 1107B through the valve chamber 110C, thereby forming a first raw water supply flow passage 7501C communicating with the second fluid opening 1107B and the first fluid opening 1106B of the valve body 11C respectively; the water supply flow hole 1015C of the planar valve 10C is in communication with the valve chamber 110C of the valve body 11C and is further in communication with the second fluid opening 1107B through the valve chamber 110C, thereby forming a second raw water supply flow passage 7502C communicating with the second fluid opening 1107B and the third fluid opening 1115B of the valve body 11C respectively.

As shown in FIGS. 63C to 67I, the first flow hole 101C of the planar valve 10C of the water treatment device according to the second embodiment of the present invention has a first communication portion 10101C and a second communication portion 10102C, wherein the first communication portion 10101C of the first flow hole 101C is in communication with the first opening 1101B, and the second communication portion 10102C of the first flow hole 101C is in communication with the first opening 1101B. Preferably, the first flow hole 101C of the planar valve 10C further has a third communication portion 10103C extending between the first communication portion 10101C and the second communication portion 10102C, the second communication portion 10102C of the first flow hole 101C is in communication with the first opening 1101B, and the first communication portion 10101C of the first flow hole 101C is in communication with the second communication portion 10102C through the third communication portion 10103C, that is to say, the first communication portion 10101C of the first flow hole 101C is in communication with the first opening 1101B through the third communication portion 10103C and the second communication portion 10102C. Preferably, the eleventh flow hole 1011C of the planar valve 10C is arranged outward of the third communication portion 10103C. The second flow hole 102C of the planar valve 10C has a first conduction portion 10201C and a second conduction portion 10202C, wherein the first conduction portion 10201C of the second flow hole 102C is in communication with the second opening 1102B, and the second conduction portion 10202C of the second flow hole 102C is in communication with the second opening 1102B. Preferably, the second flow hole 102C of the planar valve 10C further has a third conduction portion 10203C extending between the first conduction portion 10201C and the second conduction portion 10202C, wherein the first conduction portion 10201C of the second flow hole 102C is in communication with the second opening 1102B, and the second conduction portion 10202C of the second flow hole 102C is in communication with the first conduction portion 10201C through the third conduction portion 10203C. In other words, the second conduction portion 10202C of the second flow hole 102C is in communication with the second opening 1102B through the third conduction portion 10203C and the first conduction portion 10201C. Preferably, the fifth flow hole 105C, the twelfth flow hole 1012C, and the thirteenth flow hole 1013C of the planar valve 10C are arranged outward of the third conduction portion 10203C.

As shown in FIG. 64A to FIG. 66B, the first fluid control surface 1210C of the fixed disk 121C of the planar valve 10C of the water treatment device according to the second embodiment of the present invention forms a central portion 12101C, an extension portion 12102C extending outward from the central portion 12101C, and an edge portion 12103C extending outward from the extension portion 12102C, the second fluid control surface 1220C of the rotating disk 122C of the planar valve 10C forms a central region 12201C, an extension region 12202C extending outward from the central region 12201C, and an edge region 12203C extending outward from the extension region 12202C, the first communication portion 10101C of the first flow hole 101C, the fourth flow hole 104C and the water supply flow hole 1015C, the third flow hole 103C, the second conduction portion 10202C of the second flow hole 102C, the twelfth flow hole 1012C, the thirteenth flow hole 1013C, the fifth flow hole 105C and the sixth flow hole 106C, the first conduction portion 10201C of the second flow hole 102C, the second communication portion 10102C of the first flow hole 101C, and the eleventh flow hole 1011C of the planar valve 10C are arranged clockwise in this order on the edge portion 12103C of the first fluid control surface 1210C of the fixed disk 121C, the seventh flow hole 107C, the eighth flow hole 108C, the tenth flow hole 1010C, and the ninth flow hole 109C of the planar valve 10C are arranged clockwise in this order on the second fluid control surface 1220C of the rotating disk 122C. Alternatively, the first communication portion 10101C of the first flow hole 101C, the fourth flow hole 104C and the water supply flow hole 1015C, the third flow hole 103C, the second conduction portion 10202C of the second flow hole 102C, the twelfth flow hole 1012C, the thirteenth flow hole 1013C, the fifth flow hole 105C and the sixth flow hole 106C, the first conduction portion 10201C of the second flow hole 102C, the second communication portion 10102C of the first flow hole 101C, and the eleventh flow hole 1011C of the planar valve 10C are arranged counterclockwise in this order on the edge portion 12103C of the first fluid control surface 1210C of the fixed disk 121C, and the seventh flow hole 107C, the eighth flow hole 108C, the tenth flow hole 1010C, and the ninth flow hole 109C of the planar valve 10C are arranged counterclockwise in this order on the second fluid control surface 1220C of the rotating disk 122C. The drain flow hole 1014C is arranged in the central portion 12101C of the first fluid control surface 1210C of the fixed disk 121C. Preferably, the first flow hole 101C, the fourth flow hole 104C, the water supply flow hole 1015C, the third flow hole 103C, the second flow hole 102C, the twelfth flow hole 1012C, the thirteenth flow hole 1013C, the fifth flow hole 105C, the sixth flow hole 106C, the eleventh flow hole 1011C, and the drain flow hole 1014C of the planar valve 10C are arranged spaced apart from each other on the first fluid control surface 1210C of the fixed disk 121C; the seventh flow hole 107C, the eighth flow hole 108C, the tenth flow hole 1010C, and the ninth flow hole 109C of the planar valve 10C are arranged spaced apart from each other on the second fluid control surface 1220C of the rotating disk 122C. Preferably, the third communication portion 10103C of the first flow hole 101C and the third conduction portion 10203C of the second flow hole 102C are arranged on the extension portion 12102C of the first fluid control surface 1210C of the fixed disk 121C, the sixth flow hole 106C is arranged outward of the fifth flow hole 105C, and the water supply flow hole 1015C is arranged outward of the fourth hole 104C.

As shown in FIGS. 64A to 66B, preferably, the rotating disk 122C of the planar valve 10C of the water treatment device according to the second embodiment of the present invention has a bottom end portion 1221C and a top end portion 1222C; the tenth flow hole 1010C has a central flow hole 10106C and an edge flow hole 10105C in communication with the central flow hole 10106C, wherein the central flow hole 10106C is provided on the central region 12201C of the second fluid control surface 1220C of the rotating disk 122C and extends upward from the bottom end portion 1221C to the top end portion 1222C of the rotating disk 122C; the edge flow hole 10105C is provided on the edge region 12203C of the second fluid control surface 1220C of the rotating disk 122C and extends upward from the bottom end portion 1221C to the top end portion 1222C of the rotating disk 122C; wherein the central flow hole 10106C extends upward from the second fluid control surface 1220C and extends toward the direction of the edge flow hole 10105C; the edge flow hole 10105C extends upward from the second fluid control surface 1220C and extends toward the direction of the central flow hole 10106C, thereby causing the central flow hole 10106C and the edge flow hole 10105C of the tenth flow hole 1010C to be in communication with each other; the extension region 12202C forms a sealing bridge 10107C located between the central flow hole 10106C and the edge flow hole 10105C, wherein the sealing bridge 10107C is adapted to separate the tenth flow hole 1010C from the third communication portion 10103C of the first flow hole 101C and the third conduction portion 10203C of the second flow hole 102C respectively. Accordingly, the edge flow hole portion 10105C of the tenth flow hole 1010C is in communication with the central flow hole portion 10106C, the central flow hole portion 10106C of the tenth flow hole 1010C is in communication with the drain flow hole 1014C, and the drain flow hole 1014C is in communication with the drain opening 11010C.

As shown in FIGS. 64A to 67I, when the planar valve 10C of the water treatment device according to the second embodiment of the present invention is in the water treatment working position, the seventh flow hole 107C of the planar valve 10C is in communication with the first communication portion 10101C of the first flow hole 101C; the eighth flow hole 108C is in communication with the third flow hole 103C, the fourth flow hole 104C, and the water supply flow hole 1015C respectively; the ninth flow hole 109C is in communication with the fifth flow hole 105C and the sixth flow hole 106C respectively; the eleventh flow hole 1011C, the twelfth flow hole 1012C, and the thirteenth flow hole 1013C are respectively blocked by the second fluid control surface 1220C of the rotating disk 122C; the second communication portion 10102C, the third communication portion 10103C of the first flow hole 101C, the first conduction portion 10201C the second conduction portion 10202C, and the third conduction portion 10203C of the second flow hole 102C are respectively blocked by the second fluid control surface 1220C of the rotating disk 122C; the central flow hole 10106C of the tenth flow hole 1010C is in communication with the drain flow hole 1014C; the edge flow hole 10105C of the tenth flow hole 1010C is blocked by the first fluid control surface 1210C of the fixed disk 121C; the sealing bridge 10107C of the tenth flow hole 1010C separates the third conduction portion 10203C of the second flow hole 102C from the tenth flow hole 1010C. When the planar valve 10C is in the first backwash working position, the seventh flow hole 107C of the planar valve 10C is in communication with the second conduction portion 10202C of the second flow hole 102C; the edge flow hole 10105C of the tenth flow hole 1010C is in communication with the second communication portion 10102C of the first flow hole 101C; the central flow hole 10106C of the tenth flow hole 1010C is in communication with the drain flow hole 1014C; the eighth flow hole 108C is in communication with the thirteenth flow hole 1013C; the ninth flow hole 109C is in communication with the first communication portion 10101C of the first flow hole 101C; the third flow hole 103C, the fourth flow hole 104C, the fifth flow hole 105C, the eleventh flow hole 1011C, and the twelfth flow hole 1012C are respectively blocked by the second fluid control surface 1220C of the rotating disk 122C; the third communication portion 10103C of the first flow hole 101C, the first conduction portion 10201C, and the third conduction portion 10203C of the second flow hole 102C are respectively blocked by the second fluid control surface 1220C of the rotating disk 122C. When the planar valve 10C is in the second backwash working position, the seventh flow hole 107C of the planar valve 10C is in communication with the third flow hole 103C; the edge flow hole 10105C of the tenth flow hole 1010C is in communication with the first conduction portion 10201C of the second flow hole 102C; the central flow hole 10106C of the tenth flow hole 1010C is in communication with the drain flow hole 1014C; the eighth flow hole 108C is in communication with the twelfth flow hole 1012C; the ninth flow hole 109C is in communication with the eleventh flow hole 1011C; the fourth flow hole 104C, the fifth flow hole 105C, and the thirteenth flow hole 1013C are respectively blocked by the second fluid control surface 1220C of the rotating disk 122C; the first communication portion 10101C, the second communication portion 10102C, the third communication portion 10103C of the first flow hole 101C, the second conduction portion 10202C, and the third conduction portion 10203C of the second flow hole 102C are respectively blocked by the second fluid control surface 1220C of the rotating disk 122C. When the planar valve 10C is in the third backwash working position, the seventh flow hole 107C of the planar valve 10C is in communication with the fifth flow hole 105C; the edge flow hole 10105C of the tenth flow hole 1010C is in communication with the fourth flow hole 104C; the central flow hole 10106C of the tenth flow hole 1010C is in communication with the drain flow hole 1014C; the eighth flow hole 108C is in communication with the second communication portion 10102C of the first flow hole 101C and the eleventh flow hole 1011C respectively; the ninth flow hole 109C is in communication with the second conduction portion 10202C of the second flow hole 102C; the third flow hole 103C, the twelfth flow hole 1012C, and the thirteenth flow hole 1013C are respectively blocked by the second fluid control surface 1220C of the rotating disk 122C; the first communication portion 10101C, the third communication portion 10103C of the first flow hole 101C, the first conduction portion 10201C, and the third conduction portion 10203C of the second flow hole 102C are respectively blocked by the second fluid control surface 1220C of the rotating disk 122C. When the planar valve 10C is in the first rinse working position, the seventh flow hole 107C of the planar valve 10C is in communication with the second communication portion 10102C of the first flow hole 101C; the edge flow hole 10105C of the tenth flow hole 1010C is in communication with the second conduction portion 10202C of the second flow hole 102C; the central flow hole 10106C of the tenth flow hole 1010C is in communication with the drain flow hole 1014C; the eighth flow hole 108C is in communication with the first communication portion 10101C of the first flow hole 101C; the ninth flow hole 109C is blocked by the first fluid control surface 1210C of the fixed disk 121C; the third flow hole 103C, the fourth flow hole 104C, the fifth flow hole 105C, the eleventh flow hole 1011C, the twelfth flow hole 1012C, and the thirteenth flow hole 1013C are respectively blocked by the second fluid control surface 1220C of the rotating disk 122C; the third communication portion 10103C of the first flow hole 101C, the first conduction portion 10201C, and the third conduction portion 10203C of the second flow hole 102C are respectively blocked by the second fluid control surface 1220C of the rotating disk 122C. When the planar valve 10C is in the second rinse working position, the seventh flow hole 107C of the planar valve 10C is in communication with the first conduction portion 10201C of the second flow hole 102C; the edge flow hole 10105C of the tenth flow hole 1010C is in communication with the third flow hole 103C; the central flow hole 10106C of the tenth flow hole 1010C is in communication with the drain flow hole 1014C; the eighth flow hole 108C is in communication with the first communication portion 10101C of the first flow hole 101C and the eleventh flow hole 1011C respectively; the ninth flow hole 109C is in communication with the twelfth flow hole 1012C; the fourth flow hole 104C, the fifth flow hole 105C, and the thirteenth flow hole 1013C are respectively blocked by the second fluid control surface 1220C of the rotating disk 122C; the second communication portion 10102C, the third communication portion 10103C of the first flow hole 101C, the second conduction portion 10202C, and the third conduction portion 10203C of the second flow hole 102C are respectively blocked by the second fluid control surface 1220C of the rotating disk 122C. When the planar valve 10C is in the third rinse working position, the seventh flow hole 107C of the planar valve 10C is in communication with the fourth flow hole 104C; the edge flow hole 10105C of the tenth flow hole 1010C is in communication with the fifth flow hole 105C; the central flow hole 10106C of the tenth flow hole 1010C is in communication with the drain flow hole 1014C; the eighth flow hole 108C is in communication with the second conduction portion 10202C of the second flow hole 102C and the twelfth flow hole 1012C respectively; the ninth flow hole 109C is in communication with the second communication portion 10102C of the first flow hole 101C; the third flow hole 103C, the eleventh flow hole 1011C, and the thirteenth flow hole 1013C are respectively blocked by the second fluid control surface 1220C of the rotating disk 122C; the first communication portion 10101C, the third communication portion 10103C of the first flow hole 101C, the first conduction portion 10201C, and the third conduction portion 10203C of the second flow hole 102C are respectively blocked by the second fluid control surface 1220C of the rotating disk 122C; the sealing bridge 10107C of the tenth flow hole 1010C separates the third conduction portion 10203C of the second flow hole 102C from the tenth flow hole 1010C. When the planar valve 10C is in the regeneration working position, the seventh flow hole 107C is in communication with the twelfth flow hole 1012C; the eighth flow hole 108C is in communication with the thirteenth flow hole 1013C and the fifth flow hole 105C respectively; the edge flow hole 10105C of the tenth flow hole 1010C is in communication with the eleventh flow hole 1011C; the central flow hole 10106C of the tenth flow hole 1010C is in communication with the drain flow hole 1014C; the ninth flow hole 109C is blocked by the first fluid control surface 1210C of the fixed disk 121C; the third flow hole 103C and the fourth flow hole 104C are respectively blocked by the second fluid control surface 1220C of the rotating disk 122C; the first communication portion 10101C, the second communication portion 10102C, the third communication portion 10103C of the first flow hole 101C, the first conduction portion 10201C, the second conduction portion 10202C, and the third conduction portion 10203C of the second flow hole 102C are respectively blocked by the second fluid control surface 1220C of the rotating disk 122C; the sealing bridge 10107C of the tenth flow hole 1010C separates the third communication portion 10103C of the first flow hole 101C from the tenth flow hole 1010C. When the planar valve 10C is in the water refill working position, the seventh flow hole 107C is in communication with the thirteenth flow hole 1013C; the eighth flow hole 108C is in communication with the second communication portion 10102C of the first flow hole 101C and the first conduction portion 10201C of the second flow hole 102C respectively; the ninth flow hole 109C is in communication with the third flow hole 103C; the edge flow hole 10105C of the tenth flow hole 1010C is blocked by the first fluid control surface 1210C of the fixed disk 121C; the central flow hole 10106C of the tenth flow hole 1010C is in communication with the drain flow hole 1014C; the fourth flow hole 104C, the fifth flow hole 105C, the eleventh flow hole 1011C, and the twelfth flow hole 1012C are respectively blocked by the second fluid control surface 1220C of the rotating disk 122C; the first communication portion 10101C, the third communication portion 10103C of the first flow hole 101C, the second conduction portion 10202C, and the third conduction portion 10203C of the second flow hole 102C are respectively blocked by the second fluid control surface 1220C of the rotating disk 122C. Preferably, the third communication portion 10103C of the first flow hole 101C is disposed on the first fluid control surface 1210C of the fixed disk 121C of the planar valve 10C. Alternatively, the third communication portion 10103C of the first flow hole 101C is disposed inside the fixed disk 121C of the planar valve 10C. Alternatively, the third communication portion 10103C of the first flow hole 101C is disposed inside the valve body 11C of the planar valve 10C. Preferably, the third conduction portion 10203C of the second flow hole 102C is disposed on the first fluid control surface 1210C of the fixed disk 121C of the planar valve 10C. Alternatively, the third conduction portion 10203C of the second flow hole 102C is disposed inside the fixed disk 121C of the planar valve 10C. Alternatively, the third conduction portion 10203C of the second flow hole 102C is disposed inside the valve body 11C of the planar valve 10C. It can be understood that when the third communication portion 10103C of the first flow hole 101C and the third conduction portion 10203C of the second flow hole 102C are arranged inside the fixed disk 121C of the planar valve 10C or are arranged inside the valve body 11C of the planar valve 10C, the tenth flow hole 1010C of the rotating disk 122C no longer needs to be provided with the sealing bridge 10107C, and the central flow hole 10106C and the edge flow hole 10105C of the tenth flow hole 1010C can be directly connected on the second fluid control surface 1220C.

As shown in FIGS. 64A to 66B, the first fluid control surface 1210C of the fixed disk 121C of the planar valve 10C of the water treatment device according to the second embodiment of the present invention has the central portion 12101C, the extension portion 12102C, and the edge portion 12103C shown by the chain lines in the drawings, wherein the central portion 12101C, the extension portion 12102C, and the edge portion 12103C are provided on the top end portion 1214C of the fixed disk 121C, and the edge portion 12103C (or the portion outside the extension portion 12102C) of the first fluid control surface 1210C is equally divided into a first section 1201C, a second section 1202C, a third section 1203C, a fourth section 1204C, a fifth section 1205C, a sixth section 1206C, a seventh section 1207C, an eighth section 1208C, a ninth section 1209C, a tenth section 12010C, an eleventh section 12011C, and a twelfth section 12012C shown by the dash-dot lines; the second fluid control surface 1220C of the rotating disk 122C of the planar valve 10C has the central region 12201C, the extension region 12202C, and the edge region 12203C shown by the chain lines in the drawings, wherein the central region 12201C, the extension region 12202C, and the edge region 12203C are provided on the bottom end portion 1221C of the rotating disk 122C, and the edge region 12203C (the portion outside the extension region 12202C) of the second fluid control surface 1220C is equally divided into a first area 2001C, a second area 2002C, a third area 2003C, a fourth area 2004C, a fifth area 2005C, a sixth area 2006C, a seventh area 2007C, an eighth area 2008C, a ninth area 2009C, a tenth area 20010C, an eleventh area 20011C, and a twelfth area 20012C shown by the dash-dot lines; wherein the first flow hole 101C extends downward from the first section 1201C and the eleventh section 12011C of the first fluid control surface 1210C of the fixed disk 121C respectively; the fourth flow hole 104C and the water supply flow hole 1015C extend downward from the third section 1203C of the first fluid control surface 1210C of the fixed disk 121C respectively; the third flow hole 103C extends downward from the fourth section 1204C of the first fluid control surface 1210C of the fixed disk 121C; the second flow hole 102C extends downward from the fifth section 1205C and the tenth section 12010C of the first fluid control surface 1210C of the fixed disk 121C respectively; the twelfth flow hole 1012C extends downward from the sixth section 1206C of the first fluid control surface 1210C of the fixed disk 121C; the thirteenth flow hole 1013C extends downward from the eighth section 1208C of the first fluid control surface 1210C of the fixed disk 121C; the fifth flow hole 105C and the sixth flow hole 106C extend downward from the ninth section 1209C of the first fluid control surface 1210C of the fixed disk 121C respectively; the eleventh flow hole 1011C extends downward from the twelfth section 12012C of the first fluid control surface 1210C of the fixed disk 121C; the sixth flow hole 106C is arranged outward of the fifth flow hole 105C; the water supply flow hole 1015C is arranged outward of the fourth flow hole 104C; the drain flow hole 1014C extends downward from the central portion 12101C of the first fluid control surface 1210C of the fixed disk 121C; the seventh flow hole 107C extends upward from the first area 2001C of the second fluid control surface 1220C of the rotating disk 122C; the eighth flow hole 108C extends upward from the third area 2003C and the fourth area 2004C of the second fluid control surface 1220C of the rotating disk 122C; the tenth flow hole 1010C extends upward from the seventh area 2007C and the central region 12201C of the second fluid control surface 1220C of the rotating disk 122C respectively; the ninth flow hole 109C extends upward from the ninth area 2009C of the second fluid control surface 1220C of the rotating disk 122C. More specifically, the first communication portion 10101C of the first flow hole 101C extends downward from the first section 1201C of the first fluid control surface 1210C of the fixed disk 121C; the second communication portion 10102C of the first flow hole 101C extends downward from the eleventh section 12011C of the first fluid control surface 1210C of the fixed disk 121C; the first conduction portion 10201C of the second flow hole 102C extends downward from the tenth section 12010C of the first fluid control surface 1210C of the fixed disk 121C; the second conduction portion 10202C of the second flow hole 102C extends downward from the fifth section 1205C of the first fluid control surface 1210C of the fixed disk 121C; the central flow hole 10106C of the tenth flow hole 1010C extends upward from the central region 12201C of the second fluid control surface 1220C of the rotating disk 122C and extends toward the direction of the seventh area 2007C; the edge flow hole 10105C of the tenth flow hole 1010C extends upward from the seventh area 2007C of the second fluid control surface 1220C of the rotating disk 122C and extends toward the direction of the central region 12201C, thereby causing the central flow hole 10106C and the edge flow hole 10105C of the tenth flow hole 1010C to be in communication with each other. Preferably, the third communication portion 10103C of the first flow hole 101C and the third conduction portion 10203C of the second flow hole 102C extend downward from the extension portion 12102C of the first fluid control surface 1210C of the fixed disk 121C respectively; the sealing bridge 10107C of the tenth flow hole 1010C is arranged on the extension region 12202C of the second fluid control surface 1220C of the rotating disk 122C; the sealing bridge 10107C is adapted to separate the tenth flow hole 1010C from the third communication portion 10103C of the first flow hole 101C and the third conduction portion 10203C of the second flow hole 102C respectively.

As shown in FIGS. 45A to 60I and 63A to 78I of the accompanying drawings, the structural difference between the planar valve 10B and the planar valve 10C of the water treatment device according to the second embodiment of the present invention lies in that the tenth flow hole 1010B of the planar valve 10B is different from the tenth flow hole 1010C of the planar valve 10C, and the drain flow hole 1014C of the planar valve 10C participates in drainage: the drain flow hole 1014C is arranged on the central portion 12101C of the first fluid control surface 1210C; the tenth flow hole 1010C is arranged on the seventh area 2007C and the central region 12201C of the second fluid control surface 1220C; and the central flow hole 10106C of the tenth flow hole 1010C is in communication with the drain flow hole 1014C; the tenth flow hole 1010C is a communicating blind hole. Therefore, when the planar valve 10B and the planar valve 10C of the water treatment device according to the second embodiment of the present invention are in their respective working positions, the alignment manner of the equal division of the second fluid control surface 1220B of the rotating disk 122B of the planar valve 10B with the equal division of the first fluid control surface 1210B of the fixed disk 121B is the same as the alignment manner of the equal division of the second fluid control surface 1220C of the rotating disk 122C of the planar valve 10C with the equal division of the first fluid control surface 1210C of the fixed disk 121C. As described above, the functional implementation difference between the planar valve 10B and the planar valve 10C of the water treatment device according to the second embodiment of the present invention lies in that the planar valve 10C of the water treatment device according to the second embodiment of the present invention performs drainage through the tenth flow hole 1010C, the drain flow hole 1014C, and the drain opening 11010C, and the drain flow hole 1014C is arranged on the central portion 12101C of the first fluid control surface 1210C; the tenth flow hole 1010C is arranged on the seventh area 2007C and the central region 12201C of the second fluid control surface 1220C; the tenth flow hole 1010C is in communication with the drain flow hole 1014C; the tenth flow hole 1010C is a communicating blind hole; correspondingly, when the planar valve 10C is in the first backwash working position, the second backwash flow passage 7102C is formed by the communication of the first flow hole 101C, the tenth flow hole 1010C, and the drain flow hole 1014C; more specifically, the second backwash flow passage 7102C is formed by the communication of the second communication portion 10102C of the first flow hole 101C, the edge flow hole 10105C of the tenth flow hole 1010C, the central flow hole 10106C of the tenth flow hole 1010C, and the drain flow hole 1014C; when the planar valve 10C is in the second backwash working position, the fourth backwash flow passage 7104C is formed by the communication of the second flow hole 102C, the tenth flow hole 1010C, and the drain flow hole 1014C; more specifically, the fourth backwash flow passage 7104C is formed by the communication of the first conduction portion 10201C of the second flow hole 102C, the edge flow hole 10105C of the tenth flow hole 1010C, the central flow hole 10106C of the tenth flow hole 1010C, and the drain flow hole 1014C; when the planar valve 10C is in the third backwash working position, the sixth backwash flow passage 7106C is formed by the communication of the fourth flow hole 104C, the tenth flow hole 1010C, and the drain flow hole 1014C; more specifically, the sixth backwash flow passage 7106C is formed by the communication of the fourth flow hole 104C, the edge flow hole 10105C of the tenth flow hole 1010C, the central flow hole 10106C of the tenth flow hole 1010C, and the drain flow hole 1014C; when the planar valve 10C is in the first rinse working position, the second rinse flow passage 7202C is formed by the communication of the second flow hole 102C, the tenth flow hole 1010C, and the drain flow hole 1014C; more specifically, the second rinse flow passage 7202C is formed by the communication of the second conduction portion 10202C of the second flow hole 102C, the edge flow hole 10105C of the tenth flow hole 1010C, the central flow hole 10106C of the tenth flow hole 1010C, and the drain flow hole 1014C; when the planar valve 10C is in the second rinse working position, the fourth rinse flow passage 7204C is formed by the communication of the third flow hole 103C, the tenth flow hole 1010C, and the drain flow hole 1014C; more specifically, the fourth rinse flow passage 7204C is formed by the communication of the third flow hole 103C, the edge flow hole 10105C of the tenth flow hole 1010C, the central flow hole 10106C of the tenth flow hole 1010C, and the drain flow hole 1014C; when the planar valve 10C is in the third rinse working position, the sixth rinse flow passage 7206C is formed by the communication of the fifth flow hole 105C, the tenth flow hole 1010C, and the drain flow hole 1014C; more specifically, the sixth rinse flow passage 7206C is formed by the communication of the fifth flow hole 105C, the edge flow hole 10105C of the tenth flow hole 1010C, the central flow hole 10106C of the tenth flow hole 1010C, and the drain flow hole 1014C. When the planar valve 10C is in the regeneration working position, the third regeneration flow passage 7303C is formed by the communication of the eleventh flow hole 1011C, the tenth flow hole 1010C, and the drain flow hole 1014C; more specifically, the third regeneration flow passage 7303C is formed by the communication of the eleventh flow hole 1011C, the edge flow hole 10105C of the tenth flow hole 1010C, the central flow hole 10106C of the tenth flow hole 1010C, and the drain flow hole 1014C.

Furthermore, the aforementioned arrangement manner of the first communication portion 10101C of the first flow hole 101C, the fourth flow hole 104C and the water supply flow hole 1015C, the third flow hole 103C, the second conduction portion 10202C of the second flow hole 102C, the twelfth flow hole 1012C, the thirteenth flow hole 1013C, the fifth flow hole 105C and the sixth flow hole 106C, the first conduction portion 10201C of the second flow hole 102C, the second communication portion 10102C of the first flow hole 101C, and the eleventh flow hole 1011C of the planar valve 10C of the water treatment device according to the second embodiment of the present invention on the first fluid control surface 1210C, and the aforementioned arrangement manner of the seventh flow hole 107C, the eighth flow hole 108C, the tenth flow hole 1010C, and the ninth flow hole 109C of the planar valve 10C on the second fluid control surface 1220C of the rotating disk 122C, are basically the same as the aforementioned arrangement manner of the first communication portion 10101B of the first flow hole 101B, the fourth flow hole 104B and the water supply flow hole 1015B, the third flow hole 103B, the second conduction portion 10202B of the second flow hole 102B, the twelfth flow hole 1012B, the thirteenth flow hole 1013B, the fifth flow hole 105B and the sixth flow hole 106B, the first conduction portion 10201B of the second flow hole 102B, the second communication portion 10102B of the first flow hole 101B, and the eleventh flow hole 1011B of the planar valve 10B of the water treatment device according to the second embodiment of the present invention on the first fluid control surface 1210B, and the aforementioned arrangement manner of the seventh flow hole 107B, the eighth flow hole 108B, the tenth flow hole 1010B, and the ninth flow hole 109B of the planar valve 10B on the second fluid control surface 1220B of the rotating disk 122B (except that the tenth flow hole 1010C extends upward from the seventh area 2007C and the central region 12201C of the second fluid control surface 1220C).

It should be noted that the terms "first," "second," "third," "fourth," "fifth," "sixth," "seventh," "eighth," "ninth," "tenth," "eleventh," "twelfth," and/or "thirteenth" in this document are used solely for naming different components (or elements) of the present invention and for distinguishing between different components, elements, and structures of the present invention, and do not in themselves imply any order or quantity.

Those skilled in the art should understand that the embodiments of the present invention shown in the above description and the accompanying drawings are only examples and do not limit the present invention.

The objects of the present invention have been completely and effectively realized. The function and structural principle of the present invention have been shown and explained in the above embodiments. Without departing from the principle, the embodiments of the present invention can be deformed or modified.

## Claims

1. A control valve for a water treatment device, comprising:
a valve body; and
a valve core, wherein the valve body forms a valve chamber, a first opening, a second opening, a third opening, a fourth opening, a fifth opening, a first fluid opening, a second fluid opening, and a drain opening, wherein the valve core is disposed in the valve chamber, wherein the second fluid opening of the valve body is adapted to be communicated with a raw water source, wherein when the control valve is in a water treatment working position, the valve core of the control valve forms a first water treatment flow passage, a second water treatment flow passage and a third water treatment flow passage, wherein the first water treatment flow passage is in communication with the second fluid opening and the first opening respectively, the second water treatment flow passage is in communication with the third opening and the fourth opening respectively and the third water treatment flow passage is in communication with the fifth opening and the first fluid opening respectively.

2. The control valve of claim 1, wherein when the control valve is in a first backwash working position, the valve core of the control valve forms a first backwash flow passage and a second backwash flow passage, wherein the first backwash flow passage is in communication with the second fluid opening and the second opening respectively, and the second backwash flow passage is in communication with the drain opening and the first opening respectively; when the control valve is in a second backwash working position, the valve core of the control valve forms a third backwash flow passage and a fourth backwash flow passage, wherein the third backwash flow passage is in communication with the second fluid opening and the third opening respectively, and the fourth backwash flow passage is in communication with the drain opening and the second opening respectively; when the control valve is in a third backwash working position, the valve core of the control valve forms a fifth backwash flow passage and a sixth backwash flow passage, wherein the fifth backwash flow passage is in communication with the second fluid opening and the fifth opening respectively, and the sixth backwash flow passage is in communication with the drain opening and the fourth opening respectively.

3. The control valve of claim 2, wherein when the control valve is in a first rinse working position, the valve core of the control valve forms a first rinse flow passage and a second rinse flow passage, wherein the first rinse flow passage is in communication with the second fluid opening and the first opening respectively, and the second rinse flow passage is in communication with the drain opening and the second opening respectively; when the control valve is in a second rinse working position, the valve core of the control valve forms a third rinse flow passage and a fourth rinse flow passage, wherein the third rinse flow passage is in communication with the second fluid opening and the second opening respectively, and the fourth rinse flow passage is in communication with the drain opening and the third opening respectively; when the control valve is in a third rinse working position, the valve core of the control valve forms a fifth rinse flow passage and a sixth rinse flow passage, wherein the fifth rinse flow passage is in communication with the second fluid opening and the fourth opening respectively, and the sixth rinse flow passage is in communication with the drain opening and the fifth opening respectively.

4. The control valve of claim 3, wherein the control valve further comprises an injector, the valve body of the control valve further forms a first injector opening and a second injector opening, wherein the injector has a nozzle outlet, a discharge outlet and a brine suction inlet, wherein the nozzle outlet is adapted to be in communication with the first injector opening of the valve body, the discharge outlet is adapted to be in communication with the second injector opening of the valve body, and the brine suction inlet is in communication with the nozzle outlet and the discharge outlet respectively, wherein when the control valve is in a regeneration working position, the valve core of the control valve forms a first regeneration flow passage, a second regeneration flow passage, and a third regeneration flow passage, wherein the first regeneration flow passage is in communication with the second fluid opening of the valve body and the first injector opening respectively, the second regeneration flow passage is in communication with the second injector opening and the fourth opening respectively, and the third regeneration flow passage is in communication with the fifth opening and the drain opening respectively; when the control valve is in a water refill working position, the valve core of the control valve forms a water refill flow passage, wherein the water refill flow passage is in communication with the second fluid opening of the valve body and the second injector opening respectively.

5. The control valve of claim 3, wherein the control valve further comprises an injector, the valve body of the control valve further forms a first injector opening and a second injector opening, wherein the injector has a nozzle outlet, a discharge outlet and a brine suction inlet, wherein the nozzle outlet is adapted to be in communication with the first injector opening of the valve body, the discharge outlet is adapted to be in communication with the second injector opening of the valve body, and the brine suction inlet is in communication with the nozzle outlet and the discharge outlet respectively, wherein when the control valve is in a regeneration working position, the valve core of the control valve forms a first regeneration flow passage, a second regeneration flow passage, and a third regeneration flow passage, wherein the first regeneration flow passage is in communication with the second fluid opening of the valve body and the first injector opening respectively, the second regeneration flow passage is in communication with the second injector opening and the fifth opening respectively, and the third regeneration flow passage is in communication with the fourth opening and the drain opening respectively; when the control valve is in a water refill working position, the valve core of the control valve forms a water refill flow passage, wherein the water refill flow passage is in communication with the second fluid opening of the valve body and the second injector opening respectively.

6. The control valve of claim 1, wherein the control valve is a planar valve, wherein the valve core of the planar valve further comprises a fixed disk and a rotating disk, wherein the fixed disk has a first fluid control surface, and the rotating disk has a second fluid control surface, wherein the rotating disk and the fixed disk are both disposed in the valve chamber, wherein the second fluid control surface of the rotating disk is disposed against the first fluid control surface of the fixed disk, and the rotating disk is arranged to be rotatable relative to the fixed disk, wherein the planar valve has a first flow hole, a second flow hole, a third flow hole, a fourth flow hole, a fifth flow hole, a sixth flow hole, a seventh flow hole, an eighth flow hole, a ninth flow hole, and a tenth flow hole, wherein the first flow hole, the second flow hole, the third flow hole, the fourth flow hole, the fifth flow hole, and the sixth flow hole are provided in the fixed disk and extend from the first fluid control surface of the fixed disk respectively; the seventh flow hole, the eighth flow hole, the ninth flow hole, and the tenth flow hole are provided in the rotating disk and extend from the second fluid control surface of the rotating disk respectively, wherein the first flow hole is in communication with the first opening, the second flow hole is in communication with the second opening, the third flow hole is in communication with the third opening, the fourth flow hole is in communication with the fourth opening, the fifth flow hole is in communication with the fifth opening, the sixth flow hole is in communication with the first fluid opening, the seventh flow hole is in communication with the second fluid opening, and the tenth flow hole is in communication with the drain opening, wherein when the rotating disk of the planar valve rotates relative to the fixed disk such that the planar valve is in the water treatment working position, the seventh flow hole of the planar valve is in communication with the first flow hole to establish the first water treatment flow passage communicating with the second fluid opening and the first opening of the valve body respectively, the eighth flow hole is in communication with the third flow hole and the fourth flow hole respectively to establish the second water treatment flow passage communicating with the third opening and the fourth opening of the valve body respectively, and the ninth flow hole is in communication with the fifth flow hole and the sixth flow hole respectively to establish the third water treatment flow passage communicating with the fifth opening and the first fluid opening of the valve body respectively.

7. The control valve of claim 6, wherein when the rotating disk of the planar valve rotates relative to the fixed disk such that the planar valve is in a first backwash working position, the seventh flow hole of the planar valve is in communication with the second flow hole to establish a first backwash flow passage communicating with the second fluid opening and the second opening of the valve body respectively, and the tenth flow hole is in communication with the first flow hole to establish a second backwash flow passage communicating with the drain opening and the first opening of the valve body respectively; when the rotating disk of the planar valve rotates relative to the fixed disk such that the planar valve is in a second backwash working position, the seventh flow hole of the planar valve is in communication with the third flow hole to establish a third backwash flow passage communicating with the second fluid opening and the third opening of the valve body respectively, and the tenth flow hole is in communication with the second flow hole to establish a fourth backwash flow passage communicating with the drain opening and the second opening of the valve body respectively.

8. The control valve of claim 7, wherein when the rotating disk of the planar valve rotates relative to the fixed disk such that the planar valve is in a first rinse working position, the seventh flow hole of the planar valve is in communication with the first flow hole to establish a first rinse flow passage communicating with the second fluid opening and the first opening of the valve body respectively, and the tenth flow hole is in communication with the second flow hole to establish a second rinse flow passage communicating with the drain opening and the second opening of the valve body respectively; when the rotating disk of the planar valve rotates relative to the fixed disk such that the planar valve is in a second rinse working position, the seventh flow hole of the planar valve is in communication with the second flow hole to establish a third rinse flow passage communicating with the second fluid opening and the second opening of the valve body respectively, and the tenth flow hole is in communication with the third flow hole to establish a fourth rinse flow passage communicating with the drain opening and the third opening of the valve body respectively; the planar valve further has an eleventh flow hole, wherein the eleventh flow hole is provided in the fixed disk and extends from the first fluid control surface of the fixed disk, and the eleventh flow hole is in communication with the fourth opening, when the rotating disk of the planar valve rotates relative to the fixed disk such that the planar valve is in a third backwash working position, the seventh flow hole of the planar valve is in communication with the fifth flow hole to establish a fifth backwash flow passage communicating with the second fluid opening and the fifth opening of the valve body respectively, and the tenth flow hole is in communication with the eleventh flow hole to establish a sixth backwash flow passage communicating with the drain opening and the fourth opening of the valve body respectively; when the rotating disk of the planar valve rotates relative to the fixed disk such that the planar valve is in a third rinse working position, the seventh flow hole of the planar valve is in communication with the eleventh flow hole to establish a fifth rinse flow passage communicating with the second fluid opening and the fourth opening of the valve body of the planar valve respectively, and the tenth flow hole is in communication with the fifth flow hole to establish a sixth rinse flow passage communicating with the drain opening and the fifth opening of the valve body of the planar valve respectively.

9. The control valve of claim 8, wherein the planar valve further comprises an injector, the valve body of the planar valve further forms a first injector opening and a second injector opening, the planar valve further has a twelfth flow hole and a thirteenth flow hole, wherein the twelfth flow hole and the thirteenth flow hole are provided in the fixed disk and extend from the first fluid control surface of the fixed disk respectively, wherein the injector has a nozzle outlet, a discharge outlet, and a brine suction inlet, wherein the twelfth flow hole is in communication with the first injector opening, the thirteenth flow hole is in communication with the second injector opening, the nozzle outlet is adapted to be in communication with the first injector opening of the valve body, the discharge outlet is adapted to be in communication with the second injector opening of the valve body, and the brine suction inlet is in communication with the nozzle outlet and the discharge outlet respectively, wherein when the planar valve is in a regeneration working position, the seventh flow hole is in communication with the twelfth flow hole to establish a first regeneration flow passage communicating with the second fluid opening and the first injector opening respectively, the eighth flow hole is in communication with the thirteenth flow hole and the eleventh flow hole respectively to establish a second regeneration flow passage communicating with the second injector opening and the fourth opening respectively, and the tenth flow hole is in communication with the fifth flow hole to establish a third regeneration flow passage communicating with the drain opening and the fifth opening respectively; when the planar valve is in a water refill working position, the seventh flow hole is in communication with the thirteenth flow hole to establish a water refill flow passage communicating with the second fluid opening and the second injector opening respectively.

10. The control valve of claim 8, wherein the eighth flow hole and the ninth flow hole are both communicating blind holes, wherein when the planar valve is in the water treatment working position, the second flow hole is blocked by the second fluid control surface of the rotating disk; when the planar valve is in the first backwash working position, the flow passage formed by communicating the ninth flow hole and the fourth flow hole, the third flow hole and the fifth flow hole are blocked by the rotating disk respectively; when the planar valve is in the second backwash working position, the flow passage formed by communicating the first flow hole and the ninth flow hole and the fifth flow hole are blocked by the rotating disk respectively, and the eleventh flow hole is blocked by the second fluid control surface of the rotating disk; when the planar valve is in the first rinse working position, the flow passage formed by communicating the eighth flow hole and the fifth flow hole, the third flow hole, and the fourth flow hole are blocked by the rotating disk respectively, and the eleventh flow hole is blocked by the second fluid control surface of the rotating disk; when the planar valve is in the second rinse working position, the flow passage formed by communicating the first flow hole and the eighth flow hole, the fourth flow hole, and the fifth flow hole are blocked by the rotating disk respectively, and the eleventh flow hole is blocked by the second fluid control surface of the rotating disk; when the planar valve is in the third backwash working position, the flow passage formed by communicating the ninth flow hole and the fifth flow hole, the second flow hole, and the fourth flow hole are blocked by the rotating disk respectively, and the eighth flow hole is in communication with the first flow hole and the third flow hole respectively; when the planar valve is in the third rinse working position, the first flow hole, the third flow hole and the fourth flow hole are blocked by the second fluid control surface of the rotating disk respectively.

11. The control valve of claim 1, wherein the control valve is a planar valve, wherein the valve core of the planar valve further comprises a fixed disk and a rotating disk, wherein the fixed disk has a first fluid control surface, and the rotating disk has a second fluid control surface, wherein the rotating disk and the fixed disk are both disposed in the valve chamber, wherein the second fluid control surface of the rotating disk is disposed against the first fluid control surface of the fixed disk, and the rotating disk is arranged to be rotatable relative to the fixed disk, wherein the planar valve has a first flow hole, a second flow hole, a third flow hole, a fourth flow hole, a fifth flow hole, a sixth flow hole, a seventh flow hole, an eighth flow hole, a ninth flow hole, a tenth flow hole and a drain flow hole, wherein the first flow hole, the second flow hole, the third flow hole, the fourth flow hole, the fifth flow hole, the sixth flow hole and the drain flow hole are provided in the fixed disk and extend from the first fluid control surface of the fixed disk respectively; the seventh flow hole, the eighth flow hole, the ninth flow hole, and the tenth flow hole are provided in the rotating disk and extend from the second fluid control surface of the rotating disk respectively, wherein the first flow hole is in communication with the first opening, the second flow hole is in communication with the second opening, the third flow hole is in communication with the third opening, the fourth flow hole is in communication with the fourth opening, the fifth flow hole is in communication with the fifth opening, the sixth flow hole is in communication with the first fluid opening, the seventh flow hole is in communication with the second fluid opening, and the drain flow hole is in communication with the tenth flow hole and the drain opening respectively, wherein when the rotating disk of the planar valve rotates relative to the fixed disk such that the planar valve is in the water treatment working position, the seventh flow hole of the planar valve is in communication with the first flow hole to establish the first water treatment flow passage communicating with the second fluid opening and the first opening of the valve body respectively, the eighth flow hole is in communication with the third flow hole and the fourth flow hole respectively to establish the second water treatment flow passage communicating with the third opening and the fourth opening of the valve body respectively, and the ninth flow hole is in communication with the fifth flow hole and the sixth flow hole respectively to establish the third water treatment flow passage communicating with the fifth opening and the first fluid opening of the valve body respectively.

12. The control valve of claim 11, wherein when the rotating disk of the planar valve rotates relative to the fixed disk such that the planar valve is in a first backwash working position, the seventh flow hole of the planar valve is in communication with the second flow hole to establish a first backwash flow passage communicating with the second fluid opening and the second opening of the valve body respectively, and the tenth flow hole is in communication with the first flow hole and the drain flow hole respectively to establish a second backwash flow passage communicating with the drain opening and the first opening of the valve body; when the rotating disk of the planar valve rotates relative to the fixed disk such that the planar valve is in a second backwash working position, the seventh flow hole of the planar valve is in communication with the third flow hole to establish a third backwash flow passage communicating with the second fluid opening and the third opening of the valve body respectively, and the tenth flow hole is in communication with the second flow hole and the drain flow hole respectively to establish a fourth backwash flow passage communicating with the drain opening and the second opening of the valve body.

13. The control valve of claim 12, wherein when the rotating disk of the planar valve rotates relative to the fixed disk such that the planar valve is in a first rinse working position, the seventh flow hole of the planar valve is in communication with the first flow hole to establish a first rinse flow passage communicating with the second fluid opening and the first opening of the valve body respectively, and the tenth flow hole is in communication with the second flow hole and the drain flow hole respectively to establish a second rinse flow passage communicating with the drain opening and the second opening of the valve body; when the rotating disk of the planar valve rotates relative to the fixed disk such that the planar valve is in a second rinse working position, the seventh flow hole of the planar valve is in communication with the second flow hole to establish a third rinse flow passage communicating with the second fluid opening and the second opening of the valve body respectively, and the tenth flow hole is in communication with the third flow hole and the drain flow hole respectively to establish a fourth rinse flow passage communicating with the drain opening and the third opening of the valve body; the planar valve further has an eleventh flow hole, wherein the eleventh flow hole is provided in the fixed disk and extends from the first fluid control surface of the fixed disk, and the eleventh flow hole is in communication with the fourth opening, when the rotating disk of the planar valve rotates relative to the fixed disk such that the planar valve is in a third backwash working position, the seventh flow hole of the planar valve is in communication with the fifth flow hole to establish a fifth backwash flow passage communicating with the second fluid opening and the fifth opening of the valve body respectively, and the tenth flow hole is in communication with the eleventh flow hole and the drain flow hole respectively to establish a sixth backwash flow passage communicating with the drain opening and the fourth opening of the valve body; when the rotating disk of the planar valve rotates relative to the fixed disk such that the planar valve is in a third rinse working position, the seventh flow hole of the planar valve is in communication with the eleventh flow hole to establish a fifth rinse flow passage communicating with the second fluid opening and the fourth opening of the valve body of the planar valve respectively, and the tenth flow hole is in communication with the fifth flow hole and the drain flow hole respectively to establish a sixth rinse flow passage communicating with the drain opening and the fifth opening of the valve body of the planar valve.

14. The control valve of claim 13, wherein the planar valve further comprises an injector, the valve body of the planar valve further forms a first injector opening and a second injector opening, the planar valve further has a twelfth flow hole and a thirteenth flow hole, wherein the twelfth flow hole and the thirteenth flow hole are provided in the fixed disk and extend from the first fluid control surface of the fixed disk respectively, wherein the injector has a nozzle outlet, a discharge outlet, and a brine suction inlet, wherein the twelfth flow hole is in communication with the first injector opening, the thirteenth flow hole is in communication with the second injector opening, the nozzle outlet is adapted to be in communication with the first injector opening of the valve body, the discharge outlet is adapted to be in communication with the second injector opening of the valve body, and the brine suction inlet is in communication with the nozzle outlet and the discharge outlet respectively, wherein when the planar valve is in a regeneration working position, the seventh flow hole is in communication with the twelfth flow hole to establish a first regeneration flow passage communicating with the second fluid opening and the first injector opening respectively, the eighth flow hole is in communication with the thirteenth flow hole and the eleventh flow hole respectively to establish a second regeneration flow passage communicating with the second injector opening and the fourth opening respectively, and the tenth flow hole is in communication with the fifth flow hole and the drain flow hole respectively to establish a third regeneration flow passage communicating with the drain opening and the fifth opening; when the planar valve is in a water refill working position, the seventh flow hole is in communication with the thirteenth flow hole to establish a water refill flow passage communicating with the second fluid opening and the second injector opening respectively.

15. The control valve of claim 13, wherein the eighth flow hole, the ninth flow hole and the tenth flow hole are all communicating blind holes, wherein when the planar valve is in the water treatment working position, the second flow hole is blocked by the second fluid control surface of the rotating disk; when the planar valve is in the first backwash working position, the flow passage formed by communicating the ninth flow hole and the fourth flow hole, the third flow hole and the fifth flow hole are blocked by the rotating disk respectively; when the planar valve is in the second backwash working position, the flow passage formed by communicating the first flow hole and the ninth flow hole and the fifth flow hole are blocked by the rotating disk respectively, and the eleventh flow hole is blocked by the second fluid control surface of the rotating disk; when the planar valve is in the first rinse working position, the flow passage formed by communicating the eighth flow hole and the fifth flow hole, the third flow hole, and the fourth flow hole are blocked by the rotating disk respectively, and the eleventh flow hole is blocked by the second fluid control surface of the rotating disk; when the planar valve is in the second rinse working position, the flow passage formed by communicating the first flow hole and the eighth flow hole, the fourth flow hole, and the fifth flow hole are blocked by the rotating disk respectively, and the eleventh flow hole is blocked by the second fluid control surface of the rotating disk; when the planar valve is in the third backwash working position, the flow passage formed by communicating the ninth flow hole and the fifth flow hole, the second flow hole, and the fourth flow hole are blocked by the rotating disk respectively, and the eighth flow hole is in communication with the first flow hole and the third flow hole respectively; when the planar valve is in the third rinse working position, the first flow hole, the third flow hole and the fourth flow hole are blocked by the second fluid control surface of the rotating disk respectively.

16. The control valve of claim 6, wherein when the rotating disk of the planar valve rotates relative to the fixed disk such that the planar valve is in a first backwash working position, the seventh flow hole of the planar valve is in communication with the second flow hole to establish a first backwash flow passage communicating with the second fluid opening and the second opening of the valve body respectively, and the tenth flow hole is in communication with the first flow hole to establish a second backwash flow passage communicating with the drain opening and the first opening of the valve body respectively; when the rotating disk of the planar valve rotates relative to the fixed disk such that the planar valve is in a second backwash working position, the seventh flow hole of the planar valve is in communication with the third flow hole to establish a third backwash flow passage communicating with the second fluid opening and the third opening of the valve body respectively, and the tenth flow hole is in communication with the second flow hole to establish a fourth backwash flow passage communicating with the drain opening and the second opening of the valve body respectively; when the rotating disk of the planar valve rotates relative to the fixed disk such that the planar valve is in a third backwash working position, the seventh flow hole is in communication with the fifth flow hole to establish a fifth backwash flow passage communicating with the second fluid opening and the fifth opening respectively, and the tenth flow hole is in communication with the fourth flow hole to establish a sixth backwash flow passage communicating with the drain opening and the fourth opening respectively; when the rotating disk of the planar valve rotates relative to the fixed disk such that the planar valve is in a first rinse working position, the seventh flow hole of the planar valve is in communication with the first flow hole to establish a first rinse flow passage communicating with the second fluid opening and the first opening respectively, and the tenth flow hole is in communication with the second flow hole to establish a second rinse flow passage communicating with the drain opening and the second opening respectively; when the rotating disk of the planar valve rotates relative to the fixed disk such that the planar valve is in a second rinse working position, the seventh flow hole of the planar valve is in communication with the second flow hole to establish a third rinse flow passage communicating with the second fluid opening and the second opening respectively, and the tenth flow hole is in communication with the third flow hole to establish a fourth rinse flow passage communicating with the drain opening and the third opening respectively; when the rotating disk of the planar valve rotates relative to the fixed disk such that the planar valve is in a third rinse working position, the seventh flow hole of the planar valve is in communication with the fourth flow hole to establish a fifth rinse flow passage communicating with the second fluid opening and the fourth opening respectively, and the tenth flow hole is in communication with the fifth flow hole to establish a sixth rinse flow passage communicating with the drain opening and the fifth opening respectively.

17. The control valve of claim 16, wherein the planar valve further comprises an injector, the valve body of the planar valve further forms a first injector opening and a second injector opening, the planar valve further has a eleventh flow hole, a twelfth flow hole and a thirteenth flow hole, wherein the eleventh flow hole, the twelfth flow hole and the thirteenth flow hole are provided in the fixed disk and extend from the first fluid control surface of the fixed disk respectively, wherein the injector has a nozzle outlet, a discharge outlet and a brine suction inlet, wherein the eleventh flow hole is in communication with the fourth opening, the twelfth flow hole is in communication with the first injector opening, the thirteenth flow hole is in communication with the second injector opening, the nozzle outlet is adapted to be in communication with the first injector opening of the valve body, the discharge outlet is adapted to be in communication with the second injector opening of the valve body, and the brine suction inlet is in communication with the nozzle outlet and the discharge outlet respectively, wherein when the planar valve is in a regeneration working position, the seventh flow hole is in communication with the twelfth flow hole to establish a first regeneration flow passage communicating with the second fluid opening and the first injector opening respectively, the eighth flow hole is in communication with the thirteenth flow hole and the fifth flow hole respectively to establish a second regeneration flow passage communicating with the second injector opening and the fifth opening respectively, and the tenth flow hole is in communication with the eleventh flow hole to establish a third regeneration flow passage communicating with the drain opening and the fourth opening respectively; when the planar valve is in a water refill working position, the seventh flow hole is in communication with the thirteenth flow hole to establish a water refill flow passage communicating with the second fluid opening and the second injector opening respectively.

18. The control valve of claim 16, wherein the eighth flow hole and the ninth flow hole are both communicating blind holes, when the planar valve is in the water treatment working position, the second flow hole is blocked by the second fluid control surface of the rotating disk; when the planar valve is in the first backwash working position, the flow passage formed by communicating the ninth flow hole and the first flow hole, the third flow hole, the fourth flow hole and the fifth flow hole are blocked by the rotating disk respectively; when the planar valve is in the second backwash working position, the first flow hole, the fourth flow hole, and the fifth flow hole are blocked by the rotating disk respectively; when the planar valve is in the third backwash working position, the flow passage formed by communicating the ninth flow hole and the second flow hole, and the third flow hole are blocked by the rotating disk respectively; when the planar valve is in the first rinse working position, the flow passage formed by communicating the eighth flow hole and the first flow hole, the third flow hole, the fourth flow hole, and the fifth flow hole are blocked by the rotating disk respectively, and the ninth flow hole is blocked by the first fluid control surface of the fixed disk; when the planar valve is in the second rinse working position, the fourth flow hole and the fifth flow hole are blocked by the rotating disk respectively; when the planar valve is in the third rinse working position, the flow passage formed by communicating the ninth flow hole and the first flow hole, and the third flow hole are blocked by the rotating disk respectively.

19. The control valve of claim 11, wherein when the rotating disk of the planar valve rotates relative to the fixed disk such that the planar valve is in a first backwash working position, the seventh flow hole of the planar valve is in communication with the second flow hole to establish a first backwash flow passage communicating with the second fluid opening and the second opening of the valve body respectively, and the tenth flow hole is in communication with the first flow hole and the drain flow hole respectively to establish a second backwash flow passage communicating with the drain opening and the first opening of the valve body; when the rotating disk of the planar valve rotates relative to the fixed disk such that the planar valve is in a second backwash working position, the seventh flow hole of the planar valve is in communication with the third flow hole to establish a third backwash flow passage communicating with the second fluid opening and the third opening of the valve body, and the tenth flow hole is in communication with the second flow hole and the drain flow hole respectively to establish a fourth backwash flow passage communicating with the drain opening and the second opening of the valve body; when the rotating disk of the planar valve rotates relative to the fixed disk such that the planar valve is in a third backwash working position, the seventh flow hole is in communication with the fifth flow hole to establish a fifth backwash flow passage communicating with the second fluid opening and the fifth opening respectively, and the tenth flow hole is in communication with the fourth flow hole and the drain flow hole to establish a sixth backwash flow passage communicating with the drain opening and the fourth opening respectively; when the rotating disk of the planar valve rotates relative to the fixed disk such that the planar valve is in a first rinse working position, the seventh flow hole of the planar valve is in communication with the first flow hole to establish a first rinse flow passage communicating with the second fluid opening and the first opening, and the tenth flow hole is in communication with the second flow hole and the drain flow hole respectively to establish a second rinse flow passage communicating with the drain opening and the second opening; when the rotating disk of the planar valve rotates relative to the fixed disk such that the planar valve is in a second rinse working position, the seventh flow hole of the planar valve is in communication with the second flow hole to establish a third rinse flow passage communicating with the second fluid opening and the second opening respectively, and the tenth flow hole is in communication with the third flow hole and the drain flow hole respectively to establish a fourth rinse flow passage communicating with the drain opening and the third opening; when the rotating disk of the planar valve rotates relative to the fixed disk such that the planar valve is in a third rinse working position, the seventh flow hole of the planar valve is in communication with the fourth flow hole to establish a fifth rinse flow passage communicating with the second fluid opening and the fourth opening respectively, and the tenth flow hole is in communication with the fifth flow hole and the drain flow hole respectively to establish a sixth rinse flow passage communicating with the drain opening and the fifth opening.

20. The control valve of claim 19, wherein the planar valve further comprises an injector, the valve body of the planar valve further forms a first injector opening and a second injector opening, the planar valve further has a eleventh flow hole, a twelfth flow hole and a thirteenth flow hole, wherein the eleventh flow hole, the twelfth flow hole and the thirteenth flow hole are provided in the fixed disk and extend from the first fluid control surface of the fixed disk respectively, wherein the injector has a nozzle outlet, a discharge outlet and a brine suction inlet, wherein eleventh flow hole is in communication with the fourth opening, the twelfth flow hole is in communication with the first injector opening, the thirteenth flow hole is in communication with the second injector opening, the nozzle outlet is adapted to be in communication with the first injector opening of the valve body, the discharge outlet is adapted to be in communication with the second injector opening of the valve body, and the brine suction inlet is in communication with the nozzle outlet and the discharge outlet respectively, wherein when the planar valve is in a regeneration working position, the seventh flow hole is in communication with the twelfth flow hole to establish a first regeneration flow passage communicating with the second fluid opening and the first injector opening respectively, the eighth flow hole is in communication with the thirteenth flow hole and the fifth flow hole respectively to establish a second regeneration flow passage communicating with the second injector opening and the fifth opening respectively, and the tenth flow hole is in communication with the eleventh flow hole and the drain flow hole respectively to establish a third regeneration flow passage communicating with the drain opening and the fourth opening respectively; when the planar valve is in a water refill working position, the seventh flow hole is in communication with the thirteenth flow hole to establish a water refill flow passage communicating with the second fluid opening and the second injector opening respectively.

21. The control valve of claim 19, wherein the eighth flow hole, the ninth flow hole and the tenth flow hole are all communicating blind holes, when the planar valve is in the water treatment working position, the second flow hole is blocked by the second fluid control surface of the rotating disk; when the planar valve is in the first backwash working position, the flow passage formed by communicating the ninth flow hole and the first flow hole, the third flow hole, the fourth flow hole and the fifth flow hole are blocked by the rotating disk respectively; when the planar valve is in the second backwash working position, the first flow hole, the fourth flow hole, and the fifth flow hole are blocked by the rotating disk respectively; when the planar valve is in the third backwash working position, the flow passage formed by communicating the ninth flow hole and the second flow hole, and the third flow hole are blocked by the rotating disk respectively; when the planar valve is in the first rinse working position, the flow passage formed by communicating the eighth flow hole and the first flow hole, the third flow hole, the fourth flow hole, and the fifth flow hole are blocked by the rotating disk respectively, and the ninth flow hole is blocked by the first fluid control surface of the fixed disk; when the planar valve is in the second rinse working position, the fourth flow hole and the fifth flow hole are blocked by the rotating disk respectively; when the planar valve is in the third rinse working position, the flow passage formed by communicating the ninth flow hole and the first flow hole, and the third flow hole are blocked by the rotating disk respectively.

22. The control valve of any one of claims 6-21, wherein the eighth flow hole and the ninth flow hole are both communicating blind holes, and the seventh flow hole of the planar valve is in communication with the valve chamber and is further in communication with the second fluid opening through the valve chamber.

23. A water treatment device, comprising:
a control valve of any one of claims 1-3, 6-8, 10-13, 15, 16, 18, 19 and 21;
a first water treatment device having a first water inlet and a first water outlet;
a second water treatment device having a second water inlet and a second water outlet; and
a third water treatment device having a third water inlet and a third water outlet, wherein the first opening of the valve body is adapted to be in communication with the first water inlet of the first water treatment device, the second opening is adapted to be in communication with the first water outlet of the first water treatment device and the second water inlet of the second water treatment device respectively, the third opening is adapted to be in communication with the second water outlet of the second water treatment device, the fourth opening is adapted to be in communication with the third water inlet of the third water treatment device, and the fifth opening is adapted to be in communication with the third water outlet of the third water treatment device.

24. A water treatment device, comprising:
a control valve of any one of claims 4, 5, 9, 14, 17 and 20;
a first water treatment device having a first water inlet and a first water outlet;
a second water treatment device having a second water inlet and a second water outlet; and
a third water treatment device having a third water inlet and a third water outlet, wherein the first opening of the valve body is adapted to be in communication with the first water inlet of the first water treatment device, the second opening is adapted to be in communication with the first water outlet of the first water treatment device and the second water inlet of the second water treatment device respectively, the third opening is adapted to be in communication with the second water outlet of the second water treatment device, the fourth opening is adapted to be in communication with the third water inlet of the third water treatment device, and the fifth opening is adapted to be in communication with the third water outlet of the third water treatment device, wherein the third water treatment device is a water softening device.
